(19) Europäisches Patentamt / European Patent Office / Office européen des brevets

(11) **EP 4 445 027 B1**

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **22835222.5**

(22) Anmeldetag: **07.12.2022**

(51) Internationale Patentklassifikation (IPC):
**F04B 51/00** *(2006.01)* **F04B 43/04** *(2006.01)*
**F04B 45/047** *(2006.01)* **F16K 99/00** *(2006.01)*

(52) Gemeinsame Patentklassifikation (CPC):
**F04B 51/00; F04B 43/043; F04B 45/047;
F16K 99/0015; F16K 99/0048;** F04B 2207/01

(86) Internationale Anmeldenummer:
**PCT/EP2022/084750**

(87) Internationale Veröffentlichungsnummer:
**WO 2023/104864 (15.06.2023 Gazette 2023/24)**

(54) **MIKROFLUID-BAUELEMENT MIT MITTELN ZUR BESTIMMUNG EXTERNER EINFLUSSFAKTOREN BASIEREND AUF DEM ANSTEUERSIGNAL**

MICROFLUIDIC DEVICE WITH MEANS FOR DETERMINING EXTERNAL INFLUENCING FACTORS BASED ON THE DRIVE SIGNAL

DISPOSITIF MICROFLUIDIQUE AVEC MOYENS DE DÉTERMINATION DES FACTEURS D'INFLUENCE EXTERNES BASÉS SUR LE SIGNAL DE COMMANDE

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität: **09.12.2021 DE 102021214091**

(43) Veröffentlichungstag der Anmeldung:
**16.10.2024 Patentblatt 2024/42**

(73) Patentinhaber: **Fraunhofer-Gesellschaft zur Förderung
der angewandten Forschung e.V.
80686 München (DE)**

(72) Erfinder:
• **KIBLER, Sebastian**
  **80686 München (DE)**
• **LEISTNER, Henry**
  **80686 München (DE)**
• **NEUMEIER, Karl**
  **80686 München (DE)**
• **THALHOFER, Thomas**
  **80686 München (DE)**
• **AXELSSON, Kristjan**
  **80686 München (DE)**
• **ANHEUER, Daniel**
  **80636 München (DE)**
• **RICHTER, Martin**
  **80686 München (DE)**
• **HÄFNER, Johannes**
  **80686 München (DE)**
• **DURASIEWICZ, Claudia**
  **80686 München (DE)**
• **WALD, Christian**
  **80686 München (DE)**
• **BUSSMANN, Agnes**
  **80686 München (DE)**
• **GRÜNERBEL, Lorenz**
  **80686 München (DE)**

(74) Vertreter: **Fischer, Florian et al
Schoppe, Zimmermann, Stöckeler,
Zinkler, Schenk & Partner mbB
Patentanwälte
Radlkoferstraße 2
81373 München (DE)**

(56) Entgegenhaltungen:
WO-A1-2010/046728       US-A1- 2004 058 438
US-A1- 2013 052 044     US-A1- 2017 159 650
US-A1- 2019 360 480

**(Forts. nächste Seite)**

- **ZENGERLE R ET AL: "Simulation of microfluid systems", JOURNAL OF MICROMECHANICS AND MICROENGINEERING, INSTITUTE OF PHYSICS PUBLISHING, BRISTOL, GB, vol. 4, no. 4, 1 December 1994 (1994-12-01), pages 192 - 204, XP020069431, ISSN: 0960-1317, DOI: 10.1088/0960-1317/4/4/004**

**Beschreibung**

Die hierin beschriebene Erfindung betrifft ein Bauelement im Bereich der Mikrofluidik. Bei dem erfindungsgemäßen Mikrofluid-Bauelement kann es sich beispielsweise um ein Mikroventil oder um eine Mikropumpe handeln, die mittels eines mikrostrukturierten Membranaktors betätigbar sind. Die vorliegende Offenbarung stellt ein innovatives Konzept vor, mit dem sich das Mikrofluid-Bauelement im laufenden Betrieb selbst überwachen kann, indem der zeitliche Verlauf des Ansteuersignals ausgewertet wird.

Fluidische Mikroaktoren, wie zum Beispiel Mikropumpen oder Mikroventile, die durch Membranaktoren angetrieben werden, können Flüssigkeiten oder Gase transportieren oder Fluidpfade schalten. In der Praxis können dabei eine Reihe von Störungen oder Änderungen in den fluidischen Randbedingungen auftreten, die die vorgesehene Funktion dieser Aktoren beeinträchtigen können. Da diese Aktor-Komponenten keine Sensoreigenschaften haben, können sie die Störfälle nicht erkennen.

Mikroaktoren werden beispielsweise auch in Mikrodosiersystemen eingesetzt. Eine Möglichkeit zur Überwachung einer Mikrodosierung bzw. zur Störfallerkennung besteht in der Verwendung von Strömungssensoren, wie zum Beispiel Anemometer, mittels derer Druckdifferenzen oder Kapazitätsänderungen gemessen werden können. Darüber hinaus können Strömungssensoren oder Drucksensoren zur Erfassung von Störungen eingesetzt werden. Nachteilig hierbei ist es jedoch, dass dementsprechend separate Komponenten in das Mikrodosiersystem integriert werden müssen.

Eine weitere Herangehensweise zur Erkennung von Störungen ist der Einsatz von Sensorik in der Aktormembran, d.h. es werden spezielle Sensoren direkt in der Membran des Mikroaktors integriert, mittels denen beispielsweise der Spannungszustand der Membran ermittelt werden kann. Alternativ können zusätzliche Elektroden auf der Piezokeramik angebracht werden. Hierbei bestehen jedoch Nachteile insofern, dass eine zusätzliche Kontaktierung benötigt wird, dass die Herstellung insgesamt komplexer wird, und dass keine direkte Information über den pneumatischen oder hydraulischen Zustand ermittelt werden kann. Zudem muss die Sensorik in kritischen Bereichen des Membranaktors untergebracht werden, wo hohe elektrische Spannungen und auch große mechanische Spannungen herrschen

Eine weitere Möglichkeit zur Erkennung von Störfällen bzw. Fehlerzuständen besteht in der Verwendung von zwei in Reihe geschalteten Mikropumpen, die ein Piezoelement aufweisen. Die zwei piezoelektrisch angetriebenen Mikropumpen sind derart geschaltet, dass eine der beiden Pumpen in Betrieb ist, während die andere Pumpe inaktiv ist. Die Wirkung des fluidischen Signals der in Betrieb befindlichen Mikropumpe wird nun durch die Sensoreigenschaften des Piezoelements der ausgeschalteten, zweiten Mikropumpe erkannt.

Auch in diesem Falle wird, zusätzlich zum Mikroaktor, ein zusätzliches Sensorelement benötigt, hier in Form einer zweiten Mikropumpe. Weiterhin wird das fluidische Signal der Mikropumpe durch die Fluidleitungen zwischen den beiden Mikropumpen beeinflusst und bildet nicht mehr den Vorgang in der Pumpkammer der aktiven Mikropumpe ab.

Eine weitere Möglichkeit zur Detektion von Störungen liegt in der Verwendung einer separaten Elektrode auf einer Piezo-betätigten Antriebsmembran. Beim Verwenden der Piezokeramik als Pumpenantriebselement muss diese in einer kurzen Zeit mit einer hohen Spannung aufgeladen werden. Dieser Ladestrom $I = C * dU/dt$ ist wesentlich höher als der erwartete Sensoreffekt. Daher wird versucht auf der Piezokeramik eine separate "Sensorelektrode" zu realisieren. Die Verwendung einer separaten Elektrode als Sensorelektrode bietet die Möglichkeit, den Sensoreffekt der Piezo-Antriebsmembran auszunutzen.

Auch hier ist jedoch wieder eine zweite Elektrode notwendig, mit entsprechend notwendiger Verdrahtung. Zudem ist durch die zweite Elektrode ein Teil der Piezokeramik belegt, der somit wiederum nicht für die Aktorik genutzt werden kann. Außerdem wird nur die Wechselwirkung an der Stelle der Piezokeramik erfasst, an der sich die separate Aktorik befindet.

Die US 2019 / 0 360 480 A1 beschreibt einen Schutz vor Überlaststrom beim Einschalten. Hierbei wird ein Referenz-Stromwert ("initial value is") durch mehrfaches Sampling ermittelt. Anschließend wird ein Ist-Stromwert ("determination value *in*") bestimmt. Beim Einschalten wird der Ist-Stromwert unter dem Referenzwert gehalten. Dadurch kann der Rückstaudruck so gering gehalten werden, dass er unterhalb eines vordefinierten Schwellwerts bleibt und sodass das Piezoelement sich nicht über eine kritische Amplitude hinaus bewegt (wodurch sie z.B. an der Pumpkammer anstoßen würde).

Die US 2013 / 0 052 044 A1 beschreibt eine Flüssigkeitsförderpumpe, die das Volumen einer Pumpenkammer verändert und somit eine Flüssigkeit aus der Pumpenkammer fördert. Die Pumpe beinhaltet ein piezoelektrisches Element, das elektrische Ladungen im Inneren akkumuliert, wenn eine Spannung angelegt wird, und das sich entsprechend einer Menge akkumulierter elektrischer Ladungen verformt und somit das Volumen der Pumpenkammer vergrößert oder verkleinert; eine Ansteuereinheit, die ein Ansteuersignal mit einer Wellenform anlegt, die bis zu einer vorbestimmten Maximalspannung ansteigt und dann abfällt, und somit das piezoelektrische Element ansteuert und eine Luftblasen-Bestimmungseinheit, die einen durch das piezoelektrische Element fließenden Strom innerhalb einer vorbestimmten Zeitspanne nach Anlegen des Ansteuersignals an das piezoelektrische Element erfasst und somit bestimmt, ob sich Luftblasen in der Pumpenkammer befinden oder nicht.

Doch auch diese Vorrichtungen gemäß dem Stand der Technik weisen Nachteile auf, wie z.B. komplizierte Aufbauten mit zusätzlichen Bauteilen. Daher wäre es wünschenswert, bisherige Systeme zur Störfallerkennung bzw. zur Zustandsüberwachung von Mikrofluid-Bauelementen dahingehend zu verbessern, dass keinerlei zusätzliche Sensorik, oder zusätzliche Elektroden, benötigt werden. Weiterhin wäre es wünschenswert, dass das Mikrofluid-Bauelement nicht besonders angesteuert werden muss, sondern dass eine Zustandsüberwachung im regulären Betrieb, d.h. während der regulären Ansteuerung, erfolgen kann.

Dieses Ziel wird erreicht mit einem Mikrofluid-Bauelement sowie mit einem Verfahren zum Betreiben eines solchen Mikrofluid-Bauelement gemäß den unabhängigen Patentansprüchen.

Das erfindungsgemäße Mikrofluid-Bauelement weist einen Membranaktor mit einem Membranelement und mit einem Aktorelement zum Auslenken des Membranelements auf. Ferner weist das erfindungsgemäße Mikrofluid-Bauelement eine Signalerzeugungsvorrichtung auf, die ausgestaltet ist, um ein elektrisches Ansteuersignal mit einem zeitveränderlichen Signalverlauf zum Ansteuern des Membranaktors zu generieren, wodurch das Aktorelement das Membranelement betätigt. Das erfindungsgemäße Mikrofluid-Bauelement weist außerdem eine Signalverarbeitungsvorrichtung auf, die ausgestaltet ist, um im laufenden Betrieb des Mikrofluid-Bauelements eine durch einen oder mehrere äußere Einflussfaktoren verursachte Beeinflussung des zeitlichen Signalverlaufs des Ansteuersignals festzustellen. Die Signalverarbeitungsvorrichtung ist zudem ausgestaltet, um basierend auf dieser Beeinflussung des zeitlichen Signalverlaufs mindestens einen hierfür ursächlichen äußeren Einflussfaktor zu identifizieren und/oder zu klassifizieren.

Dementsprechend wird also das reguläre Ansteuersignal des Membranaktors beobachtet, beziehungsweise dessen zeitlicher Verlauf während mindestens einem Auslenkvorgang des Membranaktors. Hierbei haben unterschiedliche äußere Einflussfaktoren unterschiedliche Auswirkungen auf den zeitlichen Verlauf des Ansteuersignals. Das heißt, das Ansteuersignal ändert sich abhängig davon, wie der Membranaktor mit seiner Umgebung wechselwirkt. Diese Umgebungseinflüsse verändern den Membranaktor (z.B. seinen Spannungszustand oder seine Position), so dass sich bestimmte elektrische Parameter verändern, was sich wiederum direkt auf den Stromfluss des Ansteuersignals auswirkt. Da sich diese Wechselwirkungen zeitlich ändern können, kann durch eine genaue Bestimmung bzw. Messung des Ansteuersignals auf den Wechselwirkungsvorgang zurückgeschlossen werden.

Beispielsweise führt ein äußerer Einfluss in Form einer Druckänderung unter einem Piezo-betätigten Membranwandler zu einer Kraftwirkung, die aufgrund des direkten Piezoeffekts zu einem Stromfluss auf der Piezokeramik führt, der eben nur rein durch diese Druckänderung verursacht wird. Dieser Stromfluss wird im Rahmen der vorliegenden Offenbarung auch gelegentlich als "Sensorstrom" bezeichnet. Dieser Sensorstrom überlagert sich dem Strom, der benötigt wird, um die kapazitive Last elektrisch aufzuladen. Das heißt, der zusätzliche Stromfluss, der aufgrund der äußeren Einflüsse zustande kommt, überlagert sich dem Ansteuersignal (z.B. Ladestrom) und führt dementsprechend zu Abweichungen im zeitlichen Verlauf des Ansteuersignals.

Alleine mittels einer genauen Messung des Ansteuersignals (z.B. des Ladestroms) des Membranaktors, welcher sowieso zum regulären Antrieb des Membranaktors benötigt wird, können zeitabhängige fluidische und mechanische Vorgänge an bzw. in einem erfindungsgemäßen Mikrofluid-Bauelement (z.B. in einer Pumpkammer einer Mikropumpe und/oder an einem Mikroventil) gemessen werden. Dies macht das hierin beschriebene erfindungsgemäße Konzept sehr vorteilhaft, da an Komponenten der Mikrofluid-Bauelemente selbst nichts verändert werden muss. Es ist ausreichend, lediglich die entsprechende Messfunktion in die Treiberelektronik des Mikrofluid-Bauelements zu integrieren, vorzugsweise in Kombination mit einer geeigneten Datenerfassung und Datenauswertung.

Mit dem hierin beschriebenen erfindungsgemäßen Konzept kann also aus dem regulären Ansteuersignal, rein elektrisch und ohne weitere Vorrichtungen sowie in Echtzeit, eine Information extrahiert werden, die angibt, wie der Membranaktor hydraulisch, pneumatisch, mechanisch oder piezoelektrisch mit seiner Umgebung wechselwirkt. Aus dieser Information können relevante fluidische Veränderungen, wie zum Beispiel eine Ventildegradation, eine Gegendruckveränderung, eine Aktorermüdung, ein Auftreten von Gasblasen, und vieles mehr detektiert werden.

Anhand einer erfindungsgemäßen Signalauswertung des zeitlichen Verlaufs des Ansteuersignals kann also eine Zustandsüberwachung des Mikrofluid-Bauelements erfolgen.

Das heißt, das erfindungsgemäße Mikrofluid-Bauelement kann sich im laufenden Betrieb, und insbesondere im regulären Betrieb (d.h. es werden keine speziellen Kalibriermodi benötigt), selbst überwachen. Der zeitliche Verlauf gibt Aufschluss darüber, wie das Mikrofluid-Bauelement mit seiner Umgebung wechselwirkt, d.h. welche äußeren Einflussfaktoren gerade auf das Mikrofluid-Bauelement einwirken. Je nach Art des vorherrschenden äußeren Einflussfaktors wird der zeitliche Verlauf des Ansteuersignals unterschiedlich beeinflusst. Jeder äußere Einflussfaktor hinterlässt sozusagen seinen spezifischen Fingerprint im zeitlichen Signalverlauf des Ansteuersignals. Dadurch kann beispielsweise anhand des entsprechend beeinflussten zeitlichen Signalverlaufs ermittelt werden, welche Form von äußeren Einflussfaktoren gerade vorliegt. Beispielsweise kann ermittelt werden ob, und wenn ja, welche Art von Defekt vorliegt.

Die Erfindung betrifft ferner ein entsprechendes Verfahren zum Betreiben eines Mikrofluid-Bauelements mit einem Membranaktor, der ein Membranelement und ein Aktorelement zum Auslenken des Membranelements aufweist. Das Verfahren beinhaltet hierbei einen Schritt des Generierens eines elektrischen Ansteuersignals zum Ansteuern des Membranaktors, wodurch das Aktorelement das Membranelement betätigt, wobei das elektrische Ansteuersignal einen zeitveränderlichen Signalverlauf aufweist. Des Weiteren beinhaltet das erfindungsgemäße Verfahren einen Schritt des Ermittelns, im laufenden Betrieb des Mikrofluid-Bauelements, eines durch einen oder mehrere äußere Einflussfaktoren beeinflussten zeitlichen Signalverlaufs des Ansteuersignals, und einen Schritt des Identifizierens bzw. Klassifizierens von mindestens einem äußeren Einflussfaktor basierend auf dem ermittelten beeinflussten zeitlichen Signalverlauf.

Weitere Ausführungsformen und vorteilhafte Aspekte des erfindungsgemäßen Mikrofluid-Bauelements sowie des entsprechenden Verfahrens zum Betreiben des Mikrofluid-Bauelements sind in den jeweils abhängigen Patentansprüchen genannt.

Einige Ausführungsbeispiele sind exemplarisch in der Zeichnung dargestellt und werden nachstehend erläutert. Es zeigen:

Fig. 1      eine schematische Ansicht eines Mikrofluid-Bauelements mit erfindungsgemäßer Signalauswertung gemäß einem Ausführungsbeispiel,

Fig. 2      eine schematische Ansicht unterschiedlicher Ausführungsbeispiele eines Membran-Aktors,

Fig. 3      eine weitere schematische Ansicht eines Mikrofluid-Bauelements mit erfindungsgemäßer Signalauswertung gemäß einem Ausführungsbeispiel,

Fig. 4      eine schematische Ansicht einer erfindungsgemäßen Signalauswertevorrichtung gemäß einem Ausführungsbeispiel,

Fig. 5      eine Übersicht über die physikalischen Vorgänge innerhalb eines Piezoelements,

Fig. 6      eine graphische Darstellung einer mathematischen Funktion zur Beschreibung der Spannungsabhängigkeit der Kapazität einer Mikropumpe,

Fig. 7A      eine graphische Darstellung von mathematischen Funktionen zur Beschreibung des zeitlichen Signalverlaufs der Strom- und Spannungskurven bei sinusförmiger Ansteuerung bei einer Mikropumpe,

Fig. 7B      eine graphische Darstellung von mathematischen Funktionen zur Beschreibung des zeitlichen Signalverlaufs der Strom- und Spannungskurven bei sinusförmiger Ansteuerung bei einem Kondensator,

Fig. 8      zwei Lissajous-Figuren zur visuellen Darstellung von Hysterese-Effekten bei einer Mikropumpe im Vergleich zu einem Kondensator,

Fig. 9A      eine Lissajous-Figur einer Mikropumpe, die mit harmonischer Ansteuerung Flüssigkeit fördert und dem äußeren Einflussfaktor einer Luftblase ausgesetzt ist,

Fig. 9B      eine Lissajous-Figur einer Mikropumpe, die mit harmonischer Ansteuerung Flüssigkeit fördert und dem äußeren Einflussfaktor eines Verschlusses ausgesetzt ist,

Fig. 10      eine sogenannte Confusion-Matrix zur Ermittlung von Systemzuständen bzw. äußeren Einflussfaktoren basierend auf einer Häufigkeit richtiger Vorhersagen,

Fig. 11      eine Lissajous-Figur einer Mikropumpe bei unterschiedlichen Gegendrücken,

Fig. 12      drei unterschiedliche zeitliche Signalverläufe von Ansteuersignalen mit unterschiedlicher Spannung sowie an diese Signalverläufe angefittete Kurven,

Fig. 13      den Signalverlauf der Amplitude des Stromterms $I_p$ einer Mikropumpe im Saughub in Abhängigkeit von der angelegten Spannung,

Fig. 14      die zum Stromterm $I_p$ zugehörige zeitliche Abklingkonstante einer Mikropumpe im Saughub in Abhängigkeit von der angelegten Spannung,

Fig. 15      einen Vergleich der zeitlichen Abklingkonstanten einer Mikropumpe im Saughub sowie im Druckhub, jeweils in Abhängigkeit von der angelegten Spannung,

Fig. 16A den Signalverlauf der Amplitude des Stromterms $I_{CE}$ einer Mikropumpe im Saughub in Abhängigkeit von der angelegten Spannung,

Fig. 16B die zum Stromterm $I_{CE}$ zugehörige zeitliche Abklingkonstante einer Mikropumpe im Saughub in Abhängigkeit von der angelegten Spannung,

Fig. 17A den Signalverlauf der Amplitude der Summe der beiden Stromterme $I_C + I_{CE}$ einer Mikropumpe im Druckhub in Abhängigkeit von der angelegten Spannung,

Fig. 17B die zum Summen-Stromterm $I_C + I_{CE}$ zugehörige zeitliche Abklingkonstante einer Mikropumpe im Druckhub in Abhängigkeit von der angelegten Spannung,

Fig. 18A den Signalverlauf der Amplitude der Summe der beiden Stromterme $I_C + I_{CE}$ einer Mikropumpe im Druckhub in Abhängigkeit von der angelegten Spannung bei kleinen Spannungen,

Fig. 18B die zum Summen-Stromterm $I_C + I_{CE}$ zugehörige zeitliche Abklingkonstante einer Mikropumpe im Saughub in Abhängigkeit von der angelegten Spannung bei kleinen Spannungen,

Fig. 19 ein Blockschaltbild eines Messaufbaus, wie er verwendet wurde, um die in den nachfolgenden Figuren gezeigten Messungen durchzuführen,

Fig. 20 den zeitlichen Signalverlauf der Amplitude des Stromterms $I_p$ einer luftfördernden Mikropumpe im Saughub sowie im Druckhub im Normalzustand, d.h. ohne Einfluss eines äußeren Einflussfaktors,

Fig. 21 eine vergrößerte Darstellung des zeitlichen Signalverlaufs im Saughub gemäß Figur 20,

Fig. 22 eine vergrößerte Darstellung des zeitlichen Signalverlaufs im Druckhub gemäß Figur 20,

Fig. 23 den zeitlichen Signalverlauf der Amplitude des Stromterms $I_p$ einer flüssigkeitsfördernden Mikropumpe im Saughub sowie im Druckhub im Normalzustand, d.h. ohne Einfluss eines äußeren Einflussfaktors,

Fig. 24 eine vergrößerte Darstellung des zeitlichen Signalverlaufs im Saughub gemäß Figur 23,

Figs. 25A-25C vergrößerte Darstellungen eines Überschwingens im zeitlichen Signalverlauf im Saughub gemäß Figur 24,

Fig. 26 eine vergrößerte Darstellung des zeitlichen Signalverlaufs im Druckhub gemäß Figur 23,

Fig. 27A den zeitlichen Signalverlauf der Amplitude des Stromterms $I_p$ einer flüssigkeitsfördernden Mikropumpe im Saughub unter Einfluss eines äußeren Einflussfaktors in Form einer Gasblase,

Fig. 27B eine detaillierte Ansicht des zeitlichen Signalverlaufs im Saughub gemäß Figur 27A,

Fig. 27C den zeitlichen Signalverlauf der Amplitude des Stromterms $I_p$ der flüssigkeitsfördernden Mikropumpe im Saughub, ein paar Pumphübe vor dem Eintreten der Gasblase in die Pumpkammer,

Fig. 27D den zeitlichen Signalverlauf gemäß Figur 27A, während sich die Gasblase in der Pumpkammer befindet,

Fig. 27E den zeitlichen Signalverlauf der Amplitude des Stromterms $I_p$ der flüssigkeitsfördernden Mikropumpe im Saughub, ein paar Pumphübe nachdem die Gasblase die Pumpkammer verlassen hat,

Fig. 28A den zeitlichen Signalverlauf der Amplitude des Stromterms $I_p$ einer flüssigkeitsfördernden Mikropumpe im Saughub und im Druckhub unter Einfluss eines äußeren Einflussfaktors in Form einer Gasblase,

Fig. 28B      eine detaillierte Ansicht des zeitlichen Signalverlaufs im Druckhub gemäß Figur 28A,

Fig. 29A      den zeitlichen Signalverlauf der Amplitude des Stromterms $I_p$ einer flüssigkeitsfördernden Mikropumpe im Saughub und im Druckhub unter Einfluss eines äußeren Einflussfaktors in Form eines stetig absinkenden Gegendrucks,

Fig. 29B      den zeitlichen Verlauf des Gegendrucks am einlassseitigen Reservoir sowie am auslassseitigen Reservoir,

Fig. 29C      eine detaillierte Ansicht des zeitlichen Signalverlaufs im Saughub gemäß Figur 29A,

Fig. 29D      eine detaillierte Ansicht des zeitlichen Signalverlaufs im Druckhub gemäß Figur 29A,

Fig. 30A      den zeitlichen Signalverlauf der Amplitude des Stromterms $I_p$ einer luftfördernden Mikropumpe im Saughub und im Druckhub unter Einfluss eines äußeren Einflussfaktors in Form eines stetig absinkenden Vordrucks,

Fig. 30B      eine detaillierte Ansicht des zeitlichen Signalverlaufs im Saughub gemäß Figur 30A,

Fig. 30C      eine vergrößerte Darstellung des zeitlichen Signalverlaufs im Saughub gemäß Figur 30B,

Fig. 30D      eine detaillierte Ansicht des zeitlichen Signalverlaufs im Druckhub gemäß Figur 30A,

Fig. 30E      eine vergrößerte Darstellung des zeitlichen Signalverlaufs im Druckhub gemäß Figur 30D,

Fig. 31A      Lissajous-Figuren unterschiedlicher Mikropumpen im Saughub sowie im Druckhub ohne äußere Einflussfaktoren,

Fig. 31B      Lissajous-Figuren unterschiedlicher Mikropumpen im Saughub sowie im Druckhub unter Einfluss eines äußeren Einflussfaktors in Form eines Anschlagens des Membranelements,

Fig. 32      ein schematisches Blockschaltbild zur Darstellung eines Systemaufbaus gemäß einem Ausführungsbeispiel, und

Fig. 33      ein schematisches Blockschaltbild zur Darstellung von möglichen Komponenten einer Signalauswertevorrichtung gemäß einem Ausführungsbeispiel.

Im Folgenden werden Ausführungsbeispiele mit Bezug auf die Figuren näher beschrieben, wobei Elemente mit derselben oder ähnlichen Funktion mit denselben Bezugszeichen versehen sind.

Verfahrensschritte, die im Rahmen der vorliegenden Offenbarung abgebildet bzw. beschrieben sind, können auch in einer anderen als der abgebildeten beziehungsweise beschriebenen Reihenfolge ausgeführt werden. Außerdem sind Verfahrensschritte, die ein bestimmtes Merkmal einer Vorrichtung betreffen mit ebendiesem Merkmal der Vorrichtung austauschbar, was ebenso anders herum gilt.

Sofern im Rahmen der vorliegende Offenbarung von einem Fluid die Rede ist, so sind darunter Flüssigkeiten, Gase oder Gemische aus Flüssigkeiten und Gasen zu verstehen.

Die vorliegende Offenbarung beschreibt unter anderem einen Membranaktor mit einem Membranelement und einem Aktorelement. Sofern im Rahmen der vorliegende Offenbarung von einem Pumpkammerdruck die Rede ist, so ist darunter ein Druck zu verstehen, der auf eine Membranseite des Membranelements ausgeübt wird, die mit dem Fluid in Kontakt ist. Ein solcher Druck kann beispielsweise auch bei Ventilen auftreten, die einen derartigen Membranaktor aufweisen.

Sofern im Rahmen dieser Offenbarung von einem veränderlichen Druck bzw. Pumpkammerdruck die Rede ist, so ist darunter ein zeitveränderlicher und ortsveränderlicher Druck zu verstehen. Sofern nicht anders angegeben, ist unter dem Begriff des veränderlichen Drucks im Rahmen dieser Offenbarung ein zeitaufgelöster Mittelwert aus dem zeitveränderlichen und dem ortsveränderlichen Druck zu verstehen.

Sofern im Rahmen dieser Offenbarung von einem äußeren Einflussfaktor die Rede ist, so kann darunter mindestens einer der folgenden Faktoren verstanden werden:

•      Umgebungsparameter (z.B. Temperatur, Feuchtigkeit),

- rheologische Eigenschaften des Fluids,
- Störgrößen (z.B. Partikel, Luftblasen in Flüssigkeiten),
- Geometrie bzw. Abmessungen des Membranaktors,
- Materialparameter (z.B. E-Modul, d31-Piezokoeffizient),
- Betriebsparameter (z.B. Ansteuersignal).

Sofern im Rahmen dieser Offenbarung Ausführungsbeispiele am Beispiel eines piezobetätigten Membranaktors beschrieben sind, so gelten die diesbezüglichen Ausführungen auch für einen elektrostatisch betriebenen Membranaktor und anders herum.

Sofern im Rahmen dieser Offenbarung Ausführungsbeispiele am Beispiel einer Mikropumpe beschrieben sind, so gelten die diesbezüglichen Ausführungen auch für Mikroventile und anders herum.

Sofern die hierin verwendete Nomenklatur voneinander abweichen sollte, so gilt folgendes:

-

$$d = CE^*$$

-

$$I_d = I_{CE} = I_{ce}$$

-

$$\tau_h = \tau_p$$

-

$$I_A = I_a$$

-

$$\tau_A = \tau_a$$

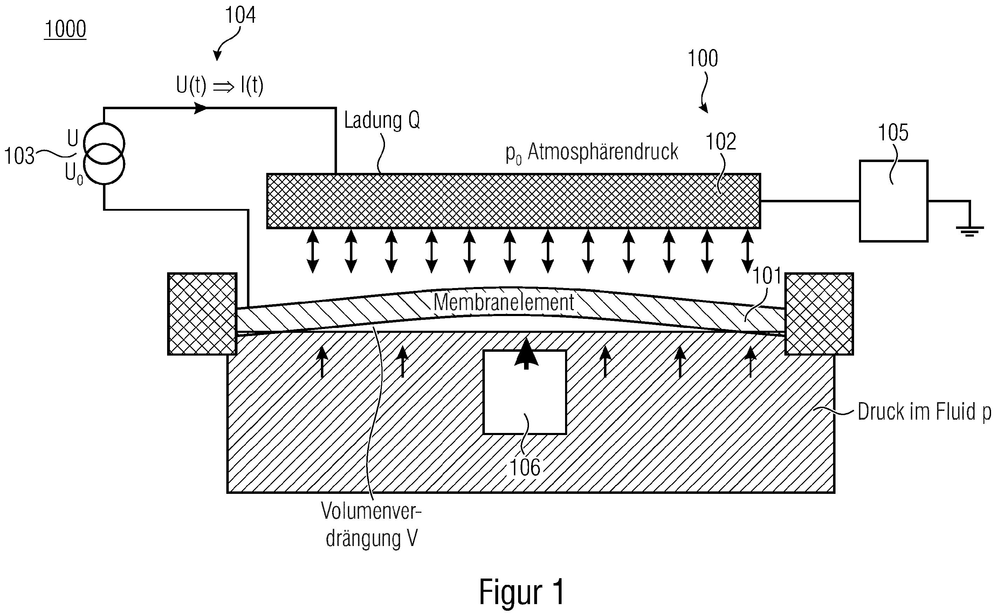

Figur 1 zeigt zunächst rein schematisch einen Ausschnitt eines erfindungsgemäßen Mikrofluid-Bauelements 1000 mit einem Membranaktor 100. Der Membranaktor 100 weist ein Membranelement 101 und ein Aktorelement 102 auf. Das Aktorelement 102 dient zum Auslenken des Membranelements 101.

Das erfindungsgemäße Mikrofluid-Bauelement 1000 weist außerdem eine Signalerzeugungsvorrichtung 103 auf. Diese ist ausgestaltet, um ein elektrisches Ansteuersignal 104 mit einem zeitveränderlichen Signalverlauf zum Ansteuern des Membranaktors 100 zu generieren, wodurch das Aktorelement 102 das Membranelement 101 betätigt. In diesem nicht limitierenden Beispiel erzeugt die Signalerzeugungsvorrichtung 103 ein Wechselspannungssignal $U(t)$. Analog hierzu kann natürlich auch eine entsprechende abgeleitete Größe betrachtet werden, wie zum Beispiel ein entsprechendes Wechselstromsignal $I(t)$.

Das erfindungsgemäße Mikrofluid-Bauelement 1000 weist ferner eine Signalverarbeitungsvorrichtung 105 auf. Diese ist ausgestaltet, um im laufenden Betrieb des Mikrofluid-Bauelements 1000 eine durch einen oder mehrere äußere Einflussfaktoren verursachte Beeinflussung des zeitlichen Signalverlaufs des Ansteuersignals 104 festzustellen, und basierend auf dieser Beeinflussung des zeitlichen Signalverlaufs mindestens einen hierfür ursächlichen äußeren Einflussfaktor zu identifizieren und/oder zu klassifizieren.

Der äußere Einflussfaktor führt also zu einer Beeinflussung des zeitlichen Signalverlaufs des Ansteuersignals 104. Dabei führen unterschiedliche äußere Einflussfaktoren zu unterschiedlichen Abweichungen im zeitlichen Signalverlauf des Ansteuersignals 104. Manche Einflussfaktoren erzeugen eine charakteristische Abweichung im zeitlichen Signalverlauf, was mit einem Fingerprint vergleichbar ist, d.h. unterschiedliche äußere Einflussfaktoren hinterlassen unterschiedliche Fingerprints im zeitlichen Signalverlauf des Ansteuersignals 104.

Nachfolgend werden einige Beispiele für äußere Einflussfaktoren und deren Detektion bzw. Identifizierung gegeben. Außerdem wird konkret beschrieben, wie die Abweichung im zeitlichen Signalverlauf des Ansteuersignals 104 ermittelt wird. Vorweggreifend soll an dieser Stelle zunächst erwähnt werden, dass erfindungsgemäß eine Signalanalyse des Ansteuersignals 104 durchgeführt werden kann, wobei unterschiedliche Signalanteile betrachtet werden. Diese Signalanteile werden im Rahmen dieser Offenbarung auch als "Stromterme" bezeichnet. Diese einzelnen Stromterme gehen auf unterschiedliche äußere Einflussfaktoren zurück, die mittels des erfindungsgemäßen Konzepts identifiziert und/oder klassifiziert werden können.

Bevor jedoch näher auf weitere Details hierzu eingegangen wird, soll zunächst ein Überblick über die physikalischen Vorgänge an unterschiedlichen Membranaktoren 100, z.B. an piezobetätigten oder elektrostatisch betätigten Membranaktoren 100, gegeben werden, um ein besseres Verständnis für das hierin beschriebene Konzept der Signalanalyse des Ansteuersignals 104 zu entwickeln. Hierfür sei zunächst noch einmal auf Figur 1 verwiesen.

In Figur 1 ist zu sehen, dass das Aktorelement 102 mit dem Membranelement 101 funktional zusammenwirkt, d.h. das Membranelement 101 kann durch das Aktorelement 102 ausgelenkt werden. Dadurch wird eine Volumenverdrängung V unterhalb des Membranelements 101 verursacht. Das Aktorelement 102 und das Membranelement 101 werden mittels der Signalerzeugungsvorrichtung 103 elektrisch angesteuert. Beispielsweise kann das Aktorelement 102 mit einer Ansteuerspannung $U$ beaufschlagt werden, während das Membranelement 101 mit einem Massepotential $U_0$ kontaktiert werden kann. Dabei fließen elektrische Ladungen $Q$ auf das Aktorelement 103.

Das Membranelement 101 in Kombination mit dem Antriebselement 102 weist im Wesentlichen die Eigenschaften einer veränderlichen elektrischen Kapazität auf. Auf das Membranelement 101 wirken, im Falle von Flüssigkeiten, hydraulische Kräfte oder, Im Falle von Gasen, wie z.B. Luft, pneumatische Kräfte, in Form eines Druckes $p$. Weiterhin können auf das Membranelement 101 mechanische Kräfte wirken, die beispielsweise durch mechanische Komponenten 106 bewirkt werden können. Darüber hinaus können Oberflächenkräfte auf das Membranelement 101 wirken, z.B. in Form eines Meniskus. Über dem Aktorelement 102 wirkt ein Referenzdruck $p_0$, der meist der Atmosphärendruck ist, oder ein Druck, der über dem Membranelement 101 eingestellt wird.

Ein unterhalb des Membranelements 101 befindliches Fluid, z.B. ein Gas oder eine Flüssigkeit, steht unter einem Druck $p$. Dieser Druck $p$ ist zeitabhängig, und wird aus dem Wechselspiel zwischen dem Membranaktor 100 und dem Fluid bestimmt. Bei Zustandsänderungen, die langsam sind gegenüber den Signalausbreitungen im Membranelement 101 und in dem Fluid (bestimmt durch die Schallgeschwindigkeit), stellt sich der Druck oder die Druckverteilung so ein, dass das Membranelement 101 im Kräftegleichgewicht ist (Actio = Reactio)

Ist dieser unterhalb des Membranelements 101 anliegende Druck p jedoch unterschiedlich zum Referenzdruck $p_0$ oberhalb des Membranelements 101, so wird über die Membranfläche eine pneumatische (im Falle von Gasen als Fluid) oder eine hydraulische (im Falle von Flüssigkeit als Fluid) Kraft auf das Membranelement 101 ausgeübt. Dabei müssen weder der Fluiddruck $p$ unterhalb des Membranelements 101 noch der Referenzdruck $p_0$ oberhalb des Membranelements 101 konstant und homogen sein.

Somit können also pneumatisch bedingte oder hydraulisch bedingte Wechselwirkungen mit dem Membranaktor 100 auftreten, d.h. es wirken pneumatische bzw. hydraulische äußere Einflussfaktoren auf den Membranaktor 100. Falls, wie zuvor beschrieben, eine mechanische Komponente 106 eine mechanische Kraft auf den Membranaktor 100 ausübt, so wirken dementsprechend mechanische äußere Einflussfaktoren auf den Membranaktor 100.

Gemäß einem Ausführungsbeispiel der Erfindung kann die Signalverarbeitungsvorrichtung 105 dementsprechend dazu ausgestaltet sein, um eine auf zumindest eine Membranseite des Membranelements 101 wirkende hydraulische, pneumatische oder mechanische Kraft als den ursächlichen äußeren Einflussfaktor für die Beeinflussung des zeitlichen Signalverlaufs zu identifizieren und/oder zu klassifizieren.

Gemäß einer ersten erfindungsgemäßen Ausführungsform weist das Aktorelement 102 eine Piezokeramik auf, was später noch detaillierter beschrieben wird. In diesem Falle können auch piezoelektrische äußere Einflussfaktoren auf den Membranaktor 100 wirken.

In diesem Fall kann die Signalverarbeitungsvorrichtung 105 erfindungsgemäß auch dazu ausgestaltet sein, um eine auf zumindest eine Membranseite des Membranelements 101 wirkende piezoelektrische Kraft als den ursächlichen äußeren Einflussfaktor für die Beeinflussung des zeitlichen Signalverlaufs zu identifizieren und/oder zu klassifizieren.

In allen Fällen kann erfindungsgemäß mittels einer zeitlich genauen elektrischen Messung des Ansteuersignals 104 (z.B. des Spannungssignals $U(t)$ oder einer damit verknüpften Größe, wie z.B. des Stromsignals $I(t)$) eine zeitabhängige Messung der sich ggf. überlagernden pneumatischen, hydraulischen, piezoelektrischen oder mechanischen Wechselwirkungen erfolgen. Das heißt, mit der vorliegend beschriebenen Erfindung ist es möglich, mit einer Signalanalyse des Ansteuersignals 104 verschiedene äußere Einflussfaktoren, nämlich zum Beispiel pneumatische, hydraulische, piezoelektrische und/oder mechanische äußere Einflussfaktoren, die auf den Membranaktor 100 wirken, zu erkennen. Die erkannten Einflussfaktoren können zudem identifiziert und/oder klassifiziert werden.

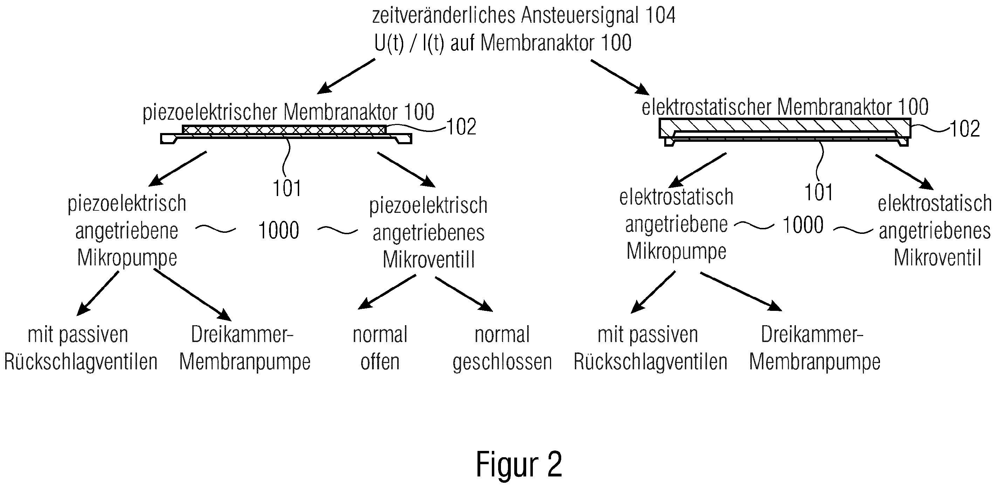

Je nach Ausführungsform des Membranaktors 100 können die detektierbaren bzw. identifizierbaren äußeren Einflussfaktoren leicht unterschiedlich sein. Figur 2 zeigt mögliche denkbare Ausführungsformen eines erfindungsgemäßen Membranaktors 100.

Links im Bild von Figur 2 ist ein erfindungsgemäßer piezoelektrischer Membranaktor 100 abgebildet. Das Aktorelement 102 kann hier eine Piezokeramik bzw. ein Piezoelement aufweisen, das an dem Membranelement 101, zum Beispiel mittels geeignetem Klebstoff, befestigt ist. Sobald die Piezokeramik mit dem Ansteuersignal 104 beaufschlagt wird, verformt sich die Piezokeramik und betätigt dabei das Membranelement 101.

Ein erfindungsgemäßer piezoelektrischer Membranaktor 100 kann beispielsweise in einer piezoelektrisch angetriebenen Mikropumpe verwendet werden. Das heißt, in diesem Falle wiese das erfindungsgemäße Mikrofluid-Bauelement 1000 eine piezoelektrisch angetriebene Mikropumpe auf. Hierbei wird der piezoelektrische Membranaktor 100 als Pumpelement eingesetzt, d.h. durch Heben und Senken des Membranaktors 100 kann ein Pumphub, d.h. ein Saughub bzw. ein Druckhub, ausgeführt werden. Dabei kann die piezoelektrisch angetriebene Mikropumpe als eine Dreikammer-Membranpumpe mit aktiven Ventilen ausgeführt sein oder passive Rückschlagventile aufweisen.

Alternativ hierzu kann der erfindungsgemäße piezoelektrische Membranaktor 100 beispielsweise in einem piezoelektrisch angetriebenen Mikroventil verwendet werden. Das heißt, in diesem Falle wiese das erfindungsgemäße Mikrofluid-Bauelement 1000 ein piezoelektrisch angetriebenes Mikroventil auf. Hierbei wird der piezoelektrische Membranaktor 100 als Betätigungsmittel eingesetzt, d.h. durch Heben und Senken des Membranaktors 100 kann das Mikroventil geöffnet bzw. geschlossen werden. Das piezoelektrisch angetriebene Mikroventil kann als normal offenes ("normally open" - NO) oder normal geschlossenes ("normally closed" - NC) Ventil ausgeführt sein.

Rechts im Bild von Figur 2 ist ein elektrostatisch betätigter Membranaktor 100 gemäß einer alternativen zweiten erfindungsgemäßen Ausgestaltung abgebildet. Hierbei bildet das Membranelement 101 eine bewegliche Elektrode, und das Aktorelement 102 bildet eine Gegenelektrode. Das Aktorelement 102 und das Membranelement 101 wirken hierbei kapazitiv zusammen, was nachfolgend noch näher ausgeführt wird. Sobald das Aktorelement 101 (Gegenelektrode) mit dem Ansteuersignal 104 beaufschlagt wird, zieht diese das Membranelement 101 (Elektrode) an bzw. stößt diese ab, wodurch eine Auf- und AbBewegung des Membranelements 101 erzeugt wird.

Ein erfindungsgemäßer elektrostatischer Membranaktor 100 kann beispielsweise in einer elektrostatisch angetriebenen Mikropumpe verwendet werden. Das heißt, in diesem Falle wiese das erfindungsgemäße Mikrofluid-Bauelement 1000 eine elektrostatisch angetriebene Mikropumpe auf. Hierbei wird der elektrostatische Membranaktor 100 als Pumpelement eingesetzt, d.h. durch Heben und Senken des Membranaktors 100 kann ein Pumphub, d.h. ein Saughub bzw. ein Druckhub, ausgeführt werden. Auch hier kann die elektrostatisch angetriebene Mikropumpe als eine Dreikammer-Membranpumpe mit aktiven Ventilen ausgeführt sein oder passive Rückschlagventile aufweisen.

Alternativ hierzu kann der erfindungsgemäße elektrostatische Membranaktor 100 beispielsweise in einem elektrostatisch angetriebenen Mikroventil verwendet werden. Das heißt, in diesem Falle wiese das erfindungsgemäße Mikrofluid-Bauelement 1000 ein elektrostatisch angetriebenes Mikroventil auf. Hierbei wird der elektrostatische Membranaktor 100 als Betätigungsmittel eingesetzt, d.h. durch Heben und Senken des Membranaktors 100 kann das Mikroventil geöffnet bzw. geschlossen werden. Das elektrostatisch angetriebene Mikroventil kann als normal offenes ("normally open" - NO) oder normal geschlossenes ("normally closed" - NC) Ventil ausgeführt sein.

Wie eingangs erwähnt, sieht das erfindungsgemäße Konzept eine Messung bzw. Signalauswertung des Ansteuersignals 104 vor, wodurch ein oder mehrere äußere Einflussfaktoren, die auf den Membranaktor 100 bzw. das Mikrofluid-Bauelement 1000 wirken, ermittelt werden können. Dies soll nachfolgend etwas näher erläutert werden, und zwar exemplarisch an den soeben erwähnten denkbaren Ausführungsformen eines erfindungsgemäßen piezoelektrisch bzw. elektrostatisch angetriebenen Membranaktor 100.

## 1. Piezoelektrisch angetriebener Membranaktor

### 1.1 Piezoelektrisch angetriebene Mikropumpe

Erfindungsgemäße piezoelektrisch angetriebene Mikropumpen 1000 werden in der Regel mit einem periodischen Ansteuersignal 104, z.B. mit einem sinusförmigen Wechselspannungs- bzw. Wechselstromsignal, angesteuert. Hierbei wird der Membranaktor 100 im Wechsel nach oben (Saughub) und unten (Druckhub) bewegt.

Das Ansteuersignal 104 ist nicht unabhängig davon, wie der Membranaktor 100 mit seiner Umgebung wechselwirkt. Die jeweiligen, auf den Membranaktor 100 wirkenden, äußeren Einflussfaktoren (z.B. hydraulisch, pneumatisch, piezoelektrisch, mechanisch) verändern die mechanischen Eigenschaften des Membranaktors 100 (z.B. seinen Spannungszustand oder seine Position), wodurch sich auch die elektrischen Parameter des Membranaktors 100 ändern. Dies wiederum wirkt sich direkt auf den Stromfluss aus. Da die äußeren Einflussfaktoren zeitlich variieren, kann mittels einer erfindungsgemäßen Signalanalyse des Ansteuersignals 104 auf den Wechselwirkungsvorgang bzw. auf den jeweils vorherrschenden äußeren Einflussfaktor rückgeschlossen werden.

So führt beispielsweise eine Druckänderung unterhalb des Piezo-Membranaktors 100 zu einer Kraftwirkung, die wiederum aufgrund des direkten Piezoeffekts zu einem Stromfluss auf dem Piezo-Membranaktor 100 führt, der eben alleinig durch die Druckänderung verursacht wird. Dieser Stromfluss wird in der hier vorliegenden Offenbarung auch als "Sensorstrom" bezeichnet. Dieser Sensorstrom überlagert sich dem Strom, der benötigt wird, um die kapazitive Last elektrisch aufzuladen.

Im Falle einer piezoelektrisch angetriebenen Mikropumpe 1000 kann dieser Sensorstrom mittels einer erfindungsgemäßen Signalanalyse exakt bestimmt und von anderen Stromanteilen (vor allem vor dem Ladestrom $I_c$ der elektrischen Kapazität des Piezos) unterschieden werden. Dadurch kann beispielsweise indirekt eine Änderung des Pumpkammerdrucks zeitlich gemessen werden. Die zeitliche Änderung des Pumpkammerdrucks wird unter anderem durch die fluidischen Vorgänge in der Fluidkammer bestimmt. Wenn allerdings die Wirkungszusammenhänge bekannt sind, warum sich der Pumpkammerdruck zeitlich ändert, dann können mit der erfindungsgemäßen Signalanalyse des Sensorstroms die Vorgänge in der Pumpkammer gemessen werden. Aber auch bei nicht vollständig bekannten Wirkungszusammenhängen im Detail kann auf die fluidischen oder mechanischen Vorgänge in der Pumpkammer rückgeschlossen werden, beispielsweise unter Anwendung von sogenanntem "Machine Learning".

Es sei an dieser Stelle nochmals explizit hervorgehoben, dass mit dem erfindungsgemäßen Konzept keinerlei zusätzliche Sensorik oder zusätzliche Elektroden benötigt werden. Weiterhin muss der Membranaktor 100 auch nicht besonders, z.B. in einem speziellen Kalibriermodus, angesteuert werden. Es reicht die reguläre Ansteuerung mittels des Ansteuersignals 104, d.h. das erfindungsgemäße Konzept kann im regulären laufenden Betrieb des Mikrofluid-Bauelements 1000 durchgeführt werden. Alleinig mittels einer genauen Messung bzw. einer Signalanalyse des Ansteuersignals 104 (z.B. Ladestrom $I(t)$) auf den Membranaktor 100, der sowieso zum Antrieb des Membranaktors 100 benötigt wird, können die zeitabhängigen fluidischen und mechanischen Vorgänge in dem Mikrofluid-Bauelement 1000 gemessen werden. Dies macht das hierin beschriebene erfindungsgemäße Konzept sehr vorteilhaft, da an Komponenten der Mikrofluid-Bauelemente 1000 selbst nichts verändert werden muss. Es ist ausreichend, die erfindungsgemäße Signalanalyse in die Treiberelektronik des Mikrofluid-Bauelements 1000 zu integrieren, beispielsweise in Verbindung mit einer geeigneten Datenerfassung und Datenauswertung.

Da piezoelektrisch angetriebene Mikropumpen, wie eingangs erwähnt, in der Regel mit einem periodischen Signal angesteuert werden, ermöglicht das erfindungsgemäße Konzept zudem ein kontinuierliches, zeitaufgelöstes Messen des Saughubs und des Druckhubs während des Betriebs der Mikropumpe. Werden Änderungen des Sensorstroms im Vergleich zu vorhergehenden Signalverläufen gemessen, dann kann sofort auf eine Änderung im Betrieb geschlossen werden. Das heißt, die Mikropumpe überwacht sich kontinuierlich und dauerhaft selbst im Betrieb, was eine wesentliche Verbesserung zum Stand der Technik darstellt.

### 1.2 Piezoelektrisch angetriebenes Mikroventil

Bei einem erfindungsgemäßen piezoelektrisch angetriebenen Mikroventil 1000 gibt es analog ein Wechselspiel zwischen pneumatischen oder hydraulischen Kräften und den intrinsischen Spannungen eines Membranaktors 100. Diese zeitabhängigen Druckänderungen können (analog zur piezoelektrisch angetriebenen Mikropumpe) mit dem Sensorstrom gemessen werden, wodurch eine fluidische Information aus der Ventilkammer bzw. der Ventilbewegung extrahiert werden kann. Hinzu kommt hier der Aspekt, dass das angetriebene Membranelement 101 (ggf. in der Mitte verstärkt durch eine stößelartige Verdickung) mechanischen Kontakt zu einem Ventilsitz bekommt, wenn das Ventil schließt. Dieser mechanische Kontakt und das Blockieren der mechanischen Bewegung bei ansteigender Ansteuerspannung führen über den Piezoeffekt zu einem zeitabhängigen Stromfluss, der als Sensorstrom analog zu einem blockierenden Gegendruck bei einer zuvor beschriebenen Mikropumpe erkannt werden kann.

Hierbei ist zu beachten, dass bei einer hart-hart Dichtung des Ventils dieser Kontakt, sofern er ungedämpft erfolgt (z.B. bei Gasventilen), in sehr kurzer Zeit erfolgt, was mit entsprechend hohen Belastungen verbunden ist und somit zu großen und kurzen transienten Signalen im Sensorstrom führt. Ist die Ventilbewegung gedämpfter (z.B. bei Flüssigkeiten), dann sind die Belastungsspitzen kleiner, und das Sensorstromsignal ist ebenfalls kleiner und zeitverteilter. Auch dieser Wirkungszusammenhang kann entweder direkt abgeleitet werden, oder mittels Machine Learning Methoden trainiert werden.

Mit dem erfindungsgemäßen Konzept kann also prinzipiell nicht nur detektiert werden, dass ein Ventil schließt, sondern auch welches Medium (z.B. Luft oder Flüssigkeit) sich in der Ventilkammer befindet. Darüber hinaus kann über eine zeitliche Zuordnung des Schließzeitpunkts in Bezug auf den Aktuierungszyklus eine Aussage über dessen Veränderung getroffen werden, und es können beispielsweise eine Degradation der Aktor-Vorspannung, ein Quellen einer Ventilweichdichtung oder Änderungen von Umgebungsparametern, wie z.B. ein Druck über dem Membranelement oder auch eine Temperatur erkannt werden. Des Weiteren kann auch ein Übersteuern des Membranaktors 100 und somit eine mechanische Überbeanspruchung des piezobetätigten Membranaktors 100 vermieden werden, wenn das Ventil nur bis zu diesem detektierbaren Anschlagspunkt betrieben wird.

Die nachfolgende Tabelle 1 zeigt einen Überblick über die äußeren Einflussfaktoren, die auf aktive piezobetätigte Mikroventile wirken können, und die mittels des erfindungsgemäßen Konzepts identifiziert und/oder klassifiziert werden können.

*(Tabelle 1)*

| Betriebsparameter (Funktion/Zustand) | Äußerer Einflussfaktor (Wirkmechanismus) |
|---|---|
| Zustandserkennung bei Schaltventilen (geöffnet/geschlossen) | Zustandswechsel, insbesondere das Berühren und Lösen des Dichtelementes wird überwacht |
| Medienunterscheidung bspw. für Blasen- oder Kondensaterkennung, Detektion der Selbst- oder Fehlansaugung in Dosiersystemen | Dämpfungsverhalten beim Öffnen oder Schließen liefert Aussage über Viskosität des Mediums, da der hydraulische Druck beim Verdrängen des Mediums auf den Aktor wirkt |
| Anomalie-Erkennung z.B. Partikel blockiert Ventilsitz oder Sticking behindert Öffnung | Zusätzliche Kräfte wirken auf den Aktor (Sticking) oder Behindern die mechanische Bewegung (Partikel). Dies resultiert in zeitlich unterscheidbaren Lade- und Entladekurven |
| Bruch- und Ausfallsdetektion | Als Extremfall der Anomaliedetektion |
| Adaptive Regelung - Vermeidung von Übersteuerung | Durch die Detektion des Anschlagspunktes in der zeitlichen Dimension kann eine Aussage über die hierfür notwendige Schließspannung getroffen werden. Die Steuerung einer jeden Aktuierung des Aktors kann somit auf die Schließspannung anstelle der sonst üblichen maximalen Feldstärke von üblicherweise 2-3 kV/mm reduziert werden. Dies verhindert eine Biegebelastung über den Ventilsitz, die im worst case zum kritischen Bruch oder zum unterkritischen Risswachstum in der Keramik führen kann |
| Erkennung von Aktordegradation | Ist ein abnehmender Trend in der benötigten Schließspannung zu erkennen, kann man dies auf eine Aktorermüdung bspw. durch die Reduktion des $d31$-Koeffizienten oder durch eine Degradation der Klebeschicht zurückführen |
| Erkennung der Änderung von Umgebungsparametern | Änderungen von i. Druck über der Membran, ii. Druck am Einlass des Ventils, iii. Druck am Auslass des Ventils, iv. Temperatur führen zu einer Änderung des Gleichgewichtes der Aktorauslenkung ohne anliegende elektrische Spannung und somit zu einer Veränderung des Schließzeitpunktes/der Schließspannung bei der Aktuierung |
| Detektion im Verhalten der Dichtelemente | Weichelemente können im Kontakt mit Wasser quellen oder im Laufe des Betriebs die elastischen Eigenschaften verlieren. Beides ist durch die transiente Ladestromüberwachung durch die zeitlichen und absoluten Änderungen der Gegenkräfte prinzipiell unterscheidbar. Ersteres verändert den Schließzeitpunkt, Letzteres die Schließdynamik, sprich ein weiches Anschlagen wird zu einem harten Aufschlagen. |

## 2. Elektrostatisch angetriebener Membranaktor

### *2.1 Elektrostatisch angetriebene Mikropumpe*

Im Falle eines erfindungsgemäßen elektrostatisch angetriebenen Membranaktors 100 (Figur 2 - rechte Seite) gibt es im Vergleich zum piezoelektrischen Antrieb zwar keine elektromechanische Kopplung in dem Sinne, dass eine Druckänderung im Aktorelement 102 selbst zu einem zusätzlichen Stromfluss führt. Aber es gibt eine ganz analoge Abhängigkeit des Stromflusses auf den Membranaktor 100, die von der mechanischen und fluidischen Antwort abhängt.

Zunächst hängt die elektrische Kapazität C von der mechanischen Position des Membranaktors 100 ab. Beispielsweise sei zu Beginn eines Saughubs das Membranelement 101 entspannt und flach, wobei es eine Anfangskapazität $C_0$ aufwiese. Wenn nun ein Ansteuersignal (z.B. eine Spannung U) schnell angelegt wird, z.B. mit einer Zeitkonstanten $\tau = R \cdot C_0$, mit $C_0$ = 100 pF = 1e-10 F und $R$ = 10 kOhm, dann entspräche $\tau$ = 1 $\mu s$. In dieser kurzen Zeit wird angenommen, dass der Membranaktor 100 sich aufgrund von Trägheit und Reibung der beteiligten Materialien (Membran, Fluide) noch nicht bewegt.

Bewegt sich nun die Membran 101 aufgrund des Wechselspiels der elektrostatischen Anziehungskräfte bei der angelegten Spannung $U_0$ mit dem Pumpkammerdruck $p$ in Richtung der Gegenelektrode (Aktorelement 102), dann steigt die Kapazität an. Dadurch ergibt sich ein zusätzlicher Stromfluss auf die Gegenelektrode (Aktorelement 102), der rein mit der Bewegung des Membranelements 101 korreliert ist, das wiederrum auch vom Pumpkammerdruck $p$ abhängt.

Die prinzipielle Bewegung des Membranelements 101 einer elektrostatisch angetriebenen Mikropumpe und das Zusammenspiel mit dem Pumpkammerdruck $p$ beim Saughub (also nach dem Anlegen des Ansteuersignals) geschieht wie folgt. Zunächst wirken rücktreibende Hook'sche Kräfte den auslenkenden Kräften entgegen, wobei die auslenkenden Kräfte des Membranelements 101 aufgrund der Kapazitätsänderung nichtlinear steigen. Wird das Membranelement bis ca. 1/3 in Richtung der Gegenelektrode 102 ausgelenkt, kommt es zu einem "Umschnappen" des Membranelements 102, wodurch sich das Membranelement 102 dann sehr schnell in Richtung Gegenelektrode 102 bewegt.

Diese Membranbewegung wird dann gestoppt, wenn das Membranelement 101 an der Gegenelektrode 102 anschlägt, zuerst in der Membranmitte, dann schmiegt sich das Membranelement 101 an die Gegenelektrode 102 an. Nach dem Anschlagen und dem Anschmiegen verlangsamt sich die Kapazitätszunahme. Durch die Gegenelektrode 102 werden starke intrinsische Gegenkräfte erzeugt, bis das Membranelement 101 schließlich ins Kräftegleichgewicht und zum Stillstand kommt.

Während dieser gesamten Bewegung das Membranelements 101 vergrößert sich die Kapazität $C(t)$ bei der angelegten Spannung $U_0$, was zu einem korrespondierenden Stromfluss führt. Wenn dieser Stromfluss zeitaufgelöst durch die erfindungsgemäße Signalverarbeitungsvorrichtung 105 gemessen wird, kann direkt (bei bekanntem Zusammenhang zwischen Position und Kapazität) auf die zeitaufgelöste Position des Membranelements 101 geschlossen werden.

Da dieser "Sensorstrom" beim elektrostatischen Antrieb im Gegensatz zum piezoelektrischen Antrieb dominant ist, werden viel geringere Anforderungen an die Signalerzeugungsvorrichtung 103 und die Signalverarbeitungsvorrichtung 105 gestellt.

Weiterhin macht es einen Unterschied, ob sich Luft oder Flüssigkeit in der Pumpkammer befindet. Im ersten Fall kann sich das Membranelement schneller bewegen, da Luft eine wesentlich geringere Masse hat im Vergleich zu Wasser. Somit kann erkannt werden, ob sich Luft oder Flüssigkeit in der elektrostatisch angetriebenen Mikropumpe befindet. Das heißt, der Aggregatszustand des in dem Mikrofluid-Bauelement (Mikropumpe) 1000 befindlichen Fluids kann erkannt werden.

Beim Druckhub wird das Ansteuersignal 104, z.B. die elektrische Spannung, ausgeschaltet, quasi kurzgeschlossen $U = 0\,V$. Die Ladungen fließen mit einer sehr schnellen (elektrischen) Zeitkonstante ab, nach dieser Zeit liegt keine Spannung mehr an. Diese Zeitkonstante $\tau_{D0}$ hängt bei einer sprunghaften Spannungsänderung von der elektrischen Kapazität zu Beginn des Druckhubs $C_{D0}$ und dem Ladewiderstand $R$ ab: $\tau_{D0} = R \cdot C_{D0}$, und liegt im Bereich von Mikrosekunden. In dieser kurzen Zeit kann noch keine Flüssigkeit durch das Ventil fließen.

Bei der anschließenden Bewegung des Membranelements 101 ändert sich zwar die Kapazität, aber es gibt (aufgrund $U = 0\,V$) auch keinen Stromfluss mehr, wenn das Membranelement 101 sich beim Druckhub bewegt, und dementsprechend kann die Bewegung auch nicht mehr mit dem Sensorstrom gemessen werden.

Alternativ könnte man die Spannung beim Druckhub nicht ganz ausschalten, sondern nur bis auf einen kleinen Wert $U_1$ absenken, z.B. $U_1 = 0,01\,U_0$ oder noch kleiner. Damit hätte man noch fast den gesamten Hub verfügbar, aber man hätte noch Ladungen nach dem Ausschalten auf dem Membranaktor 100, und dadurch einen verbleibenden Stromfluss durch die Bewegung des Membranaktors 100.

Das Membranelement 101 löst sich von der Gegenelektrode 102, und nimmt wieder seinen Ausgangszustand ein. Während dieser Bewegung verkleinert sich die Kapazität wieder, was zu einem entgegengesetzten Stromfluss führt.

## 2.2 Elektrostatisch angetriebenes Mikroventil

Analog zum oben beschriebenen piezobetätigten Mikroventil kann auch beim Schließen eines erfindungsgemäßen elektrostatisch angetriebenen Mikroventils die Bewegung des Membranaktors 100 und das Auftreffen auf den Ventilsitz erkannt werden. Für genauere Ausführungen sei daher an dieser Stelle auf Punkt 1.2 verwiesen.

Zusammenfassend kann hier also zunächst festgehalten werden, dass erfindungsgemäße Ausführungsformen einen piezobetätigten Membranaktor 100 oder einen elektrostatisch betätigten Membranaktor 100 vorsehen können. Der piezobetätigte Membranaktor 100 kann in einem piezobetätigten Mikrofluid-Bauelement 1000, wie zum Beispiel einer piezobetätigten Mikrofluidpumpe oder einem piezobetätigten Mikrofluidventil, eingesetzt werden. Der elektrostatisch betätigte Membranaktor 100 kann in einem elektrostatisch betätigten Mikrofluid-Bauelement 1000, wie zum Beispiel einer elektrostatisch betätigten Mikrofluidpumpe oder einem elektrostatisch betätigten Mikrofluidventil, eingesetzt werden.

In all diesen erfindungsgemäßen Ausführungsformen kann die Signalverarbeitungsvorrichtung 105 beispielsweise ausgestaltet sein, um basierend auf dem zeitlichen Signalverlauf des Ansteuersignals 104 die Art des in dem Mikrofluid-Bauelement 1000 verwendeten Fluids zu ermitteln. Alternativ oder zusätzlich kann die Signalverarbeitungsvorrichtung 105 ausgestaltet sein, um basierend auf dem zeitlichen Signalverlauf des Ansteuersignals 104 eine Unterscheidung des Aggregatszustands des Fluids vorzunehmen, d.h. es kann unterschieden werden, ob das Fluid gasförmig oder flüssig ist. Je nach Art des Fluids bzw. je nach Aggregatszustand des Fluids können sich die mechanischen Eigenschaften des Membranaktors 100 ändern, d.h. die Art des Fluids und/oder dessen Aggregatzustand kann als ein äußerer Einflussfaktor beschrieben werden, der eben mittels des erfindungsgemäßen Konzepts identifiziert und/oder zu klassifiziert werden kann.

In erfindungsgemäßen Ausführungsbeispielen, in denen das Mikrofluid-Bauelement 1000 eine Mikrofluidpumpe mit einer Pumpkammer aufweist, wobei zumindest eine Membranseite des Membranelements 101 mit einem in der Pumpkammer befindlichen Fluid in Kontakt ist, wird durch das Betätigen des Membranaktors 100 ein veränderlicher Pumpkammerdruck in der Pumpkammer erzeugt. In derartigen Ausführungsbeispielen kann die Signalverarbeitungsvorrichtung 105 ausgestaltet sein, um basierend auf dem zeitlichen Signalverlauf des Ansteuersignals 104 den veränderlichen Pumpkammerdruck zu ermitteln und hierüber den äußeren Einflussfaktor zu identifizieren und/oder zu klassifizieren. Das heißt, der Pumpkammerdruck verursacht einen Signalanteil, der zu einer zeitlichen Abweichung des Ansteuersignals 104 führt. Der Pumpkammerdruck wiederum variiert charakteristisch mit der Anwesenheit von äußeren Einflussfaktoren. Somit führt also eine Abweichung des Pumpkammerdrucks zu einer Änderung des zeitlichen Signalverlaufs des Ansteuersignals 104, wodurch wiederum der hierfür ursächliche äußere Einflussfaktor ermittelt werden kann. Zusammenfassend bedeutet dies, dass ein äußerer Einflussfaktor den Pumpkammerdruck verändert, und der Pumpkammerdruck wiederum bedingt eine Veränderung im zeitlichen Signalverlauf des Ansteuersignals 104, wodurch der äußere Einflussfaktor ermittelt werden kann. Das heißt, anhand einer Abweichung im Pumpkammerdruck kann der äußere Einflussfaktor ermittelt werden. Dies wird nachfolgend noch an konkreten Beispielen im Detail erläutert.

In erfindungsgemäßen Ausführungsbeispielen, in denen das Mikrofluid-Bauelement 1000 ein Mikrofluid-Ventil aufweist, mit dem ein Fluidpfad geöffnet und/oder geschlossen werden kann, kann die Signalverarbeitungsvorrichtung 105 ausgestaltet sein, um basierend auf dem zeitlichen Signalverlauf des Ansteuersignals 104 den äußeren Einflussfaktor zu identifizieren und/oder zu klassifizieren und hierüber einen zeitveränderlichen Betriebsparameter des Mikrofluid-Ventils zu ermitteln.

Es sei an dieser Stelle nochmals darauf hingewiesen, dass es sich bei dem äußeren Einflussfaktor um einen äußeren Einflussfaktor handelt, der ursächlich für die Abweichung im zeitlichen Signalverlauf des Ansteuersignals 104 ist.

Rein beispielhaft sollen hierfür die ersten drei Zeilen von Tabelle 1 erläutert werden.

Zeile 1: Ein Zustandswechsel des Ventils, zum Beispiel das Berühren oder Lösen des Dichtelements, führt zu einer charakteristischen Änderung im zeitlichen Signalverlauf des Ansteuersignals 104. Diese Änderung im zeitlichen Signalverlauf lässt es zu, einen entsprechenden Betriebsparameter, z.B. Ventil geöffnet/geschlossen, zu ermitteln.

Zeile 2: Je nach Viskosität des eingesetzten Fluids ändert sich das Dämpfungsverhalten beim Öffnen oder Schließen des Ventils, was zu einer charakteristischen Änderung im zeitlichen Signalverlauf des Ansteuersignals 104 führt. Diese Änderung im zeitlichen Signalverlauf lässt es zu, einen entsprechenden Betriebsparameter, z.B. Anwesenheit von Blasen- oder Kondensat, Selbst- oder Fehlansaugung, zu ermitteln.

Zeile 3: Beim Öffnen des Ventils können beispielsweise zusätzliche Kräfte auf den Aktor wirken (sog. Sticking), oder die mechanische Bewegung des Ventils kann durch zusätzliche Kräfte behindert werden, z.B. wenn ein Partikel das vollständige Schließen des Ventils verhindert. Dies resultiert in zeitlich unterscheidbaren Lade- und Entladekurven, d.h. in einer charakteristischen Änderung des zeitlichen Signalverlaufs des Ansteuersignals 104.

Diese Änderung im zeitlichen Signalverlauf lässt es zu, einen entsprechenden Betriebsparameter, z.B. Partikel blockiert Ventilsitz oder Sticking behindert Öffnung, zu ermitteln.

## 3. Messung des Sensorstroms

In den nachfolgenden Kapiteln soll das erfindungsgemäße Konzept am Beispiel eines piezobetätigten Membranaktors 100 beschrieben werden. Mit Verweis auf die obigen Erläuterungen ist das hierin beschriebene Beispiel jedoch auch analog für elektrostatisch betätigte Membranaktoren 100 gültig.

Die Herausforderung besteht nun zunächst darin, den Stromfluss auf bzw. von der Piezokeramik (Aktorelement) 102 zu messen, ohne dabei den Lade- und Entladestrom zu beeinflussen. Des Weiteren sollte die Messschaltung (Signalverarbeitungsvorrichtung) 105 ein hohe Signalgüte aufweisen um die geringen Ströme störungsfrei zu messen. Das gesamte Schaltungskonzept muss außerdem möglichst platzsparend und kostengünstig realisierbar sein.

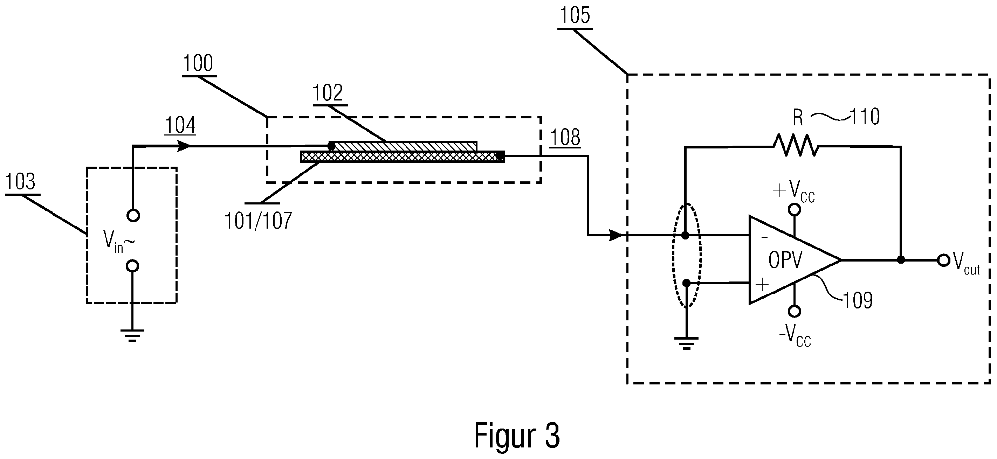

Figur 3 zeigt eine schematische Ansicht eines Ausführungsbeispiels mit einer Signalverarbeitungsvorrichtung 105, die ausgestaltet ist, um den zeitlichen Verlauf des Ansteuersignals 104 zu ermitteln.

Zunächst zeigt Figur 3 den bereits zuvor beschriebenen erfindungsgemäßen piezoelektrisch (oder elektrostatisch) angetriebenen Membranaktor 100. Im Falle eines piezobetätigten Membranaktors 100 kann es sich bei dem Aktorelement 102 um eine Piezokeramik handeln. Das Aktorelement 102 kann auf einem Trägersubstrat 107 angeordnet sein. In einigen Ausführungsbeispielen kann das Membranelement 101 als Trägersubstrat ausgestaltet sein, auf dem das Aktorelement 102 angeordnet ist. Das Trägersubstrat 107 bzw. das Membranelement 101 und das Aktorelement 102 können beispielsweise mittels adhäsiver Fügetechniken in einen Verbund gebracht werden.

Auf der Oberseite des Aktorelements 102 befindet sich eine Ansteuer-Elektrode und auf der Unterseite eine Masse-Elektrode, welche durch Spitzenkontakt mit dem Trägersubstrat 107 bzw. dem Membranelement 101 elektrisch kurzgeschlossen ist.

Das Aktorelement 102 ist mit der Signalerzeugungsvorrichtung (Ansteuerelektronik) 103 verbunden. Die Signalerzeugungsvorrichtung 103 erzeugt das Ansteuersignal 104. Das Trägersubstrat 107 bzw. das Membranelement 101 ist mit der Signalverarbeitungsvorrichtung (Messschaltung) 105 verbunden, welche ausgestaltet ist, um den kombinierten Ladungsfluss 108 zu detektieren, der von dem Trägersubstrat 107 bzw. dem Membranelement 101 abfließt.

In dem vorliegenden Ausführungsbeispiel weist die Signalerzeugungsvorrichtung 103 eine Spannungsquelle auf, die das Ansteuersignal 104 in Form eines Wechselspannungssignals erzeugt. Alternativ kann die Signalerzeugungsvorrichtung 103 eine Stromquelle aufweisen, die das Ansteuersignal 104 in Form eines Wechselstromsignals erzeugt.

Der Ausgang der Versorgungsspannung $V_{in}$ der Spannungsquelle 103 ist mit der Ansteuer-Elektrode der Piezokeramik 102 verbunden. Der Masse-Ausgang der Spannungsquelle 103 wird mit der Masse der Messschaltung 105 verbunden. Die Masse-Elektrode der Piezokeramik 102 (bzw. die leitende Oberfläche des Trägersubstrats 107) wird mit dem invertierenden Eingang eines Operationsverstärkers 109 verbunden. Der nicht invertierende Eingang wird mit dem Massepotential der Signalerzeugungsvorrichtung 103 verbunden. Die hier dargestellte Schaltung erzeugt ein virtuelles Massepotential am invertierenden Eingang des Operationsverstärkers 109. Über den Messwiderstand 110 kann das Ansteuersignal 104, d.h. der Stromfluss $I$ auf die Piezokeramik 102, bestimmt werden. Dieser Stromfluss $I$ weist mindestens zwei Signalanteile auf, nämlich den Ladestrom $I_C$ und den Sensorstrom $I_S$, wobei gilt: $I_C + I_S = I = U / R$.

Durch die Verwendung eines spannungsgesteuerten Operationsverstärkers 109 kann der gesamte Stromfluss $I$ auf das bzw. von dem kapazitive/n Element (Membranaktor) 100 gemessen werden, ohne dabei die Stromquelle (Signalerzeugungsvorrichtung) 103 durch die Messschaltung (Signalverarbeitungsvorrichtung) 105 zu belasten. Für die Klemmenspannung $Uk$ bzw. $V_{out}$ am Ausgang der Messschaltung 105 folgt damit $Uk = - R * I$.

Um den in Figur 3 dargestellten Sensorstrom $I_S$ und Ladestrom $I_C$ hochaufgelöst zu messen, wird eine entsprechend hohe Verstärkung verwendet. Dies führt jedoch bei hohen Strömen, vor allem bei der Verwendung von Rechtecksignalen, zu einer Übersteuerung der Messschaltung 105. Aus diesem Grund werden nachfolgend zwei Lösungsvorschläge (aktiv und passiv) vorgestellt, um die Qualität und Zuverlässigkeit der Messschaltung (Signalverarbeitungsvorrichtung) 105 zu gewährleisten.

Für die aktive Lösung kann die Messschaltung 105 um ein digitales Potentiometer erweitert werden. Somit ist, je nach Anwendung und Ansteuersignal 104, die Verstärkung der Messschaltung 105 optimal einstellbar. Zusätzlich wird die variable Verstärkung genutzt um, je nach Anwendung, charakteristische Signalbereiche zu verstärken. Sofern eine entsprechend schnelle Logik verwendet wird, kann hierdurch sowohl der große Ladestrom $I_C$ als auch der kleine Sensorstrom $I_S$ gemessen werden.

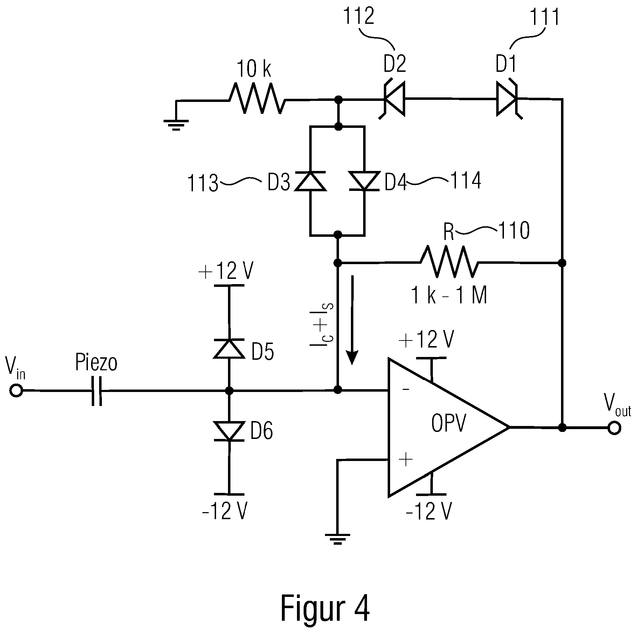

Figur 4 zeigt als Alternative eine passive Lösung, in der ein konstanter Widerstand sowie ein Dioden-Netzwerk verwendet werden können. Der maximale Strom wird über zwei Zener-Dioden 111, 112 begrenzt. Durch zusätzliche Low- Leakage-Dioden 113, 114 wird der Leckstrom über die Zener-Dioden 111, 112 reduziert, wodurch die Güte des Signals erhöht wird. Das Maximum der Klemmenspannung $Uk$ wird durch die Zener-Spannung $U_z$, sowie den Vorwärtsspannungen der Low-Leakage-Dioden UF,D und der Zener-Diode UF,ZD bestimmt: $Uk < U_z + UF,ZD + UF,D = 4,3 V + 0,7 V + 0,5 V = 5,5 V$. Der Vorteil der passiven Lösung liegt unter anderem darin, dass diese sehr kompakt, zuverlässig, einfach und sehr gut in einen ASIC integrierbar ist.

Die Signalverarbeitungsvorrichtung 105 kann ferner einen Messwiderstand 110 aufweisen, der zwischen den invertierenden Eingang und den Ausgang des Operationsverstärkers 109 geschaltet ist. Über diesem Messwiderstand 110 fällt dann das Ansteuersignal 104 ab, das die Signalverarbeitungsvorrichtung 105 verarbeitet.

Das Ansteuersignal 104 weist einen zeitlichen Signalverlauf auf, der sich unterscheidet, je nachdem, ob äußere Einflussfaktoren auf das Mikrofluid-Element 1000 wirken. Der zeitliche Signalverlauf des Ansteuersignals 104 unterscheidet sich zudem in Abhängigkeit davon, welche äußeren Einflussfaktoren vorherrschen. Das heißt, wenn keine äußeren Einflussfaktoren vorliegen, dann weist das Ansteuersignal 104 einen ersten zeitlichen Signalverlauf auf. Wenn jedoch ein oder mehrere äußere Einflussfaktoren vorliegen, dann wird das Ansteuersignal 104 dadurch beeinflusst, und das beeinflusste Ansteuersignal 104 weist einen unterschiedlichen zweiten zeitlichen Signalverlauf auf.

In Ausführungsbeispielen der Erfindung ist die Signalverarbeitungsvorrichtung 105 demnach dazu ausgestaltet, um einen ersten zeitlichen Signalverlauf des Ansteuersignals 104, der einer Betätigung des Membranaktors 100 ohne äußere Beeinflussung entspricht, zu unterscheiden von einem unterschiedlichen zweiten zeitlichen Signalverlauf des Ansteuersignals 104, der einer Betätigung des Membranaktors 100 unter Einwirkung von mindestens einem äußeren Einflussfaktor entspricht.

## 4. Qualitative Betrachtung der äußeren Einflussfaktoren und der entsprechenden Wechselwirkungen des piezoelektrischen Membranaktors

In diesem Abschnitt wird ein Modell für den Sensorstrom $I_S$ aufgestellt, wie er die fluidische Wechselwirkung einer piezoelektrisch angetriebenen Mikropumpe 1000 abbildet. Dieses Modell unterliegt Vereinfachungen, z.B.:

- Vernachlässigung der Hysterese
- Vernachlässigung des Piezokriechens
- Annahme linearer Ventilkennlinien
- Separierung und Superposition der fluidischen und elektrischen Modelle
- Linearisierung der Zustandsänderung der Gasblase
- Beschreibung der Elastomechanik mit den Vereinfachungen der Kirchhoff'schen Plattentheorie

Aufgrund dieser Vereinfachungen kann dieses Modell die gesamte Wirklichkeit zwar nicht exakt im Sinne eines "White Box" Modells (siehe Abschnitt 7.1 - White Box) abbilden. Es werden jedoch wesentliche Wirkungszusammenhänge verständlich gemacht, was die Verständlichkeit der vorliegenden Erfindung wesentlich erleichtert. In manchen Fällen der Störungserkennung kann ein "Machine Learning" mit neuronalen Netzen angewendet werden (siehe Abschnitt 7.2 - Black Box), wobei das nachfolgend beschriebene Modell das Machine Learning deutlich vereinfachen kann (siehe Abschnitt 7.3 - Grey Box). In anderen Fällen kann unter Verwendung des nachfolgend beschriebenen Modells sogar vollständig auf ein Machine Learning Training verzichtet werden.

### 4.1 Elektromechanische Kopplung des Membranaktors

Auch die nachfolgenden Kapitel werden beispielhaft anhand eines erfindungsgemäßen piezoelektrisch betätigten Membranaktor 100 beschrieben, wobei sämtliche Ausführungen natürlich auch auf einen erfindungsgemäßen elektrostatisch angetriebenen Membranaktor 100 anwendbar sind.

Zunächst kann die elektromechanische Kopplung (im Kleinsignal) durch folgende lineare Approximation beschrieben werden:

$$Q(p, U) = C_{el}(U - U_0) + C_E^*(p - p_0)$$

[Gl. 1a]

$Q$: elektrische Ladung auf die Piezokeramik, $U$ Spannung an der Piezokeramik, $C_E^*$ Kopplungsfaktor, $p$ Druck auf den Membranwandler. Der Kopplungsfaktor $C_E^*$ beschreibt die Änderung der elektrischen Ladung, wenn sich die Druckdifferenz ändert. $C_{el}$ stellt die elektrische Kapazität der Piezokeramik dar.

Das heißt, die elektrische Ladung $Q$, die auf den Membranaktor 100 fließt, weist eine Abhängigkeit vom zeitlich variablen Ansteuersignal 104 (Spannung $U$) sowie vom zeitlich variablen Druck $p$ (Figur 1) unter dem Membranelement 101 auf. Die elektrische Ladung $Q$ weist einen ersten Term $C_{el} \cdot (U - U_0)$ auf, der mit der elektrischen Kapazität $C_{el}$ und der Potentialdifferenz $(U - U_0)$ der zeitvariablen elektrischen Spannung U verknüpft ist. Außerdem weist die elektrische Ladung $Q$ einen zweiten Term $C_E^* \cdot (p - p_0)$ auf, der mit dem Piezo-Kopplungsfaktor $C_E^*$ und dem zeit- und/oder ortsveränderlichen Druck $p$ bzw. der Druckdifferenz $(p - p_0)$ zwischen der Unterseite und der Oberseite des Membranelements 101 verknüpft ist. Gleichung [1a] beschreibt den direkten Piezoeffekt des Membranwandlers bzw. Membranaktors 100.

Die dazugehörige "Zwillingsgleichung" kann wie folgt formuliert werden: der Piezo-Membranwandler 100 vollzieht eine Volumenverdrängung V, wenn entweder eine Änderung der Druckdifferenz $p-p_0$ oder der Potentialdifferenz $U - U_0$ (oder beides) stattfindet. Diese Volumenverdrängung V kann wie folgt berechnet werden:

$$V = C_p(p - p_0) + C_E^*(U - U_0)$$

[Gl. 1b]

Der Koeffizient $C_p$ stellt die "fluidische Kapazität" des Membranwandlers dar, d.h. wie stark ändert sich das verdrängte Volumen, wenn sich die Druckdifferenz zwischen Membranober- und Unterseite ändert. Der Kopplungsfaktor $C_E^*$ beschreibt, wie stark sich das verdrängte Volumen ändert, wenn sich die elektrische Potentialdifferenz $U - U_0$ ändert.

Es kann betont werden, dass der Kopplungsfaktor $C_E^*$ aus Gleichung [1b] identisch zum Kopplungsfaktor $C_E^*$ gemäß Gleichung [1a] ist.

Unter der Modellvoraussetzung der Kirchhoff'schen Plattentheorie wurde eine analytische Lösung gefunden, die für eine runde Piezomembran (z.B. PZT Keramik) und eine runde Trägermembran (z.B. Metall oder Silizium) die Koeffizienten $C_p$ (fluidische Kapazität) und $C_E^*$ (Kopplungsfaktor) berechnet (Quelle https://www.sciencedirect.com/science/article/pii/S0924424710002311). Die fluidische Kapazität $C_p$ wird damit analytisch bestimmt, sie hängt ab von dem Radius der Piezokeramik $R_p$, der Dicke der Piezokeramik $T_p$, dem Radius der Trägermembran $R_M$, der Dicke der Trägermembran $T_M$, sowie den Elastizitätsmoduli und den Poissonzahlen der beiden Materialien (Piezokeramik und Trägersubstrat). Der genaue Ausdruck für die (längeren) analytischen Formeln von Cp und $C_E^*$ befinden sich im Anhang der Dissertation des Erstautors M. Herz der oben zitierten Veröffentlichung.

Der Kopplungsfaktor $C_E^*$ wird (in derselben Ableitung) analytisch berechnet, er hängt (ebenso wie $C_p$) von den oben beschriebenen Parametern ab.

Wichtig zu erwähnen ist auch, dass der Kopplungsfaktor $C_E^*$ zusätzlich noch proportional zu der piezoelektrischen Ladungskonstanten $d_{31}$ ist, die regelmäßig in Datenblättern der Piezokeramikhersteller angegeben ist.

Zur Veranschaulichung von $C_E^*$: Das Hubvolumen $\Delta V$ einer Mikropumpe ohne Gegendruck ($p = p_0$), die zwischen den Spannungslevel einer negativen Spannung U- (z.B. U- = -40 V, Membran ist "nach oben", d.h. von dem Pumpkammerboden weg, ausgelenkt) und einer positiven Spannung U+ (z.B. U+ = 100 V, Membran ist nach unten ausgelenkt) angetrieben wird, berechnet sich aus Gleichung 1b wie folgt:

$$\Delta V = C_E^*(U_- - U_+)$$

**[Gl. 1c]**

Dadurch kann man sich die Bedeutung des Koeffizienten $C_E^*$ veranschaulichen. Der Koeffizient $C_E^*$ ist immer negativ, da er direkt zum Koeffizienten $d31$ proportional ist, der wiederum aus physikalischen Gründen negativ ist (wird an die Piezokeramik durch Anlegen einer Spannung ein elektrisches Feld in Polarisationsrichtung (z-Richtung) angelegt, schrumpft die Piezokeramik in lateraler Richtung). Dadurch ist das Hubvolumen in Gleichung [1c] positiv.

Die beiden Kopplungsgleichungen sind symmetrisch und hier dargestellt:

$$Q(p, U) = C_{el}(U - U_0) + C_E^*(p - p_0)$$

elektrische Ladung → ; elektrische Kapazität ↓ ; Kopplungsfaktor ↓

$$V(p, U) = C_p(p - p_0) + C_E^*(U - U_0)$$

Volumenverdrängung → ; fluidische Kapazität ; Druck (fluidisches Potential) ; Spannung (elektrisches Potential)

Damit wird angenommen, dass sich der elektrische Effekt und der piezoelektrische Effekt linear addieren. Der Strom auf den Piezo-Membranaktor 100 ergibt sich aus der Zeitableitung von [Gleichung 1]:

$$I = \frac{dQ}{dt} = C_{el} \cdot \frac{d(U - U_0)}{dt} + (U - U_0) \cdot \frac{dC_{el}}{dt} + (p - p_0) \cdot \frac{dC_E^*}{dt} + C_E^* \cdot \frac{d(p - p_0)}{dt}$$

**[Gl. 2]**

Bei dieser Zeitableitung wird (mit der Kettenregel) berücksichtigt, dass sowohl die elektrische Kapazität $C_{el}$ als auch der Kopplungsfaktor $C_E^*$ keine Konstanten, sondern (aufgrund des Großsignalverhaltens der Piezokeramik) zeitabhängig sind.

Da die Ansteuerung der Piezokeramiken bei fluidischen Bauelementen 1000, wie z.B. Mikropumpen und Mikroventilen, regelmäßig bei hohen elektrischen Spannungen (bzw. hohen elektrischen Feldstärken; die Feldstärke in der Piezokeramik E entspricht E = $(U-U_0)/T_p$, mit der Dicke der Piezokeramik $T_p$) im Großsignalbetrieb stattfindet, sind sowohl die elektrische Kapazität $C_{el}$ als auch der Kopplungsfaktor $C_E^*$ spannungsabhängig. Da sich die elektrische Spannung beim Ansteuern mit der Zeit verändert, verändern sich auch die Werte von $C_{el}$ und $C_E^*$ gemäß dem Großsignalverhalten des Piezomaterials. Es sei nochmals darauf verwiesen, dass $C_E^*$ proportional zur piezoelektrischen Ladungskonstante $d_{31}$ ist, dass $C_E^*$ im Großsignal (bei hohen Spannungen) zunimmt, und dass $C_E^*$ (je nach Piezomaterial) bei hohen Feldstärken ca. um den Faktor 1,5 größer ist als bei kleinen Feldstärken.

Unter der Annahme, dass das Massepotential $U_0$ = konstant ist; und auch der Atmosphärendruck $p_0$ = konstant ist (innerhalb kleiner Zeitintervalle), ergibt sich folgende Vereinfachung:

$$I = \frac{dQ}{dt} = C_{el} \cdot \frac{dU}{dt} + (U - U_0) \cdot \frac{dC_{el}}{dt} + (p - p_0) \cdot \frac{dC_E^*}{dt} + C_E^* \cdot \frac{dp}{dt}$$

[Gl. 3]

In dem vorliegenden Beispiel stellt der Strom $I$ das Ansteuersignal 104 dar. Da alle vier Terme auf der rechten Seite von [Gleichung 2] zeitabhängig sind, ergeben sich insgesamt vier Signalanteile, die im Rahmen der vorliegenden Offenbarung auch als "Sensorströme" $I_U$, $I_C$, $I_{ce}$, $I_p$ bezeichnet werden. Eine Addition dieser vier Sensorströme $I_U + I_C + I_{ce} + I_p$ ergibt den Gesamtstrom $I$, d.h. das Ansteuersignal 104 weist vier Signalanteile $I_U$, $I_C$, $I_{ce}$, $I_p$ auf:

$$I = \frac{dQ}{dt} = I_U + I_C + I_{ce} + I_p = C_{el} \cdot \frac{dU}{dt} + (U - U_0) \cdot \frac{dC_{el}}{dt} + (p - p_0) \cdot \frac{dC_E^*}{dt} + C_E^* \cdot \frac{dp}{dt}$$

[Gl. 4]

Jeder dieser Summanden ist mit einer zeitlichen Änderung einer bestimmten physikalischen Größe verknüpft. Bei plötzlicher, rechteckförmiger Störung wird das elektromechanische System aus dem Gleichgewicht gebracht, und kommt mit typischen Zeitkonstanten wieder ins Gleichgewicht. Genauer betrachtet, sind folgende physikalischen Subsysteme aus dem Gleichgewicht gekommen, die nun versuchen wieder ins Gleichgewicht zu streben:

1) die **freien elektrischen Ladungen** auf der Metallisierung der Piezokeramik (Term $I_U$)

2) die **Domänengrößen** ändern sich nach der Spannungsänderung und streben in einen neuen Gleichgewichtszustand (Terme $I_C$ und $I_{ce}$)

3) Der **Pumpkammerdruck** strebt in einen neuen Gleichgewichtszustand, der im Wesentlichen durch den Fluss des Mediums durch die Ventile bewirkt wird (Term $I_p$).

**4.2 Ausgleichsvorgänge beim plötzlichen Anlegen einer Spannungsänderung**

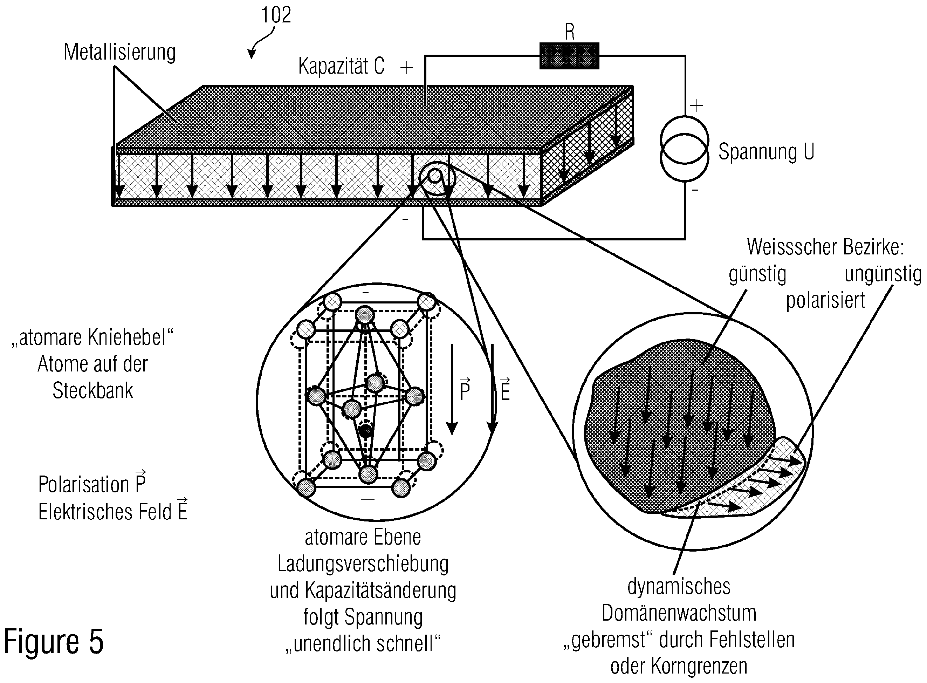

Bei einer plötzlichen Spannungsänderung gibt es zwei wesentliche Effekte (siehe Figur 5):

1) Das Fließen der Elektronen auf die Kapazität $C$ der Piezokeramik 102, wodurch

a. die Elektronen mit der Zeitkonstanten $\tau_A = R * C_{el}$ auf die Piezokeramik 102 fließen, und

b. die Atome sich "unendlich schnell strecken", und diese Streckung dann mit Schallgeschwindigkeit übertragen. Durch das Strecken der Atome

i. verändert sich wiederum die Kapazität sehr schnell (diese Großsignalkapazität ist größer als die Kapazität bei kleinen Spannungen. Dadurch fließt noch mehr Ladung auf die Piezokeramik 102), und

ii. vergrößert sich auch der $d_{31}$-Koeffizient (Großsignalverhalten)

Alle Änderungen unter 1) sollten innerhalb von $\tau_A = R * C_{el}$ abgeklungen sein und zu keinem weiteren Stromfluss auf die Piezokeramik 102 führen.

2) Die Vergrößerung günstig liegender Weiss'scher Bezirke durch Domänenwachstum, wobei diese durch Fehlstellen und Korngrenzen gebremst werden. Diese Änderungen passieren auf einer wesentlich langsameren Zeitskala $\tau_D$. Durch dieses Domänenwachstum vergrößert sich das Volumen, das günstig polarisiert ist. Dieser auch als Piezokriechen bezeichnete Effekt macht etwa einige Prozent des Gesamteffekts aus. Dadurch ändert sich

a. nochmal die Kapazität, und

b. der $d_{31}$-Koeffizient wird auch etwas grösser.

Aus dieser Betrachtung lässt sich festhalten, dass sowohl die Kapazität C als auch der $d_{31}$-Koeffizient (piezo-elektrischer Quer- oder Transversaleffekt bzw. d31-Effekt, wobei die mechanische Kraft quer zum angelegten Feld wirkt) sich anfangs sehr schnell mit der Spannung $U$ ändern, als auch später langsam mit dem Domänenwachstum.

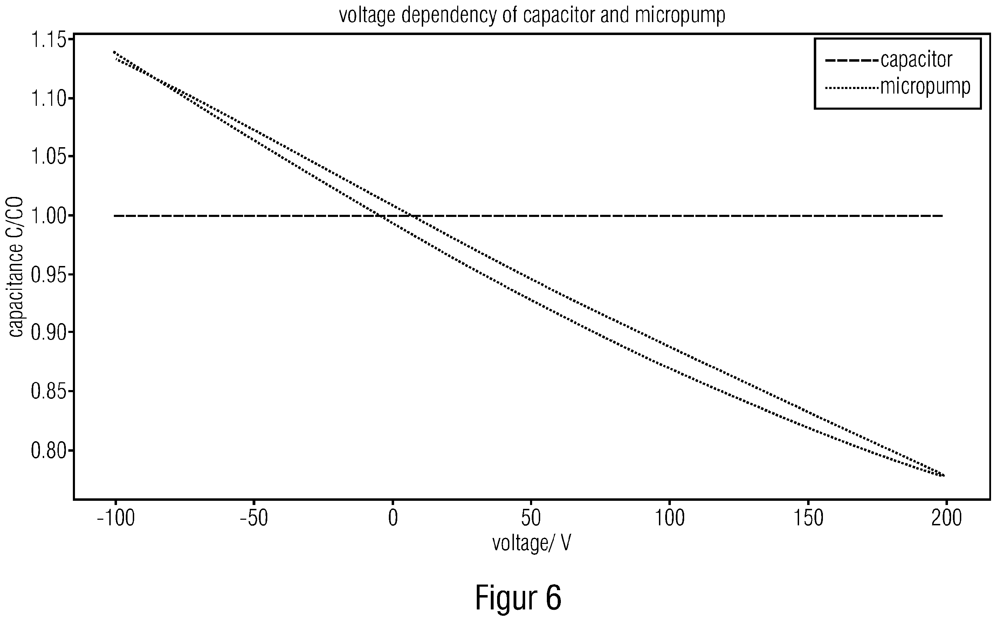

Figur 6 zeigt ein Beispiel für eine Messung der spannungsabhängigen elektrischen Kapazität *C(U)* der Piezokeramik 102. Gemessen wurde die elektrische Kapazität im Großsignalverhalten (dem typischen Spannungsbereich für Mikropumpen und Mikroventile), als Funktion der angelegten elektrischen Spannung. Zu sehen ist, dass die Kapazität spannungsabhängig ist, d.h. $\frac{dC_{el}}{dU} \neq 0$ . Weil die elektrische Spannung zeitabhängig ist, ist somit auch der Term $\frac{dC_{el}}{dU}$ zeitabhängig. Dies ist ein Beleg dafür, dass der Term $I_c = U\frac{dC_{el}}{dU} \neq 0$ von Null verschieden ist. Zusätzlich lässt sich eine leichte Hysterese der Kapazität festellen.

Bei einem plötzlichen Anlegen einer Spannungsänderung versucht also jedes der zuvor genannten physikalischen Subsysteme unabhängig voneinander in seinen jeweiligen Gleichgewichtszustand zu streben, wobei dies unterschiedlich lange dauert, d.h. jedes physikalische Subsystem klingt mit einer spezifischen Zeitkonstante $\tau$ wie folgt ab:

1) die Änderung der Spannung mit der Zeit *dU / dt* erfolgt exponentiell mit der Zeitkonstante $\tau_A = R * C_{el}$, mit dem Ladewiderstand *R*

2) die Änderung des Drucks mit der Zeit *dp / dt* erfolgt aus fluidischen Gründen. Der zugehörige Stromterm bzw. Sensorstrom $I_p$ kann somit dazu genutzt werden, um quasi wie mit einem Mikroskop in die Pumpkammer "hineinzusehen", mit der typischen Hubzeit $\tau_h$

3) die Änderung der Kapazität *dC_{el} / dt* hängt mit dem Piezoeffekt zusammen. Das $\varepsilon_r$ und auch die Kapazität der Piezokeramik 102 sind u.a. deswegen so hoch, weil sich innerhalb der Piezokeramik 102 nach erfolgter Polarisation so viele Dipole befinden. Während die Elektronen und Atome der Piezostruktur quasi "unendlich schnell" einer Störung folgen können, passiert die Ausbreitung der Weiss'schen Bezirke auf einer viel langsameren Zeitskala $\tau_C$. Aus diesem sogenannten "Piezokriechen" ist bekannt, dass diese Zeitskala bis in den Sekundenbereich reichen kann.

4) die Änderung der Kopplungskonstanten *dC_E\*/ dt* hängt ebenfalls mit dem Piezoeffekt zusammen. Dieser Effekt ist (zumindest teilweise) ganz ähnlich zu 3):

a. während die Elektronen und Atome der Piezokeramik 102 "unendlich schnell" einer Störung folgen können, passiert die Ausbreitung der Weiss'schen Bezirke auf einer langsameren Zeitskala $\tau_d$. Diese ist sehr ähnlich (bis identisch) mit $\tau_C$. Aus dem "Piezokriechen" ist bekannt, dass diese Zeitskala bis in den Sekundenbereich reichen kann.

b. die Kopplungskonstante $C_E^*$ ist proportional zum piezoelektrischen *d31*-Koeffizienten, welche vom Großsignal abhängt, d.h. bei hohen Spannungsamplituden ist der *d31*-Koeffizient ca. um den Faktor 1,5 größer als bei kleinen Spannungen, was wiederum die Ableitung von $C_E^*$ beeinflussen kann.

Mit den obigen Erläuterungen können die Ausgleichsvorgänge dann in [Gleichung 4] wie folgt beschrieben werden:

$$I = \frac{dQ}{dt} = I_U + I_C + I_{ce} + I_p = C_{el} \cdot \frac{dU}{dt} + (U - U_0)\frac{dC_{el}}{dt} + (p - p_0) \cdot \frac{dC_E^*}{dt} + C_E^* \frac{dp}{dt}$$

[Gl. 4]

1) Der Ausgleichsvorgang der freien Ladungen:

$$I_U = C_{el} \cdot \frac{dU}{dt} = I_{U0}\, e^{-\frac{t}{\tau_a}} \;\; ; \;\; mit\ \tau_a = R \cdot C_{el}$$

[Gl. 5]

2) Der Ausgleichsvorgang des Pumpkammerdrucks (ohne Squeeze film damping und mit linearisierten Ventilkennlinien)

$$I_p = C_E^* \cdot \frac{dp}{dt} = I_{p0} e^{-\frac{t}{\tau_h}} \ ; \quad mit \ \tau_h = R_{fluidisch} * C_{fluidisch}$$

[Gl. 6]

Die fluidische Zeitkonstante $\tau_h$ ist das Produkt aus dem gesamten fluidischen Strömungswiderstand $R_{fluidisch}$ (Definition Strömungswiderstand R: $\Delta p = R * Q$) und der fluidischen Kapazität $C_{fluidisch}$ (Definition fluidische Kapazität C: $\Delta V = C * \Delta p$). Der Strömungswiderstand $R_{fluidisch}$ kann als Summe des Strömungswiderstands der Pumpkammer und des Strömungswiderstands des geöffneten Ventils sowie des geschlossenen Ventils approximiert werden, während sich die fluidische Kapazität $C_{fluidisch}$ aus der Summe der fluidischen Kapazität der Antriebsmembran $C_p$ und der (optionalen) fluidischen Kapazität einer Gasblase ($C_{gas}$) zusammensetzt: Diese fluidischen Widerstände und fluidischen Kapazitäten sind nicht konstant und ändern während des Pumpvorgangs ihre Werte. Beispielsweise ist der Strömungswiderstand eines geöffneten Klappenventils zu Beginn des Pumpvorgangs, wenn das Ventil geöffnet ist, viel kleiner als am Ende des Pumpvorgangs, wenn das Ventil schließt. Ungeachtet dessen kann dieser Ausgleichsvorgang mit [Gleichung 6] approximiert werden.

Der durch die hierin beschriebene erfindungsgemäße Eigenschaft der "Eigensensorik" des Mikrofluid-Bauelements 1000 gemessene, transiente Stromverlauf von $I_p$ gibt damit einen direkten Einblick in fluidische Vorgänge in dem Mikrofluid-Bauelement 1000, wie z.B. einer Mikropumpe.

3) Der Ausgleichsvorgang der Domänen

    a) bezogen auf den Kopplungsfaktor $C_E^*$

$$I_{ce} = (p - p_0) \cdot \frac{dC_E^*}{dt} = I_{ce0} e^{-\frac{t}{\tau_d}}$$

[Gl. 7]

    b) bezogen auf die elektrische Kapazität $C_{el}$

$$I_C = (U - U_0) \cdot \frac{dC_{el}}{dt} = I_{C0} e^{-\frac{t}{\tau_c}}$$

[Gl. 8]

Der Ausgleichsvorgang der Kapazität $C_{el}$ und des Kopplungsfaktors $C_E^*$ haben die gleichen physikalischen Ursachen, nämlich das Wachstum der Domänen. Diese beiden Ausgleichsvorgänge erfolgen daher näherungsweise mit der gleichen Zeitkonstanten:

$$\tau_d = \tau_C = \tau_{piezo}$$

[Gl. 9]

Wobei die Amplituden $I_{C0}$ und $I_{d0}$ verschieden sein können. Damit ergibt sich

    a) bezogen auf den Kopplungsfaktor $C_E^*$

$$I_{ce} = (p - p_0) \cdot \frac{dC_E^*}{dt} = I_{ce0} e^{-\frac{t}{\tau_{Piezo}}}$$

[Gl. 10]

    b) bezogen auf die elektrische Kapazität der Piezokeramik $C_{el}$

$$I_C = (U - U_0) \cdot \frac{dC_{el}}{dt} = I_{C0}e^{-\frac{t}{\tau_{piezo}}}$$

[Gl. 11]

Somit ergibt sich letztlich der Ansatz für den Gesamtstrom *I* zu:

$$I = \frac{dQ}{dt} = I_U + I_p + I_C + I_{ce} = I_{U0}e^{-\frac{t}{\tau_a}} + I_{p0}e^{-\frac{t}{\tau_h}} + (I_{C0} + I_{ce0})e^{-\frac{t}{\tau_{piezo}}}$$

[Gl. 12]

Es ergibt sich also ein System mit sieben Koeffizienten, nämlich vier Stromamplituden und drei Zeitkonstanten. Während die elektrische Zeitkonstante schnell ist, sind die beiden fluidischen Zeitkonstanten langsamer. Durch ein Anfitten der Koeffizienten kann die elektromechanische Kopplung komplett während des Pumpbetriebes erfasst werden.

Bei der Interpretation des Sensorstroms ist es wesentlich, dass diese physikalischen Ausgleichsvorgänge nach einer Störung (z.B. Anlegen einer elektrischen Spannung) unabhängig voneinander in den Gleichgewichtszustand streben. Dadurch ist es möglich, den Stromfluss als Superposition dieser Effekte gemäß [Gleichung 12] zu betrachten und "anzufitten". Durch einen einzigen Messvorgang können damit Informationen bezüglich Laden der Kapazität, Vorgänge in der Piezokeramik und auch fluidische Wechselwirkungen bestimmt werden.

## 4.3 Elektromechanische Kopplung und Ausgleichsvorgänge bei Ansteuerung mit einem harmonischen Wechselspannungssignal

Wird ein piezobetätigter Membranaktor 100 beispielsweise in einer piezoelektrisch angetriebenen Mikromembranpumpe 1000 mit einem sinusförmigen Wechselspannungssignal beaufschlagt, kommt es zu einer Überlagerung der Zeitkonstanten, der beschriebenen Materialeffekte und der fluid-mechanischen Systemantwort. Dies führt zu einer Verzerrung des Stromsignals.

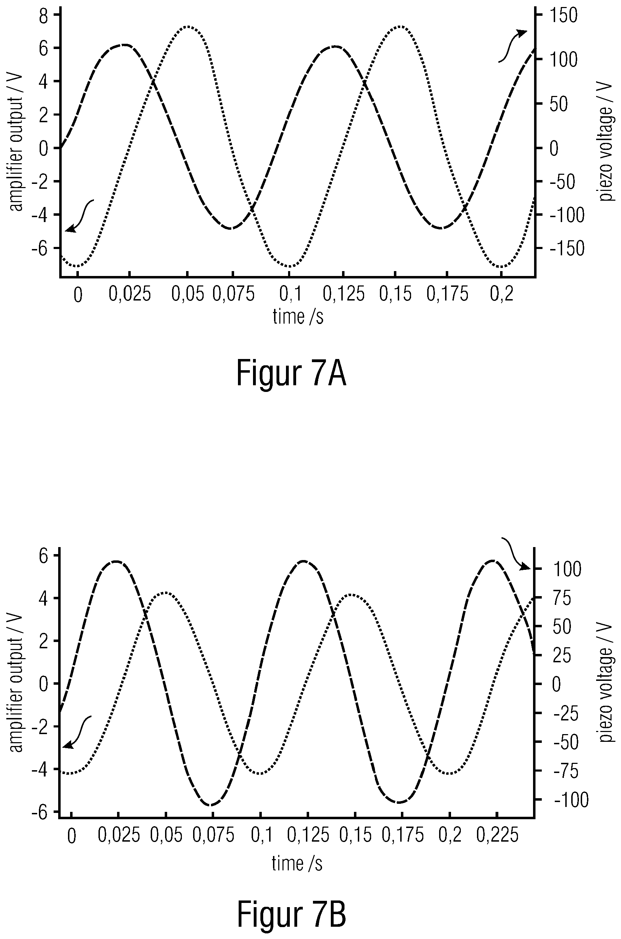

Figur 7A zeigt den Strom- und Spannungsverlauf einer Mikromembranpumpe mit Sinusansteuerung. Figur 7B zeigt zum Vergleich den zeitlich aufgelösten Stromverlauf bei Ansteuerung eines Kondensators.

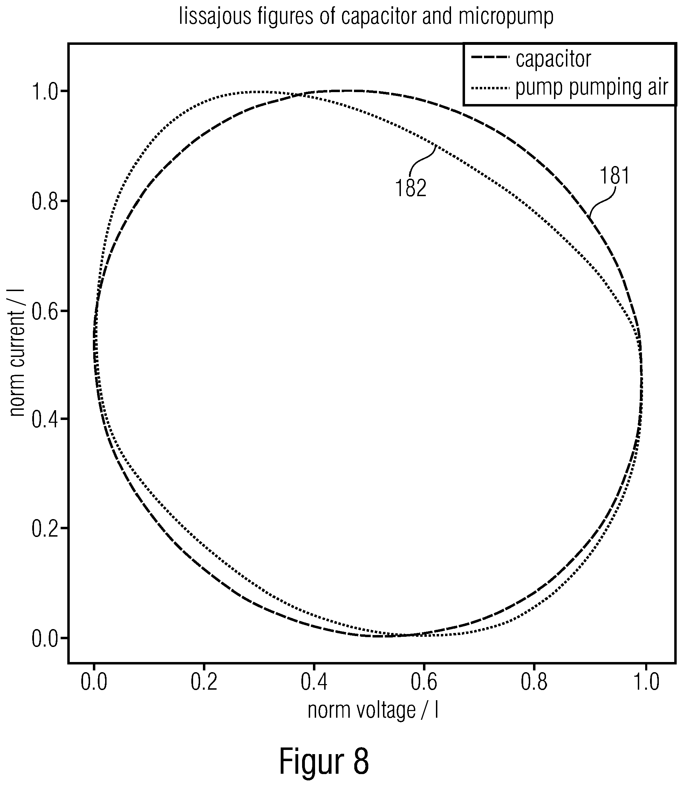

Zur visuellen Darstellung von Hysterese-Effekten eignet es sich, das Ausgangssignal (hier der gemessene Strom) über das Eingangssignal (Wechselspannung) abzutragen. Die dabei entstehenden Figuren (Lissajous-Figuren) sind in Figur 8 dargestellt und geben Informationen über das Verhältnis von Ausgangssignal zu Eingangssignal. Bei einem idealen Kondensator besteht ein 90° Phasenversatz zwischen Spannung und Strom, was zu einer kreisförmigen Lissajous-Figur 181 führt. Äußere Einflussfaktoren, die auf das Mikrofluid-Bauelement 1000 bzw. auf den Membranaktor 100 wirken, verzerren das Stromsignal (Figur 7A), was zu einer Lissajous-Figur 182 (Figur 8) führt, die von der Kreisform 181 abweicht.

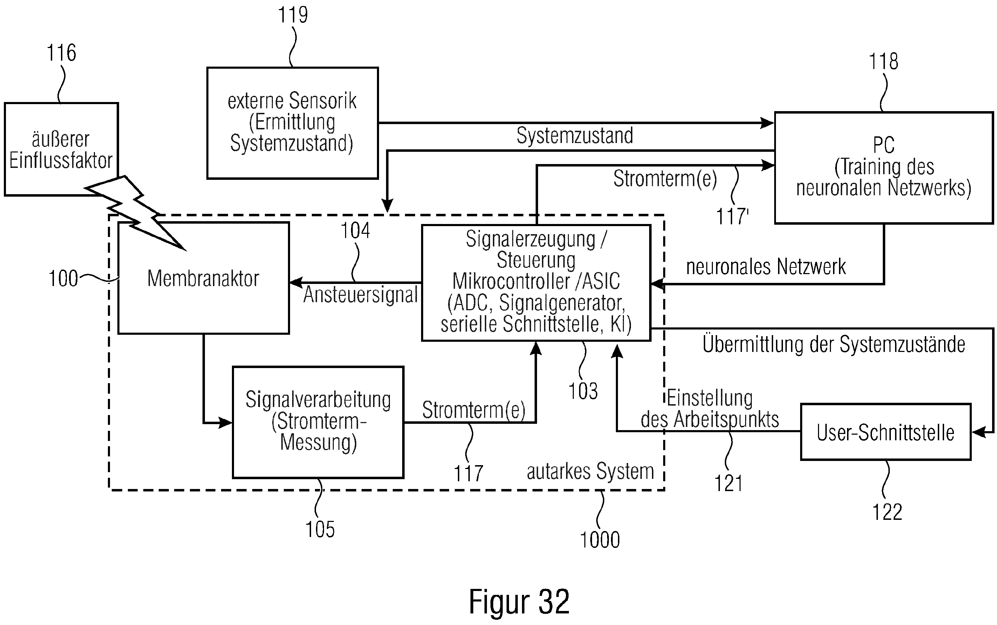

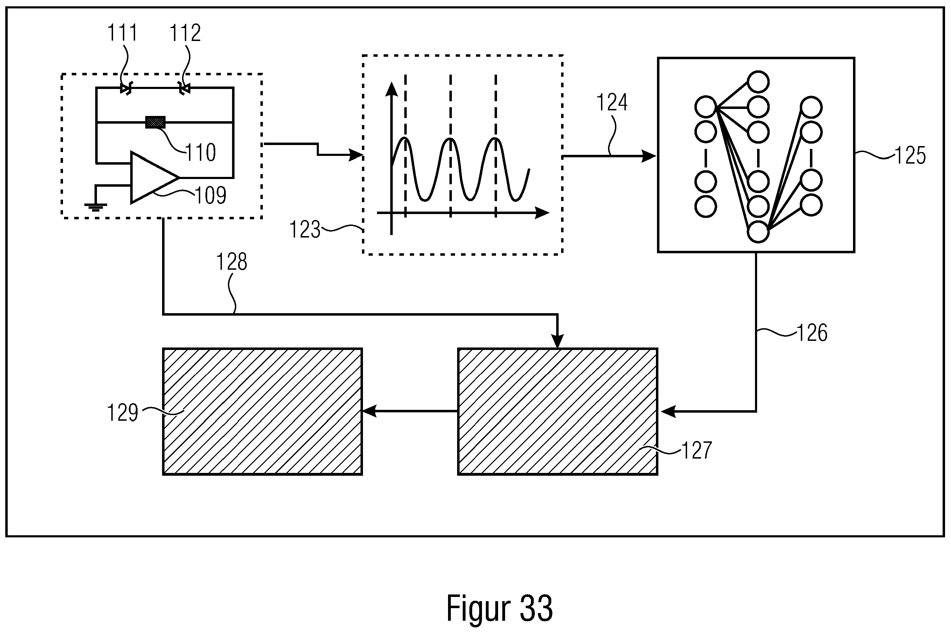

Durch die Überlagerung der verschiedenen Zeitkonstanten und Effekte entstehen nichtlineare Differentialgleichungen, deren Anfangswertprobleme nicht einfach gelöst werden können. Um aus dem aufgezeichneten Stromverlauf Aussagen über verschiedene Systemzustände (z.B. Luftblasen bei Flüssigkeitsdosierung, Verschluss des Fluidpfads - Blockade) treffen zu können, können Methodiken aus dem Bereich des maschinellen Lernens (siehe Abschnitt 7 sowie Figuren 32 und 33) eingesetzt werden. Mit Hilfe von Funktionsapproximatoren aus dem Bereich der Klassifizierung können Muster zuverlässig abgeleitet werden.

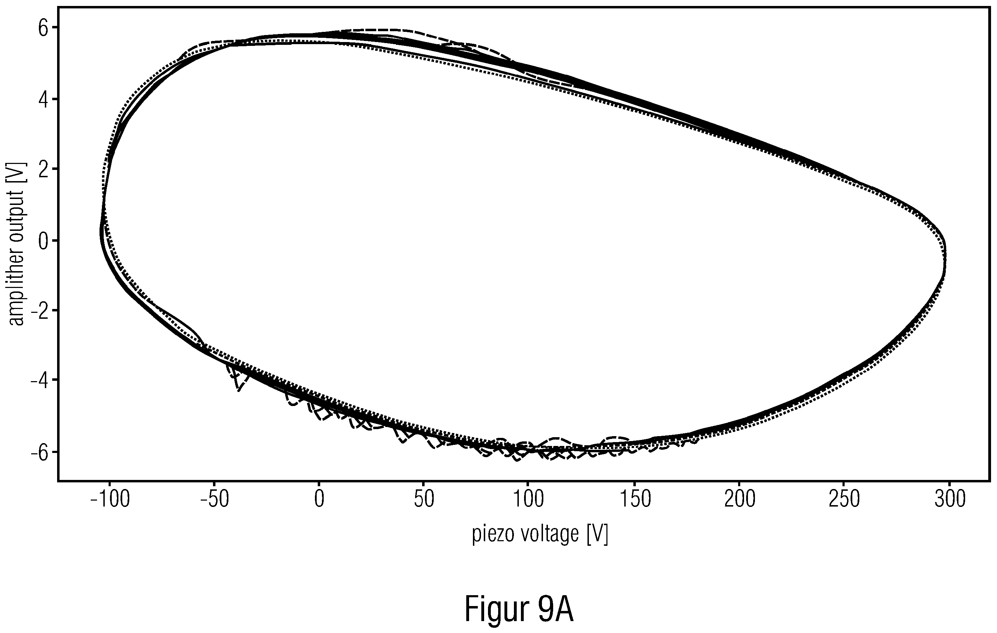

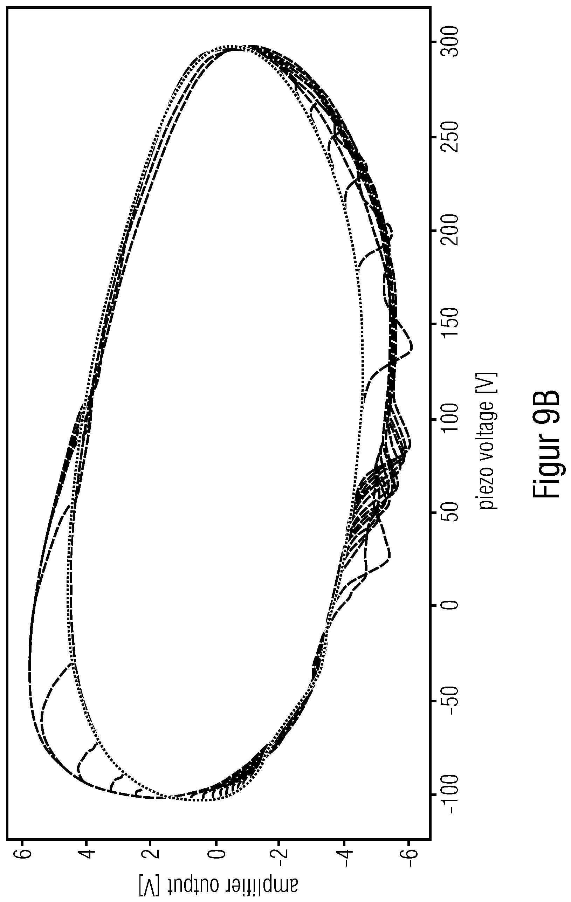

Die Figuren 9A und 9B zeigen rein exemplarisch Lissajous-Figuren einer Mikropumpe, die mit einer harmonischer Ansteuerung Flüssigkeit dosiert und dabei den Störungen "Luftblase" (Figur 9A) und "Verschluss" (Figur 9B) ausgesetzt wird. Beide Figuren zeigen wiederkehrende Muster.

Durch die Extraktion wesentlicher Features kann die Datenmenge auf ein Minimum reduziert werden, ohne dabei wichtige Informationen zu verlieren. Werden diese reduzierten Daten in Klassifizierungsalgorithmen gegeben, können ungesehene Messdaten mit einer gewissen Wahrscheinlichkeit auf die jeweiligen Zustände gemapped werden.

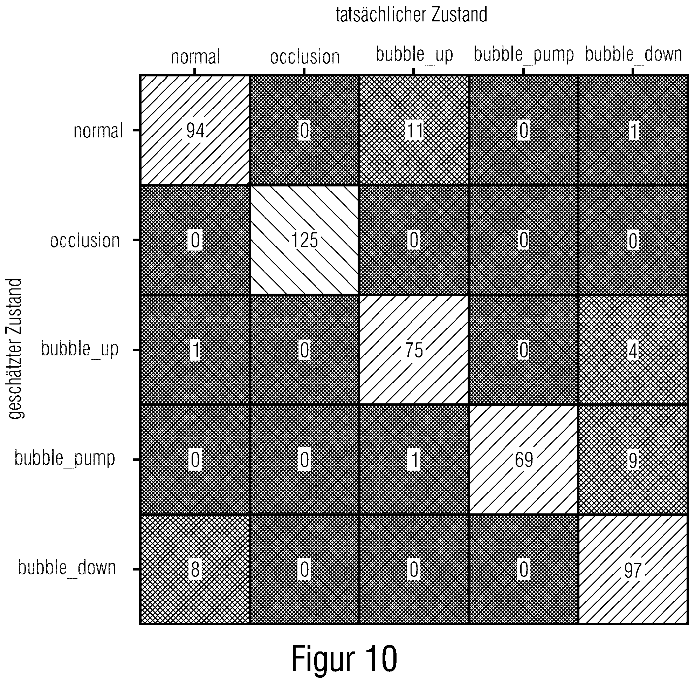

Die in Figur 10 abgebildete Confusion Matrix zeigt beispielsweise die Häufigkeit richtiger Vorhersagen, ungesehener Daten. Hohe Werte in der Hauptdiagonale signalisieren eine sehr gute Vorhersage von Zuständen. Die erste Zeile und die erste Spalte beschreiben jeweils den Normalzustand ohne äußere Einflussfaktoren. Die zweite Zeile und die zweite Spalte beschreiben jeweils einen Systemzustand mit einer Verstopfung (occlusion). Die dritte Zeile und die dritte Spalte beschreiben jeweils einen Systemzustand mit einer vor der Pumpkammer befindlichen Luftblase (bubble_up). Die vierte Zeile und die vierte Spalte beschreiben jeweils einen Systemzustand mit einer in der Pumpkammer befindlichen Luftblase (bubble_pump). Die fünfte Zeile und die fünfte Spalte beschreiben jeweils einen Systemzustand mit einer hinter der Pumpkammer befindlichen Luftblase (bubble_down).

Neben der Klassifizierung von Zuständen, besteht mit den Werkzeugen des maschinellen Lernens auch die Möglichkeit der Regression von Systemgrößen (beispielsweise der Gegendruck).

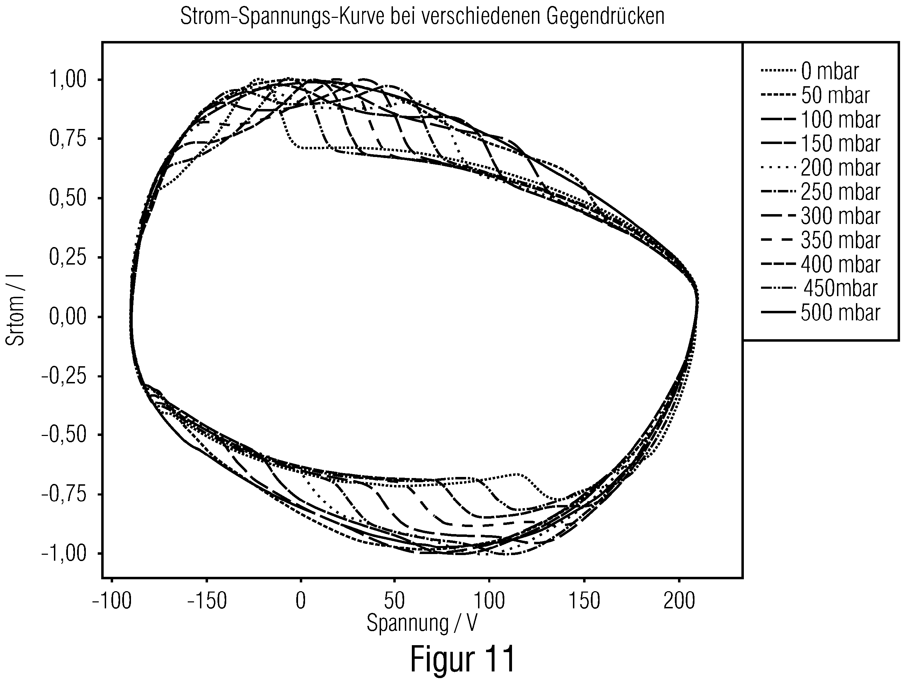

So zeigt Figur 11 rein beispielhaft eine Strom-Spannungs-Kurve bzw. eine Lissajous-Figur einer Mikropumpe bei verschiedenen Gegendrücken. Auch hier sind wiederkehrende Muster erkennbar, die entsprechend extrahiert und klassifiziert werden können.

## 5. Experiment zur Diskussion der Ausgleichsvorgänge

Zur näheren Erläuterung der oben beschriebenen Ausgleichsvorgänge dient das nachfolgende Experiment, das von den Erfindern durchgeführt wurde. Dieses Experiment wurde mit den folgenden Parametern entworfen, sodass möglichst viele Störeinflüsse vermieden wurden.

- Zum Einsatz kommt eine Silizium Mikropumpe der Baugröße 5x5 mm$^2$ (5x5 high flow Pumpe) diese Mikropumpe hat eine hohe Pumpkammer mit 20 $\mu$m. Dadurch spielen Druckabfälle in der Pumpkammer im Vergleich zu Druckabfällen an den Mikroventilen keine dominante Rolle. Damit kann mit akzeptabler Näherung ein homogener Pumpkammerdruck $p$ angenommen werden.
- Die Mikropumpe zykelt zwischen $U = 0$ Volt und $U = U+$ Volt, und es wird der Hub betrachtet, bei dem die Spannung bei $U = 0$ Volt endet. Dadurch kann (wenn die Spannung auf Null geht) der Term $I_C = U * \frac{dC_{el}}{dt}$ vernachlässigt werden.
- Die Spannung, mit der begonnen wird, wird schrittweise erhöht, von U = 1 V bis auf U = 100 V
- Die transienten Stromdaten $I(t)$ werden gemessen.
- Danach werden die Messdaten mit Exponentialfunktionen angefittet

Alle Messungen in diesem Abschnitt verwenden eine Rechteckansteuerung, d.h. die Spannungsänderung an der Piezokeramik erfolgt zu Beginn plötzlich. Der Strom, der auf die Piezokeramik fließt, wird gemessen und die erhaltenen Strommesswerte werden mittels Exponentialfunktionen angefittet.

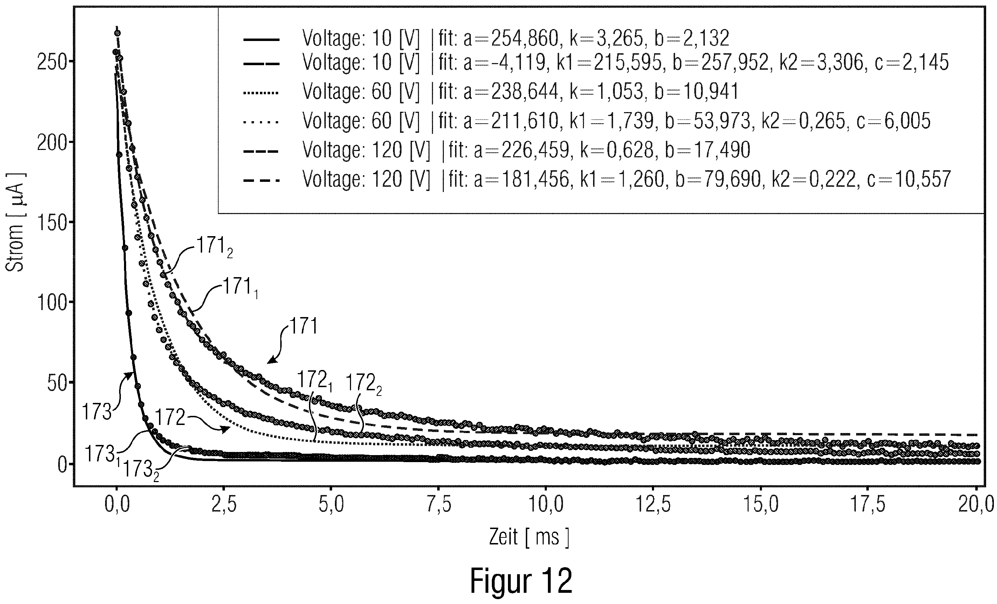

Figur 12 zeigt die Rohdaten der Messungen, d.h. transiente Messpunkte für den Strom, der auf die Piezokeramik fließt. Die eingezeichneten Punkte geben die einzelnen Messwerte an, wobei die oberen Messwerte 171 bei einer Spannung von U = 10 V, die mittleren Messwerte 172 bei einer Spannung von U = 60 V, und die unteren Messwerte 173 bei einer Spannung von U = 120 V ermittelt wurden.

Werden die jeweiligen Messdaten mit einer einfachen Exponentialfunktion angefittet, so gibt es deutliche Abweichungen zu den Messergebnissen. Dies ist zu erkennen an den Kurven $171_1$, $172_1$, $173_1$ mit durchgezogenen Linien. Wenn jedoch eine lineare Superposition zweier Exponentialfunktionen angefittet wird, dann passt der Fit sehr gut zu den Messdaten, was wiederum an den Kurven $171_2$, $172_2$, $173_2$ mit gestrichelten Linien zu sehen ist. Diese in Strichlinien dargestellten Kurven stimmen nahezu identisch mit den einzelnen Messpunkten überein. Das ist ein Indiz dafür, dass sich zwei Ausgleichsvorgänge überlagern, entsprechend den obigen Ausführungen.

Konkret erhält man aus dieser Messreihe für jeden Saughub und für jeden Druckhub die folgenden vier Fitparameter für $I_{p0}$, $\tau_h$, $I_{c0}+I_{d0}$, $\tau_{piezo}$.

## 5.1 Sensorstrom: Messung und Interpretation der Amplitude

Diskutiert werden nun die Abhängigkeiten dieser vier Fitparameter von der Antriebsspannung für den Saughub und den Druckhub.

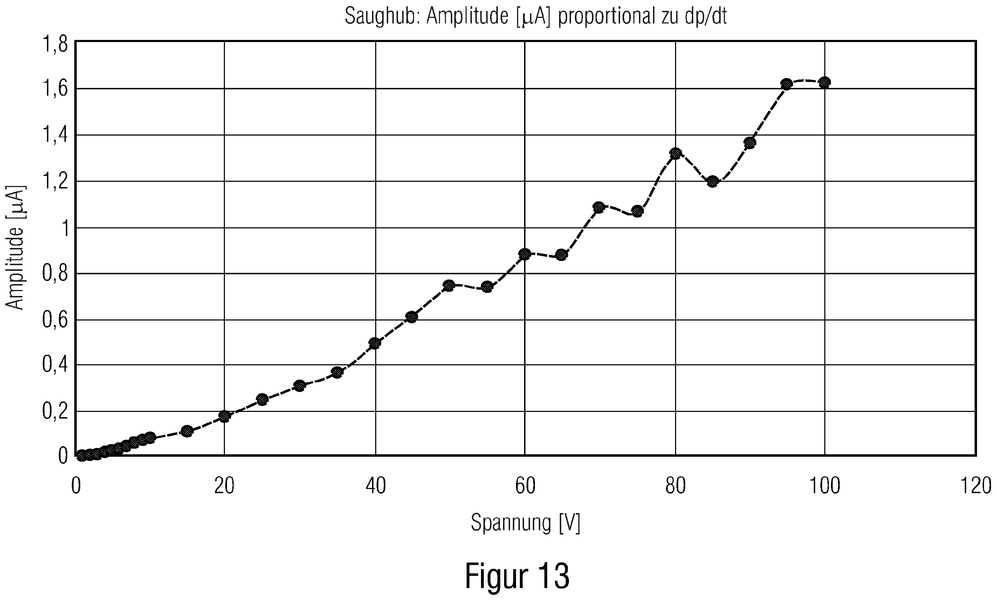

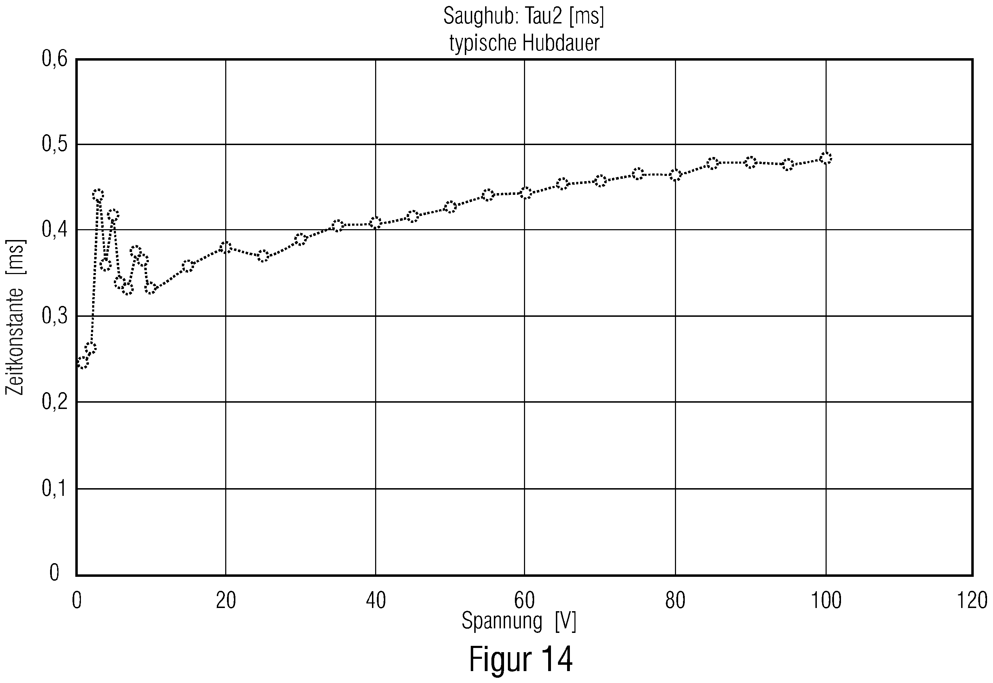

Figur 13 zeigt die Abhängigkeit einer Stromamplitude $I_{p0}$ von der Spannung im Saughub. Diese ist verknüpft mit der korrespondierenden Zeitkonstanten, die nachfolgend unter Bezugnahme auf Figur 14 diskutiert wird. Zunächst jedoch ist in Figur 13 die Stromamplitude $I_{p0}$ (y-Achse) zu sehen, in Abhängigkeit der Spannung (x-Achse).

Zur Erinnerung: Die Stromamplitude $I_{p0}$ ergibt sich gemäß [Gleichung 6] aus dem Ausgleichsvorgang des Pumpkammerdrucks (ohne Squeeze film damping und mit linearisierten Ventilkennlinien) zu

$$I_p = C_E^* \cdot \frac{dp}{dt} = I_{p0} \cdot e^{-\frac{t}{\tau_h}} \;\; ; \;\; mit \; \tau_h = R_{fluidisch} * C_{fluidisch}$$

[Gl. 6]

,Der Pumpkammerdruck verhält sich dabei wie folgt:

$$p(t) = \frac{C_E^*}{C_p + C_{gas}} (U - U_0) \frac{1}{1 - \frac{\tau_a}{\tau_h}} \left( e^{-\frac{1}{\tau_a} t} - e^{-\frac{1}{\tau_h} t} \right)$$

[Gl. 13a]

Gleichung [13a] wurde u.a. 1994 (mit anderer Nomenklatur) veröffentlicht. (https://iopscience.iop.org/article/10.1088/0960-1317/4/4/004)

Gleichung [13a] ist wichtig, denn sie beschreibt (in einem approximierten, linearisierten Modell) das zeitliche Verhalten des Pumpkammerdrucks, wenn nach einer (exponentiellen) Spannungsänderung sich der Druck zunächst aufbaut, und sich dann durch den Fluss durch die Mikroventile (über deren Strömungswiderstand $R_{EV}$ bzw. $R_{AV}$) wieder abbaut.

Gleichung [13a] ist die spezielle Lösung einer gewöhnlichen Differentialgleichung mit einem Störglied für die elektrische Spannung U(t).

Diese Differentialgleichung lässt sich wie folgt darstellen:

$$\frac{dp}{dt} = \frac{1}{C_{fluidisch}} \left( \frac{p_1}{R_{EV}} + \frac{p_2}{R_{AV}} - p \left( \frac{1}{R_{EV}} - \frac{1}{R_{AV}} \right) - C_E^* \frac{dU}{dt} \right)$$

[Gl. 13b]

Mit folgenden Parametern:

- $p_1$ und $p_2$: damit werden der Vordruck am Einlass ($p_1$) und der Gegendruck am Auslass ($p_2$) berechnet, der an die Mikropumpe angelegt ist.
- $C_{fluidisch}$: fluidische Kapazität, als Summe der fluidischen Kapazitäten der Membran Cp, einer (optionalen) Gasblase $C_{gas}$, des Einlassventils ($C_{EV}$) und des Auslassventils ($C_{AV}$). Die letzten beiden fluidischen Kapazitäten ($C_{EV}$ und $C_{AV}$) sind in der Regel sehr klein und können meist vernachlässigt werden.
- $R_{EV}$ und $R_{AV}$: Hiermit werden die fluidischen Widerstände der beiden passiven Rückschlagventile bezeichnet. Diese sind in Wirklichkeit keine Konstanten, sondern (vor allem bei kleinen Druckdifferenzen am Ventil) druckabhängig. Bei der analytischen Lösung der Differentialgleichung werden sie aber als konstant angenommen. Vor allem durch diesen Näherungsschritt wird die Lösung p(t) der Gleichung [13b] den realen Verlauf nur im Sinne eines Greybox Modells approximieren. Bei einem bestimmten Hub (z.B. Druckhub) ist das Auslassventil geöffnet, während das Einlassventil geschlossen ist. Der fluidische Leitwert $1/R_{AV}$ ist wesentlich größer als $1/R_{EV}$. Somit kann der Term $1/R_{EV}$ bei der Lösung von p(t) beim Druckhub vernachlässigt werden. (analog umgekehrt beim Saughub)

Gleichung [13a] beschreibt eine spezielle Lösung von Differentialgleichung [13b] mit folgenden Anfangsbedingungen:

1) Die Anfangsbedingung ist p(0) = 0
2) Das Störglied ist eine Aufladung der elektrischen Kapazität $C_{el}$ der Piezokeramik über einen elektrischen Ladewiderstand $R_{el}$,

$$U(t) = U_A \left( 1 - e^{-\frac{t}{\tau_a}} \right), \ \ \text{mit} \ \tau_a = C_{el} R_{el}$$

[Gl. 13c,d]

Bei einer Ansteuerung über einen Piezoverstärker kann diese Anstiegszeit $\tau_a$ im Bereich weniger Mikrosekunden liegen, während sie bei autarken, batteriebetriebenen Mikropumpen Ansteuerelektroniken (u.a. aufgrund des höheren elektrischen Innenwiderstands der Batterien) im Bereich $\tau_a = 0,5$ ms liegt. D.h. die Piezokeramik wird mit positiver Spannung beaufschlagt, was den Druckhub beschreibt (die Membran bewegt sich in Richtung Pumpkammerboden, das Hubvolumen wird durch das Auslassventil geschoben).

3) In der Lösung von Gleichung [13a] wurden Vordruck und Gegendruck auf Null gesetzt, bzw. auf den Referenzdruck Atmosphärendruck $p_1 = p_2 = p_0$,
4) Der Strömungswiderstand des (beim Druckhub geschlossenen) Einlassventils wird vernachlässigt.

Wichtig ist noch zu erwähnen, dass die Differentialgleichung [13b] nur abschnittsweise gelöst werden kann, weil sich bei Vorzeichenwechsel der Druckdifferenz an den Ventilen die Parameter 1 / $R_{AV}$ bzw. 1 / $R_{EV}$ schlagartig ändern.

Weitere Lösungen dieser Differentialgleichungen können mit allgemeinen Vor- und Gegendrücken p1 und p2 wie folgt ermittelt werden:

Lösung mit exponentiellem Spannungsaufbau (wie für Gl. [13a]), aber mit Vor- und Gegendrücken $p_1$ und $p_2$:

$$p(t) = \frac{\frac{1}{C_{ges}}\left(\frac{p_1}{R_{EV}} + \frac{p_2}{R_{AV}}\right)\left(1 - e^{-\frac{1}{\tau_h}t}\right)}{\frac{1}{\tau_h}} - \frac{\frac{C_E^*}{C_{ges}}\frac{U_A}{\tau_a}\left(e^{-\frac{1}{\tau_a}t} - e^{-\frac{1}{\tau_h}t}\right)}{\frac{1}{\tau_h} - \frac{1}{\tau_a}}$$

[Gl. 13e]

Sowie eine Lösung mit einer sinusförmigen Spannungsanregung

$$U(t) = U_A \, cos(\omega t) = U_A \, cos\left(\frac{t}{\tau_a}\right)$$

[Gl. 13f]

Mit der Anfangsbedingung p(0) = 0:

$$p(t) = \frac{\frac{p_1}{R_{EV}} + \frac{p_2}{R_{AV}}}{\frac{1}{R_{EV}} - \frac{1}{R_{AV}}}\left(1 - e^{-\frac{t}{\tau_h}}\right) + \frac{C_E^*}{C_{ges}}\frac{U_A}{\tau_a}\frac{\frac{1}{\tau_h}\sin(\omega\,t) - \omega\cos(\omega\,t) + \omega\,e^{-\frac{t}{\tau_h}}}{\frac{1}{\tau_h^2} + \omega^2}$$

[Gl. 13g]

Die Spannung U(t) kann vom Entwickler des Mikropumpensystems mit dem Ansteuersignal gestaltet werden, und hat einen großen Einfluss auf die mechanische und fluidische Antwort des Systems. Erfolgt der Spannungswechsel U(t) so schnell, dass Eigenschwingungen des Ventils (oder sogar des Membranwandlers) angeregt werden, können diese in Schwingung geraten. Erfolgt der Spannungswechsel sehr langsam (viel langsamer als die fluidische Zeitkonstante $\tau_h$), dann kann in der Pumpkammer kein wesentlicher Druck mehr aufgebaut werden, da bei den langsamen Membrangeschwindigkeiten das Fluid sofort durch das Ventil fließt. Dies ist vor allem bei harmonischer Anregung mit kleiner Kreisfrequenz $\omega$ der Fall.

Wenn man diese zeitabhängigen Gleichungen [13a, 13e, 13g] nach der Zeit ableitet und mit $C_E^*$ multipliziert, bekommt man direkt den "Sensorstrom" $I_p$, der erfindungsgemäß das Tor öffnet für die elektrische Erkennung der an den Pumpkammerduck "angedockten" fluidischen oder mechanischen Effekte mittels Data Science Methoden und "Machine Learning".

Zusammenfassend kann also bezüglich der obigen Gleichung [13a] u.a. festgehalten werden, dass sich der Pumpkammerdruck mit der Zeitkonstanten $\tau_a$ auf- und mit der Zeitkonstanten $\tau_h$ abbaut. Die Druckamplitude *p(t)* ist proportional zur Spannungsamplitude *U - U$_0$*, daher ist auch die Zeitableitung *dp / dt* proportional zu *U - U$_0$*.

Da der Sensorstrom $I_{p0}$ proportional zu *dp / dt* ist, würde man eine lineare Zunahme der Amplitude mit der Spannung erwarten. Die Zunahme ist aber nichtlinear. Der nichtlineare Anteil kann wie folgt erklärt werden:

Die Amplitude $I_{p0}$ ist proportional zum Kopplungsfaktor $C_E^*$, der wiederum zum *d31* Koeffizienten der Piezokeramik proportional ist. In Figur 13 erkennt man deutlich das nichtlineare Verhalten der Kennlinie von der Spannungsamplitude. Das ist ein deutlicher Hinweis darauf, dass mit dieser Messung die nichtlineare Steigung des *d31* gemessen werden kann. Bisher wurde als Erfahrungswert ein Faktor 1,5 als Zunahme des *d31* Koeffizienten zwischen Kleinsignal und Großsignal angenommen, denn die Zunahme der Steigung der Kennlinie zwischen sehr kleinen Spannungen (Kleinsignal) und großen Spannungen (Großsignal) entspricht in etwa diesem Faktor 1,5.

Aus der Amplitude $I_{p0}$ kann ein Faktor extrahiert werden, der mit der Druckamplitude in der Pumpkammer korreliert ist, d.h. es kann also auch (durch Variation der Spannungsamplitude) ein Maß für das Großsignalverhalten des *d31* Koeffizienten bestimmt werden. Somit kann mit dem hierin offenbarten erfindungsgemäßen Konzept also auch das Großsignalverhalten des *d31* Koeffizienten nachgewiesen werden.

**5.2 Sensorstrom: Messung und Interpretation der Zeitkonstanten**

Figur 14 zeigt den Verlauf der Zeitkonstanten $\tau_h$ im Saughub, während der sich der Druck in der Pumpkammer abbaut. Die Zeitkonstante (y-Achse) ist in Abhängigkeit der angelegten Spannung (x-Achse) aufgetragen.

Bei kleinen Spannungswerten ist das Rauschen noch zu groß, um die Zeitkonstante $\tau_h$ exakt bestimmen zu können. Gemäß dieses hier diskutierten Experiments hat die "high flow Pumpe" für das Medium Luft eine typische Hubzeit $\tau_h$ von deutlich unter einer Millisekunde (so wurde diese Pumpe auch designed). Da diese Pumpe noch eine Zunahme der Förderrate bei Gasen über 1 kHz zeigt, liegt die fluidische Zeitkonstante unter 1 Millisekunde, d.h. der Exponentialfunktion-Fit, dessen Zeitkonstante unter einer Millisekunde ist, kann als Sensorstrom interpretiert werden.

Die Zeitkonstante $\tau_h$ nimmt mit steigender Spannungsamplitude zu. Das ist physikalisch konsistent, da die Pumpmembran bei höherer Spannung näher an den Pumpkammerboden kommt, wodurch der Strömungswiderstand steigt und sich der Ausströmvorgang verlangsamt.

Gemäß dem hier diskutierten Experiment ist der Druckabfall am Pumpkammerspalt (trotz der hohen 20 $\mu$m Pumpkammer) immer noch größer als der Druckabfall an den Mikroventilen. Wenn also die Spannung steigt, nähert sich der Aktor der Pumpkammer, der Spaltwiderstand steigt und $\tau_h$ nimmt zu.

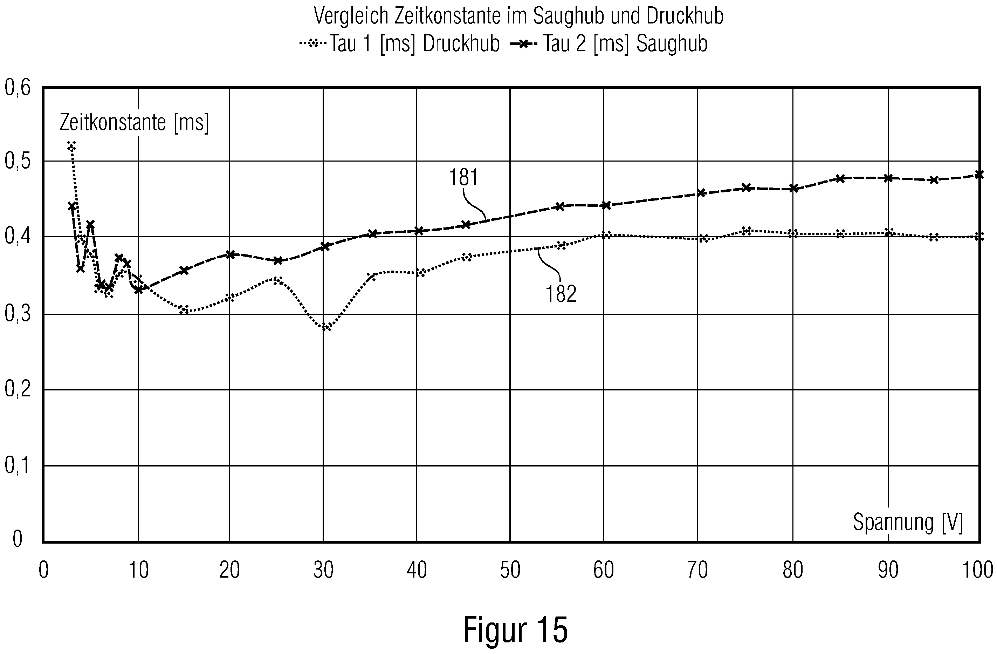

Figur 15 zeigt im Vergleich hierzu noch die Zeitkonstante für den Druckhub. Das heißt, die Kurve 181 entspricht der zuvor unter Bezugnahme auf Figur 14 diskutierten Kurve für den zeitlichen Verlauf der Zeitkonstanten im Saughub. Die Kurve 182 zeigt den zeitlichen Verlauf der Zeitkonstanten für den Druckhub.

Zunächst kann in Figur 15 direkt abgelesen werden, dass die Zeitkonstante für den Saughub (Kurve 181) etwas größer ist als im Druckhub, d.h. der Druckabbau im Saughub dauert länger als im Druckhub. Dies kann mit Blick auf den Pumpkammerdruck aus [Gleichung 13] wie folgt erklärt werden:

$$p(t) = \frac{C_E^*}{C_p + C_{gas}} U_A \frac{1}{1 - \frac{\tau_a}{\tau_h}} \left( e^{-\frac{1}{\tau_a}t} - e^{-\frac{1}{\tau_h}t} \right)$$

[Gl. 13]

Daraus ergibt sich für die Zeitkonstante $\tau_h$

$$\tau_h = R_{fluidisch}\left( C_M + C_{gas} \right)$$

[Gl. 14]

Die typische Hubzeit ist proportional zur fluidischen Kapazität, die die Summe aus der fluidischen Kapazität der Antriebsmembran $C_p$ und der fluidischen Kapazität der Luft $C_{gas}$ in der Pumpkammer ist. Die fluidische Kapazität beschreibt allgemein die Änderung des Volumens als Funktion einer Druckänderung. Bei der Antriebsmembran ist die fluidische Kapazität im Rahmen der Kirchhoff'schen Plattentheorie im Wesentlichen konstant, während sie bei Gasvolumina aufgrund der Zustandsänderungsgleichung (je nach Geschwindigkeit der Zustandsänderung isotherm, adiabatisch oder polytrop) bei kleineren Absolutdrücken (Saughub) immer größer ist als bei größeren Absolutdrücken (Druckhub).

Die fluidische Kapazität der Luft $C_{gas}$ ist jedoch nicht konstant und entspricht der Tangente der isothermen oder adiabatischen Zustandsgleichung, und ist proportional zum Totvolumen:

- Druckhub: das Resttotvolumen nach der Kompression
- Saughub: das Resttotvolumen nach der Expansion

Das heißt, die fluidischen Kapazität der Gasblase $C_{gas}$ ist beim Saughub größer als beim Druckhub, daher ist auch die typische Hubzeit beim Saughub beim Pumpen eines kompressiblen Mediums wie Luft grösser als beim Druckhub.

Dies würde nebenbei auch bedeuten, dass beim Pumpen von kompressiblen Medien wie Luft 50/50 nicht das optimale Tastverhältnis ist, sondern der Saughub mehr Zeit braucht als der Druckhub.

**5.3 Extraktion des Strömungswiderstands im Mikrofluid-Bauelement (bei Mikroventil oder in der Pumpkammer von Mikropumpen)**

Der vom Druck unter dem Membranelement 101 abhängige Sensorstrom kann (unter Berücksichtigung von [Gleichung 23]) wie folgt ausgedrückt werden:

$$I_p = U_A \frac{(C_E^*)^2}{C_M + C_{gas}} \left( \frac{1}{\tau_h} e^{-\frac{t}{\tau_h}} - \frac{1}{\tau_a} e^{-\frac{t}{\tau_a}} \right)$$

[Gl. 15a]

Die Gleichung [15a] kann über den piezoelektrischen Kopplungsfaktor k hergeleitet werden. Das Quadrat $k^2$ ist ein Maß für das Verhältnis aus herausgeholter mechanischer Energie zu hineingesteckter elektrischer Energie.

$$I_p = k^2 C_{el} U_A \frac{C_M}{C_M + C_{gas}} \left( \frac{1}{\tau_h} e^{-\frac{t}{\tau_h}} - \frac{1}{\tau_a} e^{-\frac{t}{\tau_a}} \right)$$

[Gl. 15b]

Es gilt die Beziehung:

$$(C_E^*)^2 = k^2 C_{el} C_M .$$

[Gl. 15c]

umgestellt und aufgelöst nach $k^2$ ergibt sich:

$$k^2 = \frac{(C_E^*)^2}{C_{el} C_M} .$$

[Gl. 15d]

Damit ergibt sich für den Sensorstrom $I_p$ in Abhängigkeit von k:

$$I_p = \frac{k^2 C_{el} U_A}{\tau_h} \frac{C_M}{C_M + C_{gas}} e^{-\frac{t}{\tau_h}}$$

[Gl. 15e]

Somit kann die Gleichung [15a] und alle nachfolgenden Gleichungen ohne k dargestellt werden, und aus Gleichung [15a] ergibt sich für den Sensorstrom $I_p$, nachdem die Zeitkonstante $\tau_a$ abgeklungen ist:

$$I_p = \frac{U_A}{\tau_h} \frac{(C_E^*)^2}{C_M + C_{gas}} e^{-\frac{t}{\tau_h}}$$

[Gl. 16]

### 5.3.1 Extraktion des Strömungswiderstands im Falle einer Luftpumpe

Sofern es sich bei dem Mikrofluid-Bauelement 1000 um eine Luftpumpe handelt, d.h. um eine Mikropumpe, die ausgestaltet ist, um Luft zu fördern, so kann der Strömungswiderstand $R_{fluidisch}$ wie folgt berechnet werden:

$$R_{fluidisch} = \frac{\tau_h}{C_M + C_{gas}}$$

[Gl. 17]

Darüber hinaus kann der Strömungswiderstand $R_{ges}$ wie folgt auch aus der Amplitude berechnet werden:

$$I_{p,0} = U_A \frac{\left(C_E^*\right)^2}{R_{fluidisch}} \frac{1}{\left(C_M + C_{gas}\right)^2}$$

[Gl. 18]

$$R_{fluidisch} = U_A \frac{\left(C_E^*\right)^2}{I_{p,0}} \frac{1}{\left(C_M + C_{gas}\right)^2}$$

[Gl. 19]

Das heißt, der fluidische Widerstand $R_{fluidisch}$ kann unabhängig voneinander berechnet werden.

**5.3.2 Extraktion weiterer fluidischer Parameter für den Fall einer Luftpumpe**

Im Kleinsignal kann außerdem noch der Term $dI_{p,0}/dU$ gemessen werden:

$$\frac{dI_{p,0}}{dU}_{Kleinsignal} = \frac{1}{R_{fluidisch}} \frac{\left(C_E^*\right)^2}{\left(C_M + C_{gas}\right)^2}$$

[Gl. 20]

$$\frac{dI_{p,0}}{dU}_{Kleinsignal} = \frac{1}{\tau_h} \frac{\left(C_E^*\right)^2}{C_M + C_{gas}}$$

[Gl. 21]

Darüber hinaus kann die Zeitkonstante $\tau_h$ aus der Stromamplitude $I_p$ wie folgt berechnet werden:

$$\tau_h = \frac{U_A}{I_{p,0}} \frac{\left(C_E^*\right)^2}{C_M + C_{gas}}$$

[Gl. 22]

**5.4 Betrachtung der gefitteten Zeitkonstanten:**

1) *Exponentialfunktion für die Pumpkammerdruckänderung dp/dt*

2) *Exponentialfunktion für die Änderung der Kopplungskonstante dd/dt.*

Die Kopplungskonstante d kann sich aus unterschiedlichen physikalischen Gründen ändern. Die (statische) Amplitude der Kopplungskonstanten d kann sich zunächst im Großsignal ändern, wobei die Amplitude erfahrungsgemäß um ca. 50% zwischen Klein- und Großsignal steigt. Diese Steigerung kann einerseits aus dem Domänenwachstum erfolgen (dieser Effekt zeigt eine langsame Relaxation), und andererseits kann die "atomare Kraftkurve" der Atome nichtlinear sein (dieser Effekt zeigt keine langsame Relaxation).

Die zeitliche Änderung der Kopplungskonstanten $C_E^*$ ist auch mit dem "Pulsieren" der Domänen verknüpft. Die Zeitkonstanten werden definiert durch Hindernisse, die das Domänenwachstum bei der Ausbreitung oder (wie in dem obigen Experiment) Schrumpfung vorfindet. Dieses Pulsieren ist eine reine Materialeigenschaft der Keramik.

Das eingangs erwähnte Piezokriechen beim Anlegen einer Sprungfunktion, hat dieselbe Ursache. Diese Zeitkonstanten sind langsam, und reichen vom Millisekunden bis in den Sekundenbereich.

Bei kleinen Spannungen scheint die gesamte Exponentialfunktion zu verschwinden. Dies kann unter anderem dadurch erklärt werden, dass im Kleinsignal das pulsierende Domänenwachstum kaum mehr stattfindet. Weiterhin wird der Faktor $C_E^* \cdot d/dt$ mit dem Pumpkammerduck $p$ multipliziert, der bei kleinen Spannungen ebenfalls sehr klein ist

### 5.5 Extraktion und Diskussion der Amplituden

Neben den oben diskutierten Zeitkonstanten sind auch die Amplituden der beiden Signalanteile bzw. Sensorströme $I_{p0}$ und $I_{d0}$ von Interesse.

Der analytische Ausdruck für $I_p(t)$ lautet:

$$I_p = U_A \frac{\left(C_E^*\right)^2}{C_M + C_{gas}} \frac{1}{1 - \frac{\tau_A}{\tau_h}} \left(\frac{1}{\tau_h} e^{-\frac{t}{\tau_h}} - \frac{1}{\tau_A} e^{-\frac{t}{\tau_A}}\right)$$

$$[\text{Gl. 23}]$$

Zum Zeitpunkt t=0 gilt:

$$I_{p0} = U_A \frac{\left(C_E^*\right)^2}{C_M + C_{gas}} \frac{1}{\tau_A}$$

$$[\text{Gl. 24}]$$

$$I_{p0} = -\frac{U_A}{C_{el} R_{el}} \frac{\left(C_E^*\right)^2}{C_M + C_{gas}}$$

$$[\text{Gl. 25}]$$

### 5.6 Extraktion und Diskussion der gemessenen Piezo-spezifischen Fitparameter

### 5.6.1 Domänenwachstum U*dC/dt + p*dd/dt, für Saug- und Druckhub, Amplitude und Zeitkonstante

Die Ausgleichsvorgänge der beiden Signalanteile bzw. Stromterme $I_{ce}$ und $I_C$ (vergleiche [Gleichung 12]) sind mit dem Piezoeffekt bzw. mit dem verwendeten Piezomaterial verknüpft. Es gibt hierbei zwei Anteile:

a) bezogen auf den Kopplungsfaktor $C_E^*$

$$I_{ce} = (p - p_0) \cdot \frac{dC_E^*}{dt} = I_{ce0} e^{-\frac{t}{\tau_{Piezo}}}$$

$$[\text{Gl. 26}]$$

b) bezogen auf die elektrische Kapazität $C_{el}$

$$I_C = (U - U_0) \cdot \frac{dC_{el}}{dt} = I_{C0} e^{-\frac{t}{\tau_{piezo}}}$$

$$[\text{Gl. 27}]$$

### 5.6.2 Betrachtung des Saughubs

Im Saughub wird die Spannung U ausgeschaltet. Dies hat folgende Effekte:

- Der Term *Ic* wird Null, da U = 0

- Die Weiss'schen Bezirke schrumpfen, d.h. der *d31* Koeffizient wird kleiner und $dC_E^*/dt$ wird negativ

- Da beim Saughub *p - p₀* kleiner Null ist, ist auch dieser Term negativ

- Insgesamt werden bei der Berechnung von $I_{ce}$ zwei negative Faktoren multipliziert, also ist $I_{ce}$ im Saughub positiv

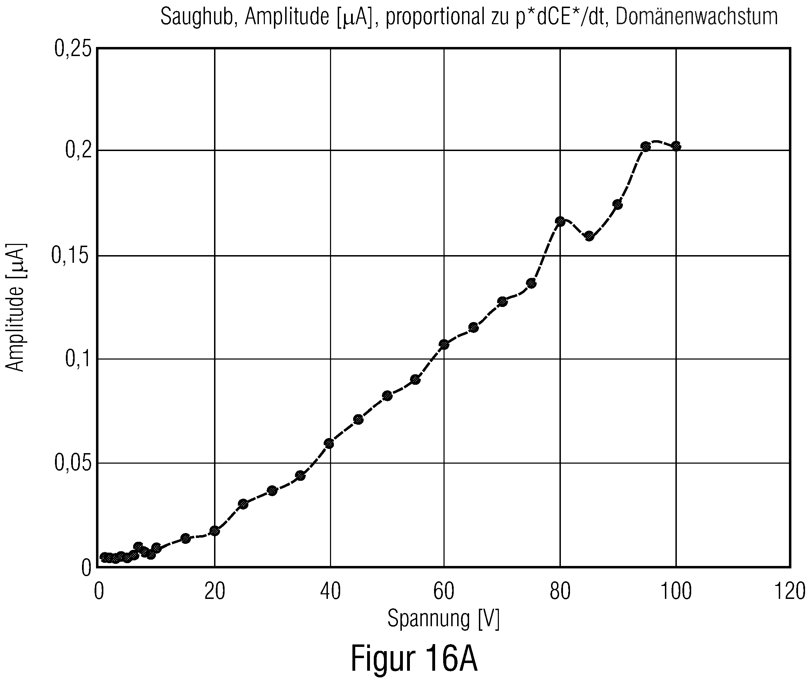

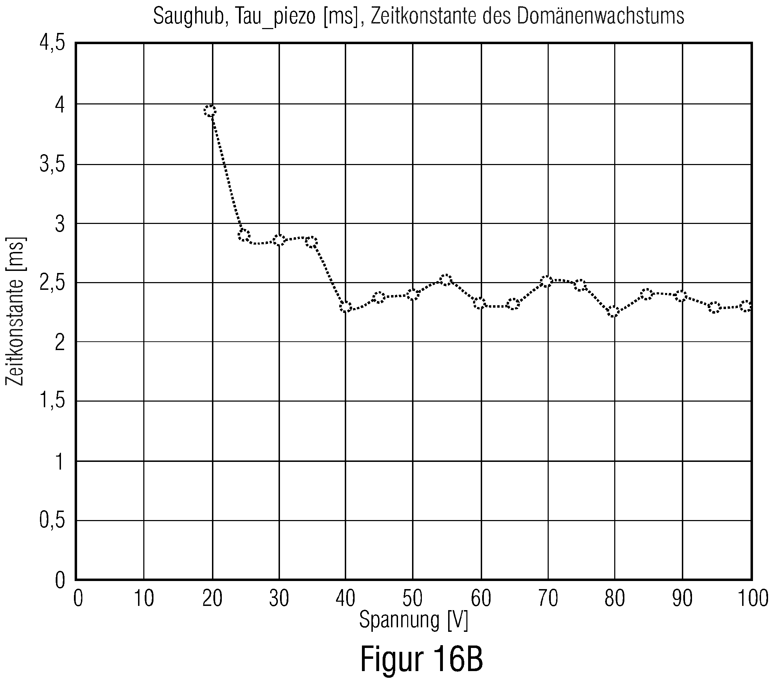

Die entsprechenden Messreihen für Amplitude und Zeitkonstante für den Saughub sind in den Figuren 16A und 16B gezeigt. Figur 16A zeigt den zeitlichen Verlauf der Amplitude (y-Achse) des Piezo-bedingten Stromterms $I_{ce}$ in Abhängigkeit von der Spannung U (x-Achse). Figur 16B zeigt den zeitlichen Verlauf der Piezo-bedingten Zeitkonstanten $\tau_{\text{piezo}}$ (y-Achse) in Abhängigkeit der Spannung U (x-Achse).

In Figur 16A ist zu sehen, dass der Stromterm $I_{ce} = p \cdot dC_E^*/dt$ positiv ist. Da die Druckamplitude mit der Spannungsamplitude korreliert, nimmt die Amplitude mit der Spannung zu. Durch den Großsignaleffekt des *d31* Koeffizienten bzw. $C_E^*$ wird die Domänenschrumpfung bei großen Spannungen auch größer als bei kleinen Spannungen. Bezüglich der Zeitkonstanten $\tau_{piezo}$ fällt auf, dass diese im Bereich von ca. 2 Millisekunden liegt.

### 5.6.3 Betrachtung des Druckhubs

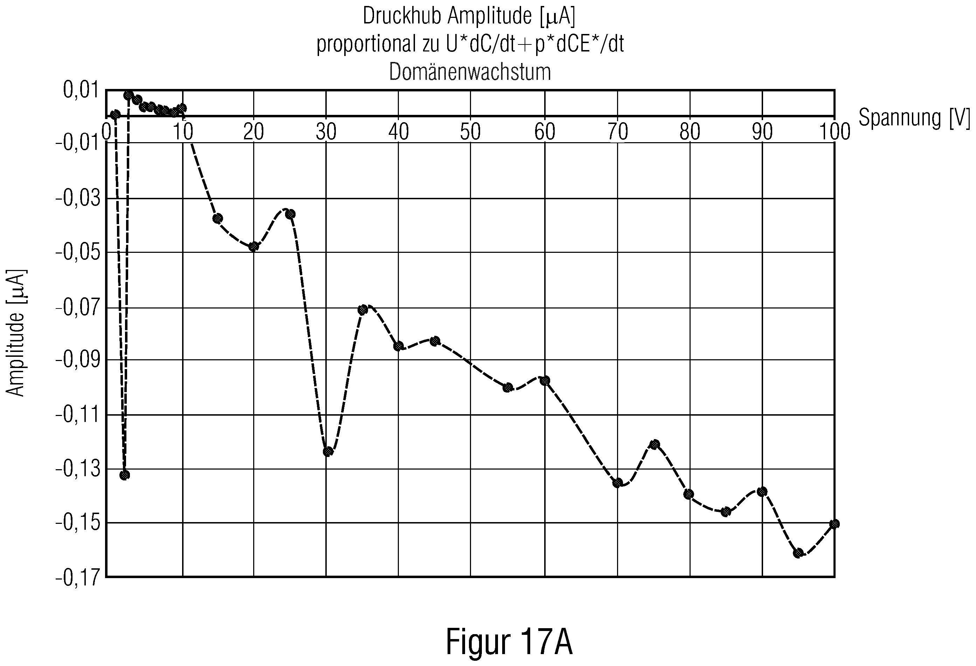

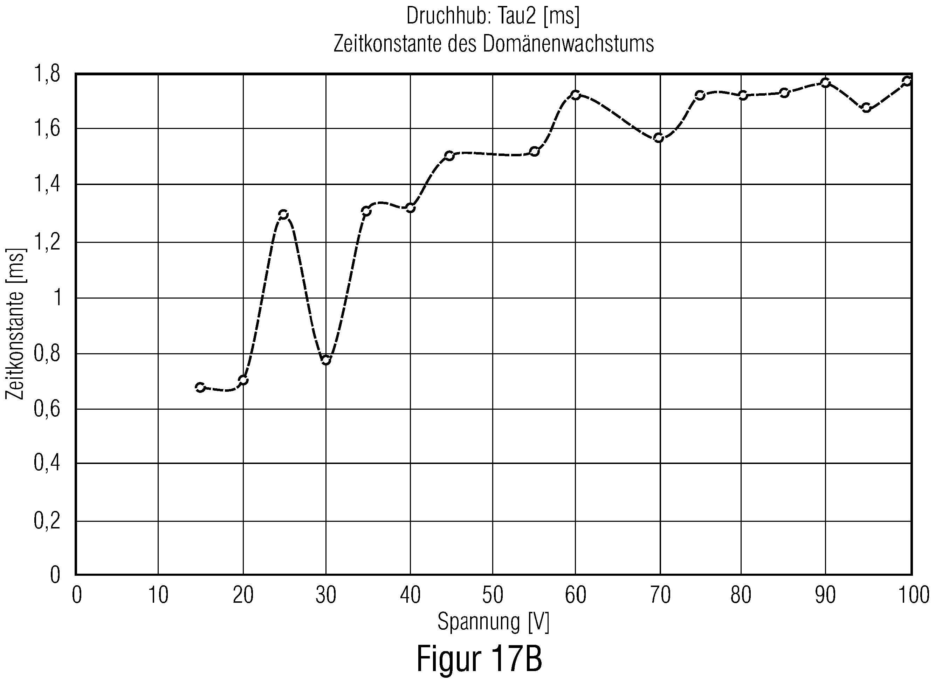

Die entsprechenden Messreihen für Amplitude und Zeitkonstante für den Druckhub sind in den Figuren 17A und 17B gezeigt. Figur 17A zeigt wieder den zeitlichen Verlauf der Amplitude (y-Achse) des Piezo-bedingten Stromterms $I_{ce}$ in Abhängigkeit von der Spannung U (x-Achse). Figur 17B zeigt wiederum den zeitlichen Verlauf der Piezo-bedingten Zeitkonstanten $\tau_{piezo}$ (y-Achse) in Abhängigkeit der Spannung U (x-Achse).

Der Term $I_{ce} = p - p_0$ ist beim Druckhub positiv. Die Weiss'schen Bezirke dehnen sich aus, damit ist $\frac{dC_E^*}{dt}$ auch positiv, da der *d31* Koeffizient und damit auch $C_E^*$ zunimmt. Der Stromterm bzw. Signalanteil $I_{ce}$ ist somit also positiv.

$$I_{ce} = (p - p_0) \cdot \frac{dC_E^*}{dt} = I_{ce0} e^{-\frac{t}{\tau_{Piezo}}}$$

[Gl. 28]

Der zweite Piezo-bedingte Signalanteil bzw. Stromterm $I_C$ (= Kapazitätsterm) ist ebenfalls positiv, da (U-U₀) positiv ist, und auch die Änderung der elektrischen Kapazität ist positiv, wodurch auch $U_c$ positiv ist:

$$I_C = (U - U_0) \cdot \frac{dC_{el}}{dt} = I_{C0} e^{-\frac{t}{\tau_{piezo}}}$$

[Gl. 29]

Die gemessene Amplitude beim Druckhub ist zwar positiv, aber sie ist etwas kleiner als beim Saughub. Die Zeitkonstante $\tau_{piezo}$ im Druckhub ist auch etwas kleiner als beim Saughub, also funktioniert das Domänenwachstum schneller als das Domänenschrumpfen.

### 5.6.4 Betrachtung bei kleinen Spannungen

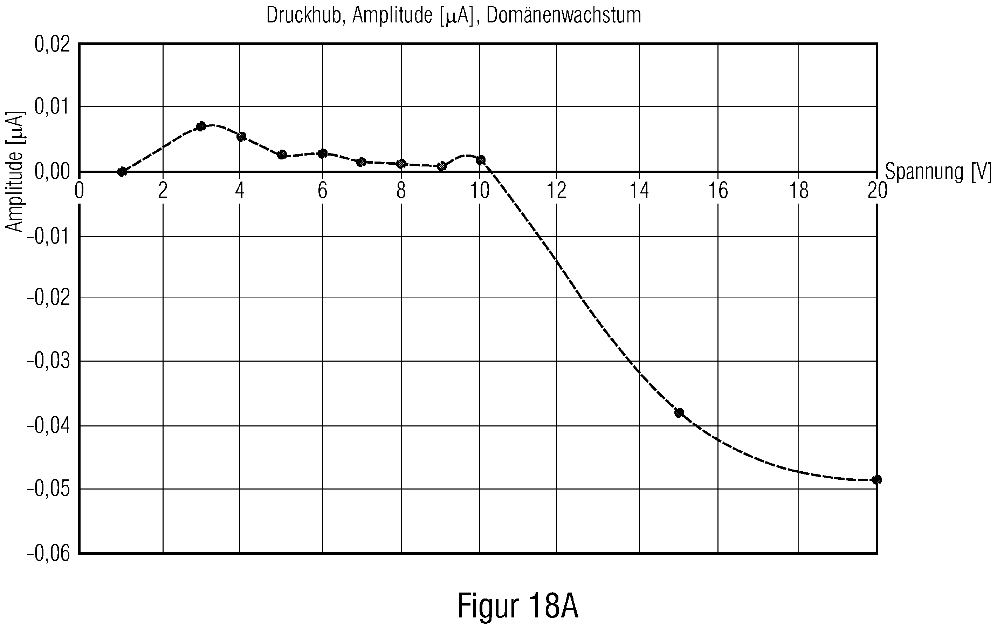

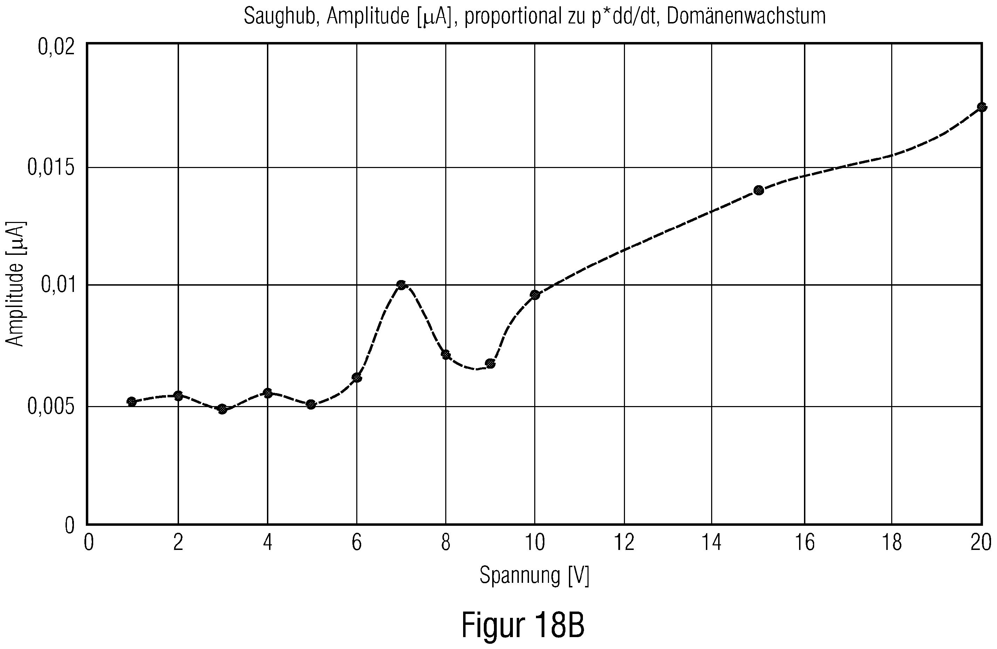

Die Figuren 18A und 18B zeigen die entsprechenden Messreihen für Amplitude und Zeitkonstante bei kleinen Spannungen. Figur 18A zeigt den zeitlichen Verlauf der Amplitude (y-Achse) des Piezo-bedingten Stromterms $I_{ce}$ in Abhängigkeit von der Spannung U (x-Achse) bei kleinen Spannungen im Druckhub. Figur 18B zeigt den zeitlichen Verlauf der Piezo-bedingten Zeitkonstanten $\tau_{piezo}$ (y-Achse) in Abhängigkeit der Spannung U (x-Achse) bei kleinen Spannungen im Saughub.
Wie hier zu sehen ist, treten bei ganz kleinen Spannungsamplituden kein Domänenwachstum und keine Hysterese auf, weder beim Druckhub noch beim Saughub.

### 5.7 Weitere Experimente

Neben dem hier in Abschnitt 5 beschriebenen Experiment können weitere denkbare Experimente zur Verifikation und Optimierung des erfindungsgemäßen Konzepts durchgeführt werden.

Beispielsweise könnte die blanke Piezokeramik vermessen werden. Dies wäre die einfachste Methode, um herauszufinden ob der Pumpkammerdruckterm $I_p$ vollständig verschwindet und somit nur noch die Signalanteile bzw. Stromterme $I_c$ und $I_{ce}$ verbleiben. Um die Parameter $I_{ce0}$, $I_{c0}$, $\tau_{piezo}$ ohne den Term $dp / dt$ zu untersuchen, könnten piezobetätigte Membranaktoren 100 ohne einen Ventilchip bzw. ohne Ventilklappe untersucht werden. Dann wäre der Term $dp / dt$ immer nahe Null.

Alternativ oder zusätzlich können die aufgeklebten und vorgespannten Piezokeramiken vermessen werden, und es könnte durch Vergleichen ermittelt werden, inwieweit sich die Parameter verändern durch die Verspannung, im Vergleich zu einem blanken Piezo.

Weitere denkbare Experimente bzw. Messungen könnten sein:

1) Erhöhung der Spannung U+ in kleinen Schritten, beginnend mit U+ = 1 Volt (wodurch mit Sicherheit das Kleinsignal ermittelt wird)

2) Betrachtung des Druckhubs, d.h. von 0 V kommend zu U+. Dann ergibt sich zusätzlich der Term *U\*dC/dt,* d.h. es sollten zur Amplitude $I_{ce0}$ noch die Amplitude $I_{c0}$ dazukommen, ansonsten sollten sich die anderen Parameter wenig ändern. Alternativ oder zusätzlich kann anstatt der Zeitkonstanten $\tau_{piezo}$ das Anfitten mittels der einzelnen Zeit-konstaten $\tau_c$ und $\tau_d$ ausgeführt werden, u.a. zur Bestätigung, dass diese Parameter $\tau_c$ und $\tau_d$ gleich sind.

3) Es könnte ein anderer Vorwiderstand R 110 eingesetzt werden, der die elektrischen Zeitkonstanten definiert verlängert, um zu verifizieren, dass es keine Wechselwirkung gibt.

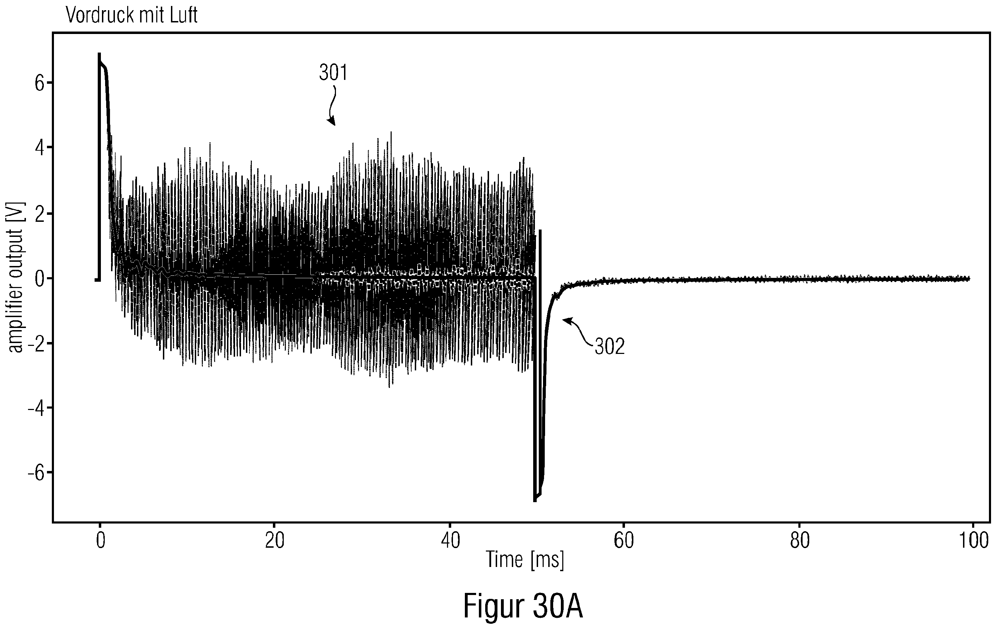

4) Neben einer Variation des Gegendrucks (siehe Abschnitt 6.3 und Figuren 30A bis 30E) könnte auch der Vordruck zu variiert werden, z.B. von -15 kPa... 0 kPa.

## 6. Ermitteln von äußeren Einflussfaktoren anhand des zeitlichen Signalverlaufs am Beispiel eines elektrostatisch sowie eines piezoelektrisch angetriebenen Membranaktors

Zusammenfassend zeigt die obige Diskussion der Theorie, dass das Ansteuersignal 104 (z.B. ein Wechselstromsignal *I(t)*) einen zeitlichen Signalverlauf aufweist, der durch äußere Einflussfaktoren beeinflusst werden kann. Das heißt, der zeitliche Signalverlauf weicht bei Anwesenheit eines äußeren Einflussfaktors von dem zeitlichen Signalverlauf ohne äußeren Einflussfaktor ab. Unterschiedliche Einflussfaktoren können hierbei unterschiedliche Abweichungen im zeitlichen Signalverlauf verursachen, was einem charakteristischen Fingerabdruck entspricht, der im zeitlichen Signalverlauf detektierbar ist.

Ein zeitlicher Signalverlauf, der durch einen äußeren Einflussfaktor beeinflusst wird, wird im Rahmen der hier vorliegenden Offenbarung auch als ein beeinflusster Signalverlauf des Ansteuersignals 104 bezeichnet. Das Ansteuersignal 104 selbst kann dementsprechend auch als ein beeinflusstes Ansteuersignal 104 bezeichnet werden.

Das Ansteuersignal 104 kann mehrere Signalanteile bzw. Stromterme aufweisen, je nachdem ob das Mikrofluid-Bauelement 1000 bzw. der Membranaktor 100 piezoelektrisch oder elektrostatisch angetrieben wird.

## 6.1 Elektrostatisch betätigter Membranaktor

Bei einem erfindungsgemäßen elektrostatisch angetriebenen Membranaktor 100 kann der Sensorstrom beispielsweise zwei unterschiedliche Stromterme aufweisen, die mit der elektrischen Kapazität verknüpft sind. Der erste Signalanteil bzw. Stromterm $I_U$ beschreibt die freien elektrischen Ladungen auf dem Aktorelement 102. Der zweite Signalanteil bzw. Stromterm $I_C$ hängt, wie zuvor beschrieben, von den Domänengrößen ab. Der zweite Stromterm $I_C$ ist mit einer zeitlichen Änderung der Kapazität zwischen dem Membranelement 101 und dem Aktorelement 102 aufgrund der Bewegung des Membranelements 101 verknüpft. Das Ansteuersignal 104 weist also beim elektrostatisch angetriebenen Membranaktor 100 die folgenden zwei Signalanteile bzw. Stromterme auf:

$$I = \frac{dQ}{dt} = I_U + I_C = C_{el} * \frac{dU}{dt} + (U - U_0)\frac{dC_{el}}{dt}$$

[Gl. 30]

Dementsprechend sehen Ausführungsbeispiele der Erfindung vor, dass die Signalverarbeitungsvorrichtung 105 ausgestaltet ist, um mindestens zwei unterschiedliche Signalanteile $I_U$, $I_C$ des beeinflussten Ansteuersignals 104 voneinander zu unterscheiden, wobei

- ein erster Signalanteil $I_U$ mit einer zeitlichen Änderung der elektrischen Spannung beim Laden bzw. Entladen der Kapazität zwischen dem Membranelement 101 und dem Aktorelement 102 verknüpft ist, und
- ein zweiter Signalanteil $I_C$ mit einer zeitlichen Änderung der Kapazität zwischen dem Membranelement 101 und dem Aktorelement 102 aufgrund der Bewegung des Membranelements 101 verknüpft ist.

Das heißt, der Membranaktor 100 kann ein elektrostatisch angetriebener Membranaktor sein (siehe Figur 2 - rechte Seite), dessen Membranelement 101 eine bewegliche Elektrode bildet, und dessen Aktorelement 102 eine Gegenelektrode bildet, wobei das Aktorelement 102 und das Membranelement 101 kapazitiv zusammenwirken, und wobei das Ansteuersignal 104 einen Ladungsfluss auf der Gegenelektrode 102 bewirkt, wodurch sich das Membranelement 101 relativ zu der Gegenelektrode 102 bewegt. Während dieser Bewegung des Membranelements 101 relativ zur Gegenelektrode 102 ergibt sich eine Kapazitätsänderung, die wiederum mit dem Signalanteil bzw. Stromterm $I_C$ verknüpft ist, der den zeitlichen Verlauf des Ansteuersignals 104 beeinflusst.

Die Signalanteile bzw. Stromterme $I_U$ und $I_C$ im Ansteuersignal 104 haben also unterschiedliche Ursachen, d.h. es wirken unterschiedliche äußere Einflussfaktoren, die die einzelnen Signalanteile bzw. Stromterme $I_U$ und $I_C$ unterschiedlich stark beeinflussen können, und somit den zeitlichen Verlauf des gesamten Ansteuersignals 104 unterschiedlich stark beeinflussen. Das heißt, die einzelnen Signalanteile bzw. Stromterme $I_U$ und $I_C$ sind mit unterschiedlichen äußeren Einflussfaktoren korreliert, die den zeitlichen Verlauf des Ansteuersignals 104 unterschiedlich beeinflussen können.

Daher sieht die vorliegende Erfindung vor, dass die erfindungsgemäße Signalverarbeitungsvorrichtung 105 ausgestaltet ist, um zum Bestimmen und/oder Klassifizieren des mindestens einen ursächlichen äußeren Einflussfaktors eine Signalanalyse des zeitlichen Signalverlaufs des Ansteuersignals 104 durchzuführen, wobei einzelne Signalanteile $I_U$, $I_C$ des Ansteuersignals 104 ermittelt werden, wobei die einzelnen Signalanteile bzw. Stromterme $I_U$ und $I_C$ mit unterschiedlichen äußeren Einflussfaktoren korreliert sind, die den zeitlichen Verlauf des Ansteuersignals 104 unterschiedlich beeinflussen. Die Signalverarbeitungsvorrichtung 105 ist daher erfindungsgemäß dazu ausgestaltet, um einen bestimmten Signalanteil bzw. Stromterm $I_U$ und $I_C$ einem bestimmten äußeren Einflussfaktor zuzuordnen und hierüber den jeweiligen äußeren Einflussfaktor zu identifizieren und/oder zu klassifizieren.

Beispielsweise kann die Signalverarbeitungsvorrichtung 105 ausgestaltet sein, um die Membranauslenkung bzw. die zeitveränderliche Position des Membranelements 101 mittels dem Signalanteil bzw. Stromterm $I_C$ zu bestimmen, da sich während der Bewegung des Membranelements 101 in Richtung des Aktorelements 102 die Kapazität zwischen dem Membranelement 101 und dem Aktorelement 102 zeitlich verändert, sodass sich der Signalanteil $I_C$ ändert.

Abgesehen davon ist die zeitlich veränderliche Position des Membranelements 101 auch abhängig von dem auf das Membranelement 101 wirkenden Druck (siehe Figur 1). Daher sehen Ausführungsbeispiele der Erfindung vor, dass die Signalverarbeitungsvorrichtung 105 ausgestaltet ist, um basierend auf dem Signalanteil $I_C$ den auf das Membranelement 101 wirkenden Druck zu bestimmen und als den äußeren Einflussfaktor zu identifizieren.

Das heißt, der auf das Membranelement 101 wirkende Druck kann anhand einer Signalanalyse des zeitlichen Verlaufs des Ansteuersignals 104, und insbesondere basierend auf dem Signalanteil bzw. Stromterm $I_C$, ermittelt werden.

Während der gesamten Bewegung des Membranelements 101 vergrößert sich ja die Kapazität $C_{el}(t)$ bei der angelegten Spannung $U_0$, was zu einem korrespondierenden Stromfluss führt. Wenn dieser Stromfluss zeitaufgelöst mit der Signalverarbeitungsvorrichtung 105 gemessen wird, kann also direkt (bei bekanntem Zusammenhang zwischen Position und Kapazität) auf die zeitaufgelöste Position des Membranelements 101 geschlossen werden.

Das heißt, sofern der Zusammenhang zwischen der Kapazitätsänderung (= zweiter Signalanteil $I_C$) und der Membranauslenkung bekannt ist, kann eine Abweichung vom bekannten Signalverlauf als ein äußerer Einflussfaktor in Form eines zusätzlichen Drucks interpretiert werden.

Dementsprechend sehen Ausführungsbeispiele der Erfindung vor, dass der Signalverarbeitungsvorrichtung 105 der zeitliche Signalverlauf des zweiten Signalanteils $I_C$ ohne äußeren Einflussfaktor zunächst bekannt ist. Die Signalverarbeitungsvorrichtung 105 ist dazu ausgestaltet, um eine durch den Druck bedingte Abweichung des zeitlichen Signalverlaufs des zweiten Signalanteils $I_C$ gegenüber dem bekannten zeitlichen Verlauf des zweiten Signalanteils $I_C$ festzustellen und basierend auf dieser Abweichung den auf das Membranelement 101 wirkenden Druck zu bestimmen und als den äußeren Einflussfaktor zu identifizieren.

### 6.2 Piezoelektrisch betätigter Membranaktor

Der erfindungsgemäße piezoelektrisch betätigte Membranaktor 100 wurde bereits weiter oben in den theoretischen Abhandlungen diskutiert. Hier weist das Aktorelement 102 mindestens ein Piezoelement, z.B. in Form einer Piezokeramik auf, die mit dem Membranelement 101 funktional verbunden, z.B. verklebt, ist.

Wenn das Ansteuersignal 104 beispielsweise in Form eines Wechselspannungssignals an dem Membranaktor 100 bzw. an dem Aktorelement 102 angelegt wird, dann verformt sich das Aktorelement 102 (z.B. Piezokeramik) aufgrund des inversen Piezoeffekts. Durch diese Verformung des Aktorelements 102 wölbt sich das Membranelement 101 dementsprechend nach oben bzw. nach unten, d.h. das Membranelement 101 wird hierdurch betätigt bzw. ausgelenkt. Dadurch kann ein Öffnen bzw. Schließen eines Ventils, oder aber auch ein Saughub bzw. ein Druckhub einer Mikropumpe realisiert werden.

Wenn nun ein äußerer Einflussfaktor auf den Piezo-Membranaktor 100 wirkt, zum Beispiel durch ein Partikel, eine Luftblase, ein Anschlagen am Ventilsitz, etc., dann führt dies dazu, dass eine Kraft auf das Membranelement 101 wirkt, wobei das Membranelement 101 dann eine entsprechende Gegenkraft bzw. einen Gegendruck ausübt (actio=- reactio). Dadurch erzeugt das Piezo-Aktorelement 102 ein dementsprechendes Strom- bzw. Spannungssignal, bedingt durch den direkten Piezoeffekt. Dieses Signal, das durch den direkten Piezoeffekt erzeugt wird, überlagert sich dem Ansteuersignal 104, das den inversen Piezoeffekt verursacht. Dieses sich überlagernde Signal, das durch äußere Einflussfaktoren bedingt ist, sorgt dann wiederum dementsprechend dafür, dass sich der zeitliche Signalverlauf des Ansteuersignals 104 ändert. Das heißt, der zeitliche Verlauf des Ansteuersignals 104 wird durch den äußeren Einflussfaktor beeinflusst, sodass im Sinne der vorliegenden Offenbarung ein beeinflusstes Ansteuersignal 104 vorliegt.

Demnach sieht eine Ausgestaltung der vorliegenden Erfindung vor, dass der Membranaktor 100 ein piezoelektrisch angetriebener Membranaktor ist, dessen Aktorelement 102 mindestens ein Piezoelement aufweist, wobei das Ansteuersignal 104 ein Verformen des Piezoelements unter Ausnutzung des inversen Piezoeffekts verursacht, wodurch das Piezoelement eine Betätigungskraft auf das Membranelement 101 ausübt. Der zeitliche Signalverlauf des Ansteuersignals 104 wird dabei durch ein vom Piezoelement ausgehendes Signal wird, das das Piezoelement aufgrund einer Gegenkraft des Membranelements 101 basierend auf dem direkten Piezoeffekt erzeugt.

Beispielsweise führt eine Druckänderung unter einem Piezo-Membranaktor 100 zu einer Kraftwirkung, und durch den direkten Piezoeffekt zu einem Stromfluss auf die Piezokeramik, der nur durch die Druckänderung verursacht wird. Dieser Stromfluss wird im Rahmen der vorliegenden Offenbarung auch als "Sensorstrom" bezeichnet.

Bei einem piezoelektrisch angetriebenen Membranaktor 100 kann der Sensorstrom die folgenden vier unterschiedlichen Signalanteile bzw. Stromterme aufweisen (vergleiche [Gl. 4]):

$$I = \frac{dQ}{dt} = I_U + I_C + I_{ce} + I_p = C_{el} \cdot \frac{dU}{dt} + (U - U_0) \cdot \frac{dC_{el}}{dt} + (p - p_0) \cdot \frac{dC_E^*}{dt} + C_E^* \cdot \frac{dp}{dt}$$

[Gl. 4]

Beim erfindungsgemäßen piezoelektrisch angetriebenen Membranaktor 100 kommen also, im Vergleich zum erfindungsgemäßen elektrostatisch angetriebenen Membranaktor 100, zwei weitere Signalanteile bzw. Stromterme $I_{ce}$, $I_p$ hinzu. Während die beiden Signalanteile bzw. Stromterme $I_U$, $I_C$ im Wesentlichen durch die elektrische Kapazität bedingt sind, und sowohl beim elektrostatisch als auch beim piezoelektrisch angetriebenen Membranaktor 100 vorkommen, sind die beiden Signalanteile bzw. Stromterme $I_{ce}$, $I_p$ im Wesentlichen auf den Piezoeffekt zurückzuführen und treten demnach nur beim piezobetätigten Membranaktor 100 auf. Beim piezobetätigten Membranaktor 100 ist im Übrigen auch der kapazitive Stromterm $I_C$ zumindest teilweise abhängig vom Piezoeffekt, da die Kapazitätsänderung hier durch Großsignaleffekte der Piezokeramik (Aktorelement 102) bewirkt werden.

Auch hier ist es wieder so, dass die einzelnen Signalanteile bzw. Stromterme $I_U$, $I_C$, $I_{ce}$, $I_p$ mit unterschiedlichen äußeren Einflussfaktoren korreliert sind, die den zeitlichen Verlauf des Ansteuersignals 104 unterschiedlich beeinflussen.

Dementsprechend sieht die vorliegende Erfindung vor, dass die Signalverarbeitungsvorrichtung 105 ausgestaltet ist, um zum Bestimmen und/oder Klassifizieren des mindestens einen ursächlichen äußeren Einflussfaktors eine Signalanalyse des zeitlichen Signalverlaufs des Ansteuersignals 104 durchzuführen, wobei einzelne Signalanteile $I_U$, $I_C$, $I_{ce}$, $I_p$ des Ansteuersignals 104 ermittelt werden, wobei die einzelnen Signalanteile $I_U$, $I_C$, $I_{ce}$, $I_p$ mit unterschiedlichen äußeren Einflussfaktoren korreliert sind, die den zeitlichen Verlauf des Ansteuersignals 104 unterschiedlich beeinflussen. Die Signalverarbeitungsvorrichtung 105 ist erfindungsgemäß dazu ausgestaltet, um einen bestimmten Signalanteil einem bestimmten äußeren Einflussfaktor zuzuordnen und hierüber den jeweiligen äußeren Einflussfaktor zu identifizieren und/oder zu klassifizieren.

Gemäß der vorliegenden Erfindung ist die Signalverarbeitungsvorrichtung 105 dazu ausgestaltet, um mindestens die oben genannten vier unterschiedlichen Signalanteile bzw. Stromterme $I_U$, $I_C$, $I_{ce}$, $I_p$ des beeinflussten Ansteuersignals 104 voneinander zu unterscheiden, wobei

- der erste Signalanteil $I_U$ im Wesentlichen mit einer zeitlichen Änderung der elektrischen Spannung beim Laden bzw. Entladen der Kapazität zwischen dem Membranelement 101 und dem Piezo-Aktorelement 102 verknüpft ist,
- der zweite Signalanteil $I_P$ im Wesentlichen mit einer zeitlichen Änderung eines auf das Membranelement 101 wirkenden Drucks verknüpft ist, und auch proportional zum Piezo-Kopplungsfaktor $C_E^*$ ist,
- der dritte Signalanteil $I_C$ im Wesentlichen mit einer zeitlichen Änderung der elektrischen Kapazität, die durch Großsignaleffekte des Piezo-Aktorelements 102 bewirkt wird, verknüpft ist, und

- der vierte Signalanteil $I_{ce}$ im Wesentlichen mit einer zeitlichen Änderung des d31-Piezo-Koeffizienten verknüpft ist, der sich aufgrund von Großsignaleffekten im Piezo-Aktorelement 102 ändert, und der auch proportional zur zeitlichen Änderung des auf das Membranelement 101 wirkenden Drucks ist.

Wie zuvor im theoretischen Teil erklärt wurde, strebt jeder dieser einzelnen Signalanteile $I_U$, $I_C$, $I_{ce}$, $I_p$ über einen individuellen zeitlichen Ausgleichsvorgang in einen Gleichgewichtszustand, wobei während des jeweiligen zeitlichen Ausgleichsvorgangs jeder Signalanteil einen individuellen zeitlichen Amplitudenverlauf $I_{U0}$, $I_{p0}$, $I_{c0}$, $I_{ce0}$ (siehe z.B. Figur 13) sowie eine individuelle Zeitkonstante $\tau_a$, $\tau_h$, $\tau_d = \tau_c = \tau_{piezo}$ (siehe z.B. Figur 14) aufweist, innerhalb derer der zeitliche Ausgleichsvorgang stattfindet.

Dementsprechend sieht die vorliegende Erfindung vor, dass die Signalverarbeitungsvorrichtung 105 ausgestaltet ist, um den äußeren Einflussfaktor basierend auf dem jeweiligen Amplitudenverlauf $I_{U0}$, $I_{p0}$, $I_{c0}$, $I_{ce0}$ und/oder der jeweiligen Zeitkonstante $\tau_a$, $\tau_h$, $\tau_d = \tau_c = \tau_{piezo}$ von ein oder mehreren der einzelnen Signalanteile $I_U$, $I_C$, $I_{ce}$, $I_p$ zu ermitteln.

### 6.3 Auswertung und Interpretation von Messungen zur Ermittlung von äußeren Einflussfaktoren

Das nachfolgende Kapitel erläutert die Ermittlung von äußeren Einflussfaktoren an konkreten Messreihen, die mit einem erfindungsgemäßen piezobetätigten Membranaktor 100 durchgeführt wurden. Aus den obigen Diskussionen versteht sich, dass diese Ergebnisse auch für erfindungsgemäße elektrostatisch betätigte Membranaktoren 100 gültig ist.

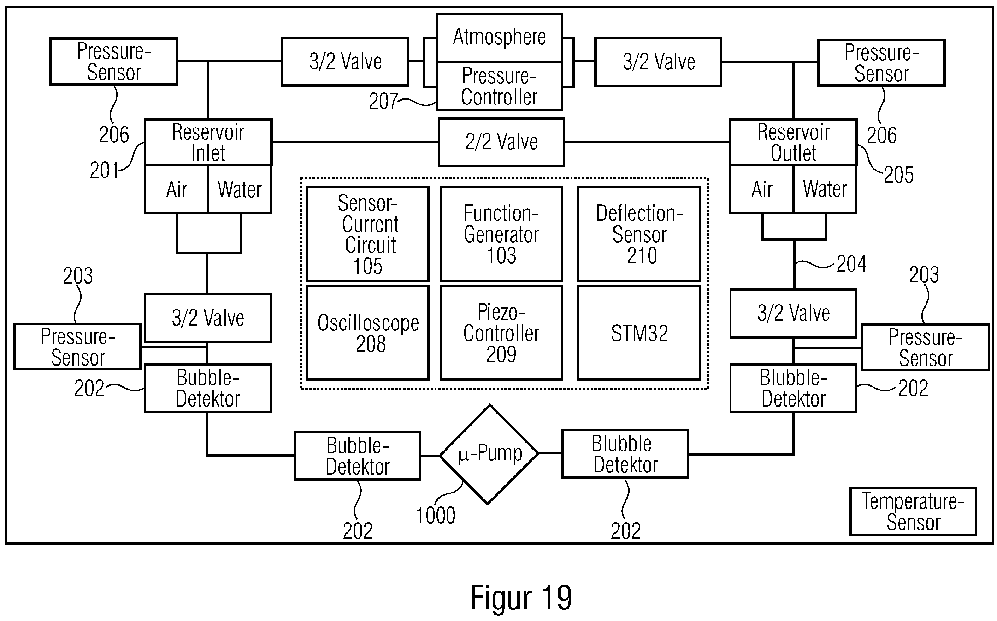

Figur 19 zeigt zunächst schematisch den verwendeten Messplatz. Dieser weist ein erfindungsgemäßes Mikrofluid-Bauelement 1000 in Form einer Mikromembranpumpe auf. Die Mikromembranpumpe 1000 weist einen erfindungsgemäßen Membranaktor (nicht dargestellt) 100 mit einem Membranelement 101 und einem Aktorelement 102 auf.

In einem einlassseitigen Reservoir 201 kann gewählt werden zwischen Luft und Wasser als das zu fördernde Medium bzw. Fluid. Im Uhrzeigersinn sind dann vor der Mikropumpe 1000 (upstream) zwei Blasendetektoren 202 sowie ein Drucksensor 203 angeordnet. Nach der Mikropumpe 1000 (downstream) sind ebenfalls zwei Blasendetektoren 202 sowie ein Drucksensor 203 angeordnet. Über die dargestellten Leitungen 204 fördert die Mikropumpe 1000 das Fluid in das auslassseitige Reservoir 205. Zwischen den beiden Reservoirs 201, 205 sind weitere Sensoren vorhanden, wie z.B. weitere Drucksensoren 206 sowie ein Druckregler 207 zum Überwachen und Einstellen eines genormten Atmosphärendrucks.

In der Mitte von Figur 19 ist rein schematisch die gesamte Logik abgebildet. Diese beinhaltet die Signalerzeugungsvorrichtung 103 sowie die Signalverarbeitungsvorrichtung 105. Die Signalerzeugungsvorrichtung 103 kann einen Funktionsgenerator aufweisen, der ausgestaltet ist, um unterschiedliche Eingangsfunktionen (Sprungfunktion, Diracfunktion, Sinussignale, Rechtecksignale, etc.) als Ansteuersignal 104 zu erzeugen. Ferner kann die Logik ein Oszilloskop 208 aufweisen, um das (beeinflusste) Ansteuersignal 104 zu ermitteln. Die Logik kann außerdem einen Piezocontroller 209 zum Ansteuern und Überwachen des Piezo-Aktorelements aufweisen, sowie einen Auslenk-Sensor 210, der die Auslenkung des Membranelements überwacht.

Mit dem hier schematisch abgebildeten Hardware kann folgendes durchgeführt werden:

- Messung von Umgebungsdruck, Temperatur, Feuchtigkeit,
- Wechsel zwischen Wasser und Luft als zu förderndes Medium,
- Injektion von Blasen zur Simulation eines äußeren Einflussfaktors (Störfaktor),
- Erkennen von Blasen mit Blasensensor,
- Zeitabhängige Erkennung des Membranhubs der Mikropumpe,
- Gegendruckgeber für Wasser und Luft (umschaltbar),
- (Optional) Messung der Förderrate in Einlass- und Auslasspfad mit anemometrischen Strömungssensoren,
- (Optional) Messung der Förderrate mit Differenzdrucksensoren

Damit kann eine Ansteuerung erfolgen von:

- Mikropumpen mit beliebigem Ansteuer- bzw. Spannungssignal (z.B. Rechteck oder Sinusspannung), und/oder
- Schaltventilen, um zwischen Wasser und Luftbetrieb zu schalten, bzw. Gasblasen unterschiedlicher Größe zu injizieren.

Außerdem ist eine Vor- bzw. Gegendruckvariation möglich.

Mit dem schematisch dargestellten Messplatz kann eine zeitaufgelöste Messung erfolgen von:

- Sensorstrom für Saug- und Druckhub mit Sensorstromelektronik,
- Aktorhub für Saug- und Druckhub,

- Blasen mittels Blasensensoren,
- (optional) Flussraten.

Folgende Messreihen wurden durchgeführt, die nachfolgend unter Bezugnahme auf die Figuren näher diskutiert werden:

- "Normalzustand" mit Luft, 10 Hz, Ansteuersignal: Rechteck,
- "Normalzustand" mit Wasser, 10 Hz, Ansteuersignal: Rechteck,
- Wasser mit Luftblase, 10 Hz, Ansteuersignal: Rechteck,
- Wasser mit Gegendruck, 10 Hz, Ansteuersignal: Rechteck,
- Luft mit Vordruck, 10 Hz, Ansteuersignal: Rechteck, und
- Anschlag am Pumpkammerboden, Ansteuersignal: Sinusspannung, Trajektorien

Gemessen wurde der zeitliche Verlauf des Ansteuersignals 104, was in den nachfolgenden Figuren wiedergegeben ist. Dabei wird erläutert, wie sich der zeitliche Verlauf des Ansteuersignals 104 in Anwesenheit von äußeren Einflussfaktoren (im Vergleich zum "Normalzustand" ohne äußere Einflussfaktoren) verändert. Wie in der obigen Theorie erläutert wurde, kann das Ansteuersignal 104 bis zu vier unterschiedliche Signalanteile bzw. Stromterme $I_U$, $I_C$, $I_{ce}$, $I_p$ aufweisen, wobei nachfolgend exemplarisch der Stromterm $I_p$ betrachtet wird, der proportional zum Druck unterhalb des Membranelements (bzw. Pumpkammerdruck) sowie proportional zum Piezo-Koeffizienten $C_E^*$ ist. Dieser Stromterm $I_p$ wird in den nachfolgenden Figuren auch als Sensorstrom (Sensorcurrent) bezeichnet. Die nachfolgende Diskussion des Signalanteils $I_p$ ist analog anwendbar auf die anderen Signalanteile bzw. Stromterme $I_U$, $I_C$, $I_{ce}$.

Zusätzlich erfasst das gemessene Ansteuersignal auch fluidische Effekte, die nicht aus dem vereinfachten Modell sich überlagernder exponentieller Ausgleichsvorgänge abgeleitet werden können.

Beispielsweise kann das Einlassventil zu Schwingungen in seiner mechanischen Eigenfrequenz angeregt werden, was zu Druckoszillationen in der Pumpkammer führt. Diese Druckoszillationen überlagern sich dem abklingenden Druck, und werden aber mit dem Term $I_p$ erfasst, wobei sich dem Abklingvorgang eine Schwingung überlagert.

Ein weiteres Beispiel sind "fluidische Resonanzen". Seit langer Zeit ist bekannt, dass unter gewissen Konstellationen die Trägheit der Flüssigkeit in den Zu- und Ableitungen in die Mikropumpen einkoppeln können. Zitat:

*"Simulation of microfluid systems"*; Zengerle, R., Richter, M.; Journal of Micromechanics and Microengineering; 1994, 4(4), pp. 192-204, 004

Wenn die Mikropumpe aktiv ist, muss sie nicht nur die Flüssigkeit in der Pumpkammer bewegen, sondern auch die Flüssigkeitssäule hinter dem geöffneten Ventil, da Flüssigkeit inkompressibel ist. Diese Trägheit der Flüssigkeitsschläuche in der Zu- und Ableitung kann in einem groben Modell durch eine "fluidische Inertanz" $L_{fluidisch}$ beschrieben werden, die völlig analog zu einer elektrischen Induktivität definiert ist. Diese fluidische Inertanz stellt zusammen mit der fluidischen Kapazität der Antriebsmembran $C_p$ ein schwingfähiges System dar, mit der fluidischen Resonanzfrequenz

$$f = \frac{1}{2\pi\sqrt{L_{fluidisch} \cdot C_p}}$$ . Die dadurch möglichen Schwingungen führen zu Schwingungen des Pumpkammerdrucks, was in der o.g. Veröffentlichung von 1994 sowohl theoretisch als auch Experimentell gezeigt wurde.

Diese fluidische Kopplung kann man entkoppeln, indem man unmittelbar vor bzw. nach der Pumpe Druckglättungselemente vorsieht, wie bereits 1994 beschrieben. Diese zusätzlichen Elemente sind aber nur bei bestimmten Anwendungen vorteilhaft, sehr oft stören die fluidischen Resonanzen den Pumpenbetrieb nicht.

Alle diese Effekte überlagern sich den vorher beschriebenen "normalen" exponentiellen Ausgleichsvorgängen, und liefern daher zusätzliche Informationen über den Zustand der Ventilklappe und sogar über die Peripherie außerhalb der Mikropumpe.

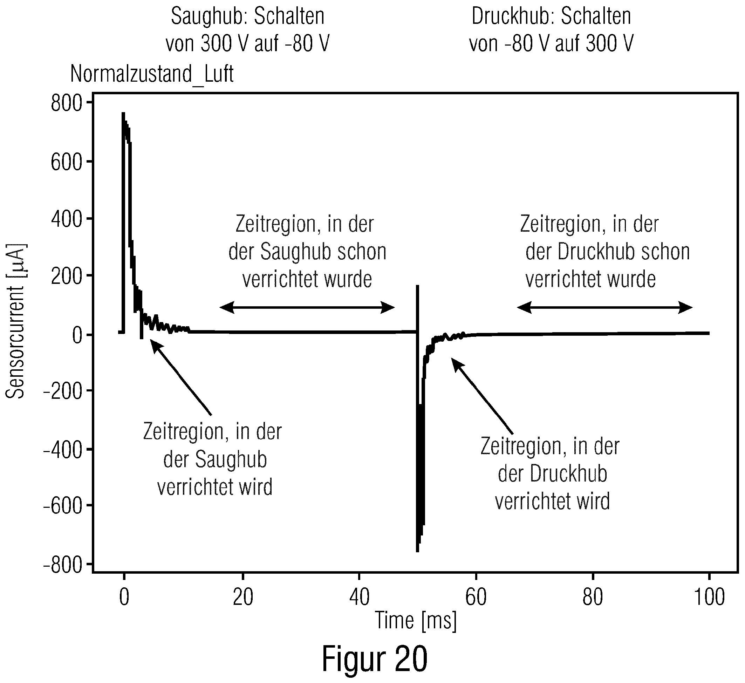

Figur 20 zeigt zunächst den Fall "Normalzustand" mit Luft, Pumpfrequenz 10 Hz, Ansteuersignal: Rechteck. Es wurden hier insgesamt zehn Messkurven aufgenommen und übereinander gelegt. Die Messkurven sehen fast identisch aus und charakterisieren den Normalzustand, d.h. ohne äußere Einflussfaktoren.

Als Pumpmedium wurde Luft verwendet, und die Mikropumpe 1000 wurde ohne Gegendruck betrieben. Als Ansteuersignal 104 wurde eine Rechteckspannung mit Zeitkonstante $\tau_A$ << 1 ms und einer Frequenz von f = 10 Hz verwendet ($\tau_A = \tau_a$).

Figur 20 zeigt den Saughub auf der Zeitskala zwischen 0 ms und etwa 10 ms. Daran anschließend folgt eine Zeitregion, in der der Saughub bereits vollständig verrichtet wurde (zwischen ca. 10 ms und 50 ms). Bei 50 ms beginnt der Druckhub. Die Zeitregion, in der der Druckhub verrichtet wird, erstreckt sich etwa bis zu ca. 65 ms auf der Zeitskala. Anschließend folgt eine Zeitregion bis 100 ms, in der der Druckhub bereits vollständig verrichtet wurde. Bei 100 ms beginnt dann wiederum der nächste Saughub (hier nicht mehr abgebildet). In diesem Normalzustand können neben dem erwarteten exponentiellen Ausgleich (der über $\tau_h$ fluidische Information birgt) auch bereits Oszillationen der Ventilklappe beobachtet werden. Da Luft eine um den Faktor 1000 geringere Dichte als Wasser und eine um den Faktor 50 geringere Viskosität als Wasser hat, kann die Ventilklappe schwingen. Weiterhin hat die Luft in den Leitungen vor und nach der Pumpe eine so geringe Masse und eine so hohe fluidische Kapazität, dass beim Pumpen von Luft keine fluidischen Resonanzen beobachtet werden können.

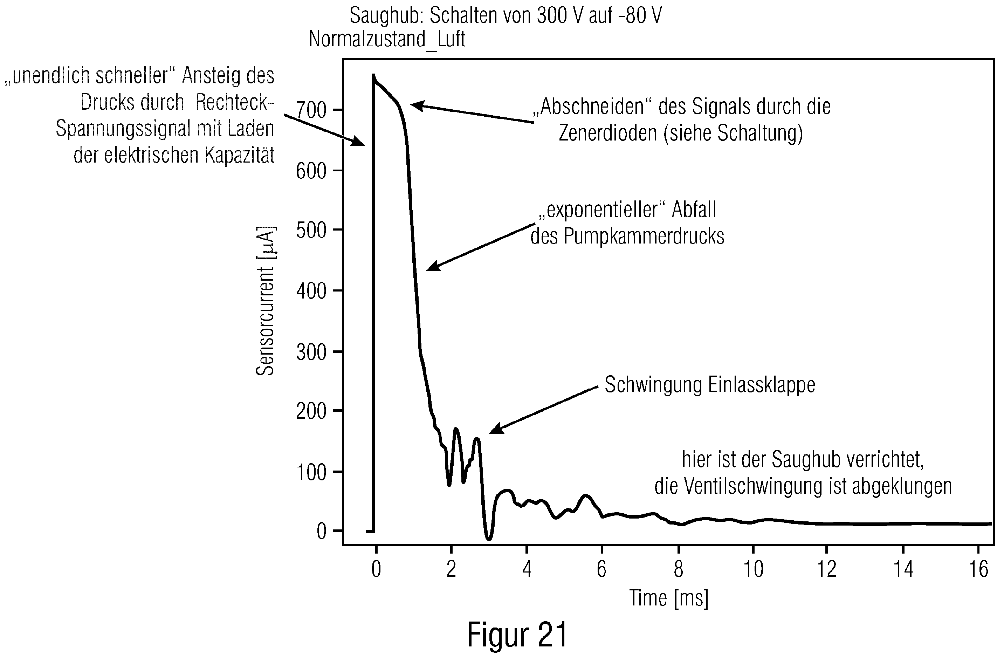

Figur 21 zeigt eine Detailansicht des zeitlichen Signalverlaufs beim Saughub (Pumpmedium: Luft) im Normalzustand, d.h. ohne äußere Einflussfaktoren. Zunächst weist der Signalverlauf einen sprunghaften Anstieg auf, was sich aus dem rechteckigen Ansteuersignal 104 ergibt, wobei sich die Kapazität des Piezos auflädt. Dieser sprunghafte Anstieg wird im Signalverlauf abgeschnitten, bedingt durch die Zenerdioden 111, 112 aus Figur 4. Der Signalverlauf klingt exponentiell ab, d.h. der Pumpkammerdruck nimmt exponentiell ab. Gegen Ende des Abklingvorgangs sind Schwingungen zu erkennen, die sich aufgrund von Schwingungen der Einlassklappe ergeben. Im Bereich ab ca. 10 ms ist der Saughub vollständig verrichtet und die Ventilschwingung ist abgeklungen. Auch kann die Abklingrate dieser Schwingung Informationen über die Geometrie der Ventilklappe und des Auflagesteges liefern.

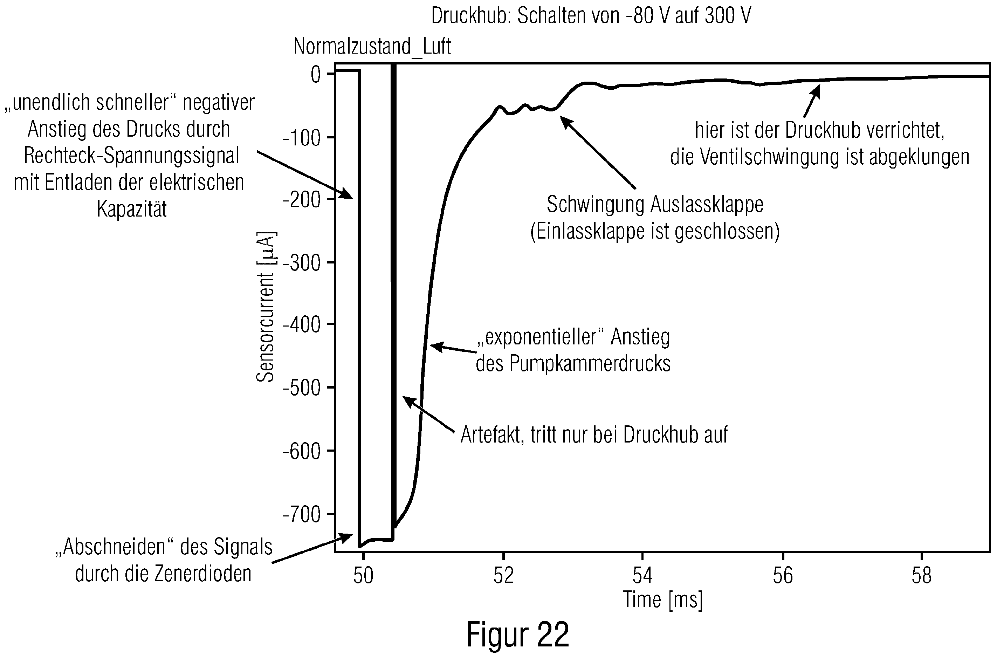

Figur 22 zeigt eine Detailansicht des zeitlichen Signalverlaufs beim Druckhub (Pumpmedium: Luft) im Normalzustand, d.h. ohne äußere Einflussfaktoren. Zunächst weist auch hier der Signalverlauf wieder einen sprunghaften (negativen) Anstieg auf, was sich aus dem rechteckigen Ansteuersignal **104** ergibt, wobei sich die Kapazität des Piezos entlädt. Dieser sprunghafte Anstieg wird im Signalverlauf abgeschnitten, bedingt durch die Zenerdioden 111, 112 aus Figur 4. Es folgt ein Artefakt, das nur im Druckhub auftritt und zunächst unberücksichtigt bleiben kann. Anschließend klingt auch hier der Signalverlauf wieder exponentiell ab, d.h. der Pumpkammerdruck nimmt exponentiell zu. Gegen Ende des Abklingvorgangs sind Schwingungen zu erkennen, die sich aufgrund von Schwingungen der Auslassklappe ergeben. Im Bereich ab ca. 56 ms ist der Druckhub vollständig verrichtet und die Ventilschwingung ist abgeklungen.

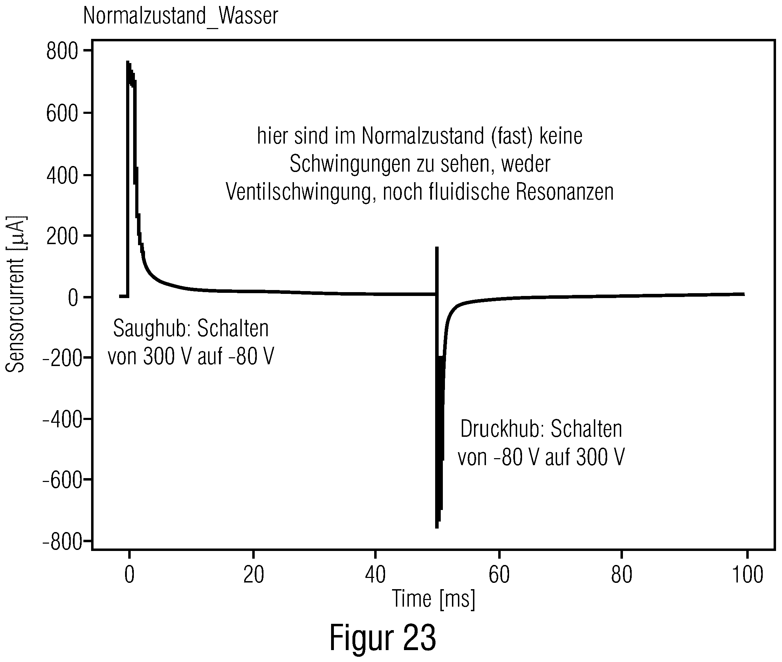

Figur 23 zeigt den Fall "Normalzustand" mit Wasser bei blasenfreier Befüllung, Pumpfrequenz 10 Hz, Ansteuersignal: Rechteck. Es wurden hier insgesamt neunzig Messkurven aufgenommen und übereinander gelegt. Die Messkurven sehen fast identisch aus und charakterisieren den Normalzustand, d.h. ohne äußere Einflussfaktoren.

Als Pumpmedium wurde Wasser verwendet, und die Mikropumpe 1000 wurde ohne Gegendruck betrieben. Als Ansteuersignal 104 wurde eine Rechteckspannung mit Zeitkonstante $\tau_A$ und einer Frequenz von f = 10 Hz verwendet.

Figur 23 zeigt den Saughub auf der Zeitskala zwischen 0 ms und etwa 10 ms. Daran anschließend folgt eine Zeitregion, in der der Saughub bereits vollständig verrichtet wurde (zwischen ca. 10 ms und 50 ms). Bei 50 ms beginnt der Druckhub. Die Zeitregion, in der der Druckhub verrichtet wird, erstreckt sich etwa bis zu ca. 57 ms auf der Zeitskala. Anschließend folgt eine Zeitregion bis 100 ms, in der der Druckhub bereits vollständig verrichtet wurde. Bei 100 ms beginnt dann wiederum der nächste Saughub (hier nicht mehr abgebildet).

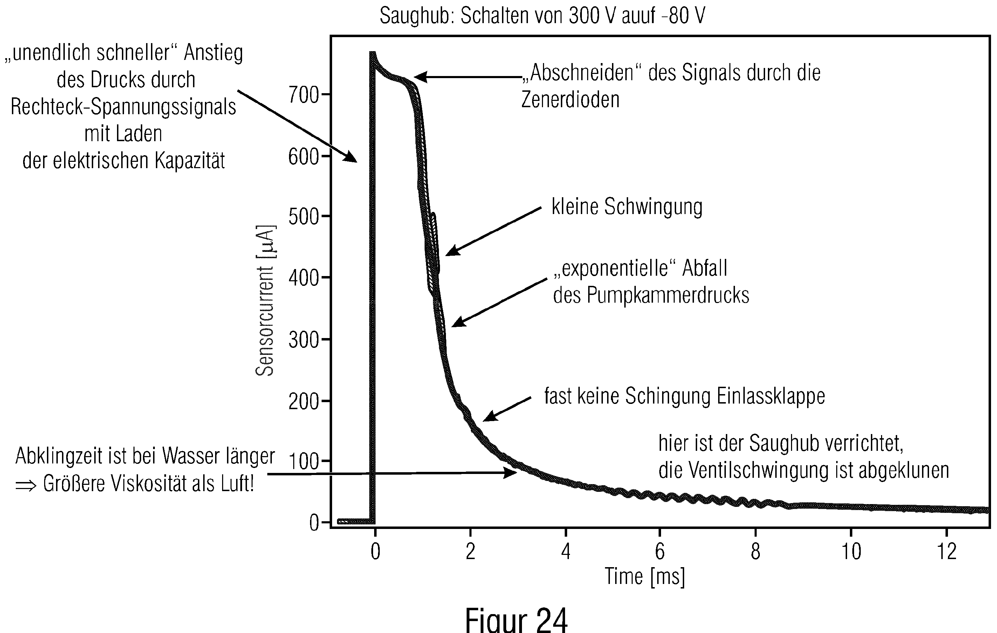

Figur 24 zeigt eine Detailansicht des zeitlichen Signalverlaufs beim Saughub (Pumpmedium: Wasser) im Normalzustand, d.h. ohne äußere Einflussfaktoren. Zunächst weist der Signalverlauf einen sprunghaften Anstieg auf, was sich aus dem rechteckigen Ansteuersignal 104 ergibt, wobei sich die Kapazität des Piezos auflädt. Dieser sprunghafte Anstieg wird im Signalverlauf abgeschnitten, bedingt durch die Zenerdioden 111, 112 aus Figur 4. Der Signalverlauf klingt exponentiell ab, d.h. der Pumpkammerdruck nimmt exponentiell ab, wobei im Bereich von etwa 1,5 ms eine kleine Schwingung auftritt, die nachfolgend noch näher diskutiert wird. Gegen Ende des Abklingvorgangs sind hier beim Pumpmedium Wasser kaum Schwingungen der Einlassklappe zu erkennen. Wasser hat eine um den Faktor 50 höhere Viskosität im Vergleich zu Luft, wodurch diese Schwingungen viel stärker gedämpft werden. Im Bereich ab ca. 6 ms ist der Saughub vollständig verrichtet und die Ventilschwingung ist abgeklungen.

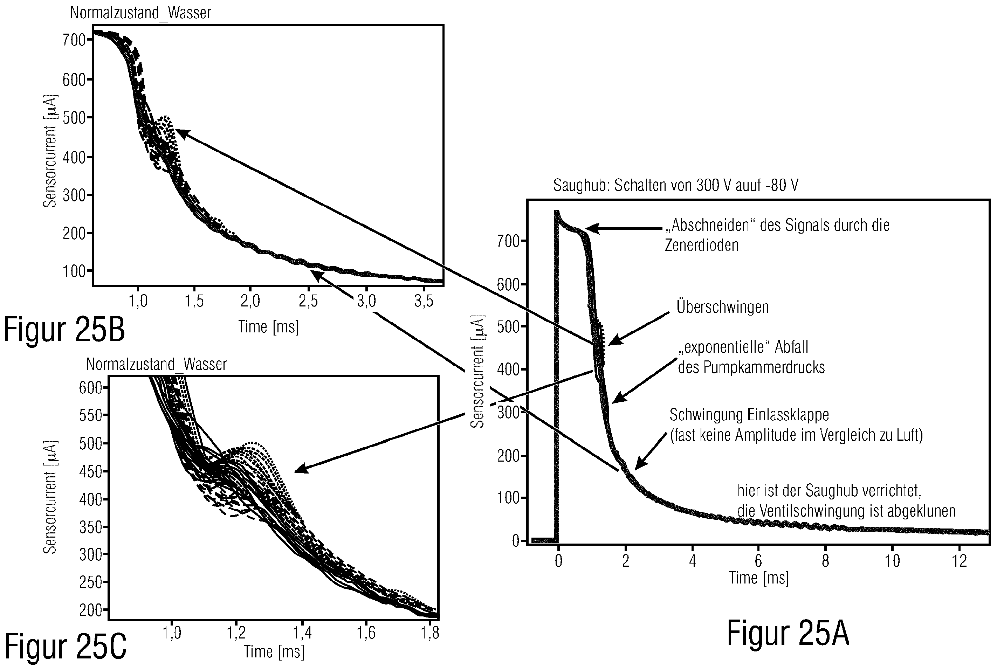

Die Figuren 25A, 25B und 25C zeigen Detailansichten des zuvor angesprochenen Überschwingens im exponentiellen Abklingvorgang, wobei Figur 25A der zuvor diskutierten Figur 24 entspricht, Figur 25B zeigt eine vergrößerte Darstellung des Überschwingens, und Figur 25C zeigt eine nochmals vergrößerte Ansicht.

Wie eingangs erwähnt wurde, wurden hier 90 Kurven übereinandergelegt. Die ursprünglich eingereichten Unterlagen zu dieser Anmeldung waren ursprünglich farbig und enthielten eine Farbcodierung der einzelnen Messkurven. Diese Farbcodierung stellt die Aufnahmezeitpunkte der einzelnen Messkurven dar, d.h. wann welche Messkurve (relativ zu den anderen Messkurven) aufgezeichnet wurde. Gemäß dieser Farbcodierung verlaufen die Messzeitpunkte beginnend bei Gelbtönen, über Grüntone, zu Blautönen und Lilatönen. Das heißt, die Messkurven mit Gelbtönen wurden zuerst aufgezeichnet, anschließend die Messkurven mit Grüntönen, danach die Messkurven mit Blautönen und letztlich die Messkurven mit Lilatönen. Diese Farbcodierung wird im Übrigen für alle in diesem Kapitel diskutierten Figuren genutzt.

In den Figuren 25B und 25C ist beispielsweise zu sehen, dass die Messkurven, die am weitesten von der eigentlichen Exponentialfunktion (lila), wie sie in Figur 25A abgebildet ist, entfernt sind, zuerst aufgenommen wurden (Gelbtöne). Mit zunehmender Messdauer schmiegen sich dann die einzelnen Messkurven an den Verlauf der Exponentialfunktion an, d.h. der Farbcode-Gradient wandert mit zunehmenden Messzeitpunkten nach innen in Richtung der Exponentialfunktion aus Figur 25A. Dieses Überschwingen hat vermutlich mit fluidischen Resonanzen und/oder mit Entgasung und/oder Kavitation zu tun.

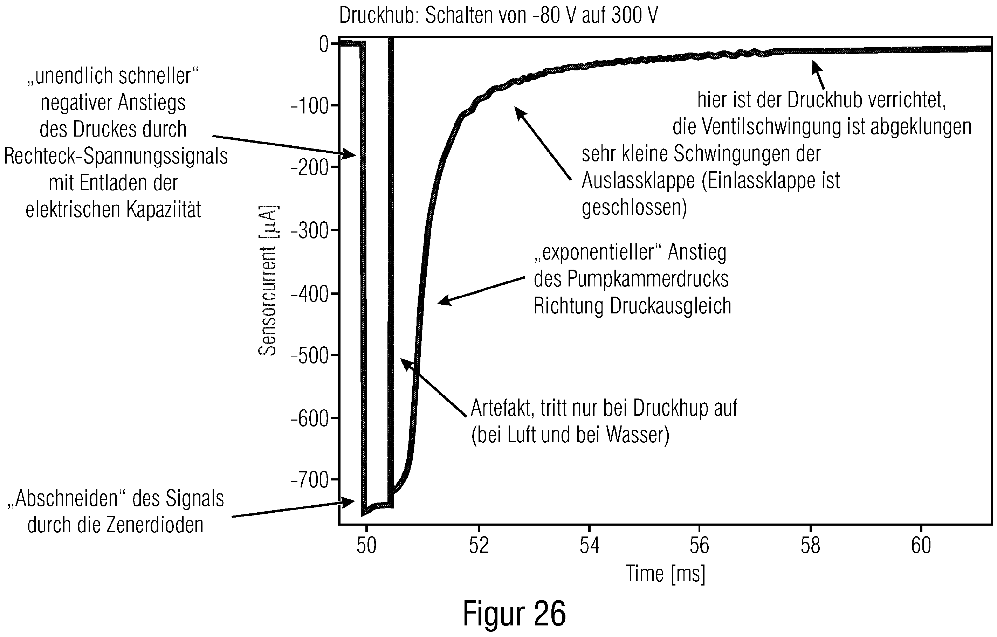

Figur 26 zeigt nun eine Detailansicht des zeitlichen Signalverlaufs beim Druckhub (Pumpmedium: Wasser) im Normalzustand, d.h. ohne äußere Einflussfaktoren. Zunächst weist auch hier der Signalverlauf wieder einen sprunghaften (negativen) Anstieg auf, was sich aus dem rechteckigen Ansteuersignal 104 ergibt, wobei sich die Kapazität des Piezos entlädt. Dieser sprunghafte Anstieg wird im Signalverlauf abgeschnitten, bedingt durch die Zenerdioden 111, 112 aus Figur 4. Es folgt ein Artefakt, das auch hier wieder nur im Druckhub auftritt und zunächst unberücksichtigt bleiben kann. Anschließend klingt auch hier der Signalverlauf wieder exponentiell ab, d.h. der Pumpkammerdruck nimmt exponentiell zu bis hin zum Druckausgleich mit dem Außendruck (z.B. Atmosphärendruck). Gegen Ende des Abklingvorgangs sind nur sehr kleine Schwingungen zu erkennen, die sich aufgrund von Schwingungen der Auslassklappe ergeben. Im Bereich ab ca. 54 ms ist auch hier der Druckhub vollständig verrichtet und die Ventilschwingung ist abgeklungen.

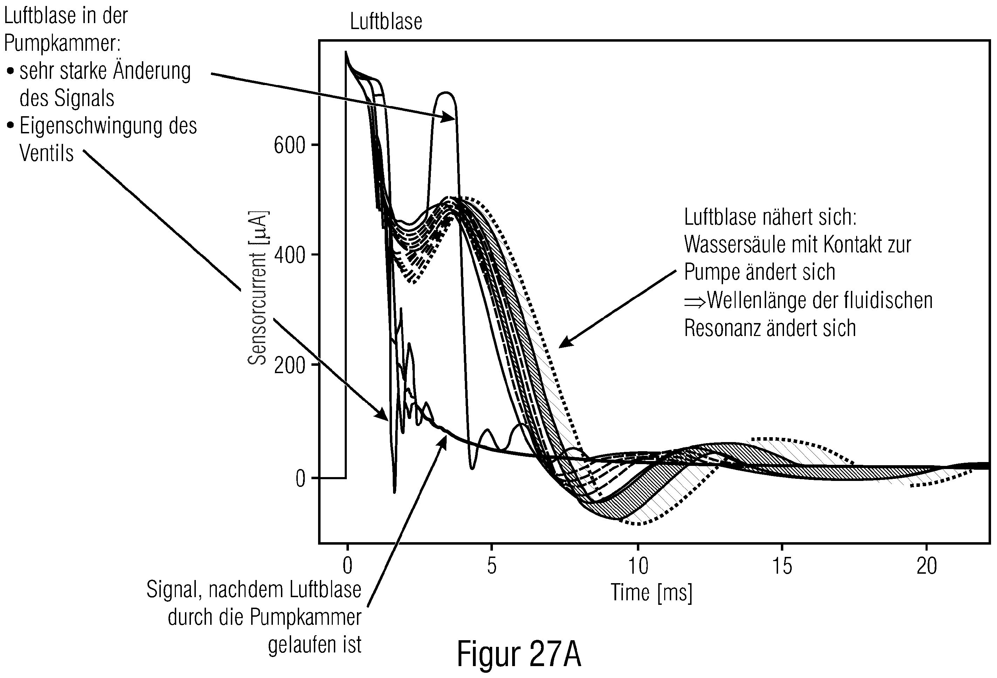

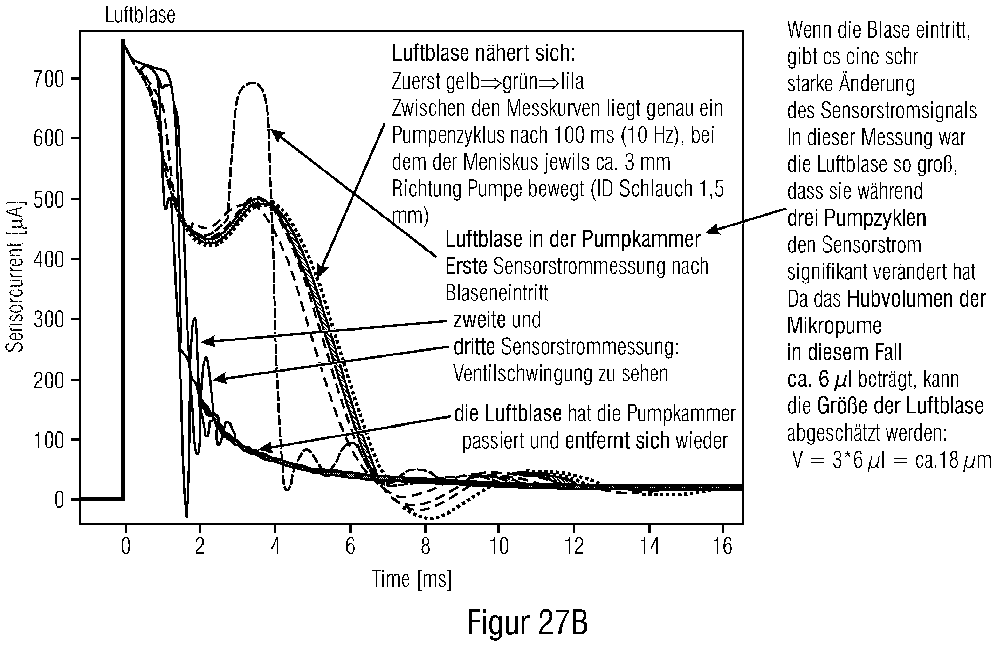

Die Figuren 27A und 27B zeigen nun einen Fall, indem eine Störgröße in Form einer Luftblase hinzugeschaltet wurde. Diese Luftblase entspricht einem äußeren Einflussfaktor, der den zeitlichen Verlauf des Ansteuersignals 104 ändert. Die Figuren 27A und 27B zeigen die erfindungsgemäße Detektion einer Luftblase im Saughub.

Die Mikropumpe wurde mit einer Pumpfrequenz von 10 Hz betrieben, und als Ansteuersignal wurde eine Rechteckspannung verwendet. Das Pumpmedium war Wasser, und es wurde eine Luftblase in das System eingeführt. In den Figuren 27A und 27B wurden dreißig Messkurven übereinandergelegt, wobei zwanzig Saughübe vor dem Eintritt der Blase in die Pumpkammer aufgezeichnet wurden, drei Saughübe während sich die Blase in der Pumpkammer befand, sowie sieben weitere Saughübe während denen sich die Blase von der Pumpkammer wieder entfernte. Auch hier ist wieder die oben genannte Farbcodierung angewendet worden.

Zunächst ist zu sehen, das sich der zeitliche Signalverlauf deutlich ändert, wenn sich die Luftblase der Pumpkammer nähert. Dies führt zu deutlichen Abweichungen gegenüber dem exponentiellen Abklingvorgang im Normalzustand (Figur 24). Es ist hier (Figur 27B) ein deutliches Überschwingen im Bereich von ca. 4 ms bis 5 ms zu erkennen, sowie bei etwa 8 ms und 11 ms. Es sei an dieser Stelle erwähnt, dass alle hierin angegebenen Zeitangaben rein exemplarisch sind, um den zeitlichen Signalverlauf zu beschreiben, da in der vorliegenden Schutzrechtsanmeldung nicht auf farbliche Figuren, und somit dementsprechend auch nicht auf Farbcodierungen, zurückgegriffen werden kann.

Dieses Überschwingen ergibt sich daraus, dass sich die Wassersäule, die mit der Pumpe in Kontakt ist, aufgrund der Luftblase ändert. Dadurch verändert sich die Wellenlänge der fluidischen Resonanz.

Sobald die Luftblase in die Pumpkammer eintritt, ändert sich der zeitliche Signalverlauf signifikant. Es kommt zu einem sehr deutlichen Ausschlag, bzw. zu einer sehr deutlichen Abweichung von der exponentiellen Abklingfunktion im Normalzustand (Figur 24), im Bereich von etwa 4 ms. Hierzu sei verwiesen auf Figur 27B und der darin eingezeichneten Beschriftung "Erste Sensorstrommessung nach Blaseneintritt".

In den darauffolgenden zweiten und dritten Sensorstrommessungen, während denen sich die Blase noch in der Pumpkammer befindet, sind außerdem erhöhte Eigenschwingungen des Ventils zu erkennen. Da sich nun in der Pumpkammer zeitweise niedrigviskose Luft befindet, können die Ventilklappen nun schwingen, was sich im gemessenen Signal abbildet.

Befindet sich Luft in der Pumpkammer, dann wirken auch Oberflächenkräfte sowohl auf die Pumpmembran als auch auf die Ventilklappen. Diese Oberflächenkräfte können z.B. dazu führen, dass Ventile sich nicht mehr frei bewegen können. Auch die Antriebsmembran kann unsymmetrische Belastung erfahren, je nachdem wo sich ein Meniskus befindet. All dies hat Auswirkungen auf die Drücke in der Pumpkammer. Da man nicht vorhersehen kann, wie genau sich die Blase durch die Pumpkammer bewegt, erscheint das Verhalten des Signals chaotisch zu sein.

Sobald die Luftblase aus der Pumpkammer austritt und abwandert gleicht sich der zeitliche Signalverlauf wieder der exponentiellen Abklingfunktion im Normalzustand (Figur 24) an. Der zeitliche Signalverlauf gleicht sich dabei umso mehr der exponentiellen Abklingfunktion an, umso weiter die Luftblase abwandert.

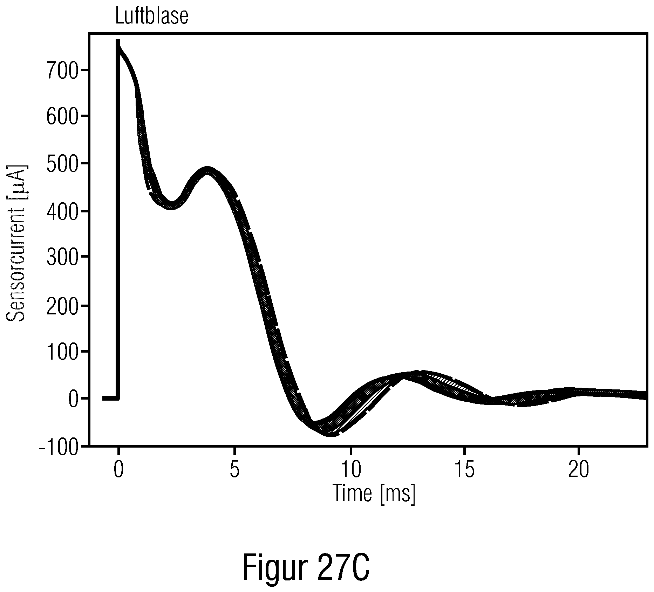

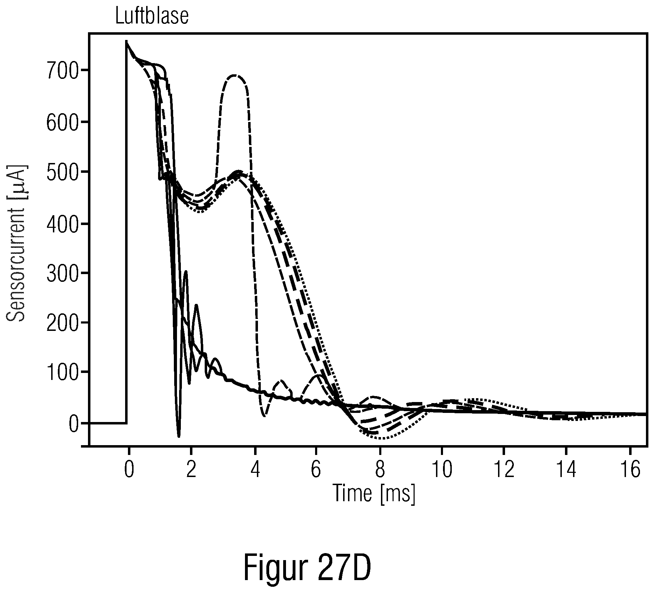

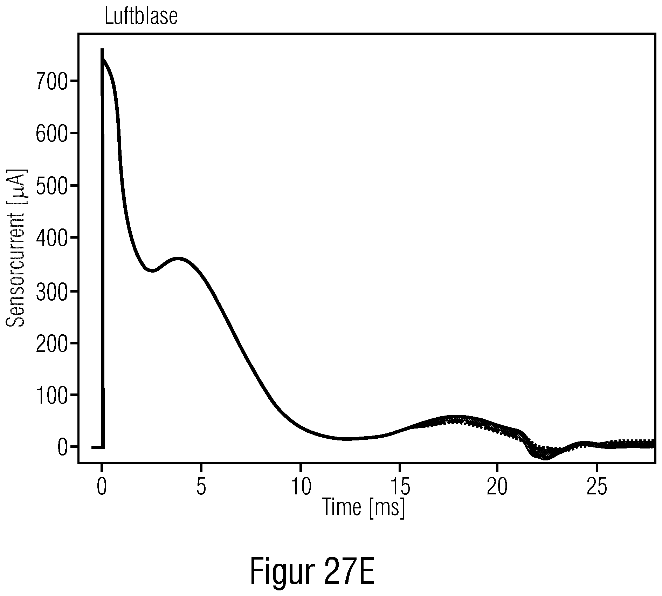

Die Figuren 27C, 27D und 27E zeigen nun zusätzlich nochmal die Situationen bzw. Signalverläufe mit größerem zeitlichen Vorlauf beim Ankommen sowie beim Abwandern der Luftblase. So ist zunächst in Figur 27C der zeitliche Signalverlauf des Ansteuersignals während zehn Saughüben vor dem Blaseneintritt gezeigt. Figur 27D zeigt den zuvor, unter Bezugnahme auf die Figuren 27A und 27B, diskutierten Signalverlauf unmittelbar vor dem Blaseneintritt, während des Blasendurchgangs sowie unmittelbar nach dem Austritt der Blase aus Pumpkammer. Figur 27E zeigt schließlich den Signalverlauf während zehn Saughüben, in denen die Blase immer weiter abwandert.

Wie man in den Figuren 27A bis 27E sehr gut erkennen kann, führt also das Auftreten von Luftblasen bzw. Gasblasen bei flüssigkeitsfördernden Mikrofluid-Bauelementen zu einer deutlichen Veränderung des zeitlichen Signalverlaufs des Ansteuersignals. Hierbei handelt es sich um einen äußeren Einflussfaktor, der gemäß dem hierin beschriebenen erfindungsgemäßen Konzept erkannt werden kann. Jeder äußere Einflussfaktor, so auch die hier exemplarisch beschriebene Gasblase, führt zu einer charakteristischen Abweichung im zeitlichen Signalverlauf, d.h. jeder äußere Einflussfaktor hinterlässt einen individuellen Fingerabdruck im zeitlichen Verlauf des Ansteuersignals, der mittels dem hierin beschriebenen erfindungsgemäßen Konzept detektiert werden kann.

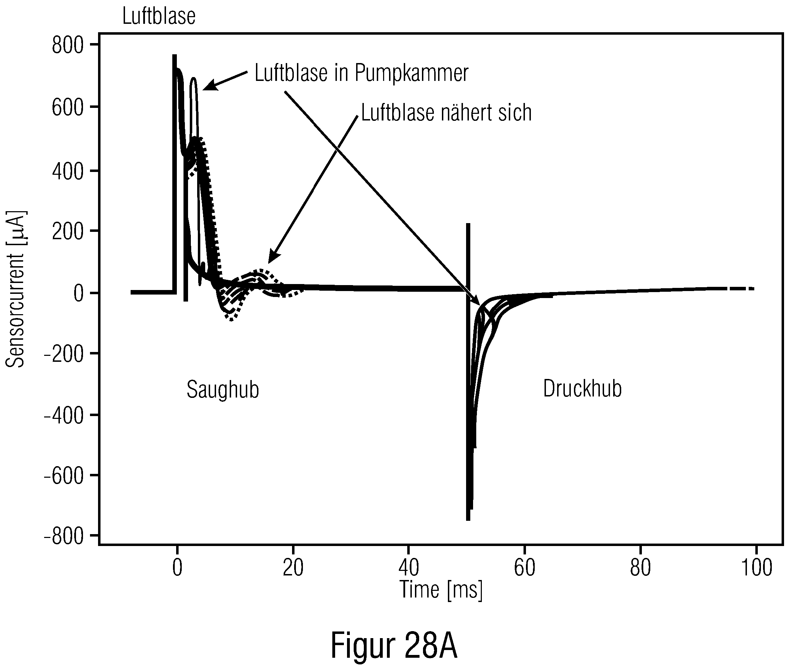

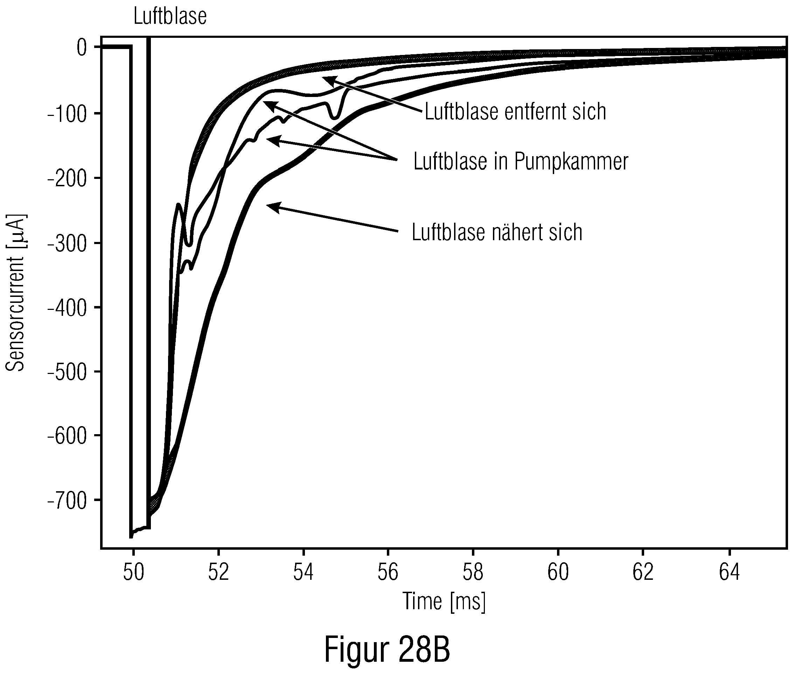

Die Figuren 28A und 28B zeigen, rein der Vollständigkeit halber, dass sich ein derartiger charakteristischer Fingerabdruck nicht nur, wie soeben unter Bezugnahme auf die Figuren 27A bis 27E durchexerziert, im Saughub ermitteln lässt, sondern auch im Druckhub, wenngleich der Fingerabdruck im Druckhub weniger deutlich ausgeprägt sein kann.

Insgesamt zeigen diese Experimente, dass der Eintritt von Gasblasen in die Pumpkammer recht eindeutig erkannt werden kann. Dies ist von extremer praktischer Relevanz für viele Mikropumpen-Anwendungen: dadurch kann beispielsweise anhand der Anzahl der Pumphübe, die den Blaseneintritt anzeigen, und dem Hubvolumen der Mikropumpe die Größe der Gasblase recht einfach abgeschätzt werden. Im vorliegenden Fall betrug das Hubvolumen ca. 6 μl

und die Anzahle der Pumpzyklen war gleich 3, das Gasblasenvolumen war demnach ca. 6 µl * 3 = 18 µl. Diese Volumenabschätzung einer Gasblase ist vor allem bei Medikamentendosierung nützlich, da kleinste Gasblasen medizinisch unbedenklich sind, während größere Gasblasen unbedingt vermieden werden müssen.

Außerdem stellt eine Gasblase auch eine signifikante Störung bei der Dosiergenauigkeit dar. Wenn die Größe der Gasblase bekannt ist, kann auch die Störung der Dosiergenauigkeit erkannt und durch geeignete Maßnahmen kompensiert werden. Wenn beispielsweise eine 18 µl große Gasblase (die bei Infusionen medizinisch völlig unbedenklich ist, wenn sie in den Patienten gelangen) erkannt und quantifiziert wird, dann muss (je nach medizinischer Anwendung) die Dosierung nicht unbedingt mit einer Fehlermeldung abgebrochen werden, sondern kann weiter erfolgen. Dann kann die Ansteuerung der Mikropumpe drei zusätzliche Hübe verrichten, damit die vorher geplante Menge an Medikament in den Patienten gelangt. In einem Fehlerprotokoll können dann Anzahl und Größe von Gasblasen vermerkt werden.

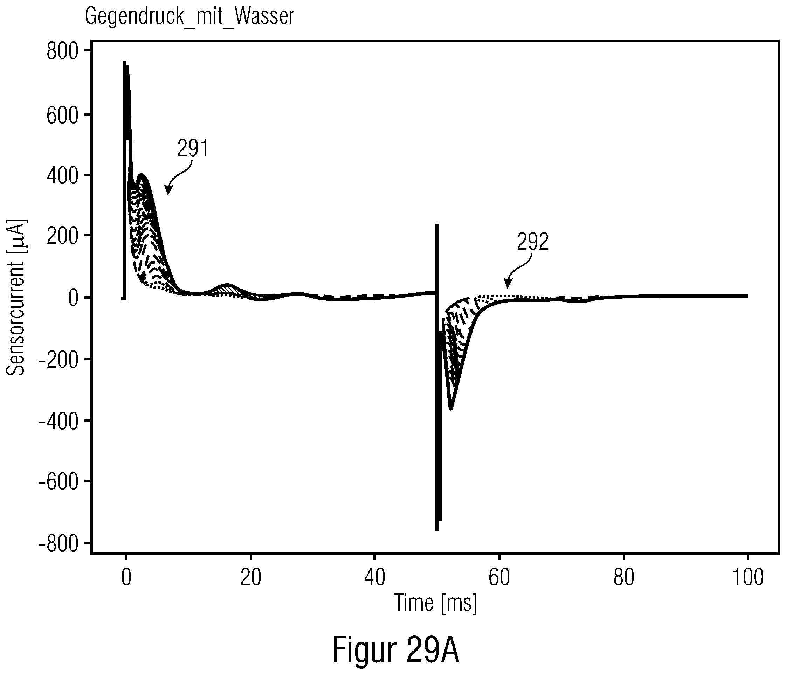

Die Figuren 29A bis 29D zeigen einen weiteren Fall von detektierbaren äußeren Einflussfaktoren, in diesem Falle ein Gegendruck bei einer flüssigkeitsfördernden Mikropumpe. Derartige Mikropumpen können beispielsweise in Medikamentendosiersystemen eingesetzt werden. Hier kann es gelegentlich zu einem Katheterverschluss kommen, der für den Patienten ernste Folgen haben kann, da das Medikament nicht mehr ordnungsgemäß dosiert werden kann. Ein derartiger Katheterverschluss kann beispielsweise einen angesprochenen Gegendruck erzeugen, der dem Blockierdruck der Mikropumpe entspricht (der Blockierdruck ist der Druck der Mikropumpe, den diese maximal mit Flüssigkeit als Pumpmedium aufbauen kann). Figur 29A zeigt hierfür zunächst eine Übersicht der Auswirkungen von Gegendrücken auf die zeitlichen Signalverläufe im Saughub 291 und im Druckhub 292.

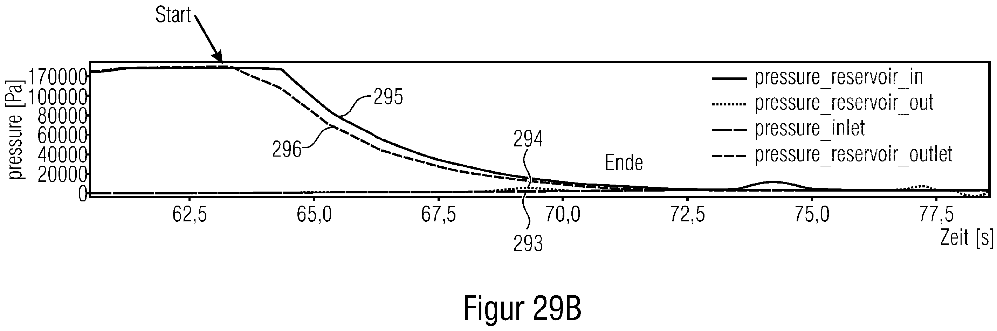

Die in Figur 29B abgebildete Messkurve zeigt die angelegten Gegendrücke. Es wurde mit einem Startdruck von 120 kPa begonnen, und der Druck wurde im Verlauf von ca. 10 s kontinuierlich heruntergeregelt bis auf 0 kPa. Die Messkurve 293 zeigt den Druck am einlassseitigen Reservoir 201 (Figur 19), die Messkurve 294 zeigt den Druck am auslassseitigen Reservoir 205 (Figur 19), die Messkurve 295 zeigt den Druck am Pumpeneinlass, und die Messkurve 296 zeigt den Druck am Pumpenauslass.

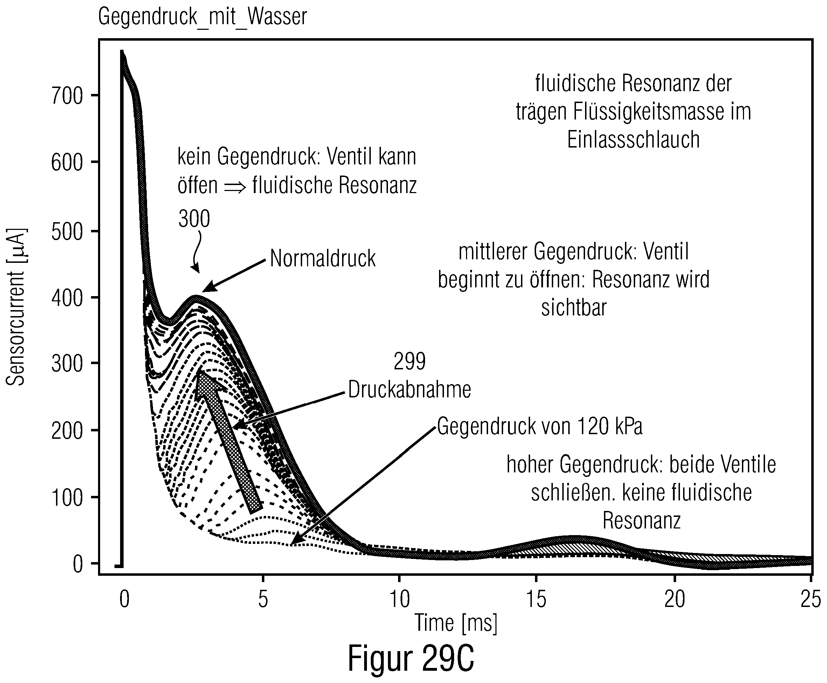

Figur 29C zeigt nun einen vergrößerten Ausschnitt von Figur 29A, wobei hier der Druckverlauf im Saughub dargestellt ist. Auch hier wurden wieder mehrere Messkurven übereinandergelegt, die im Verlauf der geregelten Druckabnahme (Figur 29B) aufgenommen wurden. Es wurde auch hier wieder der Farbcode angewendet, d.h. die Kurven mit Gelbton wurden zu Beginn (Druck: 120 kPa) aufgenommen und die Kurven mit Blau- und Lilatönen wurden zum Ende (Druck: 0 kPa) hin aufgenommen.

Es ist zu erkennen, dass bei dem angelegten Startdruck von 120 kPa die Messkurve etwa dem exponentiellen Abklingvorgang im Normalzustand (Figur 24) entspricht. Hier herrscht ein hoher Gegendruck. Das Einlassventil und das Auslassventil schließen und es kommt zu keiner fluidischen Resonanz.

Mit zunehmender Druckabnahme, dargestellt durch den Pfeil 299, wandern die Messkurven dann nach oben und bilden ein immer deutlicheres Überschwingen 300 aus. Bei einem solchen mittleren Gegendruck beginnt sich das Ventil zu öffnen und eine fluidische Resonanz wird sichtbar, was sich eben in Form des immer stärker werdenden Überschwingens 300 bemerkbar macht.

Das Überschwingen 300 ist am deutlichsten erkennbar beim Normaldruck, d.h. am Ende des Messzyklus bei 0 kPa. Wenn demnach also kein Gegendruck mehr anliegt, kann das Ventil ungehindert öffnen und es kommt zur fluidischen Resonanz, was sich dann in dem zuvor erwähnten deutlichen Überschwingen 300 ausdrückt.

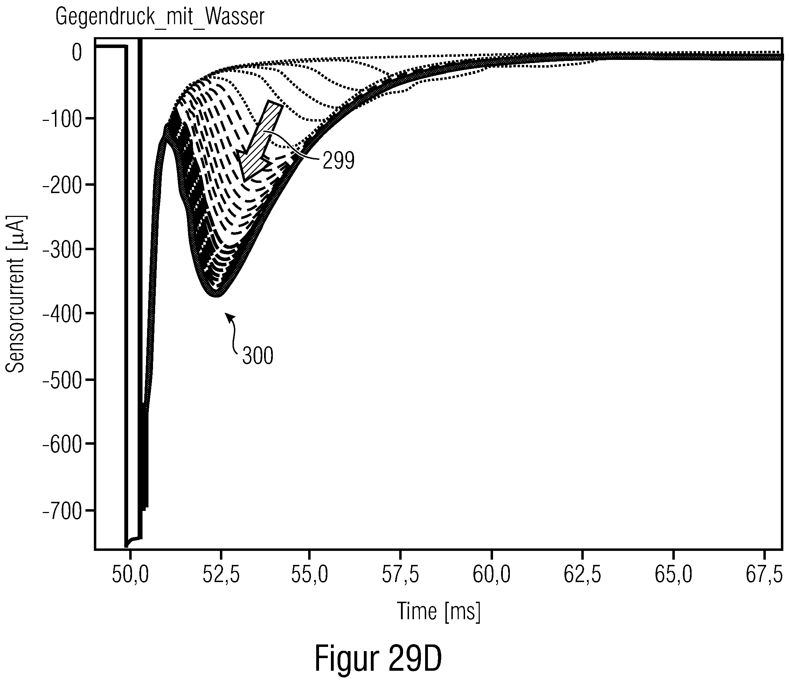

Figur 29D stellt die Messkurven im Druckhub dar. Auch hier kommt es mit abnehmendem Druck, dargestellt durch den Pfeil 299, zu einem immer deutlicheren Überschwingen 300. Die Gründe hierfür sind identisch zu den oben genannten Gründen im Saughub.

Wie man in den Figuren 29A bis 29D sehr gut erkennen kann, führen also unterschiedliche Gegendrücke bei flüssigkeitsfördernden Mikrofluid-Bauelementen zu einer deutlichen Veränderung des zeitlichen Signalverlaufs des Ansteuersignals. Hierbei handelt es sich um einen äußeren Einflussfaktor, der gemäß dem hierin beschriebenen erfindungsgemäßen Konzept erkannt werden kann. Jeder äußere Einflussfaktor, so auch die hier exemplarisch beschriebenen Gegendrücke, führt zu einer charakteristischen Abweichung im zeitlichen Signalverlauf, d.h. jeder äußere Einflussfaktor hinterlässt einen individuellen Fingerabdruck im zeitlichen Verlauf des Ansteuersignals, der mittels dem hierin beschriebenen erfindungsgemäßen Konzept detektiert werden kann.

Das Messen von Druckänderungen, sowohl in der Einlassleitung als auch in der Auslassleitung, kann somit durch geeignete Signalauswertung erfasst werden. Das ist wiederum von erheblicher praktischer Relevanz. Beispielsweise werden in Medikamentendosiersystemen im Auslasspfad Drucksensoren verbaut, um einen Katheterverschluss zu erkennen. Diese zusätzliche Komponente kann durch die hierin beschriebene erfindungsgemäße "Eigensensorik" des Mikrofluid-Bauelements 1000 ersetzt werden.

Weiterhin können auch langsame Druckänderungen erkannt werden. Der Verschluss eines Pateientenzugangs kann auch allmählich erfolgen, was einen langsamen Druckanstieg in der Auslassleitung bewirkt. Drucksensoren sollen zukünftig auch eingesetzt werden, um die Tragezeit von tragbaren Pumpsystemen besser bestimmen zu können. Patch Pumpen, die dies nicht vorhersagen können, werden oft nur viel kürzer eingesetzt, um dieses Risiko auszuschließen. Eine Vorhersage ermöglicht eine längere Tragezeit, und hat erhebliche wirtschaftliche Vorteile. Die erfindungsgemäße Vorhersage eines langsamen Druckanstieges mit der erfindungsgemäßen "Eigensensorik" der Mikropumpe kann z.B. dadurch erfolgen, dass das gemessene Signal in größeren Intervallen abgespeichert wird, und auf Änderungen wie in Figur 29C verglichen wird.

Die Figuren 30A bis 30E zeigen eine weiteren denkbaren Fall, der mittels dem hierin beschriebenen erfindungsgemäßen Konzept detektiert werden kann. Hierbei handelt es sich um einen erzeugten Vordruck. Dieser kann beispielsweise auftreten, wenn der Patient auf den Dosierungsbeutel drückt, sodass ein höherer Druck am Pumpeneinlass anliegt. Auch dies kann zu ernsthaften Konsequenzen für den Patienten bei der Medikamentendosierung führen. In der Regel wird dieser Vorgang mit einem Sicherheitsventil verhindert, was allerdings im Fehlerfall ebenfalls versagen kann.

Figur 30A zeigt zunächst wieder eine Übersicht über die Auswirkungen unterschiedlicher Vordrücke auf den zeitlichen Signalverlauf im Saughub 301 und im Druckhub 302. Die Messungen wurden durchgeführt mit einer luftfördernden Mikropumpe, die mit einem sinusförmigen Ansteuersignal angesteuert wurde. Die Pumpfrequenz betrug 10 Hz. Der Vordruck wurde variiert von einem Startdruck von mehreren kPa, und wurde kontinuierlich heruntergeregelt bis zu einem Enddruck von 0 kPa.

Es ist zu erkennen, dass im Saughub 301 große Schwingungen auftreten. Auch hier wurde wieder der Farbcode von Gelb zu grün, über blau, zu lila angewendet. Dementsprechend ist hier zu erkennen, dass die Messkurven bei höherem Vordruck eine höhere Amplitude aufweisen.

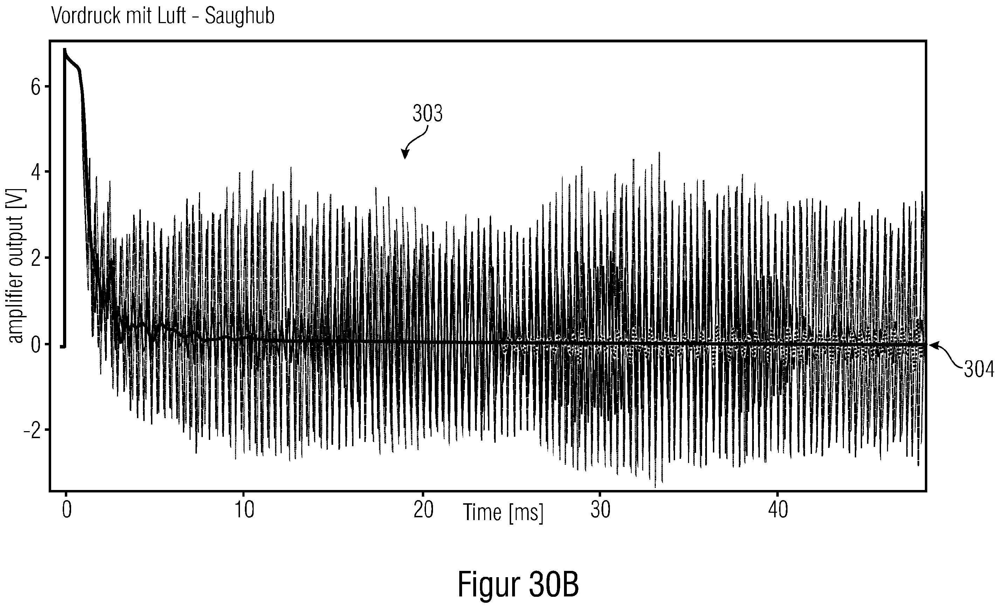

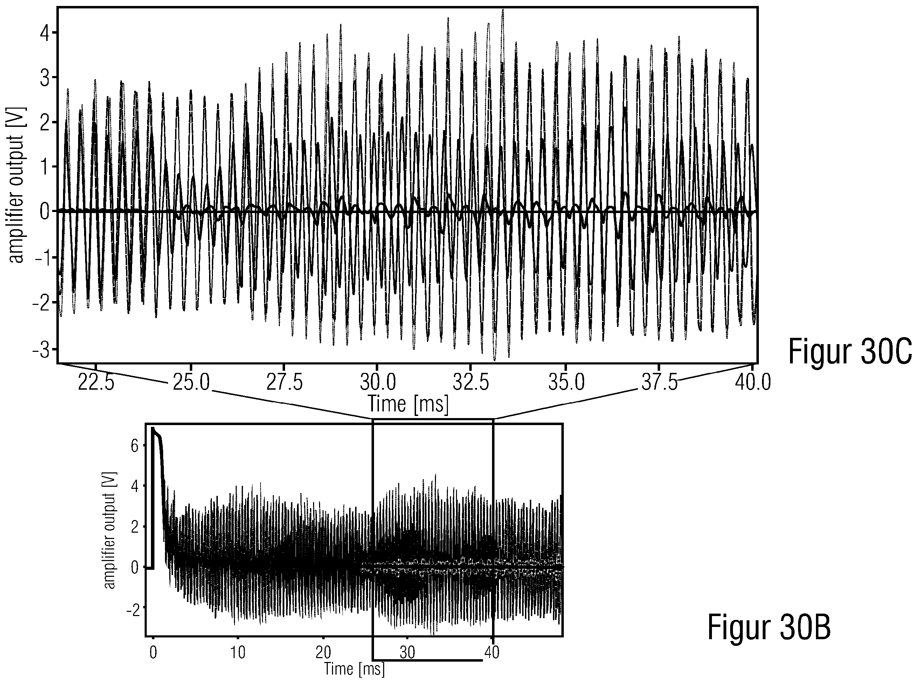

Im Druckhub 302 hingegen sind kaum bis gar keine Schwingungen festzustellen. Dies wird nachfolgend noch näher erläutert. Zunächst sei jedoch auf Figur 30B verwiesen, in der eine vergrößerte Darstellung des zeitlichen Signalverlaufs im Saughub dargestellt ist.

In Figur 30B ist zu erkennen, dass die Messkurven, die bei einem hohen Vordruck zu Beginn der Messungen aufgezeichnet wurden, eine große Amplitude (gelb) aufweisen. Mit abnehmendem Vordruck verringern sich auch die Amplituden dementsprechend (blau, grün). Die Amplituden werden immer geringer (lila) bis sich der zeitliche Signalverlauf zunehmend dem Signalverlauf im Normalzustand angleicht.

Figur 30C zeigt einen Ausschnitt aus Figur 30B. Zu diesem Zeitpunkt ist der Saughub längst abgeschlossen. Dennoch kommt es zu sehr deutlich ausgeprägten Schwingungen, die im zeitlichen Signalverlauf deutlich sichtbar sind. Das Bezugszeichen 303 kennzeichnet hierbei die großen Amplituden (gelb), die bei einem hohen Vordruck zu Beginn der Messungen aufgezeichnet wurden. Das Bezugszeichen 304 kennzeichnet die kleinen Signalamplituden (lila), die zum Ende der Messungen bei fast verschwindend geringem Vordruck aufgezeichnet wurden.

Da die Dämpfung bei Luftpumpen geringer ist als bei wasserfördernden Pumpen, gibt es eine Ventilschwingung in Eigenresonanz, die eine Druckänderung bewirkt, die dann im zeitlichen Signalverlauf zu sehen ist. Ventilschwingungen werden hierbei durch den Vordruck angeregt, da das Einlassventil offen ist (free-flow). Dementsprechend ist in Figur 30C zu erkennen, dass die Messkurven bei hohen Vordrücken (gelb) eine größere Amplitude aufweisen als bei geringeren Vordrücken (lila).

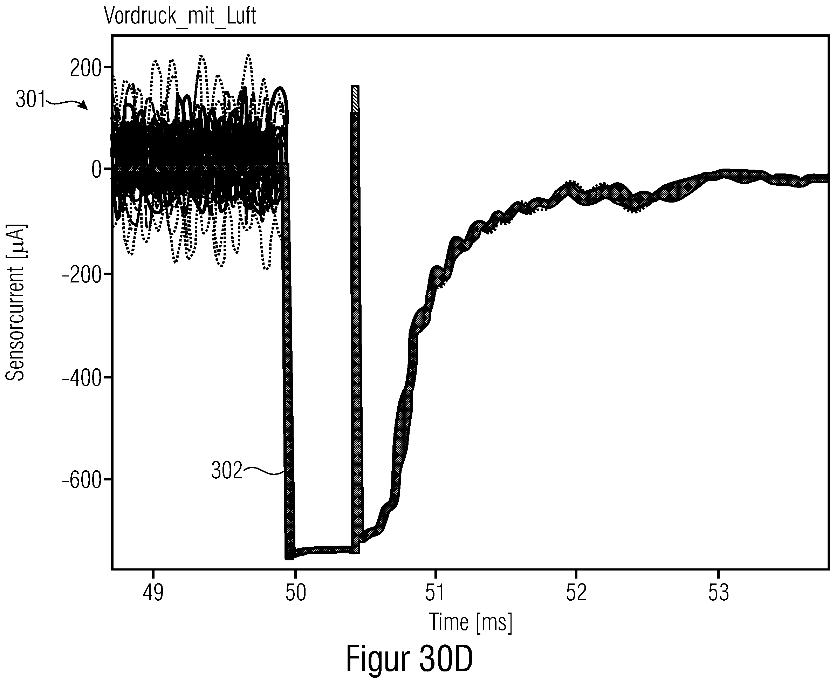

Figur 30D zeigt den Übergang vom Saughub zum Druckhub. Zu sehen ist die letzte Millisekunde des Saughubs und die ersten drei Millisekunden des Druckhubs. Hier ist schön das unterschiedliche Verhalten zwischen Saughub und Druckhub zu sehen, d.h. im Druckhub kommt es zu deutlich weniger Schwingungen als im Saughub.

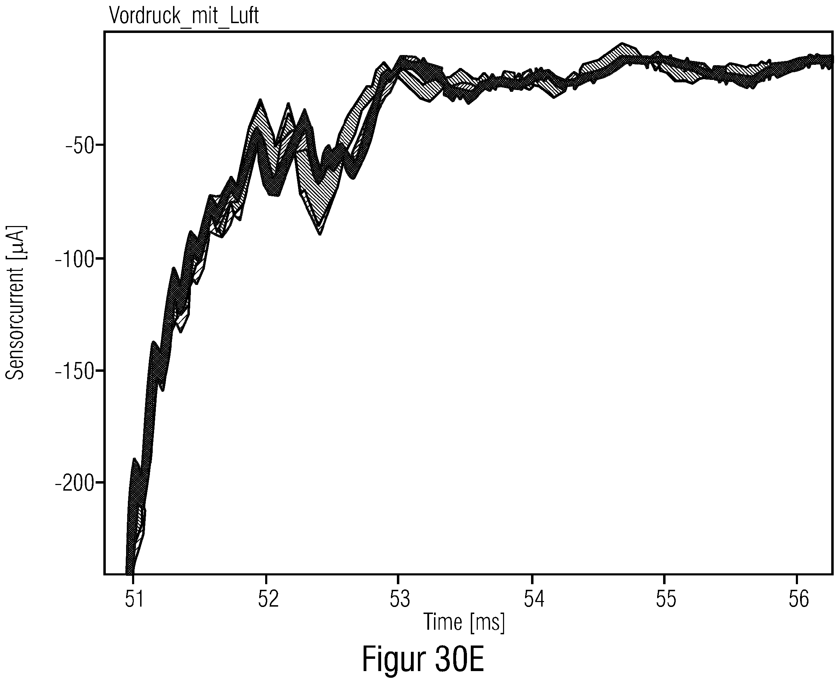

Figur 30E zeigt einen vergrößerten Ausschnitt aus Figur 30D, wobei hier der exponentielle Abklingvorgang zu sehen ist. Da beim Druckhub ein Überdruck in der Pumpkammer erzeugt wird, ist das Einlassventil geschlossen und kann trotz Vordruck nicht schwingen.

Daher sind die großen Oszillationen über den gesamten Zeitraum hier nicht sichtbar. Allerdings gibt es im Detail auch beim Druckhub Änderungen bei den Ventil-Schwingungen, die in den ersten Millisekunden auftreten. Auch hier wurde wieder das Farbschema von gelb über grün zu lila angewendet. Es ist auch hier wieder zu erkennen, dass die Amplituden der Signalverläufe bei höherem Vordruck größer sind und mit abnehmendem Vordruck ebenfalls kleiner werden und sich immer mehr dem exponentiellen Abklingverhalten im Normalzustand des Pumphubs angleichen.

Wie man also in den Figuren 30A bis 30E erkennen kann, führen also unterschiedliche Vordrücke bei Mikrofluid-Bauelementen zu einer deutlichen Veränderung des zeitlichen Signalverlaufs des Ansteuersignals. Hierbei handelt es sich um einen äußeren Einflussfaktor, der gemäß dem hierin beschriebenen erfindungsgemäßen Konzept erkannt werden kann. Jeder äußere Einflussfaktor, so auch die hier exemplarisch beschriebenen Vordrücke, führt zu einer charakteristischen Abweichung im zeitlichen Signalverlauf, d.h. jeder äußere Einflussfaktor hinterlässt einen individuellen Fingerabdruck im zeitlichen Verlauf des Ansteuersignals, der mittels dem hierin beschriebenen erfindungsgemäßen Konzept detektiert werden kann.

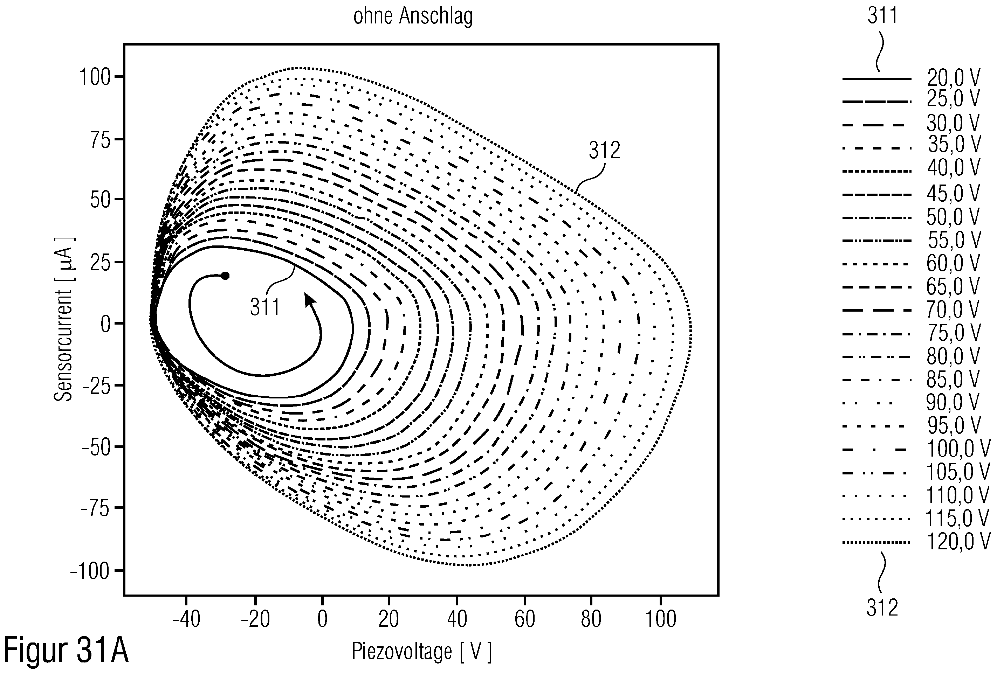

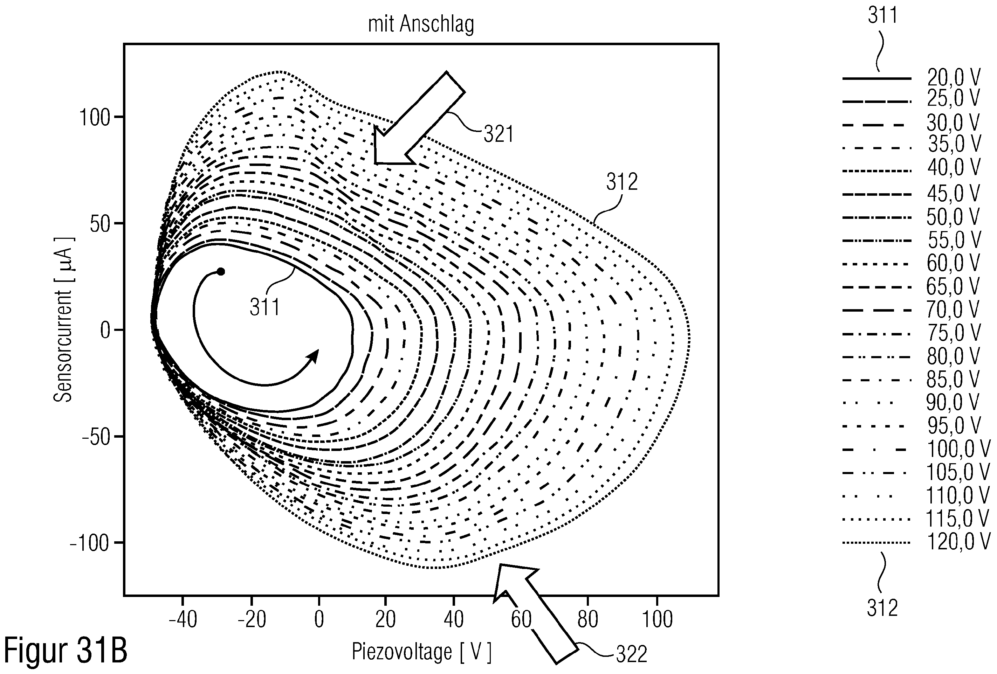

Die Figuren 31A und 31B zeigen Lissajous-Figuren (Strom über Spannung) bei unterschiedlichen Ansteuerspannungen zwischen U = 20 V bis U = 120 V, anhand derer ein Anschlagen des Membranelements 101 an der Gegenelektrode im Saughub bzw. am Pumpkammerboden im Druckhub detektiert werden kann. Dies kann beispielsweise für Qualitätsmessungen im Rahmen eines End-of-Line Tests durchgeführt werden. Alternativ kann dies auch während des Betriebs, zum Beispiel über mehrere Monate oder Jahre hinweg, durchgeführt werden, um eine Degradation des Membranaktors 100 festzustellen.

Die Figuren 31A und 31B zeigen den Sensorstrom für zwei unterschiedliche Membranaktoren. In Figur 31A ist ein Aktor zu sehen, bei dem das Antriebselement frei schwingen kann. In Figur 31B ist ein Aktor zu sehen, bei dem das Antriebselement auf dem Pumpkammerboden aufschlägt. Durch diesen Kontakt und die damit verbunden Krafteinwirkung auf das Antriebselement erhöht sich der Sensorstrom.

Der Sensorstrom ist über die angelegte Spannung am Antriebselement, anstatt über die Zeit, aufgetragen. Der zeitliche Verlauf des Signals verläuft gegen den Uhrzeigersinn. Die negative Amplitude des Saughubs ist für alle Messungen gleich und beträgt - 40 V. Die positive Amplitude wird in 5 V Schritten von 20 V bis auf 120 V erhöht.

Figur 31A zeigt einen Fall, in dem das Membranelement 101 sowohl im Saughub (positive Spannung) als auch im Druckhub (negative Spannung) nicht anschlägt und frei schwingen kann. Figur 31B zeigt den Fall, in dem das Membranelement 101 beim Auslenken im Saughub am Pumpkammerboden anschlägt und sich im Druckhub vom Pumpkammerboden ablöst. Im Saughub ist ein deutlich ausgeprägter Knick (siehe Pfeil 321) zu sehen, dessen Ausprägung mit größerer Ansteuerspannung immer deutlicher wird. Auch im Druckhub ist ein, wenn auch geringerer, Knick im Kurvenverlauf der Lissajous-Figur zu sehen (siehe Pfeil 322), der ein Ablösen des Membranelements 101 kennzeichnet.

### 6.4 Weitere nicht limitierende Beispiele von detektierbaren äußeren Einflussfaktoren

Die obige Diskussion unter Bezugnahme auf die Figuren 20 bis 31B hat gezeigt, dass anhand des zeitlichen Signalverlaufs des durch einen äußeren Einflussfaktor beeinflussten Ansteuersignals der jeweilige Einflussfaktor identifiziert werden kann. In den nächsten Absätzen wird daher anhand einiger spezifischer Beispiele aufgezeigt, in welcher Vielfalt die Einflussgrößen auf den Sensorstrom wirken, und den Sensorstrom damit charakteristisch beeinflussen, können.

Wie die obige Diskussion unter Bezugnahme auf die Figuren 20 bis 31B gezeigt hat, weist jeder äußere Einflussfaktor einen charakteristischen Fingerabdruck im zeitlichen Signalverlauf des Ansteuersignals auf. Die obige Diskussion wurde am Beispiel eines Signalanteils bzw. Stromterms $I_p$ abgehandelt. Das heißt, es wurde der Signalanteil bzw. Stromterm $I_p$ diskutiert, der mit einer zeitlichen Änderung eines auf das Membranelement 101 wirkenden Drucks verknüpft ist und zudem proportional zum Piezo-Kopplungsfaktor $C_E^*$ ist. Neben den soeben diskutierten nicht limitierenden Beispielen für detektierbare bzw. identifizierbare äußere Einflussfaktoren, können eine Reihe weiterer äußerer Einflussfaktoren basierend auf diesem Signalanteil bzw. Stromterm $I_p$ identifiziert werden.

Dementsprechend sehen Ausführungsbeispiele der Erfindung vor, dass die Signalverarbeitungsvorrichtung 105 dazu ausgestaltet ist, um basierend auf dem Signalanteil bzw. Stromterm $I_p$ zu überprüfen, dass der fluidische Zustand eines Mikrofluid-Bauelements, wie z.B. einer Mikropumpe, ungestört verläuft. Störungen können in vielfältiger Weise auftreten. Dementsprechend kann die Signalverarbeitungsvorrichtung 105 ausgestaltet sein, um basierend auf dem Signalanteil bzw. Stromterm $I_p$ mindestens einen der folgenden äußeren Einflussfaktoren zu ermitteln:

- eine Änderung des Gegendrucks (z.B. im Falle von sich ändernden Gegendrücken, bis hin zum o.g. Katheterverschluss, wird sich der Sensorstrom signifikant in seinem Zeitbereich ändern),
- eine Änderung des Vordrucks,
- ein Verschließen von Auslassleitungen, wie beispielsweise von Kathetern,
- eine Anwesenheit von Blasen, z.B. in der Pumpkammer einer Mikropumpe (an einem Mikroventil kann eine Gasblase durch Kapillarkräfte einen Blockierdruck erzeugen, der im Sensorstrom nachweisbar ist),
- die Größe von Blasen, die durch die Pumpe gelangt,
- ein Ankommen einer Blase an der Pumpkammer über die Einlassleitung,
- ein Abwandern einer Blase von der Pumpkammer über die Auslassleitung,
- eine Änderung des Pumpkammerwiderstands,
- eine (plötzliche) Veränderung des Hubvolumens durch eingeklemmte Partikel,
- eine Änderung von Umgebungsparametern, wie z.B. eine Druckänderung über dem Membranelement, eine Druckänderung am Einlass eines Ventils, eine Druckänderung am Auslass eines Ventils, eine Temperaturänderung
- eine Zustandserkennung eines Ventils, d.h. ob das Ventil geöffnet oder geschlossen ist,
- einen Defekt eines Ventils, z.B. ein Ventilbruch,
- eine (plötzliche) Verschlechterung von Ventil-Dichteigenschaften durch Partikel (falls z.B. ein harter Partikel ein Rückschlagventil (z.B. das Einlassventil) blockiert, so kann dies mittels dem Sensorstrom im Druckhub erkannt werden, da das Ausstoßen des Hubvolumens nicht mehr nur über das Auslassventil erfolgt),
- eine (langsame) Verschlechterung von Ventil-Dichteigenschaften durch Ablagerungen oder Agglomeration, wie z.B. Ausfällen von Festkörpern, Denaturieren von Proteinen (Falls durch Denaturierung von Proteinen oder Ausfällungen von Öl ein Ventil verklebt, so kann dies anhand des Sensorstroms erkannt werden, da beim entsprechenden Hub das Aktorelement 102 gegen ein geschlossenes Ventil drückt),
- ein Auftreten von Kapillar-Sticking, wenn ein Meniskus ein Ventil blockiert,
- ein Auftreten von van-der-Waals-Sticking, wenn zwischen Ventilsitz und Auflagesteg sich entsprechende Moleküle abscheiden,

◦ ein Aufquellen oder eine Änderung von elastischen Eigenschaften von Dichtelementen,

◦ eine Veränderung in einer Klebeverbindung zwischen dem Aktorelement und dem Membranelement,

◦ da die Trägheiten von Flüssigkeiten, die sich in der Peripherie befinden, in die Mikropumpe einkoppeln ("fluidische Resonanz"), kann die Mikropumpe (im Falle von inkompressibler Flüssigkeit als Pumpmedium) erkennen, ob lange, kurze, weiche oder harte Fluidleitungen angeschlossen sind,

◦ eine Änderung der Viskosität des Mediums, wodurch z.B. bei Spülvorgängen überprüft werden kann, ob beispielsweise das gesamte Medikament ausgespült und durch Kochsalzlösung ersetzt wurde.

Auch die anderen Signalanteile bzw. Stromterme $I_C$, $I_{ce}$, $I_U$ haben eine Auswirkung auf den zeitlichen Verlauf des Ansteuersignals, d.h. auch diese Stromterme $I_C$, $I_{ce}$, $I_U$ beeinflussen das Ansteuersignal, je nachdem welcher äußerer Einflussfaktor gerade vorherrscht. Somit können erfindungsgemäß auch diese Signalanteile bzw. Stromterme $I_C$, $I_{ce}$, $I_U$ dazu verwendet werden, um bestimmte äußere Einflussfaktoren anhand einer Signalanalyse des zeitlichen Verlaufs des entsprechend beeinflussten Ansteuersignals zu identifizieren.

So sehen Ausführungsbeispiele der Erfindung vor, dass die Signalverarbeitungsvorrichtung 105 dazu ausgestaltet ist, um zu überprüfen, dass der piezoelektrische Hysteresevorgang unverändert bleibt. Möglicherweise verändern sich ein oder mehrere Parameter $\tau_C$, $I_{ce}$ oder $I_C$, was ein Hinweis auf eine mechanische und/oder elektrische Änderung in der Piezokeramik sein kann. Dementsprechend kann die Signalverarbeitungsvorrichtung 105 dazu ausgestaltet sein, um basierend auf zumindest einem der Signalanteile bzw. Stromterme $I_C$ und $I_{ce}$ mindestens einen der folgenden äußeren Einflussfaktoren zu ermitteln:

◦ eine mechanische Ermüdung des Piezoelements, wie z.B. ein Bruch oder das sogenannte unterkritische Risswachstum bei sehr langem Dauerbetrieb,

◦ eine elektrische Ermüdung des Piezo-Elements, wie z.B. ein Verlust der Polarisation.

Weitere denkbare Ausführungsbeispiele der Erfindung sehen vor, dass die Signalverarbeitungsvorrichtung 105 dazu ausgestaltet ist, um zu überprüfen, dass der elektrische Ladevorgang ordnungsgemäß abgelaufen ist. Dementsprechend kann die Signalverarbeitungsvorrichtung 105 dazu ausgestaltet sein, um basierend auf dem Signalanteil bzw. Stromterm $I_U$ mindestens einen der folgenden äußeren Einflussfaktoren zu ermitteln:

• ein Abreißen einer elektrischen Kontaktierung (z.B. Bonddraht reißt ab),

• einen Kurzschluss des Piezoelements (zum Beispiel durch Kondensation eines Wassertröpfchens bei hoher Feuchtigkeit),

• einen Bruch des Piezoelements (wenn beispielsweise nur noch ein Teil der Piezokeramik elektrisch kontaktiert wird, nimmt die Kapazität und damit der Ladestrom ab).

Wenn die erfindungsgemäßen Messungen und Auswertungen in Echtzeit erfolgen, dann werden eine Vielzahl von Überprüfungen des Zustandes eines Mikrofluid-Bauelements 1000, wie z.B. einer Mikropumpe oder eines Mikroventils, möglich. Natürlich können bei elektrostatisch angetriebenen Mikrofluid-Bauelementen 1000 bzw. Membranaktoren 100 die Signalanteile bzw. Stromterme $I_U$ und $I_C$ für die gleichen Zwecke verwendet werden. Außerdem können, neben den oben beispielhaft erwähnten Amplituden $I_p$, $I_U$, $I_C$, $I_{ce}$, jeweils alternativ oder zusätzlich auch deren jeweilige Abkling- bzw. Zeitkonstanten $\tau_a$, $\tau_h$, $\tau_P$, $\tau_d = \tau_c = \tau_{piezo}$ verwendet werden, um basierend hierauf die oben genannten Zustände bzw. äußeren Einflussfaktoren zu detektieren, d.h. zu identifizieren und/oder klassifizieren.

Diese fluidischen Überprüfungen sind sehr vorteilhaft.

• bei schwerwiegenden Störungen kann ein Alarm ausgegeben werden, und die Dosierung beendet werden.

• bei temporären Störungen (z.B. Gasblasen) kann durch eine Systemsteuerung nach der Erkennung abgeschätzt werden, ob und inwieweit die Gasblase die Dosierung so stark beeinflusst, dass nachgeregelt werden muss.

• es kann diese Störung in Beziehung gesetzt werden zu der fluidischen Spezifikation der jeweiligen Dosieraufgabe des Mikrofluid-Bauelements 1000 (z.B. Mikropumpe), und angemessen reagiert werden.

• bei fluidischen Netzwerken mit mehreren Mikrofluid-Bauelementen 1000, z.B. Mikropumpen (z.B. N Mikropumpen), kann jede Mikropumpe ihren Status melden. Der Ausfall einzelner Mikropumpen kann dann bei geeigneter Redundanz durch andere Mikropumpen kompensiert werden.

Die Wirkung dieser zeitabhängigen mechanischen, pneumatischen oder hydraulischen äußeren Einflussfaktoren bzw. Störungen auf den Membranaktor 100 beeinflusst den Sensorstrom wie einen "Fingerabdruck".

Zum Beispiel führen fluidische Resonanzen von schwingenden Flüssigkeitssäulen in den Zu- und Ableitungen zu Druckschwankungen, die wiederum beeinflusst werden können durch eine Gasblase, die am Einlassschlauch in Richtung des Mikrofluid-Bauelements 1000 transportiert wird. Diese Resonanzen werden auch durch die Elastizität, den Durchmesser und die Länge der verwendeten Schlauchleitungen beeinflusst. Weiter führt eine Anwesenheit von Gasblasen innerhalb des Mikrofluid-Bauelements 1000, wie z.B. innerhalb einer Pumpkammer einer Mikropumpe, zu einer wesentlich rascheren Änderung des Sensorstroms, da Luft im Vergleich zu Wasser eine um den Faktor 50 kleinere Viskosität hat. Wenn die Gasblase das Mikrofluid-Bauelement 1000 passiert hat, kann analog der Transport im Auslassschlauch mit dem Sensorstrom beobachtet werden. Bleibt eine Teilblase in der Pumpkammer zurück, kann dies auch erkannt werden.

Alternativ oder zusätzlich können mittels dem hierin beschriebenen erfindungsgemäßen Konzept die folgenden zeitlichen Effekte als äußere Einflussfaktoren detektiert, d.h. identifiziert und/oder klassifiziert werden.

So kann beispielsweise die Adhäsion der Klebeschicht sowie die Lebensdauer ermittelt werden. Die mechanische Verspannung des Membranaktors 100 beeinflusst den Sensorstrom. Die Aktorposition ist nicht nur direkt nach der Montage, sondern auch über den gesamten Lebenszyklus des Aktors 100, von hoher Bedeutung. Ein Verlust von Vorspannung, also ein Abbau mechanischer Spannung im Verbund (d.h. Verbund aus Aktorelement 102 und Membranelement 101) und resultierendes Absenken des Membranelements 101, verändert die Eigenschaften des mikrofluidsichen Bauelements 1000 und sollte im Betrieb erkannt werden. Dieser Vorspannungsverlust kann durch ein Versagen der Klebeverbindung entstehen (beispielsweise wenn bei ungenügend ausgehärteten Klebstoffen die Polymerketten durch die sehr hohen Spannungen in der Klebstoffschicht im Laufe der Zeit reißen, und die Vorspannung abnimmt). Ein Kriechen des Klebers baut Spannungen ab und wird dadurch die elektrische Kapazität und den Sensorstrom beeinflussen.

Neben der Kontrolle der Vorspannung kann auch die vollständige Benetzung der Grenzfläche überprüft werden. Eingeschlossene Luftblasen verändern den Spannungszustand der Keramik (d.h. des piezokeramischen Aktorelements 102) und schlagen sich so im Sensorstrom nieder. Auch eine plötzliche oder schleichende Delamination des Verbundes im Betrieb führt zu einer Veränderung im Sensorstrom und kann dadurch frühzeitig erkannt werden.

Nicht nur die Klebeschicht, sondern auch die Keramik (d.h. das piezokeramische Aktorelement 102) selbst unterliegt zeitlichen Veränderungen. Gerade bei langem Betrieb oder extremen Ansteuerspannungen kann eine Depolarisation der Piezokeramik 102 auftreten. Diese führt zu Hubverlust und im Extremfall zum Versagen des Mikrofluid-Bauelements 1000. Ein frühzeitiges Erkennen ermöglicht die Anpassung des Spannungssignals um beispielsweise eine Repolarisation durchzuführen oder weitere Depolarisation zu verhindern. Eine solche Repolarisation kann durch extrem kurze Spannungsstöße begünstigt werden, die zu keiner mechanischen Auslenkung führen und das Förderverhalten dadurch nicht beeinflussen.

Für bestimmte Anwendungen ist zusätzlich eine Isolation des Aktorelements 102 von dem Membranelement 101 vorteilhaft. Beispielsweise die Verwendung von Multilayer-Aktoren führt sonst zu einem Kurzschluss über das Membranelement 101. Aber auch viele medizintechnische Anwendungen erfordern eine Isolation des Aktorelements 102 vom Fluidpfad. Diese Isolation ist dann für den Betrieb zwingend notwendig und darf ihre Isolationseigenschaften über die gesamte Lebensdauer des Mikrofluid-Bauelements 1000 nicht verändern. Eine langsame Steigerung des Leckstroms zeigt sich im Sensorstrom und kann somit frühzeitig erkannt werden.

Diese Überwachungsmöglichkeiten können analog auch auf ein Mikroventil angewendet werden.

### 7. Methodik zur Identifikation und/oder Klassifikation von äußeren Einflussfaktoren

Mit dem hierin beschriebenen erfindungsgemäßen Konzept lassen sich bei Mikrofluid-Bauelementen 1000

- in Echtzeit,
- ohne das Ansteuersignal beeinflussen zu müssen,
- ohne ein zusätzliches Sensorelement,
- für jeden Saughub,
- für jeden Druckhub,
- allein durch zeitabhängige Messung des Ladestromes,

folgende Ausgleichsvorgänge messen und unterscheiden:

- das Laden der elektrischen Kapazität eines Piezo-Membranaktors 102,
- die Verlustvorgänge in der Piezokeramik, die durch die Ausdehnung (bzw. Schrumpfung) der Weiss'schen Bezirke veranschaulicht wird, und
- die Änderung des Pumpkammerdrucks in der Pumpkammer.

Zur Durchführung des erfindungsgemäßen Konzepts ist es vorteilhaft, eine oder mehrere der folgenden Komponenten bereitzustellen:

- eine Messschaltung (als Teil der Signalverarbeitungsvorrichtung 105) zur genauen, zeitaufgelösten Messung des elektrischen Ladestroms,
- eine Echtzeit-Datenerfassung (als Teil der Signalverarbeitungsvorrichtung 105) für den Zeitabhängigen Ladestrom,
- eine Echtzeit-Auswertung (als Teil der Signalverarbeitungsvorrichtung 105) der aufgenommenen Daten, z.B. zur Bestimmung von überlagerten Amplituden und/oder Zeitkonstanten, wodurch eine Datenreduktion erzielt werden kann, und
- eine geeignete Speicherung der durch Auswertung entstandenen Daten.

Zur Durchführung des erfindungsgemäßen Konzepts gibt es prinzipiell zwei unterschiedliche Wege, die sich unter anderem in deren Konzept zur Datenspeicherung und Signalauswertung unterscheiden.

### 7.1 White Box Modell

Bei einem sogenannten White Box Modell ist der Zusammenhang zwischen dem Messsignal (beeinflusstes Ansteuersignal 104 einschließlich ein oder mehrerer zugehöriger Signalanteile bzw. Stromterme) und der ursächlichen physikalischen Störung (äußerer Einflussfaktor) bekannt und kann aus dem beeinflussten Ansteuersignal einschließlich der jeweiligen Signalanteile bzw. Stromterme eindeutig extrahiert werden. Durch die Auswertung der Daten erhält man bereits die gewünschte Aussage über das System, d.h. der äußere Einflussfaktor, der den zeitlichen Signalverlauf beeinflusst, kann erkannt und identifiziert werden.

Unter dem Begriff des Identifizierens kann im Rahmen der vorliegenden Offenbarung verstanden werden, dass die Art des äußeren Einflussfaktors bzw. dessen physikalischer Hintergrund genau benannt werden kann, z.B. eine Gasblase befindet sich in der Pumpkammer, ein Ventil ist verklebt, ein Ventil ist blockiert, es besteht ein bestimmter Gegendruck, es besteht ein bestimmter Vordruck, etc..

Gemäß eines solchen White Box Modells sehen Ausführungsbeispiele der Erfindung vor, dass die Signalverarbeitungsvorrichtung 105 einen Speicher aufweist, in dem hinterlegt ist, wie ein bestimmter äußerer Einflussfaktor den zeitlichen Signalverlauf des Ansteuersignals 104 beeinflusst. Hierbei ist die Signalverarbeitungsvorrichtung 105 dazu ausgestaltet, um basierend auf dem zeitlichen Signalverlauf des beeinflussten Ansteuersignals 104, den hierfür jeweils ursächlichen äußeren Einflussfaktor anhand der im Speicher hinterlegten Einflussfaktor-Informationen zu identifizieren.

### 7.2 Black Box Modell

Bei einem sogenannten Black Box Modell ist der Zusammenhang zwischen dem Messsignal (beeinflusstes Ansteuersignal 104 einschließlich ein oder mehrerer zugehöriger Signalanteile bzw. Stromterme) und der physikalischen Störung (äußerer Einflussfaktor) zunächst nicht bekannt, und er kann zunächst auch nicht direkt aus dem beeinflussten Ansteuersignal 104 extrahiert werden. In einem solchen Fall können Methoden des Machine Learnings eingesetzt werden, wobei ein neuronales Netz zum Einsatz kommen kann. Hierbei kann der Membranaktor 100 trainiert werden, indem äußere Einflussfaktoren (z.B. Störungen) erzeugt werden und die Systemantwort statistisch signifikant erfasst wird. Als Ergebnis dieses Trainings erhält man gewichtete Verbindungen dieses neuronalen Netzes. Der Membranaktor 100 benötigt nach diesem Training nur noch diese Gewichtungen, um den jeweiligen ursächlichen äußeren Einflussfaktor mit relativ hoher Wahrscheinlichkeit zu erfassen und diesen entsprechend zu klassifizieren.

Unter dem Begriff des Klassifizierens kann im Rahmen der vorliegenden Offenbarung verstanden werden, dass eine Gewichtung bzw. eine Wahrscheinlichkeit ermittelt wird, anhand derer eine Aussage darüber getroffen werden kann, mit welcher Wahrscheinlichkeit der anhand des zeitlichen Signalverlaufs des beeinflussten Ansteuersignals ermittelte äußere Einflussfaktor einer bestimmten Klasse (z.B. Ventil blockiert, Ventil verklebt, Gasblase, Vordruck, Gegendruck, etc.) zugeordnet werden kann. Eine solche Klassifikation kann beispielsweise mit dem zuvor erwähnten neuronalen Netz durchgeführt werden.

Gemäß eines solchen Black Box Modells sehen Ausführungsbeispiele der Erfindung vor, dass die Signalverarbeitungsvorrichtung 105 ein neuronales Netz aufweist, welches vorab trainiert wurde, indem unterschiedliche äußere Einflussfaktoren erzeugt und deren jeweilige Beeinflussung auf den zeitlichen Verlauf des Ansteuersignals 104 ermittelt wurden. Das neuronale Netz ist dazu ausgestaltet, um basierend auf dem zeitlichen Signalverlauf des beeinflussten Ansteuersignals 104 den mindestens einen hierfür ursächlichen äußeren Einflussfaktor anhand der vorab erstellten Trainingsdaten zu klassifizieren.

Wie hierin bereits ausführlich erläutert wurde, ist der Membranaktor 100 fluidisch an ein System gekoppelt, wobei die Wechselwirkungen sehr komplex sein können, da sie sich einerseits überlagern, andererseits auch gegenseitig beeinflussen können. Erfindungsgemäß beschreibt der Sensorstrom ein Integral über alle Einflussgrößen, was dies wiederum prädestiniert für den Einsatz von "Machine Learning" und neuronalen Netzen". Ein Indiz hierfür ist auch, dass diese Einflüsse durch bloßes Betrachten von Messkurven des Sensorstroms offensichtlich erkennbar sind, ohne dass hier ein unmittelbarer physikalischer Zusammenhang ersichtlich ist.

### 7.3 Grey Box Modell

Zwischen den oben erwähnten Black Box und White Box Modellen gibt es unterschiedliche Abstufungen, in denen der Zusammenhang zwischen dem Messsignal (beeinflusstes Ansteuersignal 104 einschließlich ein oder mehrerer zugehöriger Signalanteile bzw. Stromterme) und der physikalischen Störung (äußerer Einflussfaktor) nur durch semiempirische Modelle approximiert werden kann. Dieser Mittelweg kann dementsprechend als Grey Box Modell bezeichnet werden. In diesem Falle kann das Training erheblich vereinfacht werden, und mit effizienten Optimierungsalgorithmen realisiert werden. Die Störungserkennung erfolgt hier in der Regel zuverlässiger als bei reinen neuronalen Netzen.

1) Die Berechnungen in den Abschnitten 4 und 5, bei der die "Sprungantwort" eines piezoelektrisch angetriebenen mikrofluidischen Membranaktors 100 bei plötzlicher Spannungsänderung analysiert wurde, kann als eine physikalische Modellierung angesehen werden, die allerdings gewissen Vereinfachungen unterliegt (z.B. keine Berücksichtigung des Großsignalverhaltens, der Hysterese oder des Piezokriechens, oder das Phänomen der fluidischen Resonanz). Diese physikalische Modellierung kann daher die Realität nicht exakt abbilden. Das Modell beschreibt aber einige prinzipielle Merkmale und Abhängigkeiten des Sensorstroms von den Vorgängen am Membranaktor 100. Dieses Konzept kann somit als Grey Box Beschreibung angesehen werden.

2) Ein weiteres analoges Beispiel für eine Grey Box Beschreibung ist die Antwort des Sensorstroms auf eine harmonische Spannungsansteuerung, wie sie im Abschnitt 4.3 beschrieben wurde.

Unter Anwendung eines entsprechenden physikalischen Modells kann der zeitliche Signalverlauf des beeinflussten Ansteuersignals 104 einschließlich der zughörigen ein oder mehreren Signalanteile bzw. Stromterme $I_U$, $I_C$, $I_{ce}$, $I_p$ ermittelt werden, indem das Modell an die Messergebnisse angefittet wird (siehe Abschnitt 5).

Gemäß eines solchen Grey Box Modells sehen Ausführungsbeispiele der Erfindung vor, dass die Signalverarbeitungsvorrichtung 105 einen Speicher aufweist, in dem zu einem oder mehreren der einzelnen Signalanteile $I_U$, $I_C$, $I_{ce}$, $I_p$ jeweils ein mathematisches Modell mit zugehörigem Amplitudenverlauf und/oder zugehöriger Zeitkonstante des jeweiligen Signalanteils hinterlegt ist. Hierbei kann die Signalverarbeitungsvorrichtung dazu ausgestaltet sein, um das mathematische Modell an den zeitlichen Signalverlauf des beeinflussten Ansteuersignals 104 anzufitten und mit Hilfe des angefitteten mathematischen Modells den jeweiligen ursächlichen äußeren Einflussfaktor zu identifizieren.

Optional kann ein neuronales Netz verwendet werden, um das Fitting zu optimieren. In diesem Fall könnte der äußere Einflussfaktor anhand eines Fittings, das mit einem vorab trainierten neuronalen Netz ausgeführt wird, klassifiziert werden.

### 7.4 Mögliche Realisierung und Systemintegration

Figur 32 zeigt ein schematisches Blockschaltbild einer denkbaren Realisierung des hierein beschriebenen erfindungsgemäßen Konzepts in Hardware und Software. Zu sehen ist hier zunächst ein autarkes System, das das erfindungsgemäße Mikrofluid-Bauelement 1000 darstellt.

Das Mikrofluid-Bauelement 1000 weist den Membranaktor 100 auf, der piezoelektrisch oder elektrostatisch angetrieben werden kann. Ferner weist das Mikrofluid-Bauelement 1000 die Signalerzeugungsvorrichtung 103 auf, die ausgestaltet ist, um den Membranaktor 100 mit dem Ansteuersignal 104 anzusteuern. Auf den Membranaktor 100 können äußere Einflussfaktoren 116 wirken, die den zeitlichen Verlauf des Ansteuersignals 104 im Sinne eines individuellen Fingerabdrucks charakteristisch beeinflussen können.

Die Signalverarbeitungsvorrichtung 105 misst das Ansteuersignal 104, das bei Vorhandensein von äußeren Einflussfaktoren 116 einen beeinflussten zeitlichen Signalverlauf aufweisen kann. Die Signalverarbeitungsvorrichtung 105 ist ferner dazu ausgestaltet, um die Beeinflussung des zeitlichen Signalverlaufs des Ansteuersignals 104 festzustellen und basierend hierauf mindestens einen hierfür ursächlichen äußeren Einflussfaktor 116 zu identifizieren und/oder zu klassifizieren.

Wie in den Abschnitten 4 und 5 erläutert wurde, kann das beeinflusste Ansteuersignal 104, je nach Ausführungsform des Aktorelements 102, mehrere (bis zu vier) unterschiedliche Signalanteile $I_U$, $I_C$, $I_{ce}$, $I_p$ aufweisen, die im Rahmen der vorliegenden Offenbarung auch als Stromterme 117 bezeichnet werden. Die Signalverarbeitungsvorrichtung 105 kann die äußeren Einflussfaktoren 116 basierend auf den einzelnen Stromterme $I_U$, $I_C$, $I_{ce}$, $I_p$ identifizieren und/oder klassifizieren.

Der Membranaktor 100 kann über einen Mikrocontroller angesteuert werden. Der Mikrocontroller kann optional, wie hier in Figur 32 beispielhaft dargestellt ist, zusammen mit der Signalerzeugungsvorrichtung 103 ausgestaltet sein. Der Lade- und Sensorstrom, d.h. das Ansteuersignal 104, kann mittels der Signalverarbeitungsvorrichtung 105 (Stromterm-Messschaltung) vorverarbeitet und mittels des Mikrocontrollers abgetastet werden. Hierüber kann der zeitliche Signalverlauf des Ansteuersignals 104 diskretisiert werden.

Die so diskretisierten Stromterm-Daten 117' können über eine serielle Schnittstelle an einen leistungsstarken PC 118 übermittelt werden. Sofern ein neuronales Netz zum Klassifizieren des äußeren Einflussfaktors 116 zum Einsatz kommt, kann das Training des neuronalen Netzes auf dem PC 118 durchgeführt werden. Das neuronale Netz kann beispielsweise explizit für den Mikrocontroller optimiert sein und nach dem Training auf den Mikrocontroller übertragen werden. Optional können die Systemzustände zusätzlich mittels externer Sensorik 119 detektiert und ebenfalls an den PC 118 übermittelt werden.

Das erfindungsgemäße Mikrofluid-Bauelement 1000 ist somit in der Lage seinen Systemzustand zu erkennen und entsprechend zu reagieren. Beispielsweise kann das Ansteuersignal 104 angepasst bzw. verändert werden, sodass eine Nachführung bzw. Nachregelung des Arbeitspunkts möglich ist (siehe Kante 121).

Optional kann einer Benutzerschnittstelle 122 vorgesehen sein, mittels derer der Arbeitspunkt manuell geregelt werden kann. Alternativ oder zusätzlich kann ein Benutzer über die Benutzerschnittstelle 122 Informationen erhalten, beispielsweise eine Information über den identifizierten und/oder klassifizierten äußeren Einflussfaktor. Falls die Signalverarbeitungsvorrichtung 105 eine Abweichung des Arbeitspunkts vom Normalzustand, z.B. aufgrund eines detektierten äußeren Einflussfaktors 116, feststellt, so kann mittels der Benutzerschnittstelle 122 dem Benutzer die detektierte Abweichung vom Normalzustand mittels eines optischen und/oder akustischen Signals angezeigt werden. Beispielsweise kann hierfür ein Alarm ausgelöst werden.

Figur 33 zeigt eine schematische Blockdarstellung einzelner denkbarer Komponenten der Signalverarbeitungsvorrichtung 105 bzw. des Mikrocontrollers für den Fall, dass neuronale Netze zum Einsatz kommen.

Zunächst ist in Figur 33 rein schematisch die analoge Messschaltung mit Operationsverstärker (OPV) 109, Messwiderstand 110 und den Zenerdioden 111, 112 zu sehen, wie sie zuvor unter Bezugnahme auf die Figuren 3 und 4 erläutert wurde. Wie ebenfalls dort beschrieben wurde, kann die Masse-Elektrode des Mikrofluid-Bauelements 1000 mit der Masse-Elektrode der analogen Schaltung zusammengeschlossen werden. Dadurch wird ein virtuelles Massepotential erzeugt, sodass die Signalerzeugungsvorrichtung 103 nicht durch die analoge Schaltung belastet und das Ansteuersignal 104 somit nicht verzerrt wird.

Das mittels des OPV 109 verstärkte Ansteuersignal 104 kann an ein Datenvorverarbeitungsmodul 123 weitergeleitet werden. Hier können die Daten, z.B. mittels eines ADC diskretisiert werden. An das Datenvorverarbeitungsmodul 123 kann optional das Signal des Signalgenerators (T = 1 / f) angeschlossen werden, um den betrachteten Zeitabschnitt (ein Pumpzyklus: ein Saughub, ein Druckhub) zu bestimmen. Optional kann die Einstellung der Abtastrate möglich sein. Hierfür kann eine Verbindung zum Mikrocontroller bestehen.

Der Eingangsvektor 124 mit den diskretisierten Rohdaten 123 kann dann an ein KI-Modul 125 weitergegeben werden (KI: Künstliche Intelligenz). Das KI-Modul 125 kann ein neuronales Netz aufweisen. Der Ausgangsvektor 126 des KI-Moduls 125 kann an einen Analog-Digital-Converter (ADC) 127 weitergegeben werden. Auch die analogen Messwerte aus der analogen Messschaltung können an den ADC 127 weitergereicht werden, was mittels der Kante 128 verdeutlicht ist. Das vom ADC 127 digitalisierte Signal kann dann an eine definierte Schnittstelle 129 (UART, USB, $I^2C$, SPI, ...) weitergereicht werden.

Eine mögliche Ansteuerung des Mikrofluid-Bauelements 1000 wäre demnach also beispielsweise denkbar mittels eines entsprechenden Mikrocontrollers mit ADC (Analog Digital Converter), einer mit der Signalverarbeitungsvorrichtung 105 (Messschaltung) gekoppelten seriellen Schnittstelle und einem Treiber (z.B. Pumpentreiber) mit Hochspannungserzeugung.

Ein denkbares Konzept für die Datenauswertung könnte ein oder mehrere der folgenden Komponenten beinhalten:

- Klassifikation der Zustände mittels Time Series Classification (z.B. Erkennung von Anomalien mit Autoencoder)
- Reaktion/Regelung auf Fehlerzustand: Anpassen des Ladestroms (z.B. durch Anpassung des PWM Signals am Mikropumpentreiber) an aktuellen Zustand um Flussrate konstant zu halten
- Integration der Algorithmen direkt in Pumpen-Steuerung (ASIC)
- Entwicklung eines "Störgrößen-IC" z.B. mittels FPGA, das die Daten von der Sensorstromelektronik auswertet und dem Pumpentreiber die nötigen Infos/Regelung liefert (klein, energieeffizient)
- Falls das Mikrofluid-Bauelement 1000 eine Pumpe und ein Ventil aufweist, kann die Pumpe auch auf Fehlerzustände des Ventils reagieren

Mit dem hierin beschriebenen erfindungsgemäßen Konzept wird es möglich, ein autark betriebenes Mikrofluid-Bauelement 1000 mit einem (z.B. piezoelektrisch oder elektrostatisch angetriebenen) Membranaktor 100 bereitzustellen, der seinen Systemzustand (z.B. mittels eines neuronalen Netzes) eigenständig erkennt und auf diesen problemlösend reagiert, bzw. den Nutzer dementsprechend informiert.

### 8. Ergänzende Erläuterungen zur obigen Diskussion

In der obigen Diskussion wurde/n Vorwissen bzw. theoretische Grundkenntnisse bezüglich des Pumpkammerdrucks, des Zeitverhaltens nach einer Spannungsänderung und der Einsatzrandbedingungen von Mikropumpen als Beispiel für erfindungsgemäße Mikrofluid-Bauelemente 1000 vorausgesetzt. Der Vollständigkeit halber sollen daher abschließend noch kurz die vorausgesetzten Grundlagen erläutert werden.

### 8.1 Pumpkammerdruck

Der Druck in dem Fluid unter dem Membranelement 101 ist eine skalare Größe, die im Prinzip in jedem Punkt der Pumpkammer unterschiedliche Werte annehmen kann. Damit könnte der Druck in jedem Punkt und zu jedem Zeitpunkt verschieden sein.

Wenn nun die Pumpkammerhöhe sehr groß ist, so dass bei der Strömung in der Pumpkammer kein nennenswerter Druck abfällt, dann kann man von einem homogenen Pumpkammerdruck p sprechen (frühe Mikropumpen aus den 1990er Jahren waren so konstruiert). In diesem Falle wäre der Pumpkammerdruck p überall in der Pumpkammer zu einem bestimmten Zeitpunkt gleich groß. Die theoretischen Betrachtungen in der hier vorliegenden Offenbarung gehen von diesem Fall aus.

Bei modernen Mikropumpen wird allerdings die Pumpkammer sehr flach ausgelegt, um das Totvolumen zu verringern und damit das Kompressionsverhältnis zu vergrößern. Der Druckabfall in der Pumpkammer kann nicht mehr vernachlässigt werden. Er ist in vielen Fällen sogar größer als der Druckabfall an den Ventilen. Die Annahme eines homogenen Pumpkammerdrucks ist daher keine gute Näherung, deshalb werden die theoretischen Betrachtungen die Wirklichkeit nur mit einer gewissen Unschärfe abbilden (Grey Box Modell).

Real gesehen wird es beim Verrichten des Saug- und Druckhubs also einen Druckabfall geben, der umso größer ist, je schneller das Fluid zu einem bestimmten Zeitpunkt hineinoder hinausfließt. Nichtsdestotrotz gibt es eine Summen-Kraftwirkung auf das Membranelement 101, die eine zeitabhängige Ladungsverschiebung $dQ / dt = I_p$, bedingt durch den direkten Piezoeffekt, bewirkt. Diese Ladungsverschiebung wird dann durch das Integral des ortsabhängigen Drucks zum jeweiligen Zeitpunkt t korreliert.

### 8.2 Zeitverhalten nach einer Spannungsänderung

Wenn man eine unendlich schnelle Spannungsänderung annimmt (die es in der Praxis nicht gibt), dann würden mehrere Effekte zum Tragen kommen:

1) Nach einem unendlich schnellen Anlegen der Spannung (z.B. innerhalb von 1 $\mu$s, wenn die Spannung mit einem Frequenzgenerator und Piezoverstärker aufgebaut wird, der auch die entsprechenden Ströme liefern kann) wirkt in der Piezokeramik (Piezo-Aktorelement 102) ein elektrisches Feld, das zur Kontraktion der Piezokeramik gemäß dem *d31* Koeffizienten führt, wobei diese Kontraktion über die Klebeschicht (zwischen dem Membranelement 101 und dem Aktorelement 102) ein Biegemoment auf das Membranelement 101 ausübt. Diese mechanischen Signale breiten sich mit Schallgeschwindigkeit aus. Bei einer angenommenen Schallgeschwindigkeit von 1500 m/s in einer Flüssigkeit und einer lateralen Ausdehnung der Mikropumpe von max. 0,015 mm benötigt dieses Signal dementsprechend t = 0,015 / 1500 = 10 $\mu$s Zeit, um sich über das gesamte Membranelement 101 hinweg auszubreiten (bei kleineren Mikropumpen entsprechend schneller).

2) Angenommen es befindet sich eine inkompressible Flüssigkeit unter dem Membranelement 101, und die mechanische Kraftwirkung hat sich nach 10 $\mu$s im Biegeaktor 102 eingestellt, dann stellt sich innerhalb der gleichen Zeitskala eine Druckänderung im Fluid unter dem Membranelement 101 ein (die Schallgeschwindigkeit wird weiterhin mit 1500 m/s angenommen). Da sich auf dieser kurzen Zeitskala kein Fluid durch das Ventil bewegt, erzeugt die inkompressible Flüssigkeit eine Gegenkraft (Actio = Reactio). In diesem kurzen Zeitbereich, da gerade noch keine Flüssigkeit fließt, gibt es noch keine Druckabfälle in der Pumpkammer, und man kann sogar von einem homogenen Pumpkammerdruck reden. Dieser maximale Druck ist dann der Blockierdruck oder "stall pressure". Gemäß den viel langsameren Zeitkonstanten der Ventile und der Pumpkammerströmung beginnt sich dann der Druck im Fluid zu verändern, d.h. der Fluiddruck wird (durch die Strömung) ortsveränderlich, und er nimmt zeitlich ab. Wäre statt Wasser kompressible Luft (oder teilweise kompressible Luft durch eine Gasblase des Volumens $V_{gas}$ in der Pumpkammer, dann würde diese Gasblase nach Einschalten der Spannung gemäß ihrer Zustandsgleichung ebenfalls in sehr kurzer Zeit komprimiert werden (bzw. beim Saughub expandiert werden), und zwar bevor sich das Medium durch die Ventile bewegen kann, wobei der Piezo-Membranwandler entsprechend seiner fluidischen Kapazität an Kraft verliert und seinen Blockierdruck nicht mehr aufbauen kann.

3) Der Piezo-Membranverbund (d.h. Membranelement 101 + Kleber + Aktorelement 102) hat je nach Design, und je nachdem, ob sich Flüssigkeit oder Luft unter dem Membranelement 101 befindet, eine mechanische Resonanzfrequenz von mehreren 10 kHz. Das Membranelement 101 wird (wenn die Spannungsänderung schneller als die Resonanzfrequenz ist) in dessen Resonanzfrequenz angeregt und schwingt über, was sich in Form von erhöhter Lautstärke, größerer mechanischer Belastung, und größeren transienten Hüben bemerkbar macht. Diese höheren Hübe können beispielsweise bei Gas-Mikropumpen beobachtet werden, wenn die Pumpe mit einem harten Rechtecksignal angesteuert wird. Auch dieses Verhalten kann prinzipiell mit dem hierein beschriebenen erfindungsgemäßen Konzept erkannt und untersucht werden. In der Praxis sollte dieses Phänomen jedoch nicht auftreten, da der Anstieg der Spannungspegel in der Regel so ausgelegt wird, dass diese Resonanzfrequenzen nicht angeregt werden.

4) Die Mikroventile in der Pumpkammer sind ebenfalls bewegliche Elemente und haben eine Resonanzfrequenz. Diese ist in der Größenordnung von kHz, und kann (je nach Design) auch unter 1 kHz sinken, wenn z.B. die effektive schwingende Masse durch Anwesenheit einer Flüssigkeit erhöht wird. Je nach Auslegung der Ansteuerelektronik können bei schnellen Spannungsänderungen die Mikroventile zu Schwingungen angeregt werden, was bereits experimentell beobachtet wurde. Diese Schwingungen des Ventils führen zu Druckschwingungen in der Pumpkammer. Diese Druckschwingungen konnten bereits experimentell mit dem Sensorstrom bzw. Stromterm $I_p$ nachgewiesen werden. Sie treten signifikant dann auf, wenn Luft an der Ventilklappe ist (z.B. Figur 21), können aber auch bei Wasser beobachtet werden (Figur 25). Da bei der Eigenfrequenzschwingung immer auch das umgebende Medium mitbewegt werden muss, erhöht sich die effektive Masse des schwingenden Systems daher ist die beobachtete Eigenfrequenz bei der Schwingung in Wasser (Figur 25) höher als bei der Schwingung in Luft (Figur 21). Da die Dämpfung der Schwingung aufgrund der geringeren Viskosität in Luft wesentlich kleiner ist als in Wasser, sind die Schwingungsamplituden der Ventile in Luft wesentlich größer als in Wasser. Betont werden muss auch, dass keineswegs bei jedem Ventildesign Schwingungen auftreten müssen. Ist die Dämpfung groß genug (z.B. bei sehr niedrigen Pumpkammerhöhen), kann auch bei einer Rechteckanregung in Luft der asymptotische Grenzfall erreicht sein, und es tritt keine Schwingung auf.

### 8.3 Monitoring eines Mikrofluid-Bauelements im laufenden Betrieb anhand des Sensorstroms

Oft gibt es Fälle, bei denen die Einsatzrandbedingungen eines Mikrofluid-Bauelements 1000 bekannt sind und sich normalerweise nicht ändern. Ein Beispiel hierfür wäre eine Medikamentendosierung mittels einer Mikropumpe, wobei die Mikropumpe zusammen mit dem Medikamentenreservoir körpernah angebracht ist und über einen Katheter das Medikament dem Patienten verabreicht. Für diese Fälle kann der gemessene Strom $I$ (d.h. das Ansteuersignal 104) für jeden Saughub und jeden Druckhub zeitaufgelöst bestimmt werden, d.h. $I(t)$. Man erhält also einen zeitlichen Stromverlauf für den Saughub der Pumpe $I_{saug}(t)$ und einen für den anschließenden Druckhub $I_{druck}(t)$. Diese Ströme $I_{saug}(t)$ bzw. $I_{druck}(t)$ setzen sich wiederum aus den oben beschriebenen Signalanteilen bzw. Stromtermen $I_U$, $I_C$, $I_{ce}$ und $I_P$ zusammen.

Im eingeschwungenen Zustand, wenn die Mikropumpe störungsfrei arbeitet, ist der zeitliche Stromverlauf des Pumpenzyklus n+1 sehr ähnlich mit dem des vorherigen Pumpenzyklus n. Falls nun beim Pumpenzyklus n+1 eine Störung des Pumpbetriebs auftritt (z.B. Ventilbruch, Eintritt einer großen Blase, Abstecken des Schlauchs, Abknicken des Schlauchs, Verstopfen des Patientenzugangs, Blockieren des Ventils durch ein Partikel), dann ändert sich der zeitliche Signalverlauf von zumindest einem Stromterm $I_U$, $I_C$, $I_{ce}$, $I_P$ und somit auch der zeitliche Signalverlauf des Ansteuersignals 104, und zwar je nach Störung beim Saughub, beim Druckhub, oder bei beiden Hüben. Das heißt, die Signalverarbeitungsvorrichtung 105 kann eine Änderung erkennen, indem sie beispielsweise das Stromsignal (Ansteuersignal 104) des Zyklus n+1 $I_{saug}(t)_{n+1}$ mit dem Stromsignal des Zyklus n $I_{saug}(t)_n$ oder mit einem beliebigen vorherigen Stromsignal (z.B. des Zyklus n-1 $I_{saug}(t)_{n-1}$) vergleicht.

Gemäß Ausführungsbeispielen der Erfindung kann also die Signalverarbeitungsvorrichtung 105 dazu ausgestaltet sein, um den zeitlichen Signalverlauf des Ansteuersignals 104 eines Aktuierungs-Zyklusses (n+1) des mikrofluidischen Bauelements 1000 mit dem zeitlichen Signalverlauf eines zeitlich vorhergehenden Aktuierungs-Zyklusses (n) zu vergleichen und Abweichungen zwischen den Signalverläufen zu detektieren.

Bei erkannten Abweichungen kann die Signalverarbeitungsvorrichtung 105 beispielsweise ausgestaltet sein, um die detektierte Abweichung mittels eines optischen und/oder akustischen Signals anzuzeigen. Das heißt, es genügt in vielen Fällen zu melden, dass eine Störung im Dosiervorgang aufgetreten ist. In Fällen, bei denen eine Mikrodosierung sicherheitsrelevant ist (z.B. lebenswichtige Medikamente), kann dann ein Alarm ausgelöst werden und es können entsprechende Maßnahmen eingeleitet werden (z.B. Austausch des Dosiersystems). Aber auch in unkritischen Fällen kann angezeigt werden, dass das Dosiermodul nicht im Normalbetrieb arbeitet, und die Pumpe kann dies optisch oder akustisch anzeigen oder an eine Steuerzentrale melden.

Die Ansteuersignale 104 im Saughub $I_{saug}(t)$ bzw. im Druckhub $I_{druck}(t)$ können vorzugsweise in Echtzeit aufgenommen werden. Wenn also beispielsweise eine Mikropumpe mit einer Pumpfrequenz von $f = 10\ Hz$ pumpt, dann können die Ansteuersignale $I_{saug}(t)$ bzw. $I_{druck}(t)$ alle 100 ms erfasst werden. Es ist zwar möglich, aber nicht nötig, diese Rohdaten komplett abzuspeichern. Ein Vergleich der Rohdaten wäre sehr Speicher- und Rechenzeitintensiv. Möglichkeiten zur Datenreduktion wären z.B.:

- Man kennt die interessanten Zeitbereiche des gemessenen Stroms $I(t)$ und misst nur in diesem Bereich mit einer geeigneten Abtastrate. Bei dem Beispiel einer Mikropumpe, die mit 10 Hz pumpt, und die mit einer Elektronik angesteuert wird, die die Spannung innerhalb einer Millisekunde aufbaut, werden sowohl der Saughub als auch der Druckhub (je nach Strömungswiderstand der Ventile und der Pumpkammer sowie der Viskosität des Fluids) in wenigen Millisekunden verrichtet (z.B. Figur 23). Auch die oben erwähnten potentiell auftretenden Störungen, die alle den Stromterm $I_p(t)$ beeinflussen, werden nur in diesem Zeitfenster eine merkliche Änderung bewirken. Es wäre also sinnvoll, jeweils nach dem Beginn des Saug- bzw. Druckhubs den Zeitbereich bis ca. 5 ms abzutasten, und danach keine Messwerte mehr aufzunehmen. Das Zeitfenster von den restlichen 45 ms bis zum nächsten Hub kann für Auswertungen der Rohdaten und Abspeichern geeigneter verarbeiteter Daten verwendet werden. Entsprechende Ausführungsformen der Erfindung sehen daher vor, dass die Signalverarbeitungsvorrichtung 105 ausgestaltet sein kann, um während eines Aktuierungs-Zyklusses (Saughub bzw. Druckhub) des mikrofluidischen Bauelements 1000 einen ersten zeitlichen Abschnitt des Aktuierungs-Zyklusses zu nutzen, um den zeitlichen Signalverlauf des Ansteuersignals **104** zu ermitteln, und einen restlichen zweiten zeitlichen Abschnitt des Aktuierungs-Zyklusses, bis zum Beginn des darauffolgenden Aktuierungs-Zyklusses, zum Abspeichern und/oder Auswerten des ermittelten Signalverlaufs zu nutzen.

- Die Datenmenge kann weiterhin reduziert werden, indem die gemessenen Werte betreffend den zeitlichen Signalverlauf beispielsweise geeignet angefittet werden und nur die jeweiligen Fitparameter abgespeichert werden. Im Falle von Grey-Box Modellen sind bereits Modelle für diesen Fit vorhanden. In den oben diskutierten Beispielen wurde der Gesamtstrom $I(t)$ in eine Summe von Teilströmen $I_U(t)$, $I_C(t)$, $I_{ce}(t)$, $I_P(t)$ zerlegt, die jeweils exponentiell abklingen. Als Fitparameter wurden die Amplituden und Zeitkonstanten dieser Teilströme erhalten. Gemäß Ausführungsbeispielen der Erfindung können beispielsweise nur diese Fitparameter für jeden Saug- und Druckhub abgespeichert werden. Die große Zahl an Rohdaten wird dann auf sehr wenige Werte reduziert. Das heißt, die Signalverarbeitungsvorrichtung 105 kann dazu ausgestaltet sein, um den ermittelten Signalverlauf in Form von Parametern zu speichern, die jeweils einen zeitlichen Amplitudenverlauf und eine zugehörige Zeitkonstante von mindestens einem Signalanteil $I_U$, $I_C$, $I_{ce}$, $I_p$ des Ansteuersignals $I(t)$ repräsentieren.

- Sofern also die Datenmenge, wie oben beschrieben, reduziert wurde, können die entsprechend reduzierten Werte dann sehr einfach verglichen werden. Weiterhin kann die Signalverarbeitungsvorrichtung 105 auch eine Trendentwicklung dieser Werte über viele Pumpzyklen auswerten und diese Information verwenden, um den Zustand der Mikropumpe zu bewerten.

- In vielen Fällen ist es nicht erforderlich, jeden einzelnen Pumpzyklus zu messen. Im Falle einer Pumpe, die mit 10 Hz pumpt, kann diese Messung (und der Vergleich auf störungsfreien Betrieb) in einem beliebig längeren Intervall erfolgen, beispielsweise einmal pro Sekunde (also in jedem zehnten Hub) oder einmal pro Stunde. Das spart enorm Speicher und Rechenleistung, und damit auch Energie v.a. bei batteriebetriebenen Anwendungen, oder bei Langzeit Implantaten. Dementsprechend sehen Ausführungsbeispiele der Erfindung vor, dass die Signalverarbeitungsvorrichtung 105 ausgestaltet sein kann, um den zeitlichen Signalverlauf des Ansteuersignals 104 während zwei Aktuierungs-Zyklen (z.B. erster und zehnter Pumphub) zu erfassen, wobei zwischen diesen beiden Aktuierungs-Zyklen eine Vielzahl weiterer Aktuierungs-Zyklen bestehen, während denen die Signalverarbeitungsvorrichtung 105 keine Daten erfasst.

- Außerdem wäre es prinzipiell denkbar, Ermüdungserscheinungen und Degradationen zu erkennen: in solchen Fällen kann ein Parametervergleich vorgenommen werden, indem die gespeicherten Parameter über lange Zeiträume (Wochen, Monate, oder sogar Jahre) verglichen werden (z.B. bei Langzeitimplantaten, oder bei hochwertigen, langlebigen Industrieanwendungen wie Schmierstoffdosierung von schnelldrehenden Lagern oder der Mikrokühlung von Servern).

  ○ Wenn sich beispielsweise bei sehr langem Betrieb Mikrorisse in der Piezokeramik bilden, dann kann die

  - Steifigkeit der Membran abnehmen, und der Hub der Mikropumpe abnehmen (verändert den Stromterm $I_p$),
  - und es können die Piezoeigenschaften ($d31$ und Kapazität) verändert werden, der $d31$ Koeffizient ist direkt proportional zu $C_E^*$, damit beeinflusst er die Stromterme $I_{ce}$ und $I_C$

    ◦ oder wenn die Klebstofffestigkeit zwischen Piezokeramik (Aktorelement 102) und Membranelement 101 abnimmt. In dieser Klebeschicht wirken sehr starke Scherspannungen, wenn dadurch im Verlauf langer Zeit Polymerketten des Klebstoffes reißen, kann dies die Vorspannung des Piezo-Membranwandlers verringern, wodurch sich das Kompressionsverhältnis verringert, was sich wiederrum auf den Stromterm $I_p$ auswirkt.

Zusammenfassend kann also festgehalten werden, dass das hierin beschriebene erfindungsgemäße Konzept einen Membranaktor 100 für Mikropumpen oder Mikroventile bereitstellt, wobei der Membranaktor 100 auf der einen Seite Kontakt zu einem Fluid (Gas oder Flüssigkeit) hat, und auf dem ein zeitveränderliches elektrisches Ansteuersignal 104 U(t) beaufschlagt wird, wobei U(t) oder eine davon abgeleitete Größe I(t) durch eine Messschaltung 105 im Betrieb des Membranaktors 100 elektrisch genau bestimmt wird, und dabei die zeitveränderliche Beeinflussung des elektrischen Ansteuersignals 104 I(t) durch hydraulische, pneumatische, piezoelektrische oder mechanische Vorgänge, die auf den Membranaktor 100 wirken, erfasst wird, wobei diese unterschiedlichen Vorgänge durch Auswertung des Ansteuersignals 104 I(t) erkannt und unterschieden werden.

Die oben beschriebenen Ausführungsbeispiele stellen lediglich eine Veranschaulichung der Prinzipien des hierin beschriebenen innovativen Konzepts dar. Es versteht sich, dass Modifikationen und Variationen der hierin beschriebenen Anordnungen und Einzelheiten anderen Fachleuten einleuchten werden. Deshalb ist beabsichtigt, dass das hierin beschriebene Konzept lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des hierin beschriebenen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel des hierin beschriebenen Verfahrens ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des hierin beschriebenen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

## Patentansprüche

1. Mikrofluid-Bauelement (1000) aufweisend

   einen Membranaktor (100) mit einem Membranelement (101) und einem Aktorelement (102) zum Auslenken des Membranelements (101),
   eine Signalerzeugungsvorrichtung (103), die ausgestaltet ist, um ein elektrisches Ansteuersignal (104) mit einem zeitveränderlichen Signalverlauf zum Ansteuern des Membranaktors (101) zu generieren, wodurch das Aktorelement (102) das Membranelement (101) betätigt,
   eine Signalverarbeitungsvorrichtung (105), die ausgestaltet ist, um im laufenden Betrieb des Mikrofluid-Bauelements (1000) eine durch einen oder mehrere äußere Einflussfaktoren verursachte Beeinflussung des zeitlichen Signalverlaufs des Ansteuersignals (104) festzustellen, und
   basierend auf dieser Beeinflussung des zeitlichen Signalverlaufs mindestens einen hierfür ursächlichen äußeren Einflussfaktor zu identifizieren und/oder zu klassifizieren,
   wobei der Membranaktor (100) ein piezoelektrisch angetriebener Membranaktor ist, dessen Aktorelement (102) mindestens ein Piezoelement aufweist, und
   wobei das Ansteuersignal (104) ein Verformen des Piezoelements unter Ausnutzung des inversen Piezoeffekts verursacht, wodurch das Piezoelement eine Betätigungskraft auf das Membranelement (101) ausübt,
   wobei der zeitliche Signalverlauf des Ansteuersignals (104) durch ein vom Piezoelement ausgehendes Signal beeinflusst wird, das das Piezoelement aufgrund einer Gegenkraft des Membranelements (101) basierend auf dem direkten Piezoeffekt erzeugt,
   wobei die Signalverarbeitungsvorrichtung (105) ausgestaltet ist, um zum Bestimmen und/oder Klassifizieren des mindestens einen ursächlichen äußeren Einflussfaktors eine Signalanalyse des zeitlichen Signalverlaufs des Ansteuersignals (104) durchzuführen,

      wobei einzelne Signalanteile $(I_U, I_C, I_{ce}, I_p)$ des Ansteuersignals (104) ermittelt werden, wobei die einzelnen Signalanteile $(I_U, I_C, I_{ce}, I_p)$ mit unterschiedlichen äußeren Einflussfaktoren korreliert sind, die den zeitlichen Verlauf des Ansteuersignals (104) unterschiedlich beeinflussen, und
      wobei die Signalverarbeitungsvorrichtung (105) ausgestaltet ist, um einen bestimmten Signalanteil einem bestimmten äußeren Einflussfaktor zuzuordnen und hierüber den jeweiligen äußeren Einflussfaktor zu identifizieren und/oder zu klassifizieren.

2. Mikrofluid-Bauelement (1000) nach Anspruch 1,
   wobei die Signalverarbeitungsvorrichtung (105) ausgestaltet ist, um

      einen ersten zeitlichen Signalverlauf des Ansteuersignals (104), der einer Betätigung des Membranaktors (100) ohne äußerer Beeinflussung entspricht,
zu unterscheiden von einem unterschiedlichen zweiten zeitlichen Signalverlauf des Ansteuersignals (104), der einer Betätigung des Membranaktors (100) mit mindestens einem vorherrschenden äußeren Einflussfaktor entspricht.

3.  Mikrofluid-Bauelement (1000) nach Anspruch 1 oder 2,
wobei die Signalverarbeitungsvorrichtung (105) ausgestaltet ist, um
eine auf zumindest eine Membranseite des Membranelements (101) wirkende hydraulische, pneumatische oder mechanische Kraft als den ursächlichen äußeren Einflussfaktor für die Beeinflussung des zeitlichen Signalverlaufs zu identifizieren und/oder zu klassifizieren.

4.  Mikrofluid-Bauelement (1000) nach einem der vorhergehenden Ansprüche,

wobei die Signalverarbeitungsvorrichtung (105) ausgestaltet ist, um mindestens vier unterschiedliche Signalanteile ($I_U$, $I_C$, $I_{ce}$, $I_p$) des beeinflussten Ansteuersignals (104) voneinander zu unterscheiden, wobei

ein erster Signalanteil ($I_U$) mit einer zeitlichen Änderung der elektrischen Spannung beim Laden bzw. Entladen der Kapazität zwischen dem Membranelement (101) und dem Piezoelement (102) verknüpft ist,
ein zweiter Signalanteil ($I_P$) mit einer zeitlichen Änderung eines auf das Membranelement (101) wirkenden Drucks verknüpft ist,

ein dritter Signalanteil ($I_C$) mit einer zeitlichen Änderung der elektrischen Kapazität, die durch Großsignaleffekte des Piezoelements (102) bewirkt wird, verknüpft ist, und
ein vierter Signalanteil ($I_{ce}$) mit einer zeitlichen Änderung des d31-Piezo-Koeffizienten verknüpft ist, der sich aufgrund von Großsignaleffekten im Piezoelement (102) ändert.

5.  Mikrofluid-Bauelement nach einem der vorhergehenden Ansprüche,

wobei jeder der einzelnen Signalanteile ($I_U$, $I_C$, $I_{ce}$, $I_p$) über einen individuellen zeitlichen Ausgleichsvorgang in einen Gleichgewichtszustand strebt, wobei während des jeweiligen zeitlichen Ausgleichsvorgangs jeder Signalanteil einen individuellen zeitlichen Amplitudenverlauf ($I_{U0}$, $I_{p0}$, $I_{c0}$, $I_{ce0}$) sowie eine individuelle Zeitkonstante ($\tau_a$, $\tau_h$, $\tau_d = \tau_c = \tau_{piezo}$) aufweist, innerhalb derer der zeitliche Ausgleichsvorgang stattfindet, und
wobei die Signalverarbeitungsvorrichtung (105) ausgestaltet ist, um den äußeren Einflussfaktor basierend auf dem jeweiligen Amplitudenverlauf ($I_{U0}$, $I_{p0}$, $I_{c0}$, $I_{ce0}$) und/oder der jeweiligen Zeitkonstante ($\tau_a$, $\tau_h$, $\tau_d = \tau_c = \tau_{piezo}$) von ein oder mehreren der einzelnen Signalanteile ($I_U$, $I_C$, $I_{ce}$, $I_p$) zu ermitteln.

6.  Mikrofluid-Bauelement (1000) nach einem der vorhergehenden Ansprüche,
wobei die Signalverarbeitungsvorrichtung (105) ausgestaltet ist, um basierend auf dem zweiten Signalanteil ($I_p$) mindestens einen der folgenden äußeren Einflussfaktoren zu ermitteln:

◦ eine Änderung des Gegendrucks,
◦ eine Änderung des Vordrucks,
◦ ein Verschließen von Auslassleitungen, wie beispielsweise von Kathetern,
◦ eine Anwesenheit von Blasen in der Pumpkammer,
◦ die Größe von Blasen in der Pumpkammer,
◦ ein Ankommen von Blasen an der Pumpkammer über die Einlassleitung,
◦ ein Entfernen der Blasen von der Pumpkammer über die Auslassleitung,
◦ eine Änderung des Pumpkammerwiderstands,
◦ eine Veränderung des Hubvolumens durch eingeklemmte Partikel,
◦ eine Änderung von Umgebungsparametern, wie z.B. eine Druckänderung über dem Membranelement, eine Druckänderung am Einlass eines Ventils, eine Druckänderung am Auslass eines Ventils, eine Temperaturänderung
◦ eine Zustandserkennung eines Ventils, d.h. ob das Ventil geöffnet oder geschlossen ist,
◦ einen Defekt eines Ventils, z.B. ein Ventilbruch,
◦ eine Verschlechterung von Ventil-Dichteigenschaften durch Partikel,
◦ eine Verschlechterung von Ventil-Dichteigenschaften durch Ablagerungen oder Agglomeration, wie z.B. Ausfällen von Festkörpern, Denaturieren von Proteinen,
◦ ein Auftreten von Kapillar-Sticking, wenn ein Meniskus ein Ventil blockiert,

○ ein Auftreten von van-der-Waals-Sticking, wenn zwischen Ventilsitz und Auflagesteg sich entsprechende Moleküle abscheiden,
○ ein Aufquellen oder eine Änderung von elastischen Eigenschaften von Dichtelementen,
○ eine Veränderung in einer Klebeverbindung zwischen dem Aktorelement und dem Membranelement,
○ da die Trägheiten von Flüssigkeiten, die sich in der Peripherie befinden, in die Mikropumpe einkoppeln, kann die Mikropumpe (im Falle von inkompressibler Flüssigkeit als Pumpmedium) erkennen, ob lange, kurze, weiche oder harte Fluidleitungen angeschlossen sind,
○ eine Änderung der Viskosität des Mediums, wodurch z.B. bei Spülvorgängen überprüft werden kann, ob beispielsweise das gesamte Medikament ausgespült und durch Kochsalzlösung ersetzt wurden.

7. Mikrofluid-Bauelement (1000) nach einem der vorhergehenden Ansprüche,
wobei die Signalverarbeitungsvorrichtung (105) ausgestaltet ist, um basierend auf dem dritten und/oder vierten Signalanteil $(I_C, I_{ce})$ mindestens einen der folgenden äußeren Einflussfaktoren zu ermitteln:

○ eine mechanische Ermüdung des Piezoelements (102), wie z.B. ein Bruch oder das sogenannte unterkritische Risswachstum bei sehr langem Dauerbetrieb,
○ eine elektrische Ermüdung des Piezoelements (102), wie z.B. ein Verlust der Polarisation.

8. Mikrofluid-Bauelement (1000) nach einem der vorhergehenden Ansprüche,
wobei die Signalverarbeitungsvorrichtung (105) ausgestaltet ist, um basierend auf dem ersten Signalanteil $(I_U)$ mindestens einen der folgenden äußeren Einflussfaktoren zu ermitteln:

• ein Abreißen einer elektrischen Kontaktierung,
• einen Kurzschluss des Piezoelements (102),
• einen Bruch des Piezoelements (102), z.B. wenn beispielsweise nur noch ein Teil des Piezoelements elektrisch kontaktiert wird, nimmt die Kapazität und damit der Ladestrom ab.

9. Mikrofluid-Bauelement (1000) aufweisend

einen Membranaktor (100) mit einem Membranelement (101) und einem Aktorelement (102) zum Auslenken des Membranelements (101),
eine Signalerzeugungsvorrichtung (103), die ausgestaltet ist, um ein elektrisches Ansteuersignal (104) mit einem zeitveränderlichen Signalverlauf zum Ansteuern des Membranaktors (101) zu generieren, wodurch das Aktorelement (102) das Membranelement (101) betätigt,
eine Signalverarbeitungsvorrichtung (105), die ausgestaltet ist, um im laufenden Betrieb des Mikrofluid-Bauelements (1000) eine durch einen oder mehrere äußere Einflussfaktoren verursachte Beeinflussung des zeitlichen Signalverlaufs des Ansteuersignals (104) festzustellen, und
basierend auf dieser Beeinflussung des zeitlichen Signalverlaufs mindestens einen hierfür ursächlichen äußeren Einflussfaktor zu identifizieren und/oder zu klassifizieren,
wobei der Membranaktor (100) ein elektrostatisch angetriebener Membranaktor ist, dessen Membranelement (101) eine bewegliche Elektrode bildet, und dessen Aktorelement (102) eine Gegenelektrode bildet, wobei das Aktorelement (102) und das Membranelement (101) kapazitiv zusammenwirken,

wobei das Ansteuersignal (104) einen Ladungsfluss auf der Gegenelektrode bewirkt, wodurch sich das Membranelement (101) relativ zu der Gegenelektrode bewegt, und
wobei der zeitliche Verlauf des Ansteuersignals (104) durch eine Kapazitätsänderung beeinflusst wird, die während der Bewegung des Membranelements (101) relativ zu der Gegenelektrode entsteht,

wobei die Signalverarbeitungsvorrichtung (105) ausgestaltet ist, um zum Bestimmen und/oder Klassifizieren des mindestens einen ursächlichen äußeren Einflussfaktors eine Signalanalyse des zeitlichen Signalverlaufs des Ansteuersignals (104) durchzuführen,

wobei einzelne Signalanteile $(I_U, I_C)$ des Ansteuersignals (104) ermittelt werden, wobei die einzelnen Signalanteile $(I_U, I_C)$ jeweils mit unterschiedlichen äußeren Einflussfaktoren korreliert sind, die den zeitlichen Verlauf des Ansteuersignals (104) unterschiedlich beeinflussen, und
wobei die Signalverarbeitungsvorrichtung (105) ausgestaltet ist, um einen bestimmten Signalanteil $(I_U, I_C)$ einem bestimmten äußeren Einflussfaktor zuzuordnen und hierüber den jeweiligen äußeren Einflussfaktor zu identifizieren und/oder zu klassifizieren.

10. Mikrofluid-Bauelement (1000) nach Anspruch 9,
wobei die Signalverarbeitungsvorrichtung (105) ausgestaltet ist, um mindestens zwei unterschiedliche Signalanteile ($I_U$, $I_C$) des beeinflussten Ansteuersignals (104) voneinander zu unterscheiden, wobei

ein erster Signalanteil ($I_U$) mit einer zeitlichen Änderung der elektrischen Spannung beim Laden bzw. Entladen der Kapazität zwischen dem Membranelement (101) und dem Aktorelement (102) verknüpft ist, und
ein zweiter Signalanteil ($I_C$) mit einer zeitlichen Änderung der Kapazität zwischen dem Membranelement (101) und dem Aktorelement (102) aufgrund der Bewegung des Membranelements (101) verknüpft ist.

11. Mikrofluid-Bauelement (1000) nach Anspruch 10,

wobei sich während der Bewegung des Membranelements (101) in Richtung des Aktorelements (102) die Kapazität zwischen dem Membranelement (101) und dem Aktorelement (102) zeitlich verändert, sodass sich der zweite Signalanteil ($I_C$) ändert, und
wobei die Signalverarbeitungsvorrichtung (105) ausgestaltet ist, um basierend auf dem veränderlichen zweiten Signalanteil ($I_C$) die zeitlich veränderliche Position des Membranelements (101) relativ zu dem Aktorelement (102) zu ermitteln.

12. Mikrofluid-Bauelement (1000) nach Anspruch 11,

wobei die zeitlich veränderliche Position des Membranelements (101) abhängig ist von einem auf das Membranelement (101) wirkenden Druck, und
wobei die Signalverarbeitungsvorrichtung (105) ausgestaltet ist, um basierend auf dem zweiten Signalanteil ($I_C$) den auf das Membranelement (101) wirkenden Druck zu bestimmen und als den äußeren Einflussfaktor zu identifizieren.

13. Mikrofluid-Bauelement (1000) nach Anspruch 12,

wobei der Signalverarbeitungsvorrichtung (105) der zeitliche Signalverlauf des zweiten Signalanteils ($I_C$) ohne äußeren Einflussfaktor bekannt ist, und
wobei die Signalverarbeitungsvorrichtung (105) ausgestaltet ist, um eine durch den Druck bedingte Abweichung des zeitlichen Signalverlaufs des zweiten Signalanteils ($I_C$) gegenüber dem bekannten zeitlichen Verlauf des zweiten Signalanteils ($I_C$) festzustellen und basierend auf dieser Abweichung den auf das Membranelement (101) wirkenden Druck zu bestimmen und als den äußeren Einflussfaktor zu identifizieren.

14. Mikrofluid-Bauelement (1000) nach einem der vorhergehenden Ansprüche,

wobei die Signalverarbeitungsvorrichtung (105) einen Speicher aufweist, in dem zu einem oder mehreren der einzelnen Signalanteile ($I_U$, $I_C$, $I_{ce}$, $I_p$) jeweils ein mathematisches Modell mit zugehörigem Amplitudenverlauf und/oder zugehöriger Zeitkonstante des jeweiligen Signalanteils hinterlegt ist, und
wobei die Signalverarbeitungsvorrichtung (105) ausgestaltet ist, um das mathematische Modell an den zeitlichen Signalverlauf des beeinflussten Ansteuersignals (104) anzufitten und mit Hilfe des angefitteten mathematischen Modells den jeweiligen ursächlichen äußeren Einflussfaktor zu identifizieren.

15. Mikrofluid-Bauelement(1000) nach einem der Ansprüche 1 bis 13,

wobei die Signalverarbeitungsvorrichtung (105) einen Speicher aufweist, in dem hinterlegt ist, wie ein bestimmter äußerer Einflussfaktor den zeitlichen Signalverlauf des Ansteuersignals (104) beeinflusst, und
wobei die Signalverarbeitungsvorrichtung (105) ausgestaltet ist, um basierend auf dem zeitlichen Signalverlauf des beeinflussten Ansteuersignals (104) den hierfür jeweils ursächlichen äußeren Einflussfaktor anhand der im Speicher hinterlegten Einflussfaktor-Informationen zu identifizieren.

16. Mikrofluid-Bauelement (1000) nach einem der Ansprüche 1 bis 13,

wobei die Signalverarbeitungsvorrichtung (105) ein neuronales Netz aufweist, welches vorab trainiert wurde, indem unterschiedliche äußere Einflussfaktoren erzeugt und deren jeweilige Beeinflussung auf den zeitlichen Verlauf des Ansteuersignals (104) ermittelt wurden,
wobei das neuronale Netz ausgestaltet ist, um basierend auf dem zeitlichen Signalverlauf des beeinflussten Ansteuersignals (104) den mindestens einen hierfür ursächlichen äußeren Einflussfaktor anhand der vorab erstellten Trainingsdaten zu klassifizieren.

17. Mikrofluid-Bauelement (1000) nach einem der vorhergehenden Ansprüche,

wobei das Mikrofluid-Bauelement (1000) eine Mikrofluidpumpe mit einer Pumpkammer aufweist, wobei zumindest eine Membranseite des Membranelements (101) mit einem in der Pumpkammer befindlichen Fluid in Kontakt ist, wobei durch das Betätigen des Membranaktors (100) ein veränderlicher Pumpkammerdruck in der Pumpkammer erzeugt wird,
und wobei die Signalverarbeitungsvorrichtung (105) ausgestaltet ist, um basierend auf dem zeitlichen Signalverlauf des Ansteuersignals (104) den veränderlichen Pumpkammerdruck zu ermitteln und hierüber den äußeren Einflussfaktor zu identifizieren und/oder zu klassifizieren.

18. Mikrofluid-Bauelement (1000) nach einem der vorhergehenden Ansprüche,

wobei das Mikrofluid-Bauelement (1000) ein Mikrofluid-Ventil aufweist, mit dem ein Fluidpfad geöffnet und/oder geschlossen werden kann,
und wobei die Signalverarbeitungsvorrichtung (105) ausgestaltet ist, um basierend auf dem zeitlichen Signalverlauf des Ansteuersignals (104) den äußeren Einflussfaktor zu identifizieren und/oder zu klassifizieren und/oder einen zeitveränderlichen Betriebsparameter des Mikrofluid-Ventils zu ermitteln.

19. Mikrofluid-Bauelement (1000) nach einem der vorhergehenden Ansprüche,

wobei die Signalverarbeitungsvorrichtung (105) ausgestaltet ist, um basierend auf dem zeitlichen Signalverlauf des Ansteuersignals (104) die Art des in dem Mikrofluid-Bauelement (1000) verwendeten Fluids zu ermitteln und/oder eine Unterscheidung des Aggregatzustands des Fluids zwischen gasförmig und flüssig vorzunehmen, und
das ermittelte Fluid und/oder dessen ermittelten Aggregatzustand als den äußeren Einflussfaktor zu identifizieren und/oder zu klassifizieren.

20. Mikrofluid-Bauelement (1000) nach einem der vorhergehenden Ansprüche,
wobei die Signalverarbeitungsvorrichtung (105) ausgestaltet ist, um den zeitlichen Signalverlauf des Ansteuersignals (104) eines Aktuierungs-Zyklusses *(n+1)* des mikrofluidischen Bauelements (1000) mit dem zeitlichen Signalverlauf eines zeitlich vorhergehenden Aktuierungs-Zyklusses (n) zu vergleichen und Abweichungen zwischen den Signalverläufen zu detektieren.

21. Mikrofluid-Bauelement (1000) nach Anspruch 20,
wobei die Signalverarbeitungsvorrichtung (105) ausgestaltet ist, um eine detektierte Abweichung mittels eines optischen und/oder akustischen Signals anzuzeigen.

22. Mikrofluid-Bauelement (1000) nach einem der vorhergehenden Ansprüche,
wobei die Signalverarbeitungsvorrichtung (105) ausgestaltet ist, um während eines Aktuierungs-Zyklusses des mikrofluidischen Bauelements (1000)

einen ersten zeitlichen Abschnitt des Aktuierungs-Zyklusses zu nutzen, um den zeitlichen Signalverlauf des Ansteuersignals (104) zu ermitteln, und
einen restlichen zweiten zeitlichen Abschnitt desselben Aktuierungs-Zyklusses, bis zum Beginn eines darauffolgenden Aktuierungs-Zyklusses, zum Abspeichern und/oder Auswerten des ermittelten Signalverlaufs zu nutzen.

23. Mikrofluid-Bauelement (1000) nach Anspruch 22,
wobei die Signalverarbeitungsvorrichtung (105) ausgestaltet ist, um den ermittelten Signalverlauf in Form von Parametern zu speichern, die jeweils einen zeitlichen Amplitudenverlauf und eine zugehörige Zeitkonstante von mindestens einem Signalanteil ($I_U$, $I_C$, $I_{ce}$, $I_p$) des Ansteuersignals (104) repräsentieren.

24. Mikrofluid-Bauelement (1000) nach Anspruch 22 oder 23,
wobei die Signalverarbeitungsvorrichtung (105) ausgestaltet ist, um eine zeitliche Trendentwicklung des zeitlichen Signalverlaufs über eine Vielzahl von Aktuierungs-Zyklen hinweg zu ermitteln und diese zeitliche Trend-Entwicklung zu verwenden, um den äußeren Einflussfaktor zu ermitteln und/oder einen Zustand des Mikrofluid-Bauelements (1000) zu bewerten.

25. Mikrofluid-Bauelement (1000) nach einem der Ansprüche 22 bis 24,
wobei die Signalverarbeitungsvorrichtung (105) ausgestaltet ist, um den zeitlichen Signalverlauf des Ansteuersignals (104) während zwei Aktuierungs-Zyklen zu erfassen, wobei zwischen diesen beiden Aktuierungs-Zyklen eine Vielzahl weiterer Aktuierungs-Zyklen bestehen, während denen die Signalverarbeitungsvorrichtung (105) keine Daten erfasst.

26. Mikrofluid-Bauelement nach einem der vorhergehenden Ansprüche,
wobei das Mikrofluid-Bauelement ausgestaltet ist, um den äußeren Einflussfaktor rein basierend auf einer Signalanalyse des zeitlichen Signalverlaufs des elektrischen Ansteuersignals (104) festzustellen, ohne Verwendung zusätzlicher Sensorik im Membranelement (101) und/oder im Aktorelement (102).

27. Mikrofluid-Bauelement (1000) nach einem der vorhergehenden Ansprüche,

wobei die Signalverarbeitungsvorrichtung (105) einen Operationsverstärker (109) aufweist, wobei ein invertierender Eingang des Operationsverstärkers (109) mit einem Signalausgang des Membranaktors (100) verbunden ist, und wobei ein nicht-invertierender Eingang des Operationsverstärkers (109) mit demselben Massepotential wie die Signalerzeugungsvorrichtung (103) verbunden ist, sodass ein virtuelles Massepotential am invertierenden Eingang des Operationsverstärkers (109) erzeugt wird, und
wobei die Signalverarbeitungsvorrichtung (105) ferner einen Messwiderstand (115) aufweist, der zwischen den invertierenden Eingang und den Ausgang des Operationsverstärkers (109) geschaltet ist,
wobei das Ansteuersignal (104), das die Signalverarbeitungsvorrichtung (105) verarbeitet, über diesem Messwiderstand (115) abfällt.

28. Verfahren zum Betreiben eines Mikrofluid-Bauelements (1000) mit einem piezoelektrisch angetriebenen Membranaktor (100), der ein Membranelement (101) und ein Aktorelement (102) mit mindestens einem Piezoelement zum Auslenken des Membranelements (101) aufweist, wobei das Verfahren die folgenden Schritte aufweist:

Generieren eines elektrischen Ansteuersignals (104) zum Ansteuern des Membranaktors (100), wodurch das Aktorelement (102) das Membranelement (101) betätigt, wobei das elektrische Ansteuersignal (104) einen zeitveränderlichen Signalverlauf aufweist,
Ermitteln, im laufenden Betrieb des Mikrofluid-Bauelements (1000), eines durch einen oder mehrere äußere Einflussfaktoren beeinflussten zeitlichen Signalverlaufs des Ansteuersignals (104),
Identifizieren und/oder Klassifizieren von mindestens einem äußeren Einflussfaktor basierend auf dem ermittelten beeinflussten zeitlichen Signalverlauf,
wobei das Ansteuersignal (104) ein Verformen des Piezoelements unter Ausnutzung des inversen Piezoeffekts verursacht, wodurch das Piezoelement eine Betätigungskraft auf das Membranelement (101) ausübt,
wobei der zeitliche Signalverlauf des Ansteuersignals (104) durch ein vom Piezoelement ausgehendes Signal beeinflusst wird, das das Piezoelement aufgrund einer Gegenkraft des Membranelements (101) basierend auf dem direkten Piezoeffekt erzeugt,

wobei das Verfahren die folgenden weiteren Schritte aufweist:
Durchführen einer Signalanalyse des zeitlichen Signalverlaufs des Ansteuersignals (104) zum Bestimmen und/oder Klassifizieren des mindestens einen ursächlichen äußeren Einflussfaktors,

wobei einzelne Signalanteile ($I_U$, $I_C$, $I_{ce}$, $I_p$) des Ansteuersignals (104) ermittelt werden, wobei die einzelnen Signalanteile ($I_U$, $I_C$, $I_{ce}$, $I_p$) mit unterschiedlichen äußeren Einflussfaktoren korreliert sind, die den zeitlichen Verlauf des Ansteuersignals (104) unterschiedlich beeinflussen, und
Zuordnen eines bestimmten Signalanteils zu einem bestimmten äußeren Einflussfaktor, um hierüber den jeweiligen äußeren Einflussfaktor zu identifizieren und/oder zu klassifizieren.

29. Verfahren zum Betreiben eines Mikrofluid-Bauelements (1000) mit einem elektrostatisch angetriebenen Membranaktor (100), der ein Membranelement (101) und ein Aktorelement (102) zum Auslenken des Membranelements (101) aufweist, wobei das Membranelement (101) eine bewegliche Elektrode bildet, und das Aktorelement (102) eine Gegenelektrode bildet, wobei das Aktorelement (102) und das Membranelement (101) kapazitiv zusammenwirken,

wobei das Verfahren die folgenden Schritte aufweist:

Generieren eines elektrischen Ansteuersignals (104) zum Ansteuern des Membranaktors (100), wodurch das Aktorelement (102) das Membranelement (101) betätigt, wobei das elektrische Ansteuersignal (104) einen zeitveränderlichen Signalverlauf aufweist,

Ermitteln, im laufenden Betrieb des Mikrofluid-Bauelements (1000), eines durch einen oder mehrere äußere Einflussfaktoren beeinflussten zeitlichen Signalverlaufs des Ansteuersignals (104),

Identifizieren und/oder Klassifizieren von mindestens einem äußeren Einflussfaktor basierend auf dem ermittelten beeinflussten zeitlichen Signalverlauf,

wobei das Ansteuersignal (104) einen Ladungsfluss auf der Gegenelektrode bewirkt, wodurch sich das Membranelement (101) relativ zu der Gegenelektrode bewegt, und

wobei der zeitliche Verlauf des Ansteuersignals (104) durch eine Kapazitätsänderung beeinflusst wird, die während der Bewegung des Membranelements (101) relativ zu der Gegenelektrode entsteht,

wobei das Verfahren die folgenden weiteren Schritte aufweist:

Durchführen einer Signalanalyse des zeitlichen Signalverlaufs des Ansteuersignals (104) zum Bestimmen und/oder Klassifizieren des mindestens einen ursächlichen äußeren Einflussfaktors,

wobei einzelne Signalanteile ($I_U$, $I_C$) des Ansteuersignals (104) ermittelt werden, wobei die einzelnen Signalanteile ($I_U$, $I_C$) jeweils mit unterschiedlichen äußeren Einflussfaktoren korreliert sind, die den zeitlichen Verlauf des Ansteuersignals (104) unterschiedlich beeinflussen, und

Zuordnen eines bestimmten Signalanteils ($I_U$, $I_C$) zu einem bestimmten äußeren Einflussfaktor, um hierüber den jeweiligen äußeren Einflussfaktor zu identifizieren und/oder zu klassifizieren.

30. Computerlesbares digitales Speichermedium mit einem darauf gespeicherten Programmcode zur Durchführung des Verfahrens nach Anspruch 28 oder 29, wenn das Programm auf einem Computer abläuft.

**Claims**

1. Microfluidic component (1000), comprising

a membrane actuator (100) with a membrane element (101) and an actuator element (102) for deflecting the membrane element (101),

a signal generation device (103) configured to generate an electric control signal (104) having a time-variant signal curve for controlling the membrane actuator (101), by which the actuator element (102) actuates the membrane element (101),

a signal processing device (105) configured to determine, during operation of the microfluidic component (1000), an influence on the temporal signal curve of the control signal (104), caused by one or more external influencing factors, and

to identify and/or classify, based on said influence on the temporal signal curve, at least one causal external influencing factor,

wherein the membrane actuator (100) is a piezoelectrically driven membrane actuator whose actuator element (102) comprises at least one piezo element, and

wherein the control signal (104) causes deformation of the piezo element by using the inverse piezo effect, by which the piezo element applies an actuation force onto the membrane element (101), and

wherein the temporal signal curve of the control signal (104) is influenced by a signal that originates from the piezo element, which the piezo element generates due to a counter force of the membrane element (101) on the basis of the direct piezo effect,

wherein the signal processing device (105) is configured to perform a signal analysis of the temporal signal curve of the control signal (104) for determining and/or classifying the at least one causal external influencing factor,

wherein individual signal portions ($I_U$, $I_C$, $I_{ce}$, $I_p$) of the control signal (104) are determined, wherein the individual portions ($I_U$, $I_C$, $I_{ce}$, $I_p$) are correlated with different external influencing factors that differently influence the temporal progress of the control signal (104), and

wherein the signal processing device (105) is configured to assign a specific signal portion to a specific external influencing factor and to use this to identify and/or classify the respective external influencing factor.

2. Microfluidic component (1000) according to claim 1,

   wherein the signal processing device (105) is configured to
   differentiate a first temporal signal curve of the control signal (104) corresponding to an actuation of the membrane actuator (100) without external influence
   from a different second temporal signal curve of the control signal (104) corresponding to an actuation of the membrane actuator (100) with at least one prevailing external influencing factor.

3. Microfluidic component (1000) according to claim 1 or 2,

   wherein the signal processing device (105) is configured to
   identify and/or classify a hydraulic, pneumatic, or mechanical force acting on at least one membrane side of the membrane element (101) as the causal external influencing factor for the effect on the temporal signal curve.

4. Microfluidic component (1000) according to any of the preceding claims,
   wherein the signal processing device (105) is configured to differentiate at least four different signal portions ($I_U$, $I_C$, $I_{ce}$, $I_p$) of the influenced control signal (104) from each other, wherein

   a first signal portion ($I_U$,) is linked to a temporal change of the electric voltage when charging or discharging the capacitance between the membrane element (101) and the piezo element (102),
   a second signal portion ($I_p$) is linked to a temporal change of a pressure acting onto the membrane element (101),
   a third signal portion ($I_C$) is linked to a temporal change of the electrical capacitance caused by large signal effects of the piezo element (102), and
   a fourth signal portion ($I_{ce}$) is linked to a temporal change of the piezo coefficient $d31$ that changes due to large signal effects in the piezo element (102).

5. Microfluidic component (1000) according to any of the preceding claims,

   wherein each of the individual signal portions ($I_U$, $I_C$, $I_{ce}$, $I_p$) strives to achieve a state of balance through an individual temporal compensation process, wherein, during the respective temporal compensation process, each signal portion comprises an individual temporal amplitude curve ($I_{U0}$, $I_{p0}$, $I_{c0}$, $I_{ce0}$) and an individual time constant ($\tau_a$, $\tau_h$, $\tau_d = \tau_c = \tau_{piezo}$) within which the temporal compensation process occurs, and
   wherein the signal processing device (105) is configured to determine the external influencing factor on the basis of the respective amplitude curve ($I_{U0}$, $I_{p0}$, $I_{c0}$, $I_{ce0}$) and/or the respective time constant ($\tau_a$, $\tau_h$, $\tau_d = \tau_c = \tau_{piezo}$) from one or more of the individual signal portions ($I_U$, $I_C$, $I_{ce}$, $I_p$).

6. Microfluidic component (1000) according to any of the preceding claims,
   wherein the signal processing device (105) is configured to determine at least one of the following external influencing factors on the basis of the second signal portion ($I_p$):

   ○ a change of the counter pressure,
   ○ a change of the preliminary pressure,
   ○ a closure of outlet lines, such as of catheters,
   ○ a presence of bubbles in the pump chamber,
   ○ the size of bubbles in the pump,
   ○ an arrival of bubbles at the pump chamber via the inlet line,
   ○ bubbles moving away from the pump chamber via the outlet line,
   ○ a change of the pump chamber resistance,
   ○ a change of the stroke volume by particles being caught,
   ○ a change of the ambient parameters, such as a pressure change above the membrane element, a pressure change at the inlet of a valve, a pressure change at the outlet of a valve, a change of temperature,
   ○ a state detection of a valve, i.e. whether the valve is open or closed,
   ○ a defect of a valve, such as breakage of a valve,
   ○ a deterioration of valve sealing properties due to particles,
   ○ a deterioration of valve sealing properties by sedimentation or agglomeration, e.g. precipitation of solids, denaturation of proteins,
   ○ an occurrence of capillary sticking when a meniscus blocks a valve,
   ○ an occurrence of van der Waals sticking if corresponding molecules are deposited between the valve seat and the support web,

∘ swelling or a change in elastic properties of sealing elements,

∘ a change in an adhesive bond between the actuator element and the membrane element,

∘ since the inertia of liquids in the periphery couples into the micropump, the micropump (in the case of incompressible liquid as the pump medium) can recognize whether long, short, soft, or hard fluid lines are connected,

∘ a change in the viscosity of the medium, which makes it possible, for example, to check whether the entire medication has been rinsed out and replaced with saline solution during rinsing processes.

7. Microfluidic component (1000) according to any of the preceding claims, wherein the signal processing device (105) is configured to determine at least one of the following external influencing factors on the basis of the third and/or fourth signal portions ($I_C$, $I_{ce}$):

∘ mechanical fatigue of the piezo element (102), such as breakage or the socalled sub-critical crack growth in a very long continuous operation,

∘ electric fatigue of the piezo element (102), such as loss of the polarization.

8. Microfluidic component (1000) according any of the preceding claims, wherein the signal processing device (105) is configured to determine at least one of the following external influencing factors on the basis of the first signal portion ($I_U$):

• tearing of an electrical contact,

• short circuit of the piezo element (102),

• breakage of the piezo element (102), e.g. when only part of the piezoceramic is electrically contacted, the capacitance and therefore the charge current decreases.

9. Microfluidic component (1000), comprising

a membrane actuator (100) with a membrane element (101) and an actuator element (102) for deflecting the membrane element (101),

a signal generation device (103) configured to generate an electric control signal (104) having a time-variant signal curve for controlling the membrane actuator (101), by which the actuator element (102) actuates the membrane element (101),

a signal processing device (105) configured to determine, during operation of the microfluidic component (1000), an influence on the temporal signal curve of the control signal (104), caused by one or more external influencing factors, and

to identify and/or classify, based on said influence on the temporal signal curve, at least one causal external influencing factor,

wherein the membrane actuator (100) is an electrostatically driven membrane actuator whose membrane element (101) forms a moveable electrode and whose actuator element (102) forms a counter electrode, wherein the actuator element (102) and the membrane element (101) cooperate capacitively,

wherein the control signal (104) causes a charge flow on the counter electrode, by which the membrane element (101) moves relative to the counter electrode, and

wherein the temporal progress of the control signal (104) is influenced by a change of capacitance created during the movement of the membrane element (101) relative to the counter electrode.

wherein the signal processing device (105) is configured to perform signal analysis of the temporal signal curve of the control signal (104) for determining and/or classifying the at least one causal external influencing factor,

wherein individual signal portions ($I_U$, $I_C$) of the control signal (104) are determined, wherein the individual signal portions ($I_U$, $I_C$) are each correlated with different external influencing factors that differently influence the temporal progress of the control signal (104), and

wherein the signal processing device (105) is configured to assign a specific signal portion ($I_U$, $I_C$) to a specific external influencing factor and to use this to identify and/or classify the respective external influencing factor.

10. Microfluidic component (1000) according to claim 9, wherein the signal processing device (105) is configured to differentiate at least two different signal portions ($I_U$, $I_C$) of the influenced control signal (104) from each other, wherein

a first signal portion ($I_U$) is linked to a temporal change of the electric voltage when charging or discharging the capacitance between the membrane element (101) and the actual element (102), and
a second signal portion ($I_C$) is linked to a temporal change of the capacitance between the membrane element (101) and the actuator element (102) due to the movement of the membrane element (101).

11. Microfluidic component (1000) according to claim 10,

wherein, during movement of the membrane (101) towards the actuator element (102), the capacitance between the membrane element (101) and the actuator (102) temporally changes so that the second signal portion ($I_C$) changes, and
wherein the signal processing device (105) is configured to determine the temporally variable position of the membrane element (101) relative to the actuator element (102) on the basis of the variable second signal portion ($I_C$).

12. Microfluidic component (1000) according to claim 11,

wherein the temporally variable position of the membrane element (101) depends on a pressure that acts on the membrane element (101), and
wherein the signal processing device (105) is configured, on the basis of the second signal portion ($I_C$), to determine the pressure acting on the membrane element (101) and to identify the same as the external influencing factor.

13. Microfluidic component (1000) according to claim 12,

wherein the signal processing device (105) knows the temporal signal curve of the second signal portion ($I_C$) without any external influencing factor, and
wherein the signal processing device (105) is configured to detect a deviation, caused by the pressure, of the temporal signal curve of the second signal portion ($I_C$) compared to the known temporal progress of the second signal portion ($I_C$) and, on the basis of this deviation, to determine the pressure acting on the membrane element (101) and to identify the same as the external influencing factor.

14. Microfluidic component (1000) according to any of the preceding claims,

wherein the signal processing device (105) comprises a storage in which a mathematical model with an associated amplitude curve and/or an associated time constant of the respective signal portion is stored for each of the one or more of the individual signal portions ($I_U$, $I_C$, $I_{ce}$, $I_p$), and
wherein the signal processing device (105) is configured to fit the mathematical model to the temporal signal curve of the influenced control signal (104) and to identify, with the help of the fitted mathematical model, the respective causal external influencing factor.

15. Microfluidic component (1000) according to any of claims 1 to 13,

wherein the signal processing device (105) comprises a storage that stores how a certain external influencing factor influences the temporal signal curve of the control signal (104), and
wherein the signal processing device (105) is configured, on the basis of the temporal signal curve of the influence control signal (104), to identify the respectively causal external influencing factor on the basis of the influencing factor information stored in the storage.

16. Microfluidic component (1000) according to any of claims 1 to 13,

wherein the signal processing device (105) comprises a neural network trained in advance by generating different external influencing factors and determining their respective effect on the temporal progress of the control signal (104),
wherein the neural network is configured, on the basis of the temporal signal curve of the influenced control signal (104), to classify the at least one causal external influencing factor on the basis of the previously created training data.

**17.** Microfluidic component (1000) according to any of the preceding claims,

wherein the microfluidic component (1000) comprises a microfluidic pump with a pump chamber, wherein at least one membrane side of the membrane element (101) is in contact with a fluid located in the pump chamber, wherein a variable pump chamber pressure is generated in the pump chamber by actuating the membrane actuator (100),
and wherein the signal processing device (105) is configured, on the basis of the temporal signal curve of the control signal (104), to determine the variable pump chamber pressure and to use this to identify and/or classify the external influencing factor.

**18.** Microfluidic component (1000) according to any of the preceding claims,

wherein the microfluidic component (1000) comprises a microfluidic valve that enables opening and/or closing a fluid path, and
wherein the signal processing device (105) is configured, on the basis of the temporal signal curve of the control signal (104), to identify and/or classify the external influencing factor and/or to determine a time-variant operation parameter of the micro fluid valve.

**19.** Microfluidic component (1000) according to any of the preceding claims,

wherein the signal processing device (105) is configured, on the basis of the temporal signal curve of the control signal (104), to determine the type of the fluid used in the microfluidic component (1000) and to carry out a differentiation of the aggregate state of the fluid between gaseous and liquid, and
identify and/or classify the determined fluid and/or its determined aggregate state as the external influencing factor.

**20.** Microfluidic component (1000) according to any of the preceding claims,
wherein the signal processing device (105) is configured to compare the temporal signal curve of the control signal (104) of an actuation cycle (n+1) of the microfluidic component (1000) with the temporal signal curve of a temporal preceding actuation cycle (n) and to detect deviations between the signal curves.

**21.** Microfluidic component (1000) according to claim 20,
wherein the signal processing device (105) is configured to indicate a detected deviation by means of an optical and/or acoustic signal.

**22.** Microfluidic component (1000) according to any of the preceding claims,
wherein the signal processing device (105) is configured, during an actuation cycle of the microfluidic component (1000),

to use a first temporal portion of the actuation cycle to determine the temporal signal curve of the control signal (104), and
to use a remaining second temporal portion of the same actuation cycle, up to the start of a subsequent actuation cycle, for storing and/or evaluating the determined signal curve.

**23.** Microfluidic component (1000) according to claim 22,
wherein the signal processing device (105) is configured to store the determined signal curve in the form of parameters, each representing a temporal amplitude curve and an associated time constant of at least one signal portion ($I_U$, $I_C$, $I_{ce}$, $I_p$) of the control signal (104).

**24.** Microfluidic component (1000) according to claim 22 or 23,
wherein the signal processing device (105) is configured to determine a temporal trend development of the temporal signal curve across a multitude of actuation cycles and to use this trend development to determine the external influencing factor and/or to assess a state of the microfluidic component (1000).

**25.** Microfluidic component (1000) according to any of claims 22 to 24,
wherein the signal processing device (105) is configured to capture the temporal signal curve of the control signal (104) during two actuation cycles, wherein there is a multitude of further actuation cycles between these two actuation cycles, during which the signal processing device (105) does not capture any data.

26. Microfluidic component (1000) according to any of the preceding claims,
wherein the microfluidic component is configured to detect the external influencing factor purely on the basis of a signal analysis of the temporal signal curve of the electric control signal (104) without using additional sensor systems in the membrane element (101) and/or in the actuator element (102).

27. Microfluidic component (1000) according to any of the preceding claims,

wherein the signal processing device (105) comprises an operational amplifier (109), wherein an inverting input of the operational amplifier (109) is connected to a signal output of the membrane actuator (100), and wherein a non-inverting input of the operational amplifier (109) is connected to the same ground potential as the signal generation device (103) so that a virtual ground potential is generated at the inverting input of the operational amplifier (109), and
wherein the signal processing device (105) further comprises a measuring resistor (110) connected between the inverting input and the output of the operational amplifier (109),
wherein the control signal (104) processing the signal processing device (105) drops across this measuring resistance (110).

28. Method for operating a microfluidic component (1000) with a piezoelectrically driven membrane actuator (100) comprising a membrane element (101) and an actuator element (102) having at least one piezo element for deflecting the membrane element (101), the method comprising:

generating an electric control signal (104) for controlling the membrane actuator (100), by which the actuator element (102) actuates the membrane element (101), wherein the electric control signal (104) comprises a time-variant signal curve,
determining, during operation of the microfluidic component (1000), a temporal signal curve of the control signal (104) influenced by one or more external influencing factors, and
identifying and/or classifying at least one external influencing factor on the basis of the determined influenced temporal signal curve,
wherein the control signal (104) causes deformation of the piezo element by using the inverse piezo effect, by which the piezo element applies an actuation force onto the membrane element (101), and
wherein the temporal signal curve of the control signal (104) is influenced by a signal that originates from the piezo element, which the piezo element generates due to a counter force of the membrane element (101) on the basis of the direct piezo effect,
wherein the method further comprises:
performing a signal analysis of the temporal signal curve of the control signal (104) for determining and/or classifying the at least one causal external influencing factor,

wherein individual signal portions ($I_U$, $I_C$, $I_{ce}$, $I_p$) of the control signal (104) are determined, wherein the individual portions ($I_U$, $I_C$, $I_{ce}$, $I_p$) are correlated with different external influencing factors that differently influence the temporal progress of the control signal (104), and
assigning a specific signal portion to a specific external influencing factor and to use this to identify and/or classify the respective external influencing factor.

29. Method for operating a microfluidic component (1000) with an electrostatically driven membrane actuator (100) comprising a membrane element (101) and an actuator element (102) for deflecting the membrane element (101), wherein the membrane element (101) forms a moveable electrode and the actuator element (102) forms a counter electrode, wherein the actuator element (102) and the membrane element (101) cooperate capacitively, the method comprising:

generating an electric control signal (104) for controlling the membrane actuator (100), by which the actuator element (102) actuates the membrane element (101), wherein the electric control signal (104) comprises a time-variant signal curve,
determining, during operation of the microfluidic component (1000), a temporal signal curve of the control signal (104) influenced by one or more external influencing factors, and
identifying and/or classifying at least one external influencing factor on the basis of the determined influenced temporal signal curve,

wherein the control signal (104) causes a charge flow on the counter electrode, by which the membrane element (101) moves relative to the counter electrode, and
wherein the temporal progress of the control signal (104) is influenced by a change of capacitance created during the movement of the membrane element (101) relative to the counter electrode.

wherein the method further comprises:
performing a signal analysis of the temporal signal curve of the control signal (104) for determining and/or classifying the at least one causal external influencing factor,

wherein individual signal portions ($I_U$, $I_C$) of the control signal (104) are determined, wherein the individual signal portions ($I_U$, $I_C$) are correlated with different external influencing factors that differently influence the temporal progress of the control signal (104), and
assigning a specific signal portion ($I_U$, $I_C$) to a specific external influencing factor and to use this to identify and/or classify the respective external influencing factor.

30. Computer-readable digital storage medium having stored thereon a problem code for performing the method according to claim 28 or 29 when the program runs on a computer.


**Revendications**

1. Composant microfluidique (1000) comprenant

un actionneur à membrane (100) comprenant un élément de membrane (101) et un élément actionneur (102) pour défléchir l'élément de membrane (101),
un dispositif de génération de signaux (103), configuré pour générer un signal de commande électrique (104) présentant une évolution temporelle variable pour commander l'actionneur à membrane (101), de sorte que l'élément actionneur (102) actionne l'élément de membrane (101),
un dispositif de traitement du signal (105), configuré pour détecter, pendant le fonctionnement du composant microfluidique (1000), une influence sur l'évolution temporelle du signal de commande (104), causée par un ou plusieurs facteurs d'influence externes, et
identifier et/ou classifier, sur la base de cette influence sur l'évolution temporelle du signal, au moins un facteur d'influence externe à l'origine de celle-ci,
l'actionneur à membrane (100) étant un actionneur à membrane à entraînement piézoélectrique, dont l'élément actionneur (102) comprend au moins un élément piézoélectrique, et
le signal de commande (104) provoquant une déformation de l'élément piézoélectrique par exploitation de l'effet piézoélectrique inverse, de sorte que l'élément piézoélectrique exerce une force d'actionnement sur l'élément de membrane (101),
l'évolution temporelle du signal de commande (104) étant influencée par un signal émanant de l'élément piézoélectrique, que l'élément piézoélectrique génère en raison d'une force de réaction de l'élément de membrane (101) sur la base de l'effet piézoélectrique direct,
le dispositif de traitement du signal (105) étant configuré pour effectuer, afin de déterminer et/ou de classifier ledit au moins un facteur d'influence externe causal, une analyse de signal de l'évolution temporelle du signal de commande (104),

des composantes individuelles de signal ($I_U$, $I_C$, $I_{ce}$, $I_p$) du signal de commande (104) étant déterminées, les composantes individuelles de signal ($I_U$, $I_C$, $I_{ce}$, $I_p$) étant corrélées à différents facteurs d'influence externes, qui influencent différemment l'évolution temporelle du signal de commande (104), et
le dispositif de traitement du signal (105) étant configuré pour attribuer une composante de signal déterminée à un facteur d'influence externe déterminé et, par ce biais, identifier et/ou classifier le facteur d'influence externe correspondant.

2. Composant microfluidique (1000) selon la revendication 1,
dans lequel le dispositif de traitement du signal (105) est configuré pour

distinguer une première évolution temporelle du signal de commande (104), correspondant à un actionnement de l'actionneur à membrane (100) sans influence externe,
d'une deuxième évolution temporelle différente du signal de commande (104), correspondant à un actionnement de l'actionneur à membrane (100) sous l'effet d'au moins un facteur d'influence externe prédominant.

**3.** Composant microfluidique (1000) selon la revendication 1 ou 2,
dans lequel le dispositif de traitement du signal (105) est configuré pour
identifier et/ou classifier, comme facteur d'influence externe causal de l'influence sur l'évolution temporelle du signal,
une force hydraulique, pneumatique ou mécanique agissant sur au moins une face de l'élément de membrane (101).

**4.** Composant microfluidique (1000) selon l'une quelconque des revendications précédentes,
dans lequel le dispositif de traitement du signal (105) est configuré pour distinguer les unes des autres au moins quatre
composantes de signal différentes ($I_U$, $I_C$, $I_{ce}$, $I_p$) du signal de commande influencé (104), lesdites composantes étant
telles qu'

une première composante de signal ($I_U$) est liée à une variation temporelle de la tension électrique lors du
chargement ou du déchargement de la capacité entre l'élément de membrane (101) et l'élément piézoélectrique
(102),
une deuxième composante de signal ($I_P$) est liée à une variation temporelle d'une pression agissant sur l'élément
de membrane (101),
une troisième composante de signal ($I_C$) est liée à une variation temporelle de la capacité électrique provoquée
par des effets de grand signal de l'élément piézoélectrique (102), et
une quatrième composante de signal ($I_{ce}$) est liée à une variation temporelle du coefficient piézoélectrique $d31$,
lequel se modifie en raison d'effets de grand signal dans l'élément piézoélectrique (102).

**5.** Composant microfluidique selon l'une quelconque des revendications précédentes,

dans lequel chacune des composantes individuelles de signal ($I_U$, $I_C$, $I_{ce}$, $I_p$) tend vers un état d'équilibre par un
processus d'équilibrage temporel individuel, chaque composante de signal présentant, pendant le processus
d'équilibrage temporel correspondant, un profil d'amplitude temporelle individuel ($I_{U0}$, $I_{p0}$, $I_{c0}$, $I_{ce0}$) ainsi qu'une
constante de temps individuelle ($\tau_a$, $\tau_h$, $\tau_d = \tau_c = \tau_{piezo}$), le processus d'équilibrage temporel se déroulant selon
ladite constante de temps, et
le dispositif de traitement du signal (105) étant configuré pour déterminer le facteur d'influence externe sur la base
du profil d'amplitude correspondant ($I_{U0}$, $I_{p0}$, $I_{c0}$, $I_{ce0}$) et/ou de la constante de temps correspondante ($\tau_a$, $\tau_h$, $\tau_d = \tau_c$
$= \tau_{piezo}$) d'une ou de plusieurs des composantes individuelles de signal ($I_U$, $I_C$, $I_{ce}$, $I_p$).

**6.** Composant microfluidique (1000) selon l'une quelconque des revendications précédentes,
dans lequel le dispositif de traitement du signal (105) est configuré pour déterminer, sur la base de la deuxième
composante de signal ($I_p$), au moins l'un des facteurs d'influence externes suivants :

   ◦ une variation de la contre-pression,
   ◦ une variation de la pression amont,
   ◦ une obturation de conduites de sortie, telles que des cathéters,
   ◦ la présence de bulles dans la chambre de pompage,
   ◦ la taille des bulles dans la chambre de pompage,
   ◦ l'arrivée de bulles dans la chambre de pompage via la conduite d'entrée,
   ◦ l'élimination des bulles de la chambre de pompage via la conduite de sortie,
   ◦ une variation de la résistance de la chambre de pompage,
   ◦ une modification du volume de course due à des particules coincées,
   ◦ une modification de paramètres environnementaux, telle qu'une variation de pression au-dessus de l'élément
   de membrane, une variation de pression à l'entrée d'une valve, une variation de pression à la sortie d'une valve,
   une variation de température
   ◦ une détection d'état d'une valve, c'est-à-dire si la valve est ouverte ou fermée,
   ◦ un défaut d'une valve, par exemple une rupture de valve,
   ◦ une détérioration des propriétés d'étanchéité d'une valve due à des particules,
   ◦ une détérioration des propriétés d'étanchéité d'une valve due à des dépôts ou à une agglomération, tels que des
   précipitations de solides ou une dénaturation de protéines,
   ◦ l'apparition d'un phénomène de « capillary sticking » lorsqu'un ménisque bloque une valve,
   ◦ l'apparition d'un phénomène d'adhérence de van der Waals lorsque des molécules correspondantes se
   déposent entre le siège de valve et la nervure d'appui,
   ◦ un gonflement ou une modification des propriétés élastiques d'éléments d'étanchéité,
   ◦ **une modification** de la liaison adhésive entre l'élément actionneur et l'élément de membrane,
   ◦ en raison du couplage des inerties de liquides situés à la périphérie à la micropompe, la micropompe peut détecter, lorsque le fluide de pompage est incompressible, si des conduites de fluide longues, courtes, souples ou rigides sont raccordées,

∘ une modification de la viscosité du fluide, ce qui permet, par exemple lors d'opérations de rinçage, de vérifier si la totalité du médicament a été évacuée et remplacée par une solution saline.

**7.** Composant microfluidique (1000) selon l'une quelconque des revendications précédentes,
le dispositif de traitement du signal (105) étant configuré pour déterminer, sur la base de la troisième et/ou de la quatrième composante de signal ($I_c$, $I_{ce}$), au moins l'un des facteurs d'influence externes suivants :

∘ une fatigue mécanique de l'élément piézoélectrique (102), telle qu'une rupture ou une croissance sous-critique de fissure lors d'un fonctionnement continu de très longue durée,
∘ une fatigue électrique de l'élément piézoélectrique (102), telle qu'une perte de polarisation.

**8.** Composant microfluidique (1000) selon l'une quelconque des revendications précédentes,
le dispositif de traitement du signal (105) étant configuré pour déterminer, sur la base de la première composante de signal ($I_U$), au moins l'un des facteurs d'influence externes suivants :

• une rupture d'une connexion électrique,
• un court-circuit de l'élément piézoélectrique (102),
• une rupture de l'élément piézoélectrique (102), par exemple lorsque seule une partie de l'élément piézoélectrique est encore reliée électriquement, la capacité et, par conséquent, le courant de charge diminuent.

**9.** Composant microfluidique (1000) comprenant

un actionneur à membrane (100) comprenant un élément de membrane (101) et un élément actionneur (102) pour défléchir l'élément de membrane (101),
un dispositif de génération de signaux (103), configuré pour générer un signal de commande électrique (104) présentant une évolution temporelle variable pour commander l'actionneur à membrane (101), de sorte que l'élément actionneur (102) actionne l'élément de membrane (101),
un dispositif de traitement du signal (105), configuré pour détecter, pendant le fonctionnement du composant microfluidique (1000), une influence sur l'évolution temporelle du signal de commande (104), causée par un ou plusieurs facteurs d'influence externes, et
identifier et/ou classifier, sur la base de cette influence sur l'évolution temporelle du signal, au moins un facteur d'influence externe à l'origine de celle-ci,
l'actionneur à membrane (100) étant un actionneur à membrane à entraînement électrostatique, dont l'élément de membrane (101) forme une électrode mobile et dont l'élément actionneur (102) forme une contre-électrode, l'élément actionneur (102) et l'élément de membrane (101) coopérant de manière capacitive,

le signal de commande (104) provoquant un flux de charge sur la contre-électrode, de sorte que l'élément de membrane (101) se déplace par rapport à la contre-électrode, et
l'évolution temporelle du signal de commande (104) étant influencée par une variation de capacité qui se produit pendant le déplacement de l'élément de membrane (101) par rapport à la contre-électrode,

le dispositif de traitement du signal (105) étant configuré pour effectuer, afin de déterminer et/ou de classifier ledit au moins un facteur d'influence externe causal, une analyse de signal de l'évolution temporelle du signal de commande (104),

des composantes individuelles de signal ($I_U$, $I_C$) du signal de commande (104) étant déterminées, les composantes individuelles de signal ($I_U$, $I_C$) étant chacune corrélées à différents facteurs d'influence externes qui influencent différemment l'évolution temporelle du signal de commande (104), et
le dispositif de traitement du signal (105) étant configuré pour attribuer une composante de signal déterminée ($I_U$, $I_C$) à un facteur d'influence externe déterminé et, par ce biais, identifier et/ou classifier le facteur d'influence externe correspondant.

**10.** Composant microfluidique (1000) selon la revendication 9,
le dispositif de traitement du signal (105) étant configuré pour distinguer au moins deux composantes de signal différentes ($I_U$, $I_C$) du signal de commande influencé (104), lesdites composantes étant telles qu'

une première composante de signal ($I_U$) est liée à une variation temporelle de la tension électrique lors de la charge ou de la décharge de la capacité entre l'élément de membrane (101) et l'élément actionneur (102), et une deuxième composante de signal ($I_C$) est liée à une variation temporelle de la capacité entre l'élément de membrane (101) et l'élément actionneur (102) due au mouvement de l'élément de membrane (101).

11. Composant microfluidique (1000) selon la revendication 10,

dans lequel, pendant le déplacement de l'élément de membrane (101) en direction de l'élément actionneur (102), la capacité entre l'élément de membrane (101) et l'élément actionneur (102) varie dans le temps, de sorte que la deuxième composante de signal ($I_C$) varie, et
le dispositif de traitement du signal (105) étant configuré pour déterminer, sur la base de la deuxième composante de signal variable ($I_C$), la position de l'élément de membrane (101), variable dans le temps, par rapport à l'élément actionneur (102).

12. Composant microfluidique (1000) selon la revendication 11,

dans lequel la position de l'élément de membrane (101), variable dans le temps, dépend d'une pression agissant sur l'élément de membrane (101), et
le dispositif de traitement du signal (105) étant configuré pour déterminer, sur la base de la deuxième composante de signal ($I_C$), la pression agissant sur l'élément de membrane (101) et l'identifier comme facteur d'influence externe.

13. Composant microfluidique (1000) selon la revendication 12,

dans lequel l'évolution temporelle de la deuxième composante de signal ($I_C$) en l'absence de facteur d'influence externe est connue du dispositif de traitement du signal (105), et
le dispositif de traitement du signal (105) étant configuré pour détecter un écart, dû à la pression, de l'évolution temporelle de la deuxième composante de signal ($I_C$) par rapport à l'évolution temporelle connue de la deuxième composante de signal ($I_C$) et, sur la base de cet écart, déterminer la pression agissant sur l'élément de membrane (101) et l'identifier comme facteur d'influence externe.

14. Composant microfluidique (1000) selon l'une quelconque des revendications précédentes,

dans lequel le dispositif de traitement du signal (105) comprend une mémoire dans laquelle, pour une ou plusieurs des composantes individuelles de signal ($I_U$, $I_C$, $I_{ce}$, $I_p$), est stocké, dans chaque cas, un modèle mathématique avec le profil d'amplitude associé et/ou la constante de temps associée de la composante de signal respective, et
le dispositif de traitement du signal (105) étant configuré pour ajuster le modèle mathématique à l'évolution temporelle du signal de commande influencé (104) et, à l'aide du modèle mathématique ajusté, identifier le facteur d'influence externe causal respectif.

15. Composant microfluidique (1000) selon l'une quelconque des revendications 1 à 13,

dans lequel le dispositif de traitement du signal (105) comprend une mémoire dans laquelle est enregistrée la manière dont un facteur d'influence externe déterminé influence l'évolution temporelle du signal de commande (104), et
le dispositif de traitement du signal (105) étant configuré pour identifier, sur la base de l'évolution temporelle du signal de commande influencé (104), le facteur d'influence externe causal correspondant à l'aide des informations relatives aux facteurs d'influence stockées dans la mémoire.

16. Composant microfluidique (1000) selon l'une quelconque des revendications 1 à 13,

dans lequel le dispositif de traitement du signal (105) comprend un réseau neuronal qui a été préalablement entraîné par génération de différents facteurs d'influence externes et par détermination de leur influence respective sur l'évolution temporelle du signal de commande (104),
le réseau neuronal étant configuré pour classifier, sur la base de l'évolution temporelle du signal de commande influencé (104), ledit au moins un facteur d'influence externe causal à l'aide des données d'entraînement établies au préalable.

**17.** Composant microfluidique (1000) selon l'une quelconque des revendications précédentes,

dans lequel le composant microfluidique (1000) comprend une pompe microfluidique avec une chambre de pompage, au moins une face de l'élément de membrane (101) étant en contact avec un fluide situé dans la chambre de pompage, l'actionnement de l'actionneur à membrane (100) générant une pression variable dans la chambre de pompage,
et le dispositif de traitement du signal (105) étant configuré pour déterminer, sur la base de l'évolution temporelle du signal de commande (104), la pression variable dans la chambre de pompage et, par ce biais, identifier et/ou classifier le facteur d'influence externe.

**18.** Composant microfluidique (1000) selon l'une quelconque des revendications précédentes,

dans lequel le composant microfluidique (1000) comprend une valve microfluidique au moyen de laquelle un trajet de fluide peut être ouvert et/ou fermé,
et le dispositif de traitement du signal (105) étant configuré pour, sur la base de l'évolution temporelle du signal de commande (104), identifier et/ou classifier le facteur d'influence externe et/ou déterminer un paramètre de fonctionnement de la valve microfluidique, variable dans le temps.

**19.** Composant microfluidique (1000) selon l'une quelconque des revendications précédentes,

dans lequel le dispositif de traitement du signal (105) est configuré pour, sur la base de l'évolution temporelle du signal de commande (104), déterminer le type de fluide utilisé dans le composant microfluidique (1000) et/ou distinguer l'état physique du fluide, à savoir gazeux ou liquide, et
identifier et/ou classifier le fluide déterminé et/ou son état physique déterminé en tant que facteur d'influence externe.

**20.** Composant microfluidique (1000) selon l'une quelconque des revendications précédentes,
dans lequel le dispositif de traitement du signal (105) est configuré pour comparer l'évolution temporelle du signal de commande (104) d'un cycle d'actionnement (n+1) du composant microfluidique (1000) avec celle d'un cycle d'actionnement précédent (n) et détecter des écarts entre lesdites évolutions temporelles.

**21.** Composant microfluidique (1000) selon la revendication 20,
dans lequel le dispositif de traitement du signal (105) est configuré pour indiquer un écart détecté au moyen d'un signal optique et/ou acoustique.

**22.** Composant microfluidique (1000) selon l'une quelconque des revendications précédentes,
dans lequel le dispositif de traitement du signal (105) est configuré pour, pendant un cycle d'actionnement du composant microfluidique (1000),

utiliser une première partie temporelle du cycle d'actionnement pour déterminer l'évolution temporelle du signal de commande (104), et
utiliser une seconde partie temporelle restante du même cycle d'actionnement, jusqu'au début d'un cycle d'actionnement suivant, pour stocker et/ou analyser l'évolution temporelle du signal déterminée.

**23.** Composant microfluidique (1000) selon la revendication 22,
dans lequel le dispositif de traitement du signal (105) est configuré pour stocker l'évolution temporelle du signal déterminée sous forme de paramètres représentant chacun un profil d'amplitude temporel et une constante de temps associée d'au moins une composante de signal ($I_u$, $I_C$, $I_{ce}$, $I_p$) du signal de commande (104).

**24.** Composant microfluidique (1000) selon la revendication 22 ou 23,
dans lequel le dispositif de traitement du signal (105) est configuré pour déterminer une tendance temporelle de l'évolution temporelle du signal sur une multitude de cycles d'actionnement et utiliser cette tendance temporelle pour déterminer le facteur d'influence externe et/ou évaluer un état du composant microfluidique (1000).

**25.** Composant microfluidique (1000) selon l'une quelconque des revendications 22 à 24,
dans lequel le dispositif de traitement du signal (105) est configuré pour acquérir l'évolution temporelle du signal de commande (104) pendant deux cycles d'actionnement, une multitude d'autres cycles d'actionnement s'intercalant entre ces deux cycles d'actionnement, pendant lesquels le dispositif de traitement du signal (105) n'acquiert aucune donnée.

26. Composant microfluidique selon l'une quelconque des revendications précédentes,
dans lequel le composant microfluidique est configuré pour déterminer le facteur d'influence externe uniquement sur la base d'une analyse de signal de l'évolution temporelle du signal de commande électrique (104), sans utilisation de capteurs supplémentaires dans l'élément de membrane (101) et/ou dans l'élément actionneur (102).

27. Composant microfluidique (1000) selon l'une quelconque des revendications précédentes,

dans lequel le dispositif de traitement du signal (105) comprend un amplificateur opérationnel (109), une entrée inverseuse de l'amplificateur opérationnel (109) étant reliée à une sortie de signal de l'actionneur à membrane (100), et une entrée non inverseuse de l'amplificateur opérationnel (109) étant reliée au même potentiel de masse que le dispositif de génération de signaux (103), de sorte qu'un potentiel de masse virtuel est généré à l'entrée inverseuse de l'amplificateur opérationnel (109), et
le dispositif de traitement du signal (105) comprenant en outre une résistance de mesure (115) connectée entre l'entrée inverseuse et la sortie de l'amplificateur opérationnel (109),
le signal de commande (104), traité par le dispositif de traitement du signal (105), étant présent aux bornes de cette résistance de mesure (115).

28. Procédé de fonctionnement d'un composant microfluidique (1000) comprenant un actionneur à membrane à entraînement piézoélectrique (100), ledit actionneur comprenant un élément de membrane (101) et un élément actionneur (102) comprenant au moins un élément piézoélectrique pour défléchir l'élément de membrane (101), le procédé comprenant le fait de :

générer un signal de commande électrique (104) pour commander l'actionneur à membrane (100), de sorte que l'élément actionneur (102) actionne l'élément de membrane (101), le signal de commande électrique (104) présentant une évolution temporelle variable,
déterminer, pendant le fonctionnement du composant microfluidique (1000), une évolution temporelle du signal de commande (104) influencée par un ou plusieurs facteurs d'influence externes,
identifier et/ou classifier au moins un facteur d'influence externe sur la base de l'évolution temporelle influencée du signal ainsi déterminée,
le signal de commande (104) provoquant une déformation de l'élément piézoélectrique par exploitation de l'effet piézoélectrique inverse, de sorte que l'élément piézoélectrique exerce une force d'actionnement sur l'élément de membrane (101),
l'évolution temporelle du signal de commande (104) étant influencée par un signal émanant de l'élément piézoélectrique, que celui-ci génère sur la base de l'effet piézoélectrique direct en raison d'une force de réaction de l'élément de membrane (101),

le procédé comprenant en outre le fait de :
effectuer une analyse de signal de l'évolution temporelle du signal de commande (104) afin de déterminer et/ou de classifier ledit au moins un facteur d'influence externe causal,

déterminer des composantes individuelles de signal ($I_U$, $I_C$, $I_{ce}$, $I_p$) du signal de commande (104), les composantes individuelles de signal ($I_U$, $I_C$, $I_{ce}$, $I_p$) étant corrélées à différents facteurs d'influence externes, qui influencent différemment l'évolution temporelle du signal de commande (104), et
attribuer une composante de signal déterminée à un facteur d'influence externe déterminé afin, par ce biais, d'identifier et/ou de classifier le facteur d'influence externe correspondant.

29. Procédé de fonctionnement d'un composant microfluidique (1000) comprenant un actionneur à membrane à entraînement électrostatique (100), ledit actionneur comprenant un élément de membrane (101) et un élément actionneur (102) pour défléchir l'élément de membrane (101), l'élément de membrane (101) formant une électrode mobile et l'élément actionneur (102) formant une contre-électrode, l'élément actionneur (102) et l'élément de membrane (101) coopérant de manière capacitive,

le procédé comprenant le fait de :

générer un signal de commande électrique (104) pour commander l'actionneur à membrane (100), de sorte que l'élément actionneur (102) actionne l'élément de membrane (101), le signal de commande électrique (104) présentant une évolution temporelle variable,

déterminer, pendant le fonctionnement du composant microfluidique (1000), une évolution temporelle du signal de commande (104) influencée par un ou plusieurs facteurs d'influence externes,

identifier et/ou classifier au moins un facteur d'influence externe sur la base de l'évolution temporelle influencée du signal ainsi déterminée,

le signal de commande (104) provoquant un flux de charge sur la contre-électrode, de sorte que l'élément de membrane (101) se déplace par rapport à la contre-électrode, et

l'évolution temporelle du signal de commande (104) étant influencée par une variation de capacité qui se produit pendant le déplacement de l'élément de membrane (101) par rapport à la contre-électrode,

le procédé comprenant en outre le fait de :

effectuer une analyse de signal de l'évolution temporelle du signal de commande (104) afin de déterminer et/ou de classifier ledit au moins un facteur d'influence externe causal,

déterminer des composantes individuelles de signal ($I_U$, $I_C$) du signal de commande (104), les composantes individuelles de signal ($I_U$, $I_C$) étant chacune corrélées à différents facteurs d'influence externes, qui influencent différemment l'évolution temporelle du signal de commande (104), et

attribuer une composante de signal déterminée ($I_U$, $I_C$) à un facteur d'influence externe déterminé afin, par ce biais, d'identifier et/ou de classifier le facteur d'influence externe correspondant.

30. Support de stockage numérique lisible par ordinateur, sur lequel est stocké un code de programme pour mettre en œuvre le procédé selon la revendication 28 ou 29 lorsque le programme s'exécute sur un ordinateur.

Druck im Fluid p

105

100

102

101

$p_0$ Atmosphärendruck

Membranelement

106

Ladung Q

Volumenverdrängung V

104

$U(t) \Rightarrow I(t)$

1000

U
$U_0$

103

Figur 1

zeitveränderliches Ansteuersignal 104
U(t) / I(t) auf Membranaktor 100

piezoelektrischer Membranaktor 100 ～102

101

piezoelektrisch
angetriebene ～ 1000 ～
Mikropumpe

piezoelektrisch
angetriebenes
Mikroventill

mit passiven
Rückschlagventilen

Dreikammer-
Membranpumpe

normal
offen

normal
geschlossen

elektrostatischer Membranaktor 100 ～102

101

elektrostatisch
angetriebene ～ 1000 ～
Mikropumpe

elektrostatisch
angetriebenes
Mikroventil

mit passiven
Rückschlagventilen

Dreikammer-
Membranpumpe

EP 4 445 027 B1

# Figur 2

Figur 3

10 k     112     111

D2     D1

113 D3    D4 114

R 110

1 k - 1 M

+12 V

D5

$I_C + I_S$

+12 V

$V_{in}$    Piezo

−

OPV

+

$V_{out}$

−12 V

−12 V

D6

Figur 4

Figure 5

EP 4 445 027 B1

voltage dependency of capacitor and micropump

capacitor
micropump

capacitance C/C0

voltage/ V

Figur 6

EP 4 445 027 B1

Figur 7A

Figur 7B

lissajous figures of capacitor and micropump

Figur 8

Figur 9A

Figur 9B

| geschätzter Zustand | normal | occlusion | bubble_up | bubble_pump | bubble_down |
|---|---|---|---|---|---|
| normal | 94 | 0 | 11 | 0 | 1 |
| occlusion | 0 | 125 | 0 | 0 | 0 |
| bubble_up | 1 | 0 | 75 | 0 | 4 |
| bubble_pump | 0 | 0 | 1 | 69 | 9 |
| bubble_down | 8 | 0 | 0 | 0 | 97 |

Figur 10

EP 4 445 027 B1

78

Strom-Spannungs-Kurve bei verschiedenen Gegendrücken

Figur 11

EP 4 445 027 B1

Figur 12

Figur 13

Figur 14

Vergleich Zeitkonstante im Saughub und Druckhub
···◇···Tau 1 [ms] Druckhub  ···✕···Tau 2 [ms] Saughub

Figur 15

Figur 16A

Saughub, Tau_piezo [ms], Zeitkonstante des Domänenwachstums

Figur 16B

Druckhub Amplitude [µA]
proportional zu U*dC/dt+p*dCE*/dt
Domänenwachstum

Amplitude [µA]

Spannung [V]

Figur 17A

Druchhub: Tau2 [ms]
Zeitkonstante des Domänenwachstums

Figur 17B

EP 4 445 027 B1

Druckhub, Amplitude [μA], Domänenwachstum

Figur 18A

Saughub, Amplitude [μA], proportional zu p*dd/dt, Domänenwachstum

Figur 18B

Figur 19

Saughub: Schalten
von 300 V auf -80 V

Druckhub: Schalten
von -80 V auf 300 V

Normalzustand_Luft

Figur 20

Saughub: Schalten von 300 V auf -80 V
Normalzustand_Luft

„unendlich schneller" Ansteig des Drucks durch Rechteck-Spannungssignal mit Laden der elektrischen Kapazität

„Abschneiden" des Signals durch die Zenerdioden (siehe Schaltung)

„exponentieller" Abfall des Pumpkammerdrucks

Schwingung Einlassklappe

hier ist der Saughub verrichtet, die Ventilschwingung ist abgeklungen

Sensorcurrent [µA]

Time [ms]

Figur 21

EP 4 445 027 B1

Figur 22

Figur 23

Saughub: Schalten von 300 V auuf -80 V

„unendlich schneller" Anstieg des Drucks durch Rechteck-Spannungssignals mit Laden der elektrischen Kapazität

„Abschneiden" des Signals durch die Zenerdioden

kleine Schwingung

„exponentielle" Abfall des Pumpkammerdrucks

fast keine Schingung Einlassklappe

hier ist der Saughub verrichtet, die Ventilschwingung ist abgeklunen

Abklingzeit ist bei Wasser länger ⇒ Größere Viskosität als Luft!

Sensorcurrent [µA]

Time [ms]

Figur 24

Figur 25B

Normalzustand_Wasser

Figur 25C

Normalzustand_Wasser

Figur 25A

Saughub: Schalten von 300 V auuf -80 V

„Abschneiden" des Signals durch die Zenerdioden

Überschwingen

„exponentielle" Abfall des Pumpkammerdrucks

Schwingung Einlassklappe (fast keine Amplitude im Vergleich zu Luft)

hier ist der Saughub verrichtet, die Ventilschwingung ist abgeklunen

EP 4 445 027 B1

Druckhub: Schalten von -80 V auf 300 V

„unendlich schneller" negativer Anstiegs des Druckes durch Rechteck-Spannungssignals mit Entladen der elektrischen Kapaziität

hier ist der Druckhub verrichtet, die Ventilschwingung ist abgeklungen

sehr kleine Schwingungen der Auslassklappe (Einlassklappe ist geschlossen)

„exponentieller" Anstieg des Pumpkammerdrucks Richtung Druckausgleich

Artefakt, tritt nur bei Druckhup auf (bei Luft und bei Wasser)

„Abschneiden" des Signals durch die Zenerdioden

Sensorcurrent [µA]

Time [ms]

Figur 26

EP 4 445 027 B1

Figur 27A

Figur 27B

Figur 27C

Figur 27D

Figur 27E

Figur 28A

Figur 28B

Figur 29A

Figur 29B

EP 4 445 027 B1

Figur 29C

Figur 29D

EP 4 445 027 B1

Figur 30A

Figur 30B

EP 4 445 027 B1

Figur 30C

Figur 30B

Figur 30D

EP 4 445 027 B1

Vordruck_mit_Luft

Figur 30E

ohne Anschlag

Figur 31A

EP 4 445 027 B1

Figur 31B

Figur 32

EP 4 445 027 B1

Figur 33

EP 4 445 027 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190360480 A1

- US 20130052044 A1

**In der Beschreibung aufgeführte Nicht-Patentliteratur**

- **ZENGERLE, R.** ; **RICHTER, M.** Simulation of microfluid systems. *Journal of Micromechanics and Microengineering*, 1994, vol. 4 (4), 192-204, 004